(19) Europäisches Patentamt
European Patent Office
Office européen des brevets

(11) **EP 4 206 824 B1**

(12) **EUROPEAN PATENT SPECIFICATION**

(45) Date of publication and mention of the grant of the patent:
**17.06.2026 Bulletin 2026/25**

(21) Application number: **21861792.6**

(22) Date of filing: **31.08.2021**

(51) International Patent Classification (IPC):
*G03G 21/16* (2006.01)    *G03G 21/18* (2006.01)
*G03G 15/00* (2006.01)

(52) Cooperative Patent Classification (CPC):
**G03G 21/1857; G03G 15/757; G03G 21/1647; G03G 21/186;** G03G 2221/1657

(86) International application number:
**PCT/JP2021/032565**

(87) International publication number:
**WO 2022/045373 (03.03.2022 Gazette 2022/09)**

(54) **PHOTORECEPTOR UNIT, CARTRIDGE, AND ELECTROPHOTOGRAPHIC IMAGE FORMING DEVICE**

FOTOREZEPTOR, KASSETTE UND ELEKTROFOTOGRAFISCHE BILDERZEUGUNGSVORRICHTUNG

UNITÉ PHOTORÉCEPTEUR, CARTOUCHE ET DISPOSITIF DE FORMATION D'IMAGE ÉLECTROPHOTOGRAPHIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA TN**

(30) Priority: **31.08.2020 JP 2020145892**

(43) Date of publication of application:
**05.07.2023 Bulletin 2023/27**

(60) Divisional application:
**26157161.6 / 4 730 042**

(73) Proprietor: **Canon Kabushiki Kaisha**
**Ohta-ku**
**Tokyo 146-8501 (JP)**

(72) Inventors:
• **MURAKAMI, Ryuta**
**Tokyo 146-8501 (JP)**
• **HAYASHIDA, Makoto**
**Tokyo 146-8501 (JP)**
• **HAMADA, Takatoshi**
**Tokyo 146-8501 (JP)**
• **NIIKAWA, Yusuke**
**Tokyo 146-8501 (JP)**
• **HIRAYAMA, Akinobu**
**Tokyo 146-8501 (JP)**
• **FUJINO, Toshiki**
**Tokyo 146-8501 (JP)**
• **KAWAI, Tachio**
**Tokyo 146-8501 (JP)**
• **SASAKI, Teruhiko**
**Tokyo 146-8501 (JP)**

(74) Representative: **TBK**
**Bavariaring 4-6**
**80336 München (DE)**

(56) References cited:
JP-A- 2003 091 184     JP-A- 2004 078 087
JP-A- 2005 091 609     JP-A- 2011 027 933
JP-A- 2014 119 102     JP-A- 2017 096 435
JP-A- 2017 211 456     JP-A- 2017 223 802
JP-A- 2019 100 460     JP-A- H0 783 314
JP-A- H09 197 905      JP-U- 3 183 618
US-A- 5 825 472        US-A1- 2003 068 177
US-A1- 2009 203 494    US-B1- 6 282 389

## Description

[TECHNICAL FIELD]

The present invention relates to a photosensitive member unit and a cartridge which is mountable to and dismountable from an electrophotographic image forming apparatus.

The electrophotographic image forming apparatus forms an image on a recording material by using an electrophotographic image forming method. Examples of the electrophotographic image forming apparatus include, an electrophotographic copying apparatus, an electrophotographic printer (LED printer, laser beam printer, and so on), a facsimile machine, a word processor, and the like, for example.

[BACKGROUND ART]

In an electrophotographic image forming apparatus (hereinafter, also simply referred to as "image forming apparatus"), a toner image is formed on an electrophotographic photosensitive member (photosensitive drum or drum), and the toner image is directly or indirectly transferred onto a recording material, by which an image is formed on the recording material.

In general, such an image forming apparatus requires replenishment of toner (developer) and maintenance of various members. Therefore, there is a cartridge-type image forming apparatus in which a cartridge can be mounted to and dismounted from the image forming apparatus, and the toner replenishment and maintenance operation is performed in effect by exchanging the cartridge.

The cartridge includes at least one of a drum and a process means, and is dismountably mounted to the main assembly (apparatus main assembly) of the image forming apparatus. The process means are means for forming an image, and those acting on the drum mainly include developing means, charging means, image transfer means, electric charge elimination means, cleaning means and the like. Examples of the cartridge include a process cartridge including a drum and at least one process means and being integrally mountable to and dismountable from the apparatus main assembly, a drum cartridge including a drum, a developing cartridge including a developing means, and the like. According to such a cartridge method, it becomes possible to easily perform toner replenishment and maintenance operations of the image forming apparatus.

As a structure for transmitting the driving force from the main assembly of the apparatus to the cartridge, a gear is used as shown in JP S63-004252 A, and a coupling is used as shown in JP H08-328449 A.

US 6 282 389 A1 shows a common photosensitive member unit detachably mountable to a main assembly of an image forming apparatus, the image forming apparatus including a first main assembly side helical gear portion and a second main assembly side helical gear portion which are rotatable, the photosensitive member unit comprising: a photosensitive member rotatable about a rotational axis thereof; a first unit side helical gear portion for meshing engagement with the first main assembly side helical gear portion; and a second unit side helical gear portion for meshing engagement with the second main assembly side helical gear portion, wherein a twisting direction of a tooth of the second unit side helical gear portion is the same as the twisting direction of a tooth of first unit side helical gear portion, wherein a helix angle of the tooth of the second unit side helical gear portion is larger than a helix angle of the tooth of the first unit side helical gear portion, and wherein the first unit side helical gear portion and the second unit side helical gear portion are rotatable in a state in which the first unit side helical gear portion is in meshing engagement with the first main assembly side helical gear portion, and the second unit side helical gear portion is in meshing engagement with the second main assembly side helical gear portion.

[SUMMARY OF THE INVENTION]

It is the object of the present invention to provide a photosensitive member unit and a cartridge, by which a play (backlash) in a rotational direction between a driving side flange and a drive transmission gear can be reduced or even avoided.

The object of the present invention is achieved by a photosensitive member unit having the features of claim 1. A cartridge comprising the photosensitive member unit according to the present invention is shown in claim 45.

Further advantageous developments according to the present invention are defined in the dependent claims.

[BRIEF DESCRIPTION OF THE DRAWINGS]

Figure 1 is a perspective view of a part which transmits a driving force from the main assembly of the apparatus to the drum unit.
Figure 2 is a schematic sectional view of a main assembly of the apparatus and a cartridge.
Figure 3 is a cross-sectional view of the cartridge.
Figure 4 is an exploded perspective view of the cartridge.
Figure 5 is an exploded perspective view of the cartridge.
Figure 6 is exploded perspective views of a cleaning unit.
Figure 7 is a sectional view of a drive portion from the main assembly of the apparatus to the cartridge.
Figure 8 is sectional views of the main assembly of the apparatus.

Figure 9 is sectional views of the main assembly of the apparatus.

Figure 10 is sectional views of the main assembly of the apparatus.

Figure 11 is an exploded perspective view of the main assembly of the apparatus.

Figure 12 is a perspective view of a drive transmission portion of the main assembly of the apparatus.

Figure 13 is schematic views of a drive transmission gear of the main assembly of the apparatus.

Figure 14 is a schematic illustration of a drive transmission structure from the drive transmission gear to a driving side flange.

Figure 15 is an illustration showing a drive transmission structure from the driving side flange to a developing roller.

Figure 16 is schematic views of the drive transmission gear and the driving side flange, and sectional views of the drive transmission gear.

Figure 17 is sectional views of the drive transmission gear and the driving side flange.

Figure 18 is sectional views of the drive transmission gear and the driving side flange.

Figure 19 is side views of the drive transmission gear and the driving side flange.

Figure 20 is a side view of the drive transmission gear and the driving side flange.

Figure 21 is illustrations of the drive transmission gear and the driving side flange.

Figure 22 is illustrations of the drive transmission gear and the driving side flange.

Figure 23 is a cross-sectional view of the cartridge.

Figure 24 is schematic illustrations of the drive transmission structure.

Figure 25 is illustrations of the drive transmission structure.

Figure 26 is sectional views of the drive transmission portion.

Figure 27 is a graph showing amounts of deformation of the coupling drive and the drive transmission gear.

Figure 28 is illustrations of a retracting mechanism.

Figure 29 is a schematic view illustrating engagement between the driving side flange and a developing roller gear.

Figure 30 is a perspective view of the cartridge.

Figure 31 is a sectional view of the drive transmission gear and the driving side flange.

Figure 32 is an illustration of a driving side flange.

Figure 33 is a cross-sectional view of the driving side flange and the drive transmission gear, and a graph showing change of the number of meshing teeth.

Figure 34 is a cross-sectional view of the driving side flange and the drive transmission gear, and a graph showing change of the number of meshing teeth.

Figure 35 is a perspective view of the driving side flange.

Figure 36 is a schematic view illustrating the engagement between the drive transmission gear and the driving side flange.

Figure 37 is a perspective view of an image forming apparatus.

Figure 38 is a schematic view illustrating meshing engagement between the drive transmission gear and the driving side flange.

Figure 39 is a sectional view of the drive transmission gear and the driving side flange.

Figure 40 is a sectional view of the drive transmission gear and the driving side flange.

Figure 41 is a sectional view of the drive transmission gear and the driving side flange.

Figure 42 is a perspective view of the driving side flange and a sectional view of the drive transmission gear and the driving side flange.

Figure 43 is a sectional view of the driving side flange and a sectional view of the drive transmission gear and the driving side flange.

Figure 44 is a partial perspective view of the cartridge.

Figure 45 is a partial sectional view of a neighborhood of the drum of the cartridge, and is an illustration showing the drum and the developing roller.

Figure 46 is sectional views of the drive transmission gear and the driving side flange.

Figure 47 is schematic views of the drive transmission gear and the driving side flange.

Figure 48 is a sectional view of the driving side flange, and a sectional view of the drive transmission gear and the driving side flange.

Figure 49 is a graph of a drive transmission error at the time of misalignment.

Figure 50 is a schematic sectional view of an apparatus main assembly and a cartridge.

Figure 51 is exploded perspective views of a cleaning unit.

Figure 52 is a perspective view of the drum bearing member, a cross-sectional view of the driving side flange and the drum bearing member, and a partial cross-sectional view of the cartridge.

Figure 53 is exploded perspective views of the main assembly of the apparatus.

Figure 54 is a schematic sectional view of the gear portion of the drive transmission gear, a schematic sectional view of the gear portion of the driving side flange, and a schematic sectional view of the gear portion of the drive transmission gear and the gear portion of the driving side drum flange.

Figure 55 is schematic sectional views of the gear portion of the drive transmission gear and the gear portion of the driving side drum flange.

Figure 56 is perspective views of a drive train for driving a developing roller, a partial perspective view of a developing unit, and a perspective view of the cartridge.

Figure 57 is a partial perspective view of the main assembly of the apparatus.

Figure 58 is a cross-sectional view of the cleaning unit and the drive transmission gear.

Figure 59 is a partial perspective view of the cartridge.

Figure 60 is sectional views of the drum unit.

Figure 61 is a partial perspective view of the drum unit.

Figure 62 is a cross-sectional view of a second gear portion and a second main assembly gear portion.

Figure 63 is a partial perspective view of the drum unit.

Figure 64 is a side view of the cleaning unit.

Figure 65 is an exploded perspective view of the cleaning unit.

Figure 66 is a partial sectional view of the cleaning unit.

Figure 67 is a partial cross-sectional view of the cleaning unit.

Figure 68 is a sectional view illustrating an engaged state between the drum unit and the drive transmission gear.

Figure 69 is a cross-sectional view illustrating an engaged state between the drum unit and the drive transmission gear.

Figure 70 is an exploded perspective view of the cleaning unit.

Figure 71 is a cross-sectional view illustrating an engaged state between the drum unit and the drive transmission gear.

Figure 72 is a partial perspective view of the drum unit.

Figure 73 is exploded perspective views of the cleaning unit.

Figure 74 is an illustration of a drum unit which is in meshing engagement with a drive transmission gear.

Figure 75 is cross-sectional views illustrating an engaged state between the drum unit and the drive transmission gear.

Figure 76 is a partial perspective view of the drum unit.

Figure 77 is an exploded perspective view of the cleaning unit and the drum unit.

Figure 78 is a cross-sectional view of the cleaning unit.

Figure 79 is a cross-sectional view illustrating an engaged state between the drum unit and the drive transmission gear.

Figure 80 is a sectional view illustrating an engaged state between the drum unit and the drive transmission gear.

Figure 81 is a partial perspective view of the drum unit.

Figure 82 is a partial perspective view of the drum unit.

Figure 83 is a partial perspective view of the drum unit.

Figure 84 is a cross-sectional view of the drum unit.

Figure 85 is an illustration of a state in which the drum unit is assembled to the cleaning unit.

Figure 86 is cross-sectional views of the driving side flange and the drive transmission gear.

Figure 87 is cross-sectional views of the driving side flange and the drive transmission gear.

Figure 88 is a partial perspective view of the drum unit.

Figure 89 is a cross-sectional view of the driving side flange.

Figure 90 is an illustration of a state in which the drum unit is assembled to the cleaning unit.

Figure 91 is cross-sectional views of the driving side flange and the drive transmission gear.

Figure 92 is a side view of the cleaning unit.

Figure 93 is exploded perspective views of the cleaning unit and the driving side drum flange.

Figure 94 is exploded perspective views of the drum bearing unit.

Figure 95 is a partial sectional view of the cleaning unit.

Figure 96 is illustrations of a cleaning unit.

Figure 97 is partial sectional views of the cleaning unit.

Figure 98 is illustrations of a cartridge and an apparatus main assembly.

Figure 99 is an illustration of a driving side drum flange 2463 which engages with a drive transmission gear.

Figure 100 is schematic sectional views of the meshing engagement portion between the driving side drum flange and the drive transmission gear.

Figure 101 is an illustration of a cleaning unit.

Figure 102 is exploded perspective views of the cleaning unit and the drum unit.

Figure 103 is a partial sectional view of the cleaning unit.

Figure 104 is a perspective view illustrating a cleaning unit and a drive transmission gear.

Figure 105 is a schematic sectional view of a meshing engagement portion between the drive gear and the idler gear and the drive transmission gear.

Figure 106 is a schematic sectional view of the meshing engagement portion between the drive gear and the idler gear and the drive transmission gear.

Figure 107 is a schematic sectional view of the meshing engagement portion between the drive gear and the idler gear and the drive transmission gear.

Figure 108 is exploded perspective views of the cleaning unit and the drum unit.

Figure 109 is an illustration of an engaged state between the cleaning unit and the drive transmission gear.

Figure 110 is views of the cartridge as viewed in the direction of the rotational axis of the drum.

Figure 111 is perspective views of the drive transmission mechanism of the cartridge.

Figure 112 is a perspective view of another structure example of the drive transmission gear.

Figure 113 is illustrations of a cartridge.

Figure 114 is illustrations of a cartridge.

[EMBODIMENTS]

[Embodiment 1]

<Overall structure of image forming apparatus>

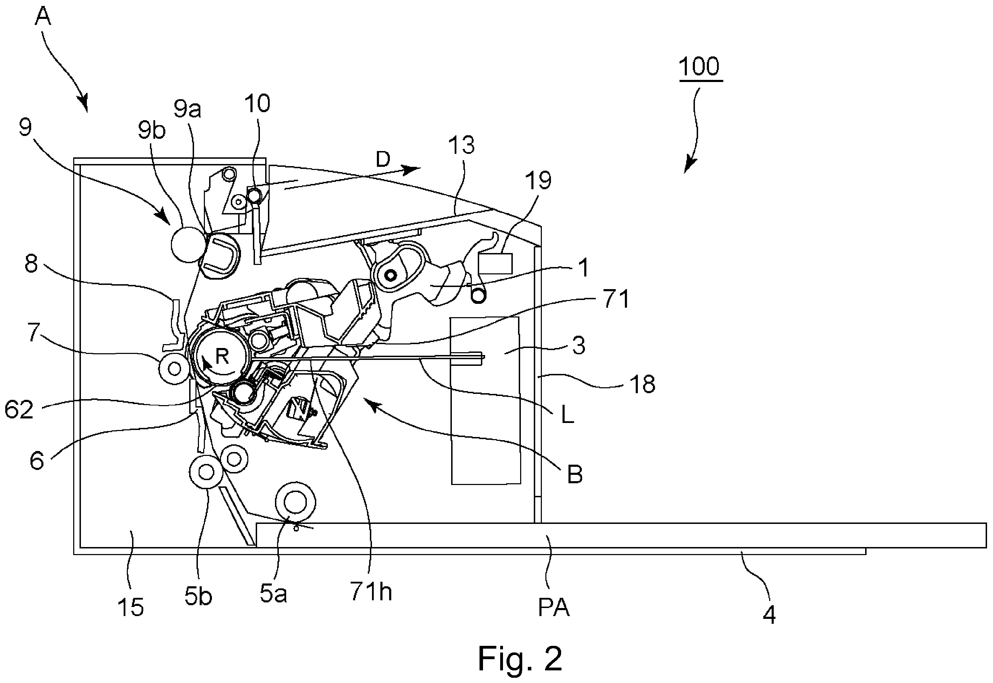

Figure 2 is a sectional view of the electrophotographic image forming apparatus (image forming apparatus) 100, and the plane of the cross-section is perpendicular to a rotational axis L1 of a photosensitive drum 62 which will be described hereinafter. The image forming apparatus 100 is a laser beam printer using electrophotographic process, and a cartridge B including the photosensitive drum 62 is dismountably mounted to an apparatus main assembly A. That is, parts of the image forming apparatus 100 excluding the cartridge B is the apparatus main assembly A. When the cartridge B is mounted in the apparatus main assembly A, it is possible to form an image on a recording material (sheet material) PA such as paper.

<Structure of main assembly of the apparatus >

The apparatus main assembly A includes an exposure device (laser scanner unit) 3 and a sheet tray 4 for accommodating the sheet material PA. Further, the apparatus main assembly A includes a pickup roller 5a, a feeding roller pair 5b, a transfer guide 6, a transfer roller 7, a feeding guide 8, a fixing device 9, a discharge roller pair 10, and a discharge tray 11 in the order named along a feed direction D of the sheet material PA. The fixing device 9 includes a heating roller 9a and a pressure roller 9b.

<Cartridge structure>

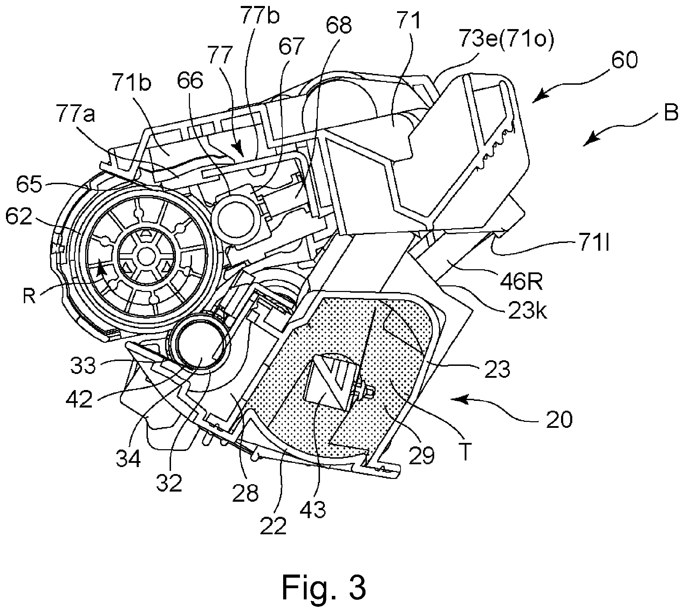

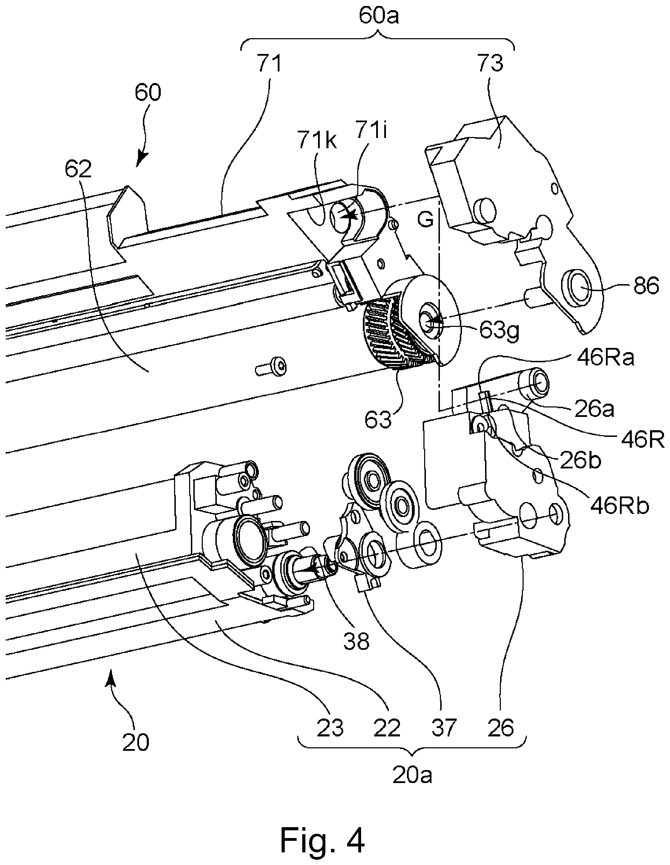

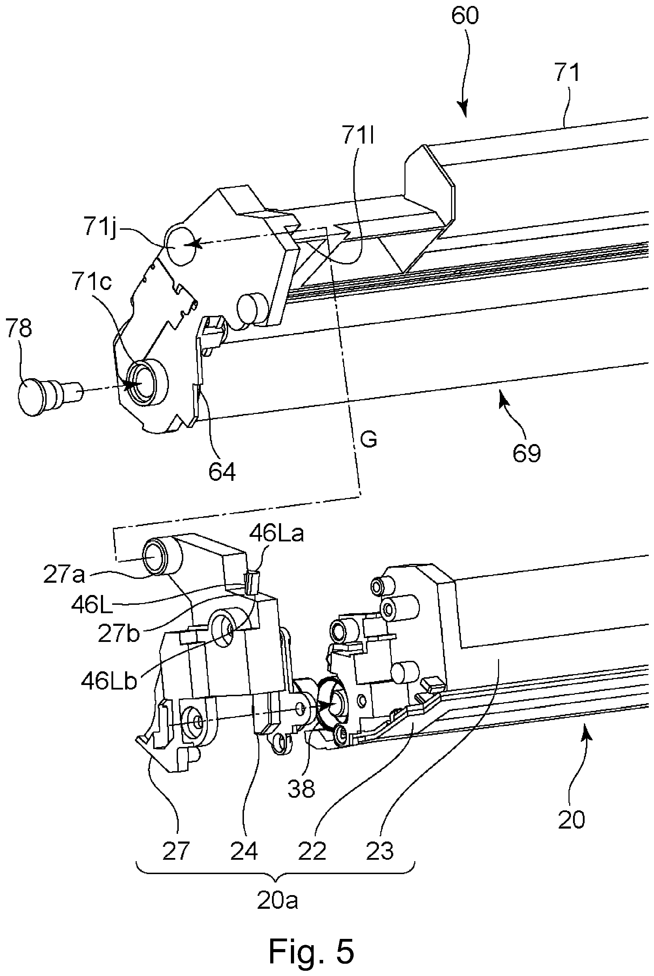

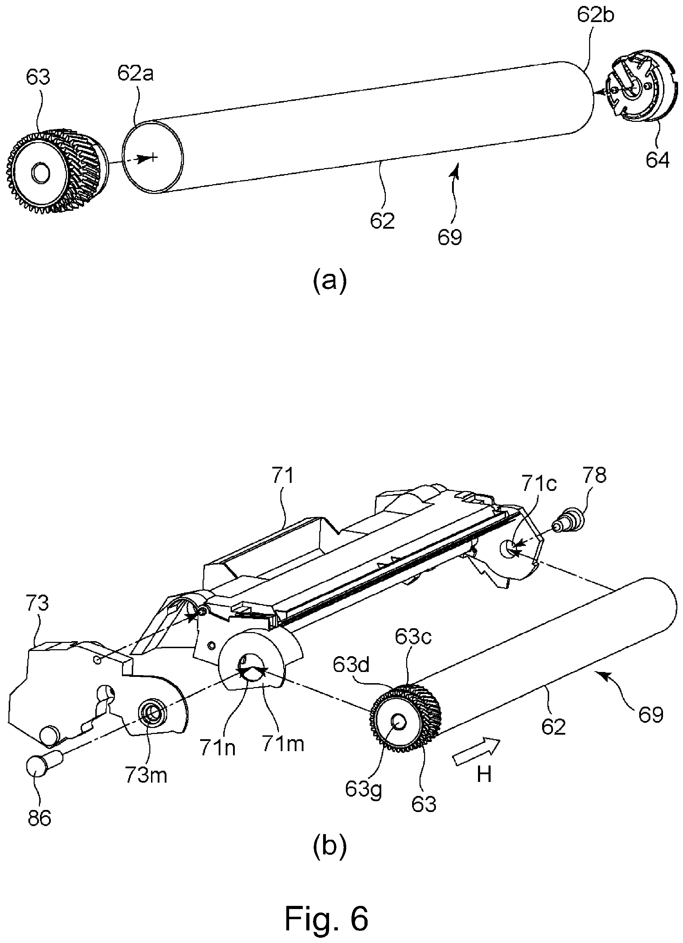

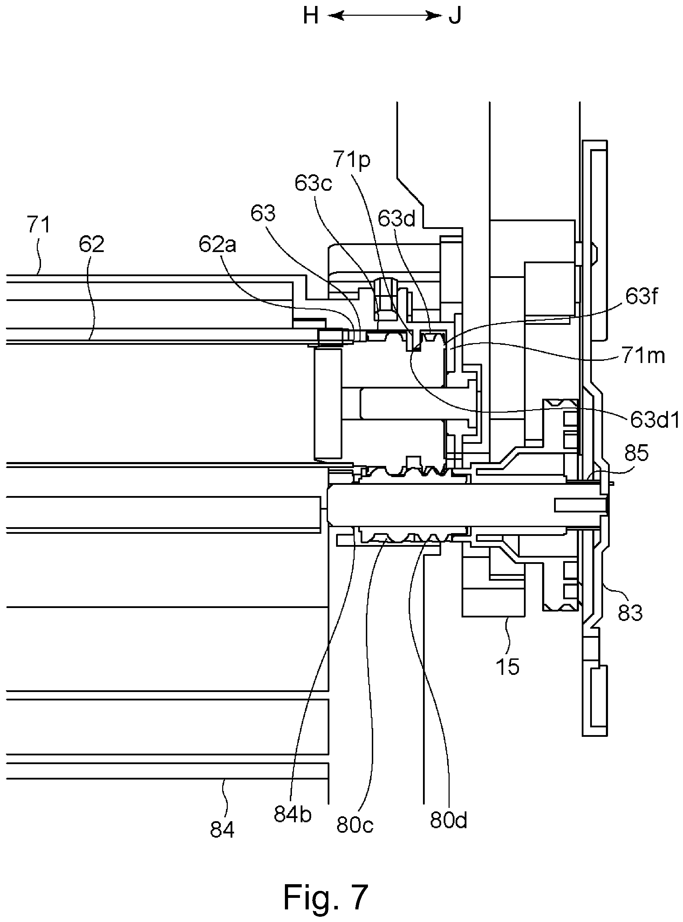

Next, referring to Figures 3, 4, 5, 6, and 7, an overall structure of the cartridge B will be described. Figure 3 is a cross-sectional view of the cartridge B, taken along a plane perpendicular to the rotational axis L1 of the photosensitive drum 62 which will be described hereinafter. Figures 4 and 5 are exploded perspective views illustrating the structure of the cartridge B. Part (a) of Figure 6 is an exploded perspective view illustrating the structure of the drum unit 69. Part (b) of Figure 6 is an exploded perspective view illustrating the structure of the cleaning unit. Figure 7 is a cross-sectional view of a drive unit which transmits a driving force from the image forming apparatus A to the cartridge B. In this embodiment, the screws and the like used to connect the parts will be omitted.

The cartridge B is a process cartridge and mainly includes an electrophotographic photosensitive member and a process means acting on the electrophotographic photosensitive member. The process means includes charging means, developing means and cleaning means which will be described hereinafter. The cartridge B has a structure mainly including a cleaning unit (drum unit) 60 and a developing unit 20, and the electrophotographic photosensitive member and the process means are provided in these cleaning unit 60 or in the developing unit 20.

The longitudinal direction of the drum 62 is parallel with the direction of the rotational axis L1 of the drum 62 (direction of the rotational axis). In the drum 62, the side on which the driving force is transmitted from the apparatus main assembly A with respect to the rotational axis direction is referred to as a driving side, and the opposite side thereof in the direction is referred to as a non-driving side. Further, the direction from the non-driving side toward the driving side in the rotational axis L1 of the drum 62 (parallel to the rotational axis L1) is J direction, and the direction from the driving side toward the non-driving side is H direction. When the J direction and the H direction are referred to in the apparatus main assembly A, they are defined so as to be the same as the J direction and the H direction at the time when the cartridge B is mounted in the apparatus main assembly A.

<Cleaning unit (drum unit)>

As shown in Figure 3, the cleaning unit (drum unit) 60 includes a photosensitive drum 62, a charging roller 66, a cleaning member 77, and a cleaning frame (drum frame) 60a which supports them. The cleaning frame (drum frame) 60a includes a frame member 71 and a drum bearing member 73.

As shown in part (a) of Figure 6, the photosensitive drum (drum) 62, which is a rotatable member, is a cylindrical electrophotographic photosensitive member, and is an aluminum cylinder having an outer peripheral surface coated with a photosensitive layer. A driving side flange (driving force receiving member) 63 is fixed, by clamping, to the end of the drum 62 on the driving side (one end side), and a non-driving side flange 64 is fixed, by clamping, to the end of the non-driving side (the other end side). A unit in which the drum 62, the driving side flange 63, and the non-driving side flange 64 are integrated (that is, a unit that can rotate integrally with the drum 62) is referred to as a drum unit 69.

In general, the cleaning unit 60 may be referred to as a drum unit, and in such a case,, the drum 62 is contrasted with the developing means in the developing unit 20 from the standpoint of the means provided in the cartridge B, recognizing the entire cleaning unit 60 as a unit including the drum 62. Therefore, the drum unit as a name of the entire cleaning unit 60 is based on a concept different from that of the drum unit 69 (a unit rotatable integrally with the drum 62) in this embodiment. In the following description, the drum unit refers to a unit which can rotate integrally with the drum 62.

The drum 62, the driving side flange 63, and the non-driving side flange 64 rotate integrally around the rotational axis L1 of the drum. That is, the rotation axes of the driving side flange 63, the non-driving side flange 64, and the drum unit 69 are coaxial with the rotational axis L1 of the drum 62. Therefore, in the following, the rotation axes of the drum 62, the driving side flange 63, the non-driving side flange 64, and the drum unit 69 in the assembled drum unit 69 are all referred to as rotational axis L1.

Further, the driving side flange 63 and the non-driving side flange 64 are integrally fixed in the direction of the rotational axis L1. The driving side flange 63 and the non-driving side flange 64 are made of resin material. The driving side flange 63 includes a first gear portion 63c and a second gear portion 63d, which will be described in detail hereinafter.

As shown in part (b) of Figure 6, the drum unit 69 is supported, rotatably around the rotational axis L1, by the drum frame 60a (frame member 71 and drum bearing member 73). Specifically, the driving side flange 63 is provided with a hole 63g coaxial with the rotational axis L1, and a shaft member 86 press-fitted into the drum bearing member 73 is inserted into the hole 63g, by which the driving side flange 63 is rotatably supported by the drum bearing member 73. The non-driving side flange 64 has a hole (not shown) coaxial with the rotational axis L1, and the shaft member 78 press-fitted into the hole 71c of the frame member 71 is inserted into this hole, by which the non-driving side flange is rotatably supported by the frame member 71. As described above, the non-driving side flange 64 and the driving side flange 63 are supported portions rotatably supported by the shaft members 86 and 78.

Further, as shown in Figure 7, the second gear portion 63d of the driving side flange 63 is provided with a projecting portion 63d1 projecting in the H direction on the end surface on the downstream side in the H direction, and is provided with a projecting portion 63f projecting in the J direction on the upstream side in the H direction (downstream side in the J direction). In addition, the frame member 71 includes a rib 71p and a side wall 71m provided so as to extend in a direction perpendicular to the rotational axis L1. The projecting portion 63d1 is contactable with the side surface of the rib 71p, and the projecting portion 63f is contactable with the side surface of the side wall 71m. The driving side flange 63 is slidably fitted between the rib 71p and the side wall 71m by loose fitting. Therefore, it is likely that the projecting portion 63d1 contacts the side surface of the rib 71p or the projecting portion 63f contacts the side surface of the side wall 71m, but the fitting play (gap) is extremely small (about 150 $\mu$m at the maximum), and therefore, it can be said that the positioning is substantially the same in these cases. As described above, it can be said that the drum unit 69 including the driving side flange 63 is positioned in the direction of the rotational axis L1 with respect to the drum frame 60a by the rib 71p and the side wall 71m.

In this embodiment, the longitudinal direction of the cartridge B, the drum frame 60a, and the frame member 71 is a direction parallel to the direction of the rotational axis L1 of the drum 62.

Further, as shown in Figure 3, in the cleaning unit 60, the charging roller (charging member) 66 as the charging means and the cleaning member 77 as the cleaning means are arranged in contact with the outer peripheral surface of the drum 62, respectively. The cleaning member 77 includes a rubber blade 77a, which is a blade-shaped elastic member made of rubber as an elastic material, and a support member 77b which supports the rubber blade 77a. The rubber blade 77a is in contact with the drum 62 counterdirectionally with respect to the rotational direction of the drum 62. That is, the rubber blade 77a is in contact with the drum 62 so that the free end surface thereof faces the upstream side in the rotational direction of the drum 62. Waste toner removed from the surface of the drum 62 by the cleaning member 77 is stored (accumulated) in a waste toner chamber 71b formed by the frame member 71 and the cleaning member 77. A sheet 65 for suppressing the leakage of waste toner through the gap between the frame member 71 and the drum 62 is mounted to the edge of the frame member 71 in contact with the drum 62.

Opposite end portions of the charging roller 66 in the direction of the rotational axis are rotatably supported by a charging roller bearings 67 supported by the frame member 71. A rotational axis of the charging roller 66 is substantially parallel with the rotational axis L1 of the drum 62. The charging roller 66 is pressed against the drum 62 by pressing the charging roller bearings 67 toward the drum 62 by the urging member 68. The charging roller 66 is driven by the rotation of the drum 62.

<Developing unit>

As shown in Figure 3, the developing unit 20 includes a developing roller 32, a magnet roller 34, a developing blade 42, a feeding member 43, a developing frame 20a which supports them, and so on. The developing frame 20a includes a developing container 23, a bottom member 22, a bearing member 24 (see Figure 5), a bearing member 37 (see Figure 4), a developing side cover (see Figure 4) 26, and a developing side cover 27 (see Figure 5). In the developing unit 20, a toner supply chamber 28 and a toner chamber 29 are formed inside by the developing container 23 and the bottom member 22.

As shown in Figures 4 and 5, in the toner supply chamber 28, opposite end portions of the developing roller 32 in the rotational axis direction are rotatably supported by the bearing member 24 and the bearing member 37. The bearing member 24 and the bearing member 37 are mounted to the developing container 23. The developing roller (developing member) 32 as a developing means is a cylindrical member, and a magnet roller 34 is provided inside the cylindrical member. A developing blade 42 is provided to determine (regulate) a thickness of the toner (toner layer) carried on the surface of the developing roller 32.

Spacing members 38 are mounted to the end portions of the developing roller 32 in the direction of the rotational axis, respectively, and by the spacing members 38 contacting with the surface of the drum 62, A distance of the surface of the developing roller 32 from the surface of the drum 62 is determined. Specifically, the distance is determined such that a small gap is provided between the surface of the developing roller 32 and the surface of the drum 62.

In addition, as shown in Figure 3, a sheet 33 for preventing the toner from leaking through a gap between the developing frame 20a and abuts on the developing roller 32 is mounted to an edge portion of the bottom member 22 so as to be in contact with the developing roller 32. Further, in the toner chamber 29, a feed member (stirring member) 43 is rotatably provided. The feeding member 43 rotates to stir the toner contained in the toner chamber 29, and transports the toner from the toner chamber 29 into the toner supply chamber 28.

<Connection between cleaning unit and developing unit>

The cartridge B is assembled by connecting the cleaning unit 60 and the developing unit 20. As shown in Figures 4 and 5, first, An alignment is carried out between a center of a first development boss 26a of the developing container 23 for a first hanging hole 71i on the driving side of the frame member 71 and a center of a second supporting boss 27a for a second development hanging hole 71j on the non-driving side. Then, by moving the developing unit 20 in the direction of the arrow G, the first development supporting boss 26a and the second development supporting boss 27a are fitted into the first hanging hole 71i and the second hanging hole 71j. Thereafter, by assembling the drum bearing member 73 to the cleaning unit 60, the developing unit 20 is restricted from disengaging from the cleaning unit 60. By this, the developing unit 20 is movably connected with the cleaning unit 60. Specifically, the developing unit 20 is connected with the cleaning unit 60 rotatably (tiltably) about the first development supporting boss 26a and the second development supporting boss 27a.

In addition, as shown in Figure 4, a first end portion 46Rb of a driving side spring (urging member) 46R is fixed to a surface 26b of the developing side cover 26, and a second end portion 46Ra contacts a surface 71k of the frame member 71 of the cleaning unit 60. Further, as shown in Figure 5, a first end portion 46Lb of a non-driving side spring (urging member) 46L is fixed to a surface 27b of the developing side cover 27, and a second end portion 46La contacts a surface 71l of the frame member 71. The non-driving side spring 46L and the driving side spring 46R are compression springs. The urging force of these springs produces an urging force between the developing frame 20a and the cleaning frame 60a so as to press the developing roller 32 toward the drum 62. By this, as described above, the spacing member 38 is pressed against the surface of the drum 62 and is held with the gap between the surface of the developing roller 32 and the surface of the drum 62.

<Image forming process>

Next, the image forming process will be described. A control unit (not shown) receives a print command signal fed from a host computer or the like, and generates a print start signal based on the print command signal to start the image forming process.

When the image forming process starts, the drum 62 is first rotationally driven in a direction of arrow R (see Figures 2 and 3) at a predetermined peripheral speed (process speed). A charging bias voltage is applied to the charging roller 66 to substantially uniformly charge the surface (outer peripheral surface) of the drum 62. Further, as shown in Figure 2, the exposure device (exposure means) 3 emits a laser beam L in accordance with the image information to be printed. The laser beam L passes through the laser opening 71h provided in the frame member 71 of the cartridge B, is projected to the surface of the drum 62 charged by the charging roller 66, and scans the surface of the drum 62 with the laser beam L. By this, an electrostatic latent image corresponding to the image information is formed on the photosensitive layer on the surface of the drum 62.

On the other hand, as shown in Figure 3, in the developing unit 20, the toner (developer) T in the toner chamber 29 is stirred and fed by the rotation of the feeding member 43, into the toner supply chamber 28. The toner T is carried on the surface of the developing roller 32 by a magnetic force of the magnet roller (fixed magnet) 34. The developing roller 32 is a developer carrying member which supports the toner T on its surface to visualize (develop) the electrostatic latent image formed on the drum 62 described above with the toner. The toner T is triboelectrically charged by the developing blade 42, and the developing blade 42 regulates the thickness (layer thickness) of the layer of the toner T on the peripheral surface of the developing roller 32 to a desired thickness. Then, the toner T carried on the surface of the developing roller 32 is supplied to and adheres to the region corresponding to the electrostatic latent image of the drum 62. By this, the electrostatic latent image on the drum 62 is visualized (developed) into a toner image. It can be said that the drum 62 is an image bearing member which carries an electrostatic latent image or a toner image (developer image) on its surface.

Further, as shown in Figure 2, in synchronism with output timing of the laser beam L, the sheet material PA stored in the sheet tray 4 at the lower portion of the apparatus main assembly A is fed out to the feed path in the main assembly A by the pickup roller 5a and the feeding roller pair 5b. Thereafter, the sheet material PA is guided by the transfer guide 6 and fed to a transfer nip provided between the drum 62 and the transfer roller (transfer means) 7. In this transfer nip, the toner image formed on the drum 62 is transferred onto the sheet material PA.

The sheet material PA on which the toner image is transferred in the transfer nip is guided by the transfer guide 8 and conveyed into the fixing device (fixing means) 9. Then, the sheet material PA passes through the fixing nip provided between the heating roller 9a and the pressure roller 9b of the fixing device 9. By pressing and heating the sheet material PA in this fixing nip, the toner image is fused to the sheet material PA and fixed thereon. The sheet material PA which has passed through the fixing nip is fed to the discharge roller pair 10 and discharged onto the discharge tray 11.

On the other hand, as shown in Figure 3, the surface of the drum 62 after sheet material passes through the transfer nip comes into contact with the cleaning blade 77, the toner remaining on the surface of the drum 62 is removed, and the surface of the drum 62 can be used again in the above-mentioned image forming process. The toner removed from the drum 62 by the cleaning blade 77 is stored as waste toner in the waste toner chamber 71b of the cleaning unit 60.

In this embodiment, at least the charging roller 66, the exposure device 3, the developing roller 32, the transfer roller 7, and the cleaning blade 77 are process means acting on the drum 62.

<Mounting and dismounting of cartridge>

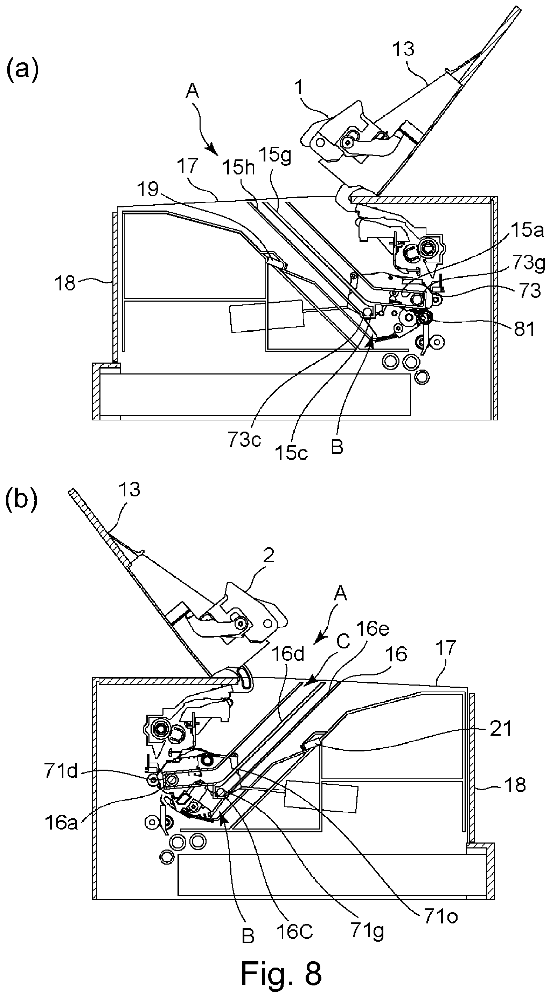

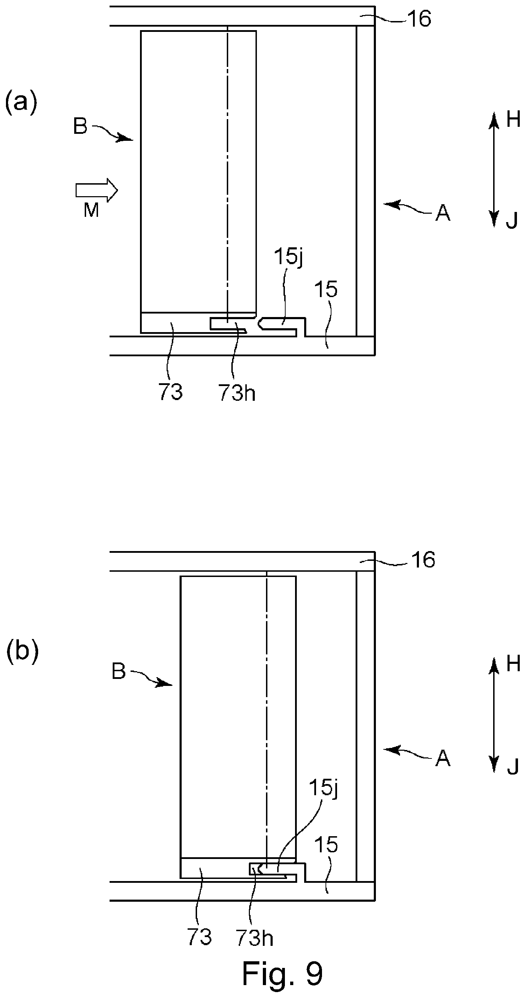

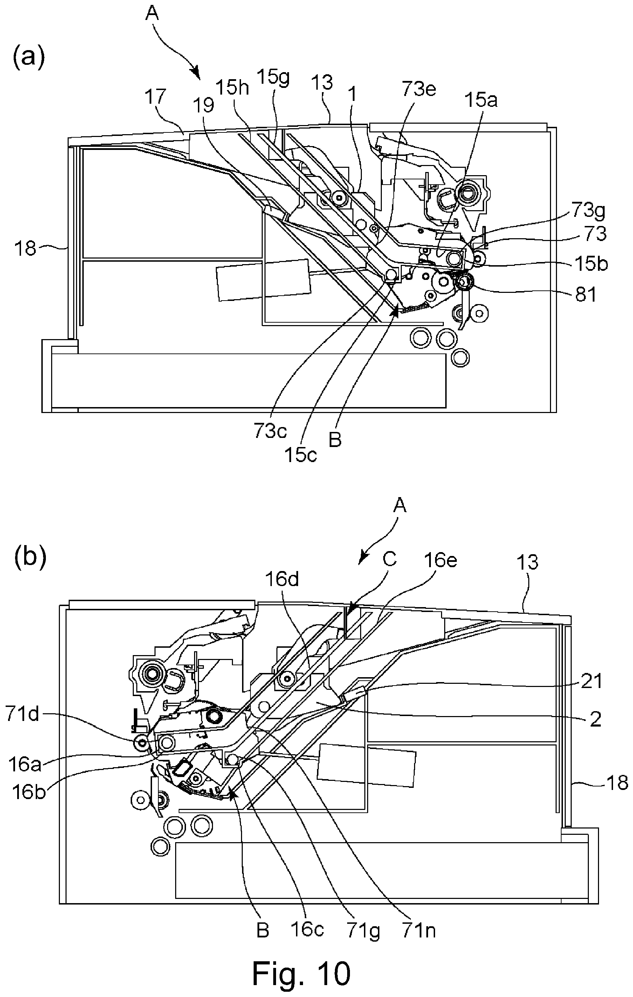

Next, referring to Figures 8, 9 and 10, the mounting of the cartridge B on the apparatus main assembly A will be specifically described. Part (a) of Figure 8 is a sectional view of the driving side of the apparatus main assembly A with the door 13 open, and part (b) of Figure 8 is a sectional view of the non-driving side of the apparatus main assembly A with the door 13 open. The sectional planes of part (a) of Figure 8 and part (b) of Figure 8 are perpendicular to the rotational axis L1. Figure 9 is views illustrating positioning of the cartridge B in the longitudinal direction (direction of the rotational axis L1), and is sectional views of a fitting portion 15j of the apparatus main assembly A taken along a horizontal plane parallel to the rotational axis L1 (parallel with an installation surface of the apparatus main assembly A). Part (a) of Figure 9 shows a state immediately before the cartridge B is fitted with the fitting portion 15j, and part (b) of Figure 9 shows a state in which the cartridge B is in fitting engagement at the fitting portion 15j. Part (a) of Figure 10 is a sectional view of the driving side of the apparatus main assembly A with the door 13 closed, and part (b) of Figure 10 is a sectional view of the non-driving side of the apparatus main assembly A with the door 13 closed. The planes of the section of part (a) of Figures 10 and part (b) of Figure 10 are perpendicular to the rotational axis L1.

First, the mounting of the cartridge B on the apparatus main assembly A will be described. The apparatus main assembly A comprises a first driving side plate 15 and a non-driving side plate 16 which sandwich the cartridge B mounted on the apparatus main assembly A in the direction of the rotational axis L1. Further, a door 13 for opening and closing the insertion opening 17 is rotatably mounted on the apparatus main assembly A. The first driving side plate 15 is provided with an upper guide rail 15g and a lower guide rail 15h which guide the cartridge B when the cartridge B is mounted and dismounted. The non-driving side plate 16 is provided with an upper guide rail 16d and a lower guide rail 16e which guide the cartridge B when the cartridge B is mounted and dismounted. In addition, the drum bearing member 73 of the cartridge B is provided with a guided portion 73g and a rotation stop portion 73c, and the frame member 71 is provided with a positioned portion 71d and a rotation stop portion 71g. Therefore, the guided portion 73g and the rotation stop portion 73c are disposed on the driving side of the cartridge B, and the guided portion 73g and the rotation stop portion 73c are disposed on the non-driven side of the cartridge B.

When the door 13 of the apparatus main assembly A is opened and the insertion opening 17 formed between the first driving side plate 15 and the non-driving side plate 16 is open, the cartridge B can be inserted into and can be removed from the apparatus main assembly A through the insertion opening 17. At this time, by moving the cartridge B in a direction substantially perpendicular to the rotational axis L1 of the drum 62, the cartridge B can be inserted and mounted to and removed from the apparatus main assembly A. That is, a mounting direction M of the cartridge B to the apparatus main assembly A (part (a) of Figure 9 and a dismounting direction thereof from the apparatus main assembly A (reverse direction to the mounting direction M) are directions substantially perpendicular to the rotational axis L1. The rotational axis L1 of the cartridge B mounted in the apparatus main assembly A is parallel to the rotational axis L2 of the drive transmission gear 81, and therefore, the mounting direction M of the cartridge B to the apparatus main assembly A and the dismounting direction thereof from the apparatus main assembly A are substantially perpendicular to the rotational axis L2. In addition, when the cartridge B is mounted to and dismounted from the apparatus main assembly A, the drum unit 69 moves integrally with the cartridge B to the apparatus main assembly A, and is mounted to and dismounted from the apparatus main assembly A. Therefore, the mounting direction of the drum unit 69 to the apparatus main assembly A and the dismounting direction thereof from the apparatus main assembly A are the same as the mounting direction M of the cartridge B to the apparatus main assembly A and the dismounting direction thereof from the apparatus main assembly A, respectively.

<Mounting and positioning of cartridge>

When the cartridge B is inserted into the apparatus main assembly A through the cartridge insertion opening 17, the guided portion 73g and the rotation stop portion 73c on the driving side of the cartridge B are guided by the upper guide rail 15g and the guide rail 15h, respectively. The non-driven side positioned portion 71d and the rotation stop portion 71g of the cartridge B are guided by the upper guide rail 16d and the lower guide rail 16e. By guiding the cartridge B by the guide rails of the apparatus main assembly A and inserting the cartridge B in this manner, the mounting of the cartridge B on the apparatus main assembly A is finally completed.

As shown in parts (a) and (b) of Figure 9, the drum bearing member 73 is provided with a fitted portion 73h functioning as a positioned portion (axial direction positioned portion) to be positioned with respect to the apparatus main assembly A in the direction of the rotational axis L1. The fitted portion 73h has a recess shape (or a groove shape or a slit shape) recessed in the mounting direction M (direction perpendicular to the rotational axis L1). On the other hand, the first driving side plate 15 of the apparatus main assembly A is provided with a fitting portion 15j which can be fitted with the fitted portion 73h. The fitting portion 15j has a projection shape projecting in the direction opposite to the mounting direction MD.

In the process of inserting the cartridge B into the apparatus main assembly A, as shown in part (b) of Figure 9, the fitted portion 73h is fitted with the fitting portion 15j, by which the position of the cartridge B in the direction of the rotational axis L1 (the longitudinal direction of the cartridge B) is determined. The fitting between the fitted portion 73h and the fitting portion 15j is loose fitting, but the fitting play (gap) is set to be extremely small (150 $\mu$m at the maximum). For this reason, it can be said that the cartridge B is positioned at substantially the same position in the direction of the rotational axis L1 regardless of whether the fitted portion 73h abuts the fitting portion 15j in either the H direction or the J direction.

Further, as shown in part (a) of Figure 8, part (b) of Figure 8, part (a) of Figure 10, and part (b) of Figure 10, the first driving side plate 15 is provided with a positioning portion 15a, a positioning portion 15b, and a rotation stop portion 15c, and the non-driving side plate 16 is provided with a positioning portion 16a, a positioning portion 16b, and a rotation stop portion 16c. Cartridge pressing members 1 and 2 are mounted to opposite ends of the door 13 in the direction of the rotational axis of the door 13 so as to be movable (rotatable) with respect to the door 13. In addition, the first driving side plate 15 and the non-driving side plate 16 is provided with pressing springs 19 and 21, respectively.

Further, as shown in Figure 3, the drum bearing member 73 of the cartridge B has a pressed portion (urging force receiving portion) 73e, and the frame member 71 has a pressed portion (urging force receiving portion) 71n. The pressed portions 73e and 71n are provided in recess portions on the driving side and the non-driving side of the cartridge B, respectively.

As shown in part (a) of Figure 10 and part (b) of Figure 10, by closing the door 13, the cartridge pressing members 1 and 2 are urged toward the cartridge B by the pressing springs 19 and 21. And, the cartridge pressing members 1 and 2 abut to the pressed portions 73e and 71n, and press the pressed portions 73e and 71n by the urging force of the pressing springs 19 and 21.

By this, on the driving side, the positioned portion 73g of the cartridge B contacts the positioning portion 15a and the positioning portion 15b of the apparatus main assembly A, and the rotation stop portion 73c contacts the rotation stop portion 15c of the apparatus main assembly A. By this, the driving side portion of the drum frame 60a of the cartridge B is positioned in a direction perpendicular to the rotational axis L1 and rotation about the axis parallel to the rotational axis L1 is restricted. On the non-driven side, the positioned portion 71d of the cartridge B abuts to the positioning portions 16a and 16b of the apparatus main assembly A, and the rotation stop portion 71g abuts to the rotation stop portion 16c of the apparatus main assembly A. By this, the non-driving side portion of the drum frame 60a of the cartridge B is positioned in the direction perpendicular to the rotational axis L1, and rotation about the axis parallel to the rotational axis L1 is restricted.

By positioning the drum frame 60a of the cartridge B with respect to the apparatus main assembly A in this manner, the drum unit 69 positioned with respect to the drum frame 60a is also indirectly positioned with respect to the apparatus main assembly A.

<Drive transmission to drum unit>

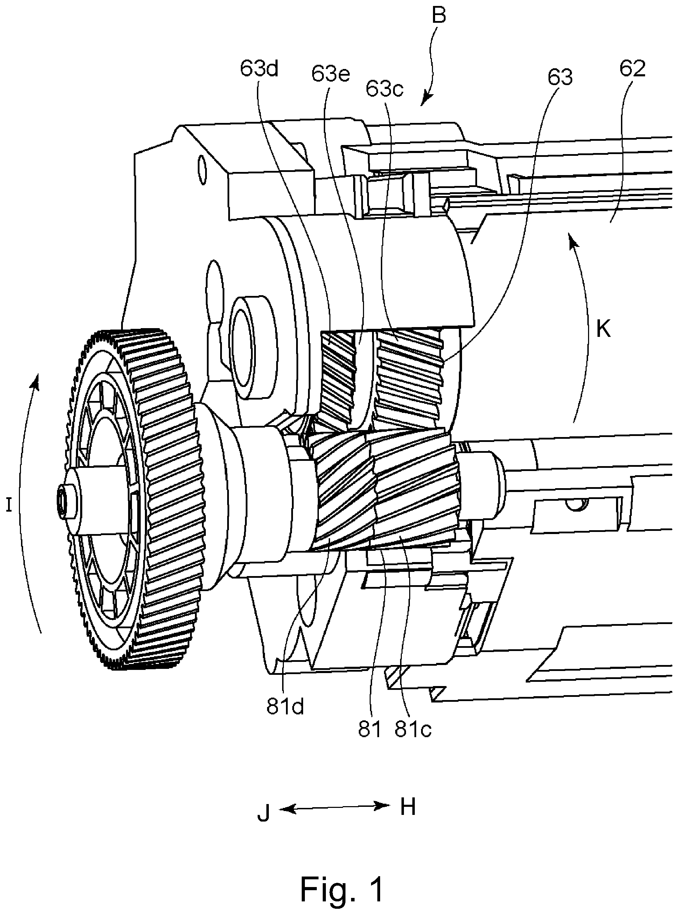

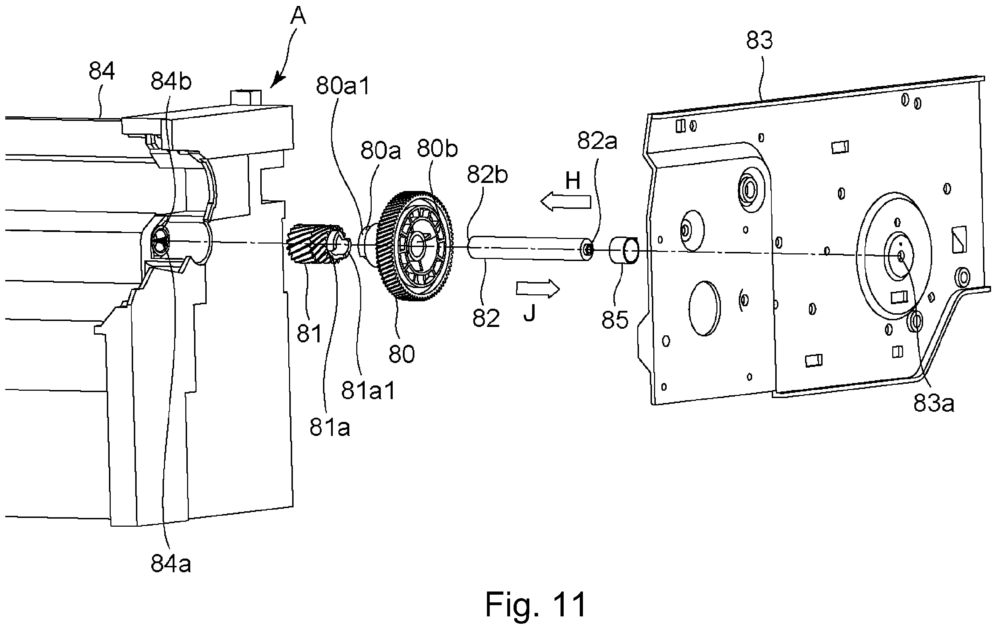

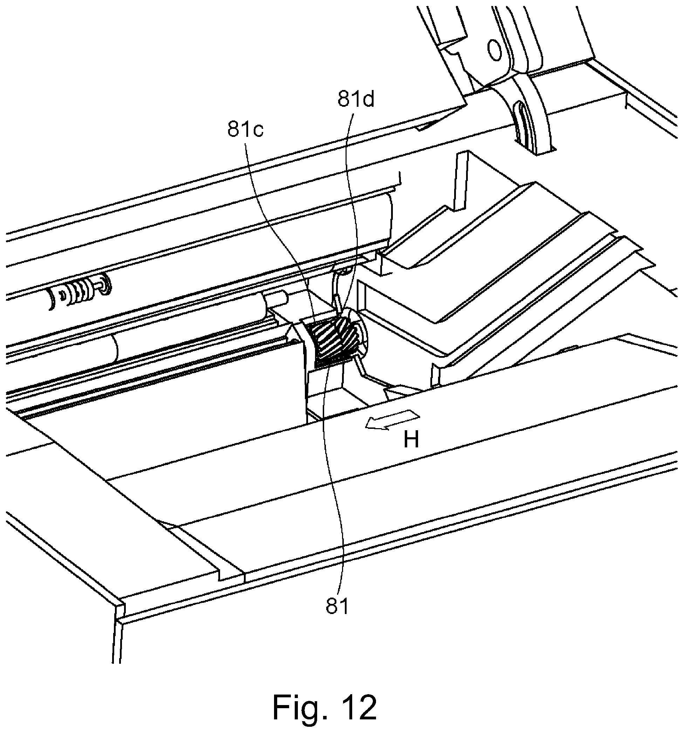

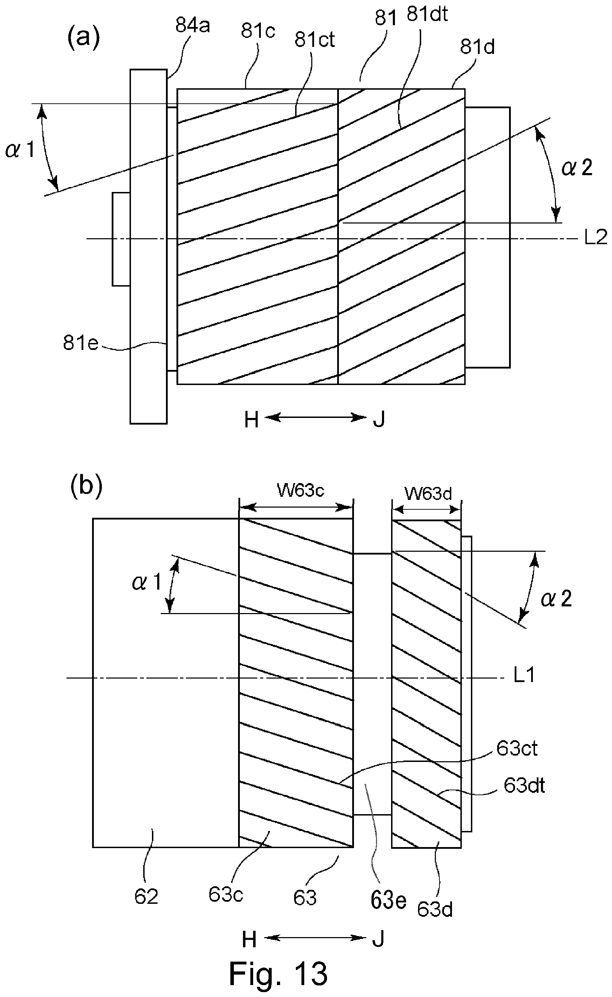

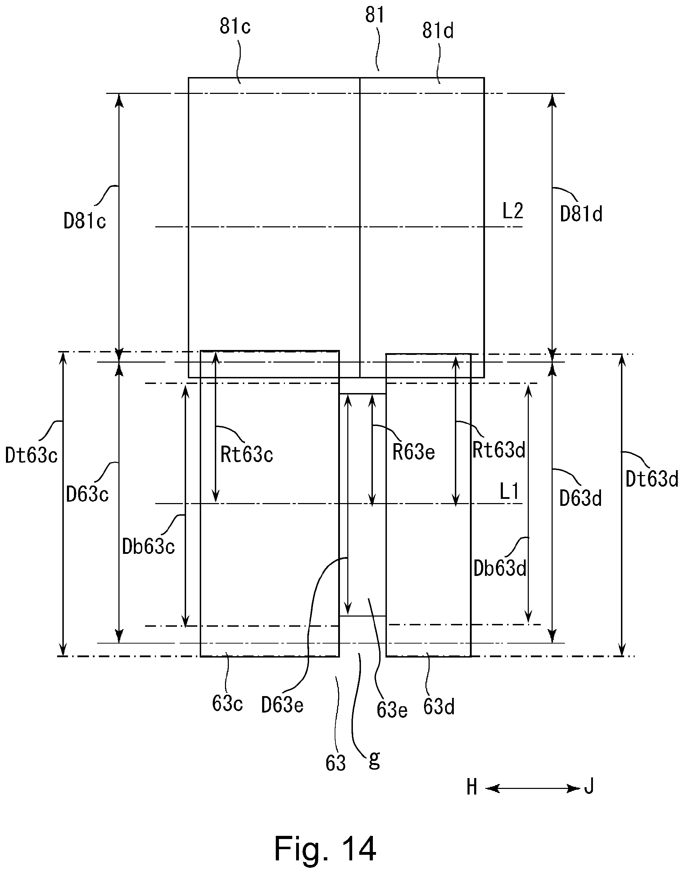

Next, a structure for transmitting the drive from the apparatus main assembly A to the drum unit 69 and the drum 62 will be described. Figure 1 is a perspective view of a portion for transmitting the drive from the apparatus main assembly A to the drum unit 69. Figure 11 is an exploded perspective view illustrating a support structure of the drive transmission gear 81 of the apparatus main assembly A. Figure 12 is a perspective view illustrating a drive transmission unit of the apparatus main assembly A. Part (a) of Figure 13 is an illustration schematically showing the drive transmission gear 81 of the apparatus main assembly A. Part (b) of Figure 13 is an illustration schematically showing the driving side flange 63 of the cartridge B. In part (a) of Figure 13 and part (b) of Figure 13, an addendum circle of the gear is shown for the gear tooth. Figure 14 is an illustration schematically showing a drive transmission structure from the drive transmission gear 81 of the apparatus main assembly A to the driving side flange 63 of the cartridge B.

<Drive structure on apparatus main assembly side>

As shown in Figure 11, the apparatus main assembly A includes a motor (not shown), an idler gear 80, a drive transmission gear 81, a second driving side plate 83, a main frame 84, a driving shaft 82, and a compression spring 85. The driving force of the motor is transmitted from the idler gear 80 to the drive transmission gear 81. The idler gear 80 and the drive transmission gear 81 are supported by the driving shaft 82 so as to be coaxially rotatable and movable in the direction of the rotational axis. One end 82a of the driving shaft 82 is fixed to the hole 83a of the second driving side plate 83, and the other end 82b thereof is supported by the hole 84a of the main frame 84. The driving shaft 82 is provided so that the rotational axis of the drive transmission gear 81 is parallel with the rotational axis L1 of the drum 62 when the cartridge B is mounted in the apparatus main assembly A.

In addition, the compression spring 85 is provided between the other end 80b of the idler gear 80 and the second driving side plate 83, so that the idler gear 80 is urged in the H direction of the rotational axis direction. As described above, the J direction and the H direction in the apparatus main assembly A are defined to be coincident with the J direction and the H direction of the cartridge B having been mounted on the apparatus main assembly A. As a result, as shown in Figure 11, the J direction is the direction from the idler gear 80 toward the second driving side plate 83 along the rotational axis of the idler gear 80, and the H direction is the direction opposite thereto.

One end 80a of the idler gear 80 is provided with a recess 80a1 recessed in the direction of the rotational axis. On the other hand, one end 81a of the drive transmission gear 81 is provided with a projection 81a1 projecting in the direction of the rotational axis at a position facing the recess 80a1 of the idler gear 80. By engagement of the recess 80a1 of the idler gear 80 with the projection 81a of the drive transmission gear 81, the drive force is transmitted from the idler gear 80 to the drive transmission gear 81, and the drive transmission gear 81 is rotated integrally. The projection-recess relationship between the recess 80a1 and the projection 81a1 may be reversed.

As will be described hereinafter, the drive transmission gear 81 mesh-engages with the driving side flange 63 of the cartridge B to transmit the drive force. As shown in part (d) of Figure 1uring performing the above-mentioned image forming process operation, the initial operation after mounting the cartridge B, and the preparatory operation of the image forming process (collectively referred to as "driving"), the drive transmission gear 81 is rotated in the I direction to rotate the driving side flange 63 in the K direction. That is, the driving direction (rotational direction) of the drive transmission gear 81 during driving is the I direction, and the driving direction (rotational direction) of the driving side flange 63 during driving is the K direction. As the drive transmission gear 81 and the driving side flange 63 are viewed from the driving side to the non-driving side along the H direction, the I direction is a clockwise direction and the K direction is a counterclockwise direction.

<Drive transmission gear 81>

As shown in Figures 1, 12 and part (a) of Figure 13, the drive transmission gear 81 includes a first main assembly gear portion (first main assembly side gear portion, first main assembly side helical tooth gear portion) 81c and a second main assembly gear portion (second main assembly side gear portion, second main assembly side helical tooth gear portion) 81d are provided which are coaxial with each other, as an helical tooth gear portion. The first main assembly gear portion 81c is located on the downstream side, in the H direction (upstream side in the J direction), with respect to the second main assembly gear portion 81d. The first main assembly gear portion 81c includes a plurality of first main assembly helical teeth 81ct, and the second main assembly gear portion 81d includes a plurality of second main assembly helical teeth 81dt. The first main assembly helical tooth 81ct and the second main assembly helical tooth 81dt both have involute tooth profiles. The first main assembly gear portion 81c and the second main assembly gear portion 81d are integrally resin-molded and are integrally rotatable. In addition, twisting directions of the first main assembly gear portion 81c and the second main assembly gear portion 81d are the same, and the tooth surfaces are twisted so as to shift in the I direction as go in the J direction. Further, as shown in part (a) of Figure 13, a helix angle $\alpha2$ of the second main assembly gear portion 81d is larger than a helix angle $\alpha1$ of the first main assembly gear portion 81c (that is, $\alpha1 < \alpha2$ is satisfied). Furthermore, the numbers of teeth of the first main assembly gear portion 81c and the second main assembly gear portion 81d are the same.

<Driving side flange 63>

On the other hand, as shown in Figures 1, part (b) of Figure 6 and part (b) of Figure 13, the driving side flange 63 is coaxially provided with the first gear portion (first unit side gear portion, first unit side helical gear portion) 63c as the helical gear portion, and a second gear portion (second unit side gear portion, second unit side helical gear portion, second helical gear portion) 63d. The first gear portion 63c is disposed on a downstream side, in the H direction (upstream side in the J direction), of the second gear portion 63d. That is, the first gear portion 63c is disposed between the second gear portion 63d and the drum 62 in the direction of the rotational axis L1. The first gear portion 63c includes a plurality of first helical teeth (first projections) 63ct provided at different positions in a circumferential direction about the rotational axis L1, and the second gear portion 63d includes a plurality of second helical teeth (second projections) 63dt provided at different positions in the circumferential direction about the rotational axis L1. The first helical teeth 63ct and the second helical teeth 63dt are both involute teeth and are projections projecting in the radial direction centered on the rotational axis L1. The first gear portion 63c and the second gear portion 63d are integrally molded of resin and rotate integrally, and therefore, the first gear portion 63c and the second gear portion 63d can be said to be a first rotating portions and a second rotating portion which are rotatable integrally with each other. The first gear portion 63c meshes with the first main assembly gear portion 81c of the drive transmission gear 81, and the second gear portion 63d meshes with the second main assembly gear portion 81d of the drive transmission gear 81.

As shown in Figure 1, twisting directions of the first gear portion 63c and the second gear portion 63d of the driving side flange 63 are the same, and the tooth surfaces twisted so as to shift in the K direction as go in the J direction. The twisting direction of the first gear portion 63c and the second gear portion 63d is opposite to the twisting direction of the first main assembly gear portion 81c and the second main assembly gear portion 81d of the drive transmission gear 81. Further, as shown in part (b) of Figure 13, a helix angle $\alpha2$ of the second gear portion 63d is larger than a helix angle $\alpha1$ of the first gear portion 63c (that is, $\alpha1 < \alpha2$ is satisfied). The helix angle $\alpha1$ of the first gear portion 63c is the same as the helix angle $\alpha1$ of the first main assembly gear portion 81c, and the helix angle $\alpha2$ of the second gear portion 63d is the same as the helix angle $\alpha2$ of the second main assembly gear portion 81d. In addition, the numbers of the teeth of the first gear portion 63c and the second gear portion 63d of the driving side flange 63 are the same. Further, a width (tooth width) W63c (Wc, Wc1) of the first helical tooth (first projection) 63ct measured in the direction of the rotational axis L1 is larger than a width (tooth width) W63d (Wd) of the second helical tooth (second projection) 63dt measured in the direction of the rotational axis L1. That is, the first gear portion 63c and the second gear portion 63d is each provided with at least one tooth such that the tooth width Wc of the first helical tooth (tooth, first projection) 63ct measured in the direction of the rotational axis L1 and the tooth width Wd of the second helical tooth (tooth, second projection) 63dt measured in the direction of the rotational axis L1 satisfy the following formula A1.

$$Wc > Wd \ ..... \ (Formula \ A1).$$

In other words, when the width (tooth width) of the first helical tooth 63ct having the largest width (tooth width) measured in the direction of the rotational axis L1 of the first gear portion 63c is Wc1, the second gear portion 63d has a second helical tooth (second projection) 63dt having a width (tooth width) measured in the direction of the rotational axis L1 which is smaller than Wc1.

As will be described in detail hereinafter, while the driving side flange 1763 is driven by the drive transmission gear 1781 in a balanced state, the drive force FD received by a first gear portion 1763c is higher than a restricting force FB received by a second gear portion 1763d, and therefore, such a relationship is preferable.

In addition, the larger a width (meshing width), in the direction of the rotational axis L1, of the portion where the first gear portion 63c in meshing engagement (contact) with the first main assembly gear portion 81c and a meshing engagement width of the second helical tooth gear portion 63c with the second main assembly gear portion 81d, the better the drive transmission accuracy. However, if the meshing width is set larger than necessary, the widths of the first gear portion 63c and the second gear portion 63d in the direction of the rotational axis L1 are large, and the driving side flange 63, the drum unit 69, the cartridge B, and eventually the apparatus main assembly A are upsized. Therefore, the tooth width Wc1 of the first helical tooth (tooth) 63ct having the largest tooth width in the first gear portion 63c and the tooth width Wd1 of the second helical tooth (tooth) 63dt having the largest tooth width in the second gear portion 63d preferably satisfies the following formula A2, more preferably formula A3.

$$Wd1 \leq (4/5) \ \cdot \ Wc1 \ ..... \ (A2)$$

$$Wd1 \leq (3/4) \ \cdot \ Wc1 \ ..... \ (A3)$$

Further, from a standpoint of the strength of the second helical tooth (tooth) 63dt of the second gear portion 63d, it is preferable that the second helical tooth (tooth) 63dt has a tooth width of a certain level or more, and it is preferable that the tooth width Wc1 and the tooth width Wd1 satisfies the following formula A4.

$$Wd1 \geq (1/10) \cdot Wc1 \ ..... \ (formula \ A4).$$

In addition, as shown in Figure 14, meshing pitch circle diameters D63c and D63d of the first gear portion 63c and the second gear portion 63d in the meshing between the driving side flange 63 and the drive transmission gear 81 are set to be substantially the same. Further, addendum circle diameters Dt63c and Dt63d of the first gear portion 63c and the second gear portion 63d are also set to be substantially the same. Similarly, the meshing pitch circle diameters D81c and D81d of the first main assembly gear portion 81c and the second main assembly gear portion 81d are set to be substantially the same. By this, the meshing between the first gear portion 63c and the first main assembly gear portion 81c and the meshing between the second gear portion 63d and the second main assembly gear portion 81d can be appropriately meshed without tip tooth bearing.

In order to set the meshing pitch circular diameters D63c and D63d of the first gear portion 63c and the second gear portion 63d to be substantially the same, it is preferable that the shapes of the first gear portion 63c and the second gear portion 63d are as follows.

Specifically, it is preferable that the addendum circle diameter Dt63c of the first gear portion 63c is larger than a dedendum circle diameter Db63d of the second gear portion 63d, or is larger than 0.8 times (further preferably 0.9 times) the addendum circle diameter Dt63d of the second gear portion 63d. In addition, it is preferable that the addendum circle diameter Dt63c of the first gear portion 63c is preferably smaller than 1.1 times the addendum circle diameter Dt63d of the second gear portion 63d.

Further, it is preferable that the dedendum circle diameter Db63c of the first gear portion 63c is smaller than the addendum circle diameter Dt63d of the second gear portion 63d. Furthermore, the dedendum circle diameter Db63c of the first gear portion 63c is preferably larger than 0.9 times the dedendum circle diameter Db63d of the second gear portion 63d.

Moreover, it is preferable that the addendum circle diameter Dt63d of the second gear portion 63d is larger than the dedendum circle diameter Db63c of the first gear portion 63c, or is larger than 0.8 times (further preferably 0.9 times) the addendum circle diameter Dt63c of the first gear portion 63c. Further, the addendum circle diameter Dt63d of the second gear portion 63d is preferably smaller than 1.1 times the addendum circle diameter Dt63c of the first gear portion 63c.

Further, the dedendum circle diameter Db63d of the second gear portion 63d is preferably smaller than the addendum circle diameter Dt63c of the first gear portion 63c. Further, the dedendum circle diameter Db63d of the second gear portion 63d is preferably larger than 0.9 times the dedendum circle diameter Db63c of the first gear portion 63c.

Here, the relationship between these dimensions is expressed using the diameters of the first gear portion 63c and the second gear portion 63d, but it is a matter of course that the relationship remains the same even if the diameters are replaced with radii. In addition, in the embodiments which will be described hereinafter, examples in which the teeth of the first gear portion 63c and the second gear portion 63d are replaced with a plurality of projections including various shapes will be shown. In such cases, the addendum circle is a circle drawn as a rotation locus when the free end (point) most remote from the rotational axis L1 among the tips of the plurality of projections rotates, and the diameter/radius of this circle is the addendum circle diameter/radius.

In order to make the meshing pitch circle diameters D63c and D63d the same while making the helix angles of the first gear portion 63c and the second gear portion 63d different, as described above, the modules and/or the amounts of gear profile shifts are made different between the first gear portion 63c and the second gear portion 63d. Similarly, for the drive transmission gear 81, the modules and/or the amounts of gear profile shifts are different between the first main assembly gear portion 81c and the second main assembly gear portion 81d.

In addition, the driving side flange 63 includes a cylindrical portion (intermediate portion, small diameter portion, shaft portion) 63e between the first gear portion 63c and the second gear portion 63d in the direction of the rotational axis L1. The maximum diameter D63e centered on the rotational axis L1 of the cylindrical portion 63e is smaller than the addendum circle diameter Dt63c of the first gear portion 63c and the addendum circle diameter Dt63d of the second gear portion 63d. Further, in this embodiment, the maximum diameter D63e centered on the rotational axis L1 of the cylindrical portion 63e is smaller than the dedendum circle diameter Db63c of the first gear portion 63c and the dedendum circle diameter Db63d of the second gear portion 63d. However, the maximum diameter D63e centered on the rotational axis L1 of the cylindrical portion 63e is not limited to the above unless it comes into contact with the drive transmission gear 81 while the driving side flange 63 is being driven by the drive transmission gear 81. Further, as will be described hereinafter in Embodiments 22 and 23, the structure may be such that the distance (radius) R63e from the rotational axis L1 to the outer diameter of the cylindrical portion 63e is at least temporarily smaller than the addendum circle radius Rt63ct of the first gear portion 63c or the addendum circle radius Rt63d of the second gear portion 63d, so that the driving side flange 63 and the drive transmission gear 81 can be in meshing engagement with each other to transmit the drive force.

Here, the relationship between these dimensions is expressed using the diameters of the first gear portion 63c, the second gear portion 63d, and the cylindrical portion 63e, but it is a matter of course that the relationships remain the same even if the diameters are replaced with radii. The shape of the cylindrical portion 63e does not have to be a cylindrical shape centered on the rotational axis L1. For example, various shapes such as a polygonal prism shape and a shape that is not symmetrical with respect to the rotational axis L1 can be used. In such cases, a diameter of the circle drawn as the rotation locus of the point most remote with respect to the rotational axis L1 in the intermediate portion 63e is the above-mentioned maximum diameter D63e when the driving side flange 63 rotates, and the radius of the circle is the maximum of the radius R63e.

By providing the cylindrical portion 63e, the second gear portion 63d can be arranged at a position away from the drum 62 (more downstream side in the J direction) so as not to contact the first gear portion 81c. Similarly, the first gear portion 63c can be placed at a position close to the drum 62 (more downstream in the H direction) so as not to contact the second main assembly gear portion 81d. That is, by providing the cylindrical portion 63e, a gap g is provided between the first gear portion 81c and the second gear portion 63d in the direction of the rotational axis L1. By this, when the cartridge B is mounted to the apparatus main assembly A, the first gear portion 63c is prevented from contacting the second main assembly gear portion 81d, and the second gear portion 63d is prevented from contacting the first main assembly gear the portion 81c, in the direction of the rotational axis L1. In addition, when the drive transmission gear 81 is driven and the drive transmission gear 81 is moved to a balanced position, the first main assembly gear portion 81c is prevented from contacting the second gear portion 63d, and the second main assembly gear portion 81d is prevented from contacting the first gear portion 63c. A width of the cylindrical portion 63e measured in the direction of the rotational axis L1 will be described in detail hereinafter.

<Drive transmission to developing roller>

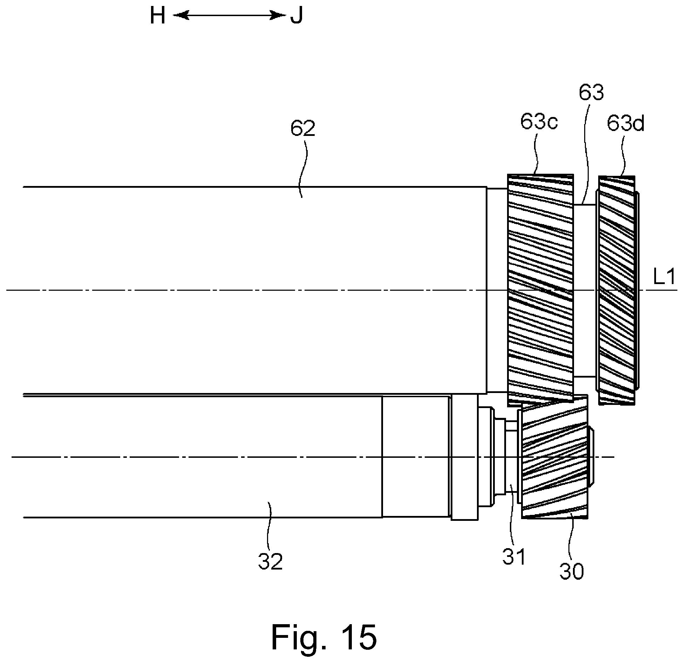

Figure 15 is an illustration of a structure of drive transmission from the driving side flange 63 to the developing roller 32. The developing roller 32 is fixed to the developing roller shaft 31, and a developing roller gear 30 is provided at one end on the driving side of the developing roller shaft 31 so as to be movable in the direction of the rotational axis of the developing roller shaft 31. The developing roller gear 30 is rotatable integrally with the developing roller shaft 31 and the developing roller 32. That is, the developing roller gear 30 is provided so as to be able to transmit the driving force to the developing roller shaft 31 and the developing roller 32. The developing roller gear 30 is meshing engagement with the first gear portion 63c of the driving side flange 63 to transmit the driving force thereto.

Alternatively, the developing roller gear 30 may be engaged with the second gear portion 63d to transmit the driving force. However, by employing a structure in which the developing roller gear 30 meshes with the first gear portion 63c, the length of the developing roller shaft 31 in the rotational axis direction can be reduced as compared with the structure in which the developing roller gear 30 meshes with the second gear portion 63d.

<Drive transmission operation>

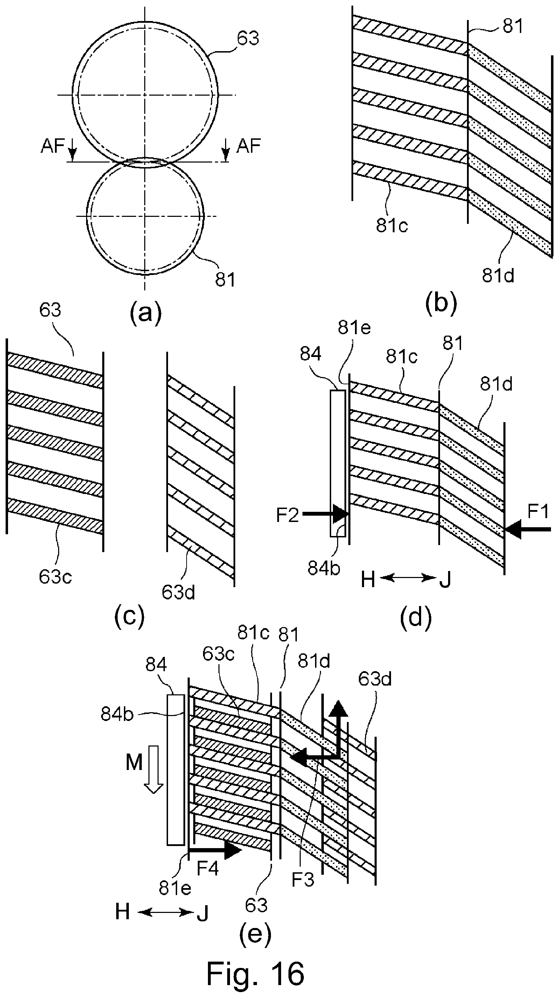

Next, referring to Figures 16, 17, 19, 20, and 21, the meshing operation between the drive transmission gear 81 and the driving side flange 63 will be described in the order from the mounting of the cartridge B.

Part (a) of Figure 16 is a schematic view of the drive transmission gear 81 and the driving side flange 63 as viewed along the rotational axis direction. Part (b) of Figure 16 is a sectional view of the drive transmission gear 81 taken along a line AF-AF. In the drawings subsequent to part (b) of Figure 16, the shaded (hatched) portions in the Figures are sections of the tooth portions of the gear and the portion between adjacent shaded portions correspond to a part of the gear including the intertooth space portions of the gear. Part (c) of Figure 16 is a sectional view of the driving side flange 63 taken along a line AF-AF. Part (d) of Figure 16 is a sectional view of the drive transmission gear 81 taken along the line AF-AF before mounting the cartridge. Part (e) of Figure 16 is a sectional view, taken along the line AF-AF, of the drive transmission gear 81 and the driving side flange 63 after mounting of the cartridge B and before start of the driving operation.

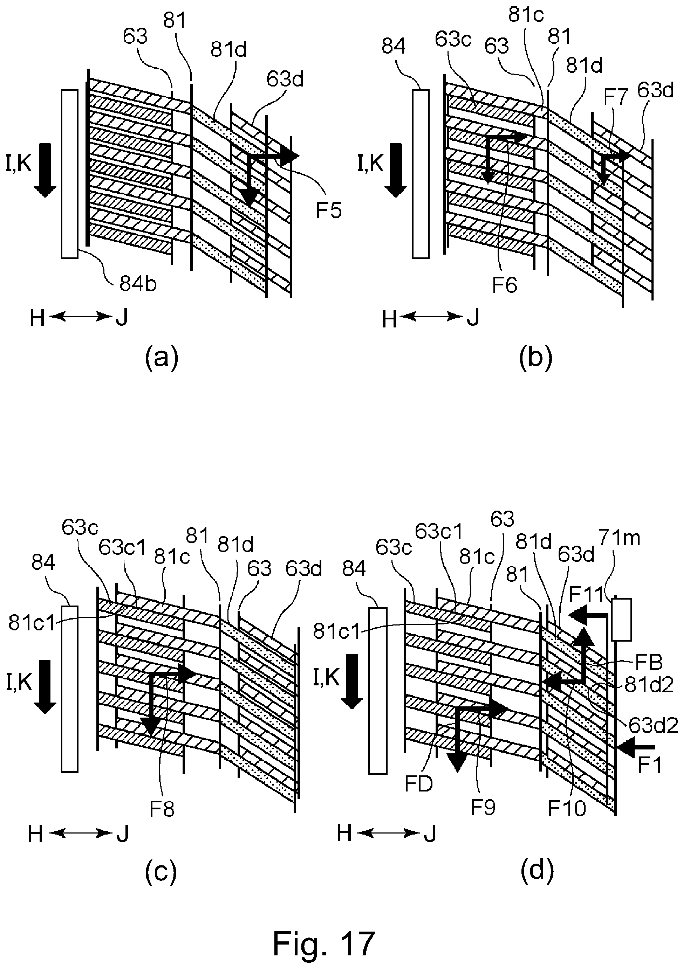

Figure 17 is sectional views, taken along the line AF-AF which is in contact with the meshing pitch circle between of the drive transmission gear 81 and the driving side flange 63 immediately after the start of the drive, in which part (a) of Figure 17, part (b) of Figure 17, part (c) of Figure 17, and part (d) of Figure 17 shows states with elapse of time.

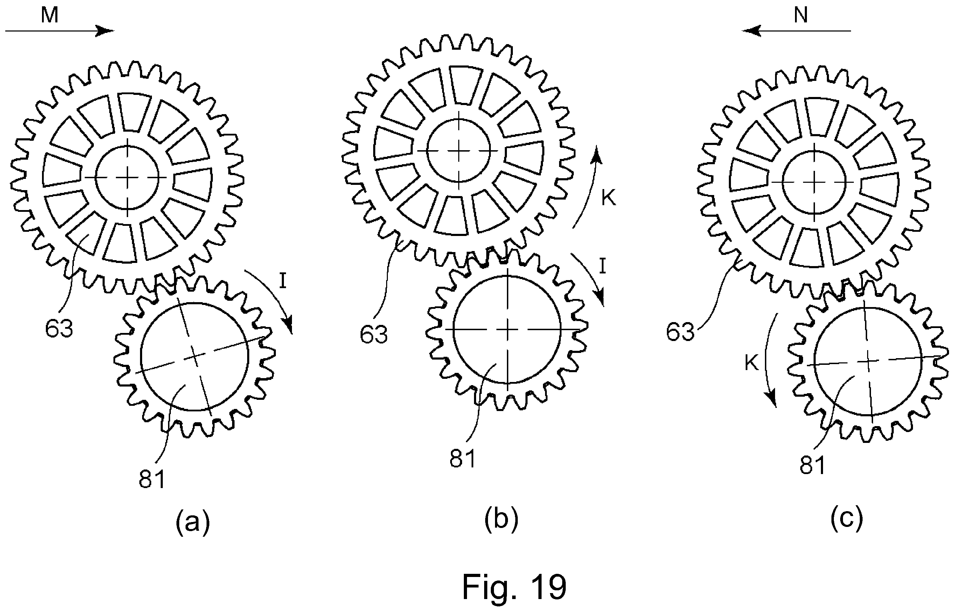

Part (a) of Figure 19, part (b) of Figure 19, and part (c) of Figure 19 are illustrations of the drive transmission gear 81 and the driving side flange 63 as viewed along the H direction.

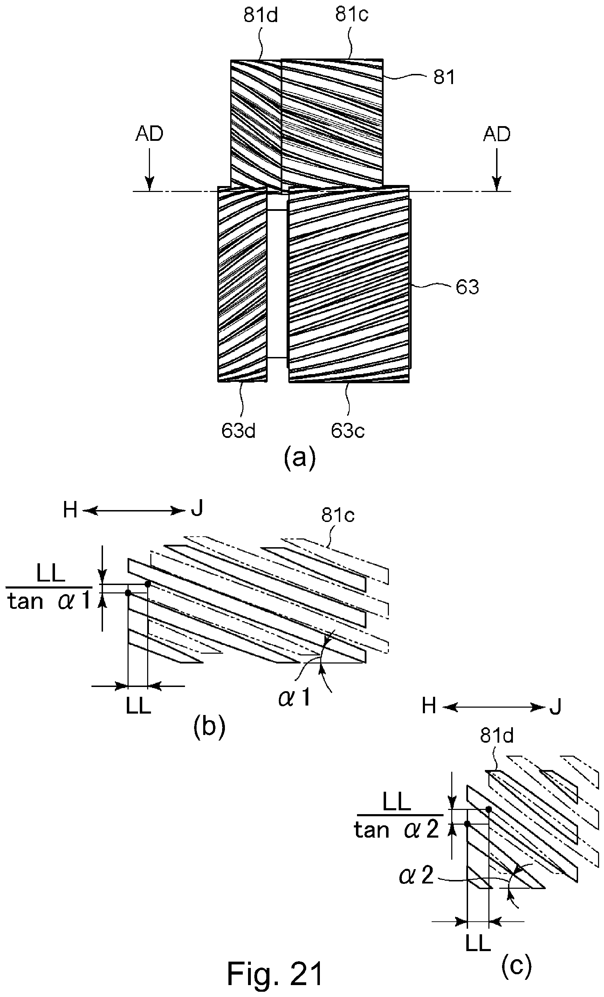

Part (a) of Figure 21 is a view of the drive transmission gear 81 and the driving side flange 63 as viewed along the direction perpendicular to the rotational axis direction. Part (b) of Figure 21 is a sectional view, taken along a line AD-AD, of the first main assembly gear portion 81c during the driving operation. Part (c) of Figure 21 is a sectional view, taken along the line AD-AD, of the second main assembly gear portion 81d during the driving operation.

<Engagement when cartridge B is mounted>

As shown in part (d) of Figure 16, in the drive transmission gear 81 before mounting the cartridge B, the other end 81e of the drive transmission gear 81 is abutted against a surface 84b of the main frame by the urging force F1 of the compression spring 85, so that the drive transmission gear 81 is held thereby. By abutting and holding the drive transmission gear 81 against the abutting surface 84b in this manner, the initial position of the drive transmission gear 81 in the rotational axis direction is fixed, so that the meshing with the driving side flange 63 can be stabilized.

When the cartridge B is mounted to the apparatus main assembly A along the mounting direction M (M direction), the driving side flange 63 is brought into meshing engagement with the drive transmission gear 81 as shown in part (a) of Figure 19. Here, the force required to rotate the driving side flange 63 is larger than the force required to rotate the drive transmission gear 81. Therefore, the drive transmission gear 81 is rotated in the I direction (clockwise direction) by the movement of the driving side flange 63 in the M direction. At this time, as shown in part (e) of Figure 16, the first main assembly gear portion 81c or the second main assembly gear portion 81d of the drive transmission gear 81 is brought into contact the first gear portion 63c or the second gear portion 63d of the driving side flange 63, and is pressed in the M direction. A thrust force F3 in the H direction is applied to the drive transmission gear 81. However, since the other end 81e of the drive transmission gear 81 abuts against the abutting surface 84b of the main frame 84 and receives the reaction force F4, the drive transmission gear 81 cannot move in the H direction.

<Operation after start of driving>

Next, a case where the driving side flange 63 is driven in order to perform an initial operation, a preparatory operation for image formation, and the like will be described. As shown in part (b) of Figure 19, the drive transmission gear 81 is rotated by a motor (not shown) of the apparatus main assembly A and rotates in the I direction. By this, the driving side flange rotates in the K direction. It is assumed that immediately after the start of rotation of the drive transmission gear 81 in the I direction, the second main assembly gear portion 81d of the drive transmission gear 81 first meshes with the second gear portion 63d of the driving side flange 63 to transmit the driving force thereto, as shown in part (a) of Figure 17. Then, the second main assembly gear portion 81d applies a thrust force in the H direction to the second gear portion 63d. However, the driving side flange 63 is prevented from moving in the H direction by the rib 71p, and receives a reaction force in the J direction corresponding to the thrust force in the H direction. Therefore, the second main assembly gear portion 81d receives a thrust force F5 in the J direction due to the action of the reaction force received from the second gear portion 63d. The drive transmission gear 81 moves in the J direction by this thrust force F5.

When the drive transmission gear 81 moves in the J direction with further rotation, as shown in part (b) of Figure 17, the first gear portion 63c also brought into meshing engagement with the first main assembly gear portion 81c, so that the first main assembly gear portion 81c A receives a thrust force F6. The direction of the thrust force F6 is the J direction which is the same as that of the thrust force F7 received by the meshing engagement of the second main assembly gear portion 81d with the second gear portion 63d. By this, the drive transmission gear 81 moves further in the J direction.

When the drive transmission gear 81 further rotates and moves in the J direction, the second main assembly gear portion 81d becomes out of engagement with the second gear portion 63d, as shown in part (c) of Figure 17. On the other hand, the meshing engagement between the first gear portion 81c and the first gear portion 63c is maintained, and a thrust force F8 is applied to the first gear portion 81c in the J direction. At this time, the drive transmission gear 81 rotates the driving side flange 63 only through the engagement between the first main assembly gear portion 81c and the first gear portion 63c. That is, the tooth surface 81c1, on the downstream side in the I direction, of the first main assembly gear portion 81c and the tooth surface 63c1, on the upstream side in the I direction, of the first gear portion 63c are in contact with each other.

This is effected because the helix angle $\alpha2$ of the second main assembly gear portion 81d of the drive transmission gear 81 is larger than the helix angle $\alpha1$ of the first main assembly gear portion 81c ($\alpha2 > \alpha1$). Details will be described below, referring to part (b) of Figure 21 and part (c) of Figure 21. It is assumed that the drive transmission gear 81 is moved by the amount of movement LL in the J direction by the thrust force through the engagement with the driving side flange 63. In parts (b) and (c) of Figure 21, the first main assembly gear portion 81c and the second main assembly gear portion 81d are shown by a solid line before movement and a broken line after movement, respectively. The amounts of movement of the first main assembly gear portion 81c and the second main assembly gear portion 81d in the rotational direction by this movement can be expressed by $LL/\tan\alpha1$ and $LL/\tan\alpha2$, respectively. Based on the relationship between the helix angles $\alpha1$ and $\alpha2$, the movement amount $LL/\tan\alpha2$ in the rotational direction of the second main assembly gear portion 81d is larger than the movement amount $LL/\tan\alpha1$ in the rotational direction of the first main assembly gear portion 81c ($LL/\tan\alpha1 < LL/\tan\alpha2$). As will be understood, the movement amount in the rotational direction corresponding to the movement amount LL in the J direction is larger in the second main assembly gear portion 81d than in the first main assembly gear portion 81c. Therefore, even if the first main assembly gear portion 81c and the first gear portion 63c are engaged with each other, the second main assembly gear portion 81d is separated from the second gear portion 63d.

When the drive transmission gear 81 further continues to rotate and moves to the driving side J, the tooth surface 81d2, on the upstream side, in the I direction of the second main assembly gear portion 81d finally comes into contact with the tooth surface (contact portion) 63d2, on the downstream side in the I direction, of the second gear portion 63d, as shown in part (d) of Figure 17. The surface 81c1 of the first main assembly gear portion 81c and the surface 63c1 of the first gear portion 63c maintain contact with each other. That is, in this state, the first main assembly gear portion 81c of the drive transmission gear 81 presses the tooth surface (contact portion) 63c1 by the tooth surface 81c1 to rotate the driving side flange 63, and the tooth surface 81d2 of the second main assembly gear portion 81d of the drive transmission gear 81 contacts the tooth surface 63d2, so that the drive transmission gear 81 is sandwiched by the driving side flange 63. Then, the movement of the drive transmission gear 81 in the direction of the rotational axis L1 stops. The position in the direction of the rotational axis L1 at this time is a balanced position. A state in which the drive transmission gear 81 rotates at the balanced position and is driven to effect the drive transmission to the driving side flange 63 will be described.

In the balanced state, the force F9, the force F10, and the force F1 are applied to the drive transmission gear 81 in the direction of the rotational axis L1. The force F9 is the thrust force in the J direction which the first main assembly gear portion 81c receives by the meshing engagement with the first gear portion 63c, and the force F1 is the thrust force in the H direction which the second main assembly gear portion 81d receives by the meshing engagement with the second gear portion 63d, and the force F1 is the urging forces of the compression spring 85. In addition, the driving side flange 63 receives a force from the drive transmission gear 81 and is positioned by the side wall 71m or the rib 71p in the direction of the rotational axis L1, and a reaction force F11 is produced which balances with the force received from the drive transmission gear 81. Part (d) of Figure 17 shows a case in which the drive transmission gear 81 is positioned in contact with the side wall 71m. When friction is ignored in the balanced state, the force F9, the force F10, the force F1, and the force F11 are balanced, and the drive transmission gear 81 and the driving side flange 63 are positioned in the direction of the rotational axis L1.

Further, the driving side flange 63 is sandwiched (contacted) between the first main assembly gear portion 81c and the second main assembly gear portion 81d of the drive transmission gear 81 and receives the following forces in the K direction (rotational direction). That is, the tooth surface (contact portion) 63c1 of the first gear portion 63c is in contact with the first main assembly gear portion 81c existing on the upstream side in the K direction (first circumferential direction), and it receives the driving force FD as the force of the component for rotating the driving side flange 63 the in the direction K (predetermined direction). At the same time, the tooth surface (contact portion) 63d2 of the second gear portion 63d is in contact with the second main assembly gear portion 81d existing on the downstream side in the K direction (first circumferential direction), and it receives a restricting force (braking force) FB as the force of the component in the direction which suppresses (restricts) the rotation of the driving side flange 63 in the direction K. Therefore, it can be said that the first gear portion 63c is a driving force receiving portion which receives the driving force FD, and the second gear portion 63d is the restricting force receiving portion which receives the restricting force FB. The driving force FD is larger than the restricting force FB.

Here, since the second gear portion 63d is integrally provided with the first gear portion 63c in the rotational direction, the structure is such that the second gear portion 63d cannot rotate relative to the first gear portion 63c in the opposite direction K. Strictly speaking, since the driving side flange 63 is made of resin and deformation of teeth and members occurs, the second gear portion 63d subjected to the restricting force FB is slightly rotated in the direction opposite to the K direction relative to the first gear portion 63c, and then the rotation thereof stops and the position thereof is fixed. Therefore, the restricting force FB received by the second gear portion 63d acts on (is transmitted to) the first gear portion 63c. By the same principle, the driving force FD received by the first gear portion 63d acts on (is transmitted to) the second gear portion 63d.

The state in which the first gear portion 63c receives the driving force FD and the second gear portion 63d receives the restricting force FB in this manner is a state that there is no play (backlash) in the rotational direction (I direction) between the driving side flange 63 and the drive transmission gear 81, that is, a backlashless state. In this manner, the driving side flange 63 is rotationally driven in the K direction with the backlashless state maintained. While the drive is transmitted by engaging with each other in the backlashless state, the drive transmission with high rotation accuracy is accomplished.

In addition, the width (tooth width) W63c of the first helical tooth (first projection) 63ct measured in the direction of the rotational axis L1 is larger than the width (tooth width) W63d of the second helical tooth (second projection) 63dt in the direction of the rotational axis L1. In other words, the second gear portion 63d has a second helical tooth (second projection) 63dt which is narrower than the first helical tooth 63ct, which has the largest width (tooth width) of the first gear portion 63c in the direction of the rotational axis L1.

If the second main assembly gear portion 81d and the second gear portion 63d do not come into contact with each other at the start of driving, and the first main assembly gear portion 81c and the first gear portion 63c come into contact with each other, The driving starts from the state shown in part (c) of Figure 17 without going through the state shown in part (b) of Figure 17. Then, according to the same principle as described above, the balanced state shown in part (d) of Figure 17 is reached. That is, from the state shown in part (c) of Figure 17, the drive transmission gear 81 moves in the J direction by the thrust force F8to reach the balanced state shown in part (d) of Figure 17.

<Disengagement when dismounting cartridge B>

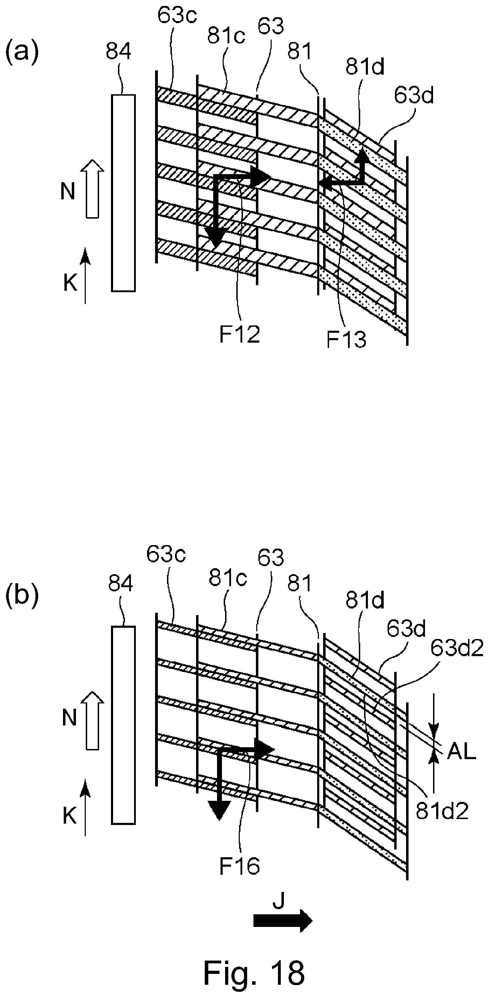

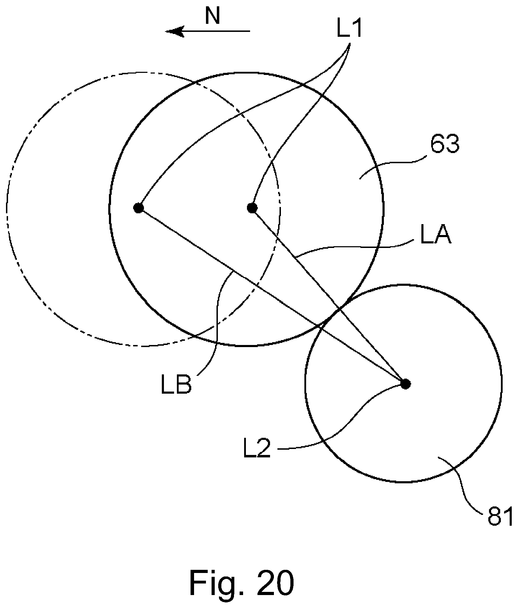

Next, referring to Figures 18, 19, and 20, the meshing disengagement operation between the drive transmission gear 81 and the driving side flange 63 when the cartridge B is dismounted after the end of driving operation will be described. Figure 18 is a sectional view taken along a line AF-AF in contact with the meshing pitch circle between the drive transmission gear 81 and the driving side flange 63 when the cartridge B is to be dismounted after the end of driving operation, and the time elapses in the order of part (a) of Figure 18 and part (b) of Figure 18. Figure 20 is a schematic view of the drive transmission gear 81 and the driving side flange 63 as viewed along the H direction.

As shown in part (c) of Figure 19, the cartridge B is dismounted in the take-out direction N

(N direction) and removed from the apparatus main assembly A. The N direction is opposite of the M direction. As described above, the force required to rotate the driving side flange 63 is larger than the force required to rotate the drive transmission gear 81. Therefore, the drive transmission gear 81 is rotated in the K direction (counterclockwise direction) by the movement of the driving side flange 63 in the N direction. At this time, as shown in part (a) of Figure 18, when the driving side flange 63 moves in the N direction, the first gear portion 63c presses the first main assembly gear portion 81c. In addition, Figure 20 shows the positional relationship between the driving side flange 63 that moves in the N direction and the drive transmission gear 81, in which a solid line indicates the state before the movement in the N direction, and a broken line indicates the state after the movement. The distance between the rotation center (rotational axis) L1 of the driving side flange 63 and the rotation center (rotational axis) L2 of the drive transmission gear 81 changes from a distance LA to a distance LB as the driving side flange 63 moves in the N direction (LA < LB)

By this, the meshing position of the teeth of the first gear portion 63c and the first main assembly gear portion 81c gradually moves toward the teeth tops. Therefore, as shown in part (b) of Figure 18, the backlash of the meshing in the rotational direction increases, and gap AL between the surface 63d2 of the second gear portion 63d and the tooth surface 81d2 of the second main assembly gear portion 81d increases. When a gap AL is provided between the tooth surfaces, the force from the second gear portion 63d does not act on the drive transmission gear 81, and the thrust force F16 in the J direction by the engagement between the first main assembly gear portion 81c and the first gear portion 63c acts. As a result, when the cartridge B is dismounted, the drive transmission gear 81 gradually moves in the J direction while rotating in the K direction, and finally the meshing between the first gear portion 63c and the first main assembly gear portion 81c is disappears. By this, the engagement between the driving side flange 63 and the drive transmission gear 81 is released.

<Helix angle setting>

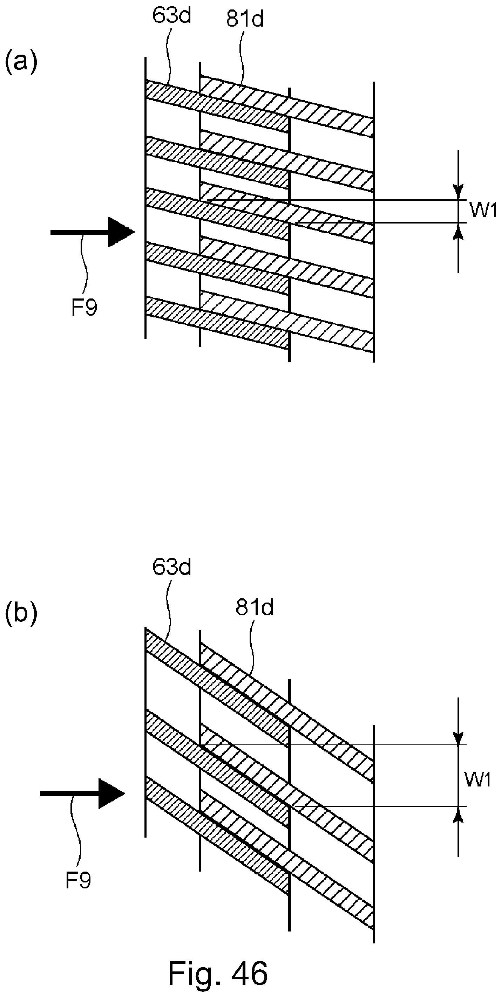

Next, referring to Figure 46, the helix angles of the first gear portion 63c and the second gear portion 63d, which are preferable, will be described. Part (a) of Figure 46 and part (b) of Figure 46 are sectional views of the second gear portion 63d and the second main assembly gear portion 81d, taken along a line AF-AF in contact with the meshing pitch circle between the drive transmission gear 81 and the driving side flange 63,.

The description will be made as to the setting of the helix angle $\alpha 1$ of the first gear portion 63c and the helix angle $\alpha 2$ of the second gear portion, in the case that the first gear portion 63c is the gear portion which receives the driving force FD and the second gear portion 63d is the gear portion which receives the restriction force FB as described above. First, as a premise, since the first gear portion 63c is the gear portion which receives the driving force FD and the second gear portion 63d is the gear portion that receives the restriction force FB, the helix angle $\alpha 2$ is larger than the helix angle $\alpha 1$ ($\alpha 2 > \alpha 1$). If the helix angle $\alpha 2$ is smaller than the helix angle $\alpha 1$, drive transmission cannot be performed in a backlashless state. That is, the thrust force applied by the first gear portion 63c to the first main assembly gear portion 81c and the thrust force applied by the second gear portion 63d to the second main assembly gear portion 81d do not balance, and therefore, the position of the drive transmission gear 81 in the direction of the rotational axis L1 is not determined at a balanced position, and.

The helix angle $\alpha 1$ of the first gear portion 63c of the driving side flange 63 is preferably 10 ° or more ($\alpha 1 \geqq 10$ °), further preferably 15 ° or more ($\alpha 1 \geqq 15$ °), and even further preferably 20 ° or more ($\alpha 1 \geqq 20$ °). The reason is that, in general, if the tooth width (the width of the gear tooth in the direction of the rotational axis L1) is the same, the larger the helix angle, the larger the meshing ratio and the higher the rotation accuracy. The helix angle $\alpha 1$ is preferably 40 ° or less ($\alpha 1 \leqq 40$ °), further preferably 35 ° or less ($\alpha 1 \leqq 35$ °). The reason is that, in general, when the helix angle is large, the moldability by the mold deteriorates.

On the other hand, the helix angle $\alpha 2$ of the second gear portion 63d of the drum gear 63 is preferably 40 ° or less ($\alpha 2 \leqq 40$ °), further preferably 35 ° or less ($\alpha 2 \leqq 35$ °). The reason is that, in general, when the helix angle is large, the moldability by the mold deteriorates. In addition, the helix angle $\alpha 2$ of the second gear portion 63d of the drum gear is preferably 20 ° or more ($\alpha 2 \geqq 20$ °), and further preferably 25 ° or more ($\alpha 2 \geqq 25$ °). The reason is that, as shown in part (a) of Figure 46 and part (b) of Figure 46 , the larger the helix angle $\alpha 2$, the larger the width E in the rotational direction (K direction) of the contact surface with the second main assembly gear portion 81d. In this embodiment, the helix angle $\alpha 2$ is 35 °.

If the width E is small, when the second gear portion 63d receives the thrust force F9 (see part (d) of Figure 17 received by the first gear portion 63c, the tooth surface of the second gear portion 63d is deformed, and the second main assembly gear portion 81d enters like a wedge and moves, and the positioning in the direction of the rotational axis L1 becomes unstable. Therefore, it is necessary to assure a certain width E in order to reliably receive the thrust force F9 to position the drive transmission gear 81 in the direction of the rotational axis L1.

In view of the above-described analysis as a whole, the helix angle $\alpha 1$ is preferably 10 ° or more and 40 ° or less ($15 ° \leqq \alpha 1 \leqq 40$ °), further preferably 15 ° or more and 40 ° or less ($15 ° \leqq \alpha 1 \leqq 40$ °), and further preferably 20 ° or more and 35 ° or less ($20 ° \leqq \alpha 1 \leqq 35$ °). The helix angle $\alpha 2$ is preferably 20 ° or more and 40 ° or less ($20 ° \leqq \alpha 2 \leqq 40$ °), and further preferably 25 ° or more and 35 ° or

less (25 ° $\leqq$ $\alpha 2$ $\leqq$ 35 ° ). In this embodiment, the helix angle $\alpha 1$ is 20 ° and the helix angle $\alpha 2$ is 35 °, satisfying the above conditions.

<Width of cylindrical portion 63e>

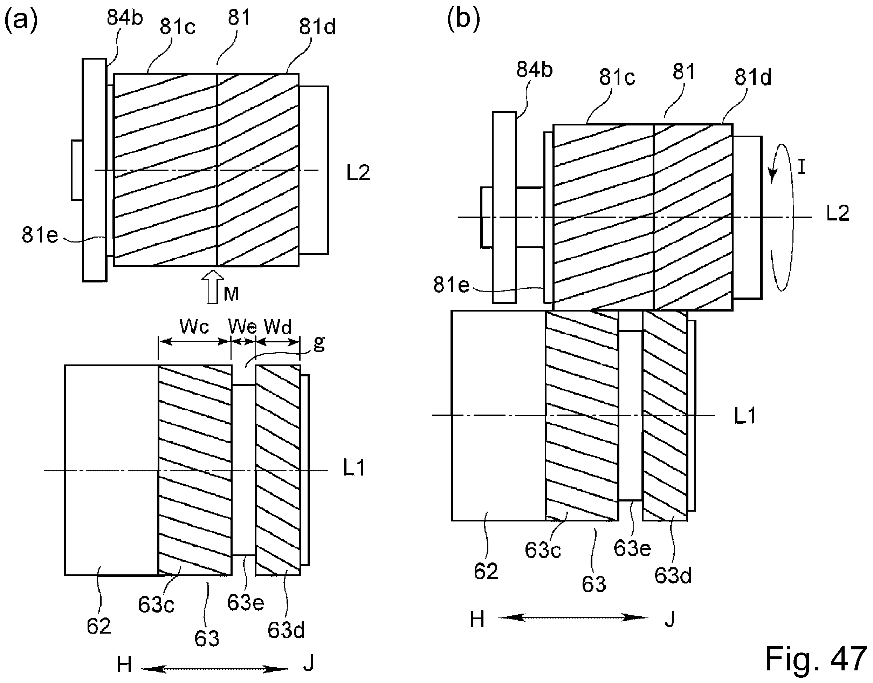

Next, the width (length) of the cylindrical portion 63e in the direction of the rotational axis L1 will be described. Part (a) of Figure 47 is a schematic view of the driving side flange 63 and the drive transmission gear 81 when the cartridge B is mounted, as viewed in a direction perpendicular to the rotational axis L1. Part (b) of Figure 47 is a schematic view of the driving side flange 63 and the drive transmission gear 81 during the driving operation, as viewed through a direction perpendicular to the rotational axis L1.

As described above, by providing the cylindrical portion 63e, the first gear portion 63c is prevented from contacting the second main assembly gear portion 81d, and the second gear portion 63d is prevented from contacting the first main assembly gear portion 81c, with respect to the direction of the rotational axis L1. Further, by providing the cylindrical portion 63e, when the drive transmission gear 81 is driven and the drive transmission gear 81 moves to the balanced position, the first main assembly gear portion 81c is prevented from contacting the second gear portion 63d, and the second main assembly gear portion 81d is prevented from contacting the first gear portion 63c. That is, by providing the cylindrical portion 63e, a gap g is formed between the first gear portion 81c and the second gear portion 63d in the direction of the rotational axis L1. Therefore, in the following description, the width (length) of the cylindrical portion 63e measured in the direction of the rotational axis L1 is synonymous with the width (length) of the gap g measured in the direction of the rotational axis L1.

The above-mentioned contact may occur in the following two situations. First, as shown in part (a) of Figure 47, when the cartridge B is mounted on the apparatus main assembly A, the other end 81e of the drive transmission gear 81 is held in contact with the abutting surface 84b of the main frame 84. Second is the state in which the drive transmission gear 81 is driven and being moved toward the balanced position, as shown in part (b) of Figure 47.

The positions of the first gear portion 63c and the second gear portion 63d of the driving side flange 63, the positions of the first main assembly gear portion 81c and the second main assembly gear portion 81d of the drive transmission gear 81, and the balanced position may be different depending on the following factors. Specifically, (1) a tolerance in the direction of the rotational axis L1 of related portions such as the driving side flange 63, the drive transmission gear 81, and the cleaning frame (drum frame) 60a, (2) a tolerance related to the distance between the rotational axis L1 of the driving side flange 63 and the rotational axis L2 of the drive transmission gear 81, (3) a tolerance of phase in the rotational direction of the teeth of the first gear portion 63c and the second gear portion 63d of the driving side flange 63, (4) a tolerance of the phase in the rotational direction between the teeth of the first main assembly gear portion 81c and the second main assembly gear portion 81d of the drive transmission gear 81, (5) deformation of the teeth due to the maximum drive load, and thermal expansion and contraction of the driving side flange 63 and the drive transmission gear 81. In consideration of these factors, the width (length) We of the cylindrical portion 63e (or the gap g) in the direction of the rotational axis L1 is selected.

Specifically, the width We is selected so that, the following Formula B1 is satisfied in which the width (tooth width, length) measured in the direction of the rotational axis L1 of the teeth of the first gear portion 63c is Wc as a reference,

$$We \geqq Wc/5 \text{ ..... (Formula B1)}.$$

In addition, as the width We increases, the width in the direction of the rotational axis L1 of the cartridge B increases, and therefore,, in order to downsize the cartridge B and the apparatus main assembly A, the width We is to be selected so as not to be larger than necessary. In view of the standpoint, it is further preferable to satisfy the following formula B2.

$$We \leqq Wc \text{ ..... (Formula B2)}.$$

In this embodiment, Wc = 8.6 mm and We = 2.3 mm, satisfying the above formulas B1 and B2. In the case that the tooth width Wc of the first gear portion 63c is not constant, the tooth width Wc1 of the tooth having the largest tooth width is deemed to be the tooth width Wc.

In addition, as will be understood from part (b) of Figures 13, 14 and 47 it is preferable for the width We to satisfy the following formula B3, in which Wd is the width (tooth width, length) of the teeth of the second gear portion 63c in the direction of the rotational axis L1.

$$We \leqq Wd \text{ ..... (Formula B3)}$$

<Rotation accuracy>

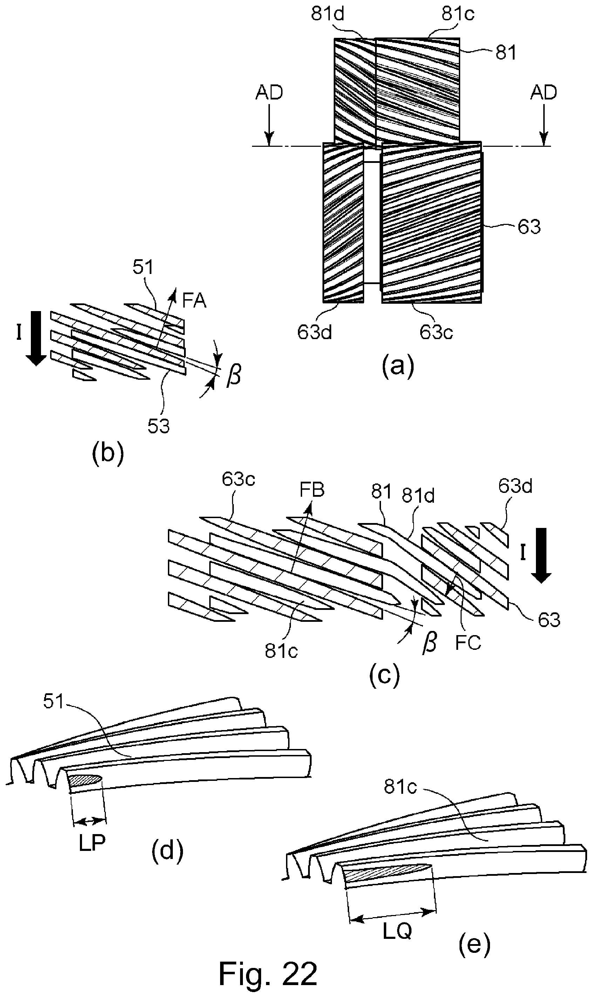

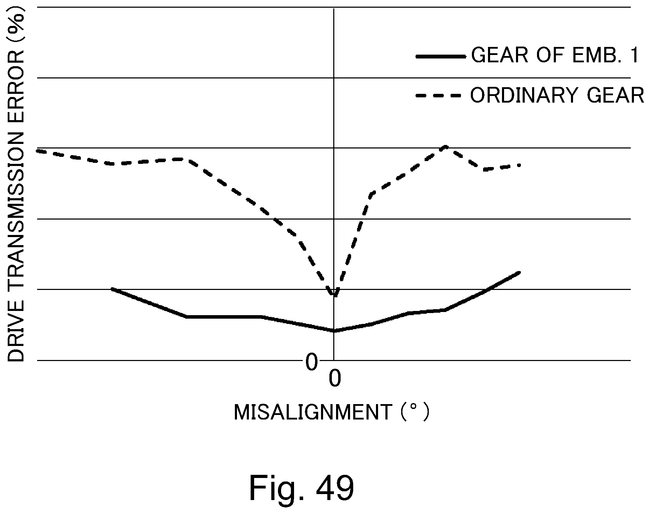

Hereinafter, referring to Figures 22 and 49, the reason why the rotation accuracy is improved in the backlashless state will be described. Part (a) of Figure 22 is a view of the drive transmission gear 81 and the driving side flange 63 as viewed along the direction perpendicular to the rotational axis direction. Part (b) of Figure 22 is a partial sectional view of the meshing engagement portion of an ordinary helical tooth gears 51 and 53 as a comparative example. Part (c) of Figure 22 is a partial sectional view taken along a line AD-AD in contact with the meshing pitch circle of the drive transmission gear 81 and the driving side flange 63. Part (d) of Figure 22 is a partial perspective view of the helical tooth gear 51. Part (e) of Figure 22 is a partial perspective view of the drive transmission gear 81. Figure 49 is a graph comparing the drive transmission error when the alignment of the driving side flange 63 and the helical tooth gear 53 is off.

As shown in part (b) of Figure 22, in gear drive, the tooth surfaces of the helical tooth gears on the driving side and the driven side may mesh with each other without being parallel in a tooth line direction due to molding accuracy, play and deformation of the shaft portion. Such a state is generally called a misaligned state. When the alignment of the helical tooth gear (driving side) 51 and the helical tooth gear (driven side) 53, which are general helical tooth gears, is off by β °, the helical tooth gears 51 and 53 are at one end of the tooth surface in the axial direction, with the result that the meshing rate is significantly reduced as compared with the state where the meshing is performed only at the position and the alignment is not deviated. By this, the rotation accuracy at the time of drive transmission is extremely deteriorated. Part (d) of Figure 22 shows a region in which the tooth surface of the helical tooth gear 51 meshes with the helical tooth gear 53 when the alignment is deviated, and the width of this region is defined as the width LP.

On the other hand, as shown in part (c) of Figure 22, the driving side flange 63 is rotated while the first gear portion 63c and the second gear portion 63d of the driving side flange 63 sandwiches the first main assembly gear portion 81c and the main assembly gear portion 81d of the drive transmission gear 81. By this, a pinching force FC (that is, rotary drive brake) acting on the second main assembly gear portion 81d is generated. A reaction force of the pinching force FC is added to the force applied to the tooth surface of the first main assembly gear portion 81c in a direction of pressing the first gear portion 63c in the I direction, resulting in the force FB. On the other hand, when the same load torque is driven in the conventionally used helical tooth gear 51, no such additional force is produced to the force FA applied to the tooth surface of the helical tooth gear 51. Therefore, the force FB applied to the tooth surface of the first main assembly gear portion 81c of this embodiment is larger than the force FA applied to the tooth surface of the helical tooth gear 51. Part (e) of Figure 22 shows a region of the tooth surface of the first main assembly gear portion 81c of the drive transmission gear 81 which is in meshing engagement with the first gear portion 63 of the driving side flange 63 when the alignment is deviated, in which a width of this region is LQ. Since the force FB is larger than the force FA, when the width LP in part (d) of Figure 22 and the width LQ in part (e) of Figure 22 are compared, the width LQ is larger than the width LP. Therefore, when the alignment is deviated, the decrease in the overlapping meshing ratio between the first main assembly gear portion 81c and the first gear portion 63c is smaller than that between the helical tooth gears 51 and 53.

Figure 49 is a graph showing measurement results of the drive transmission errors to the driven side helical tooth gear 53 and driving side flange 63 with respect to the amount of misalignment, when the ordinary helical tooth gears 51 and 53 and the drive transmission gear 81 and the driving side flange 63 of this embodiment are used. In the helical tooth gear 51 and 53, and, the drive transmission gear 81 and the driving side flange 63, the gear specifications such as the number of teeth and the backlash amount in the inter-axis direction of 0. 15 mm and the conditions such as the load torque are 0.25 N.m and rotation speed 270 rpm were the same, and the shaft and gear are fitted without play. Here, the drive transmission error (%) is a ratio of the experimental rotation pitch deviation data to the ideal rotation pitch in the gear meshing period. For example, if the ideal rotation pitch is 0.7258 mm and the amount of experimental deviation data from the ideal rotation pitch is 0.00036 mm, the result is 0.05% (= (0.00036/0.7258) × 100). In addition, the alignment deviation amount (°) is 0 ° when the axes of the meshing gears are parallel to each other, and is an angle (see parts (b) and (c) of Figure 22) between the axes when the axis of the gear is tilted on the driven side is tilted so that the tooth line directions of the gears is tilted by an angle β. As shown in this graph, when the alignment is deviated, the deterioration of the rotational accuracy of the driving side flange 63 of this embodiment is suppressed as compared with that in the ordinary helical tooth gear 53. Therefore, it can be said that the drive transmission structure using the drive transmission gear 81 and the driving side flange 63 of this embodiment is more resistant to misalignment than the drive transmission structure using an ordinary helical tooth gear.

<Wear of drive transmission gear>

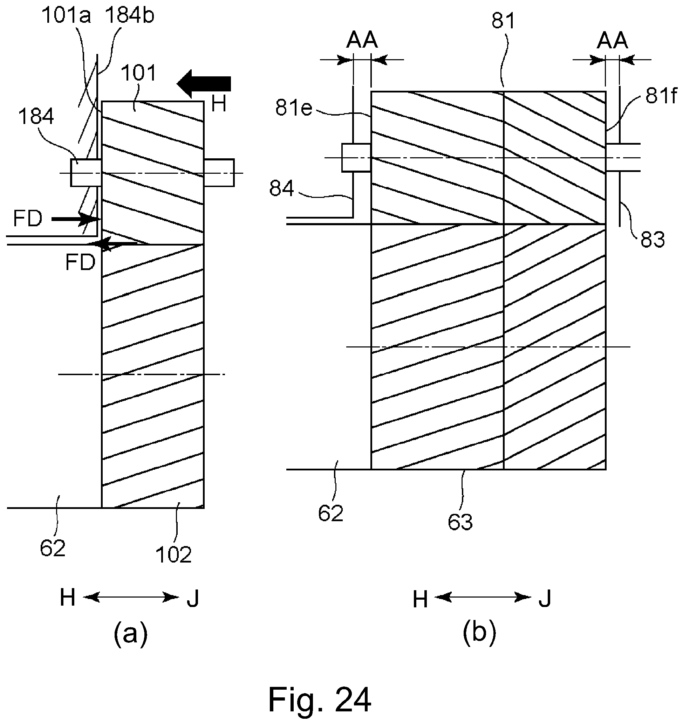

Next, referring to Figure 24, the wear of the drive transmission gear 81 and the helical tooth gear 101 will be described below. Part (a) of Figure 24 is a schematic illustration of a drive transmission structure using a conventional helical tooth gear. Part (b) of Figure 24 is a schematic illustration of the drive transmission structure of this embodiment. As shown in part (a) of Figure 24, when rotational driving is performed by the helical tooth gear 101, the helical tooth gear 101 receives a thrust force (force in the axial direction) FD provided by the meshing engagement force. By this, the helical tooth gear 101 moves in the H direction toward the non-driving side, and the end surface 101a of the helical tooth gear abuts and slides on the abutting surface 184b of the main frame 84, and therefore, they are worn. On the other hand, as shown in part (b) of Figure 24, in the drive transmission gear 81 of this embodiment, the position thereof in the direction of the rotational axis L1 is determined by the driving side flange 63 and the spring 85 (not shown) during driving, and therefore, the end surface 81e in the H direction and the end surface 81f in the J direction

of the drive transmission gear 81 do not slide because a gap AA is formed between the main frame 84 and the second driving side plate 83. Therefore, wear of the two end surfaces 81e and 81f of the drive transmission gear 81, the main frame 84, and the second driving side plate 83 can be suppressed, and the durability can be improved.

<Comparison with conventional coupling drive>

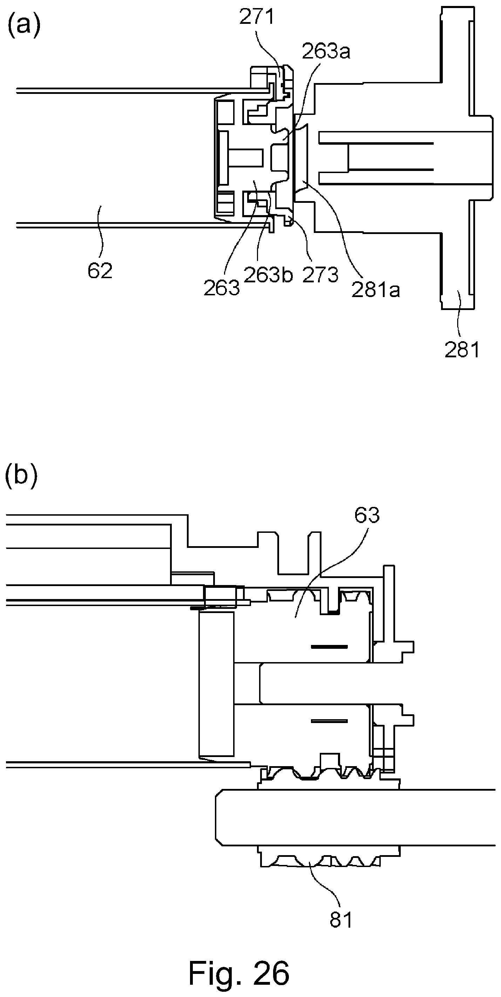

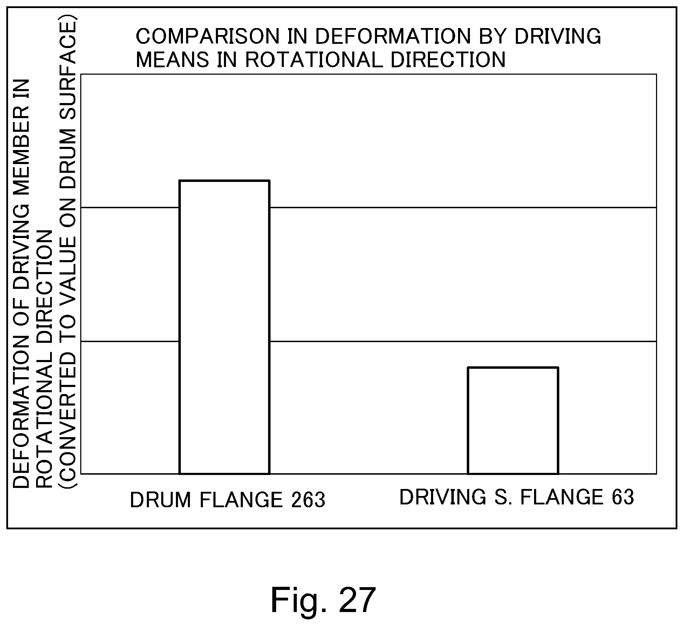

Next, referring to Figures 26 and 27, a comparison with a structure in which the drum is driven by the conventional coupling will be described. Part (a) of Figure 26 is a sectional view of a drive transmission portion of a conventional coupling drive, and the sectional plane includes a rotational axis of the coupling. Part (b) of Figure 26 is a sectional view of the drive transmission unit of this embodiment, which is a sectional view including the rotational axis (L1) of the driving side flange 63 and the rotational axis of the drive transmission gear 81. Figure 27 is a graph showing amount of deformations in the coupling drive and the drive transmission gear.

As shown in part (a) of Figure 26, in the conventional coupling drive, a driving side flange 263 provided with a projection coupling 263a including a twisted polygonal prism shape is mounted to the end of the drum 62 of the cartridge. The drum flange 263 has a support portion 263b which is a cylindrical portion having a diameter smaller than the diameter of the drum 62. The apparatus main assembly has a drive transmission gear 281 with a recess coupling 281a into which the coupling 263a is inserted and engaged.

The coupling 263a is provided at the end of the driving side flange 263 in the direction of the rotational axis. Therefore, the twist amount of the driving side flange 263 during drive in the coupling drive is larger than the twist amount of the driving side flange 63 in the gear drive of this embodiment shown in part (b) of Figure 26. Figure 27 shows simulation results of the deformation amounts of the drive members (drum flange 263, driving side flange 63) in the rotational direction, and as will be understood, the amount of deformation in the gear drive (drive with the driving side flange 63) is smaller than in the coupling drive (driving at drum flange 263). Here, the amount of deformation of the drive member in the rotational direction will be described. This amount of deformation is the amount of displacement of a drive transmission point to the drum 62 in the rotational direction when the drum 62 sides of the drum coupling 263 and the driving side flange 63 are fixed, and the same static load torque of 0.25 N.m is applied to the engaging portion with the drive input member 281 or the meshing engagement portion with the drive transmission gear 81. The drive transmission point is a point fixed on the drum 62. And, the displacement amount is converted into the displacement amount when there is no twist at a predetermined point on the surface of the drum 62. Due to this difference in the amounts of deformation of the drive members, the change in the amount of deformation of the drive member when the load torque of the cartridge B changes, and the fluctuation of the rotation speed of 62 are smaller in the gear drive than in the coupling drive. That is, the density unevenness of the image in the rotational direction of the drum 62 on the image when the load torque fluctuation of the cartridge B occurs (caused by variation of the pitch between the scanning lines in the sub-scanning direction resulting when scanning the surface of the drum 62 with the laser beam L (pitch variation)) can be suppressed keep the pitch variation. As described above, with the drive transmission structure of the driving side flange 63 and the drive transmission gear 81 of the above-described embodiment, the deterioration of the rotational accuracy of the drum 62 with respect to the load torque fluctuation can be suppressed as compared with the conventional coupling drive structure.

In addition, as compared with the conventional coupling drive from another standpoint, in the case of the conventional coupling drive, it is necessary to provide a retracting mechanism for advancing and retreating the coupling 263a on the main assembly side in the direction of the rotational axis to permit mounting and dismounting the cartridge B.

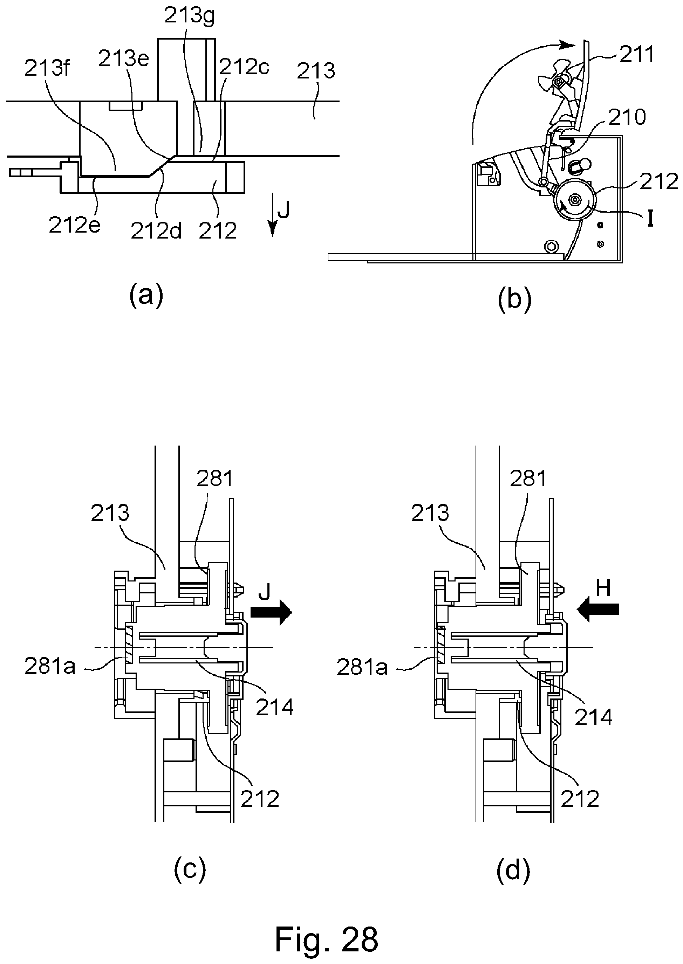

Next, referring to Figure 28, this retracting mechanism will be described. Part (a) of Figure 28 is a sectional view of the drum 62 of the retracting mechanism in cross-section including the rotational axis. Part (b) of Figure 28 is a schematic sectional view of an image forming apparatus provided with a retracting mechanism. Parts (c) and (d) of Figure 28 are sectional views of the drive transmission gear 281 and the retracting mechanism, and the section thereof includes the rotational axis of the drive transmission gear 281.

The main assembly of the coupling-driven image forming apparatus is equipped with a retracting mechanism including a link 210, a cylindrical cam 212, and a compression spring 214. One end of the link 210 is connected with an opening/closing door 211 of the apparatus main assembly A. The other end of the link 210 is connected, coaxially with the drive input member 281, with a cylindrical cam 212 rotatably provided between the drive input member 281 and the side wall 213. In addition, as shown in part (a) of Figure 28, the cylindrical cam 212 has a slope 212d, a projection surface 212c, and a recess surface 212e with height difference in the rotational direction on one end surface in the axial direction. Further, the side wall 213 has a slope 213e, a projection surface 213f, and a recess surface 213g at locations facing the slope 212d, the projection surface 212c, and the recess surface 212e, respectively. Furthermore, as shown in part (d) of Figure 28, the drive transmission gear 281 is urged in the H direction by the compression spring 214.

As shown in part (b) of Figure 28, by the operation of opening the door 211, the cylindrical cam 212 is rotated in the I direction by way of the link 210, and the cylindrical cam 212 and the projection surfaces 212c and 213f provided on the side wall 213 come into contact with each other, so that the cylindrical cam 212 is moved in the J direction. By the operation of the cylindrical cam 212 in the J direction, as shown in part (c) of Figure 28, the cylindrical cam 212 moves the drive input member 281 in the J direction against the urging force of the compression spring 214. By this, the drive input member 281 is moved away from the drum flange 263 (see part (a) of Figure 26 to disengage the coupling 281a from the coupling 263a (see part (a) of Figure 26. As a result, the cartridge B can be dismounted.

Further, as shown in part (b) of Figure 28, with the closing operation of the door 211, the cylindrical cam 212 is rotated in a direction opposite to the I direction while the cylindrical cam 212 and the slopes 212d and 213e are in contact with each other provided on the side wall 213, by way of the link 210. During this rotation, the cylindrical cam 212, the side wall 213, and the drive input member 281 becomes out of contact with each other in the rotational axis direction, and as shown in part (d) of Figure 28, the drive input member 281 becomes rotatable in the H direction by the urging force of the compression spring 214. By this, the drive input member 281 moves in a direction approaching the drum flange 263 (see part (a) of Figure 26, and the coupling 281a and the coupling 263a become engageable with each other.

As described above, the conventional coupling drive requires, a retracting mechanism, and there is a possibility that the size of the apparatus main assembly or the cost increases correspondingly to the amount of the retracting mechanism. However, in the case of gear drive as in this embodiment, the cartridge B can be mounted and dismounted without such a retracting mechanism.

<Modified Example 1>

Next, Modified Example 1 will be described. In the above-described embodiment, the first main assembly gear portion 81c and the second main assembly gear portion 81d of the drive transmission gear 81 have the same number of teeth, but the numbers of teeth do not necessarily have to be the same. However, the reduction ratio between the first main assembly gear portion 81c of the drive transmission gear 81 and the first gear portion 63c of the driving side flange 63, and the second gear of the second main assembly gear portion 81d of the drive transmission gear 81 and the second gear portion 63d of the driving side flange 63 need to be the same. For example, in the case that the number of teeth of the first gear portion 81c of the drive transmission gear is 20, the number of teeth of the first gear portion of the drum gear is 30, and therefore, the reduction ratio is 2: 3, the reduction ratio is the same 2: 3 if, the number of teeth of the second main assembly gear portion 81d of the drive transmission gear is 40 and the number of teeth of the second gear portion 63d of the driving side flange 63 is 60. In this case as well, the gear of the drive transmission gear 81 can be sandwiched by the first gear portion 63c and the second gear portion 63d of the driving side flange 63, and therefore,, it is possible to establish the backlashless state in the rotational direction.

<Modified Example 2>

Next, Modified Example 2 will be described. In this Modified Example, the first gear portion 181c and the second gear portion 181d of the drive transmission gear 181 have different numbers of teeth, and the number of teeth on one side is not an integer multiple of the number of teeth on the other side. The first gear portion 163c and the second gear portion 163d of the driving side flange 163 also have different numbers of teeth, and the number of teeth on one side is not an integer multiple of the number of teeth on the other side. These points are different from those in the above-described embodiment of this Modified Example, and the structures of this Modified Example and the above-mentioned embodiment are the same except for these different points and the structures associated therewith, and therefore, the explanation thereof is omitted.

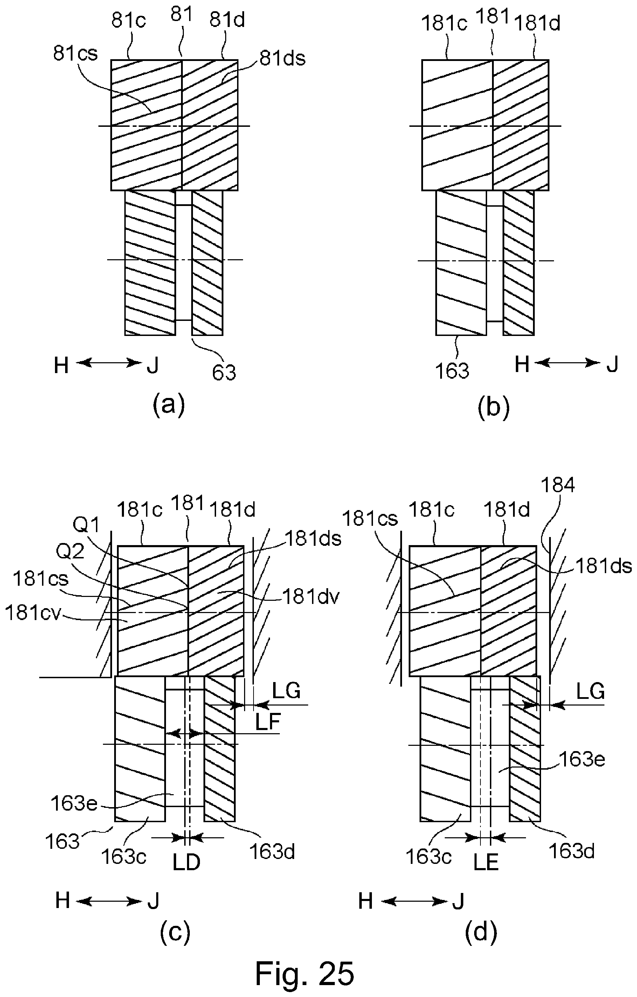

Also in this Modified Example, it is possible to establish the backlashless state in the rotation direction as in the above-described embodiment. However, due to the setting of the numbers of teeth as described above, in the structure of this modified example the meshing phase of the gear with respect to the drive transmission gear 181 of the driving side flange 163 is not unique. Referring to Figure 25, as to the structure in which the meshing phase is not uniquely determined, the position where the drive transmission gear 181 is positioned in the axial direction (balanced) will be described. Part (a) of Figure 25 is a schematic illustration of a drive transmission structure using the drive transmission gear 81 of this embodiment described above. Part (b) of Figure 25 is an illustration of a drive transmission portion using the drive transmission gear 181 and the driving side flange 163 of the modified example. Part (c) of Figure 25 and part (d) of Figure 25 show a state in which the drive transmission gear 181 is in a balanced position after the drive transmission gear is driven.

Comparing part (c) of Figure 25 and part (d) of Figure 25 , the drive transmission gear 181 and the driving side flange 163 are in meshing engagement with each other, but the meshing ways at the meshing engagement portions are different from each other. Specifically, part (c) of Figure 25 shows a state in which a tooth top of the first gear portion 181c of the drive transmission gear 181 and a tooth top of the second gear portion 181d are in phase alignment with each other at the meshing engagement portion between the driving side flange 163 and the drive transmission gear 181, and the tooth top of the first gear portion 163c of the driving side flange 163 and the tooth top of the second gear portion 163d are in phase alignment with each other. In part (d) of Figure 25 shows a state in which the tooth top of the first gear portion 181c of the drive transmission gear 181 and the tooth top of the second gear portion 181d are in phase alignment with each other at the meshing engagement portion, and the tooth top of the first gear portion 163c of the driving side flange 163 and the intertooth space of the second gear portion 163d are in phase alignment with each other.

When the numbers of teeth of the first gear portion 181c and the second gear portion 181d of the drive transmission gear 181 are different from each other, the phases of the tooth tops of the first gear portion 181c and the second gear portion 181d are different from each other depending on the phase of the gear in the rotational direction. For example, there are a position Q1 in which the tooth top portion 181cs of the tooth of the first gear portion and the tooth top 181ds of the second gear portion are in phase alignment with each other, and, a position Q2 in which the tooth top portion 181cs of the first gear portion and the intertooth space 181dv of the second gear portion are in phase alignment with each other, as well, depending on the phase in the rotational direction of the gear. This also applies to the relationship between the first gear portion 163c and the second gear portion 163d of the drum gear 163. As a result,, as shown in part (c) of Figure 25 and part (d) of Figure 25 , The balanced position of the drive transmission gear 181 relative to the driving side flange 163 in the axial direction is different, depending on an initial (before drive) meshing phase between the drive transmission gear 181 and the driving side flange 163 in the rotational direction. Part (c) of Figure 25 shows the case where the balance position of the drive transmission gear 181 is the most downstream side in the H direction, and part (d) of Figure 25 shows the case where the balance position of the drive transmission gear 181 is the most downstream side in the J direction. The amount of change of the balanced position can be expressed by the amount of deviation of a boundary between the first gear portion 181c and the second gear portion 181d of the drive transmission gear 181, with reference to an intermediate line between the first gear portion 163c and the second gear portion 163d of the driving side flange 163, for example. That is, in the state of part (c) of Figure 25, the deviation amount LD in the J direction, and in the state of part (d) of Figure 25, the deviation amount LE in the H direction, and therefore, sum (LD + LE) of the deviation amount LD and the deviation amount LE is the amount of change of the balanced position in this Modified Example.

In the case that the first gear portion 181c comes into contact with the second gear portion 163d or the second gear portion 181d comes into contact with the main assembly frame 184, or the second gear portion 181d comes into contact with the first gear portion 163c before the drive transmission gear 181 reaches the balanced position, the backlashless state cannot be established even if the driving operation is carried out. Therefore, in this Modified Example, the distance LF (width of the cylindrical portion 163e) between the first gear portion 163c and the second gear portion 163d of the driving side flange 163 and/or the gap LG between the drive transmission gear 181 and the main assembly frame 184 is selected, taking into consideration the amount of change in the balanced position

(LD + LE)

On the other hand, in the structure of this embodiment shown in part (a) of Figure 25, the numbers of teeth of the first main assembly gear portion 81c and the second main assembly gear portion 81d are the same, and the positional relationship between the tooth top 81cs and the tooth top 81ds of the first main assembly gear portion 81c and the second main assembly gear portion 81d is not changed by the phase in the rotational direction. Therefore, the balanced position where the position of the drive transmission gear 81 is determined in the axial direction with respect to the driving side flange 63 does not change. That is, it is not necessary to pay attention to the amount of change in the balanced position (LD + LE), which had to be considered in the modified example. Therefore, in this embodiment, the gap (width of the cylindrical portion 63e) between the first gear portion 63c and the second gear portion 63d of the driving side flange 63 can be designed to be smaller than that of the modified example, and the cartridge B can be downsized. In addition, the apparatus main assembly A of this embodiment can be designed in which the gap between the drive transmission gear 81 and the main assembly frame 84 is smaller than that of the modified example. By this, the cartridge B and/or the apparatus main assembly A can be downsized.

<Other Modified Examples >

Next, a modified example will be described in which the main modifications are in portions other than the drive transmission structure itself of the driving side flange 63 or the drive transmission gear 81.

<Application to cleanerless structure>

In the above-described embodiment, in the cartridge B, the toner remaining on the drum 62 without being transferred is scraped off by the rubber blade 77a into contact with the drum 62 and is stored in the waste toner chamber 71b (Figure3). However, the cartridge B may have a cleanerless structure. In other words, the drive transmission structure of the driving side flange 63 and the drive transmission gear 81 of the above-described embodiment may be applied to the cartridge having the cleanerless structure.

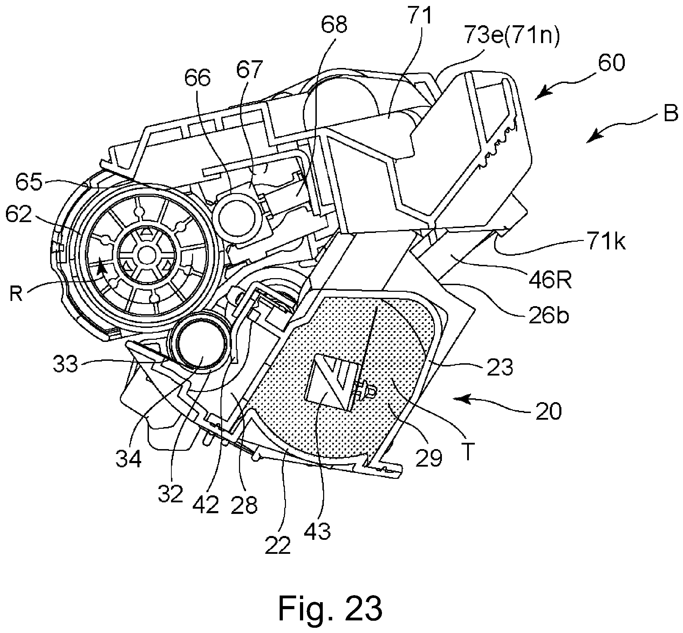

Figure 23 is a cross-sectional view of the cartridge B having the cleanerless structure. The cartridge B having a cleanerless structure is structured and controlled so that the residual toner on the drum 62 can be recovered by the developing roller 32. Therefore, the cartridge B does not have a rubber blade in contact with the drum 62, a rubber blade being a resistance against rotation of the drum 62, and for this reason, the torque required for rotation of the drum 62 is smaller in the cleanerless structure as compared with the structure having the rubber blade 77a in contact with the drum 62 by the amount corresponding to the absence of the rubber blade 77a. As a result,, the rotation speed of the drum 62 tends to fluctuate due to the influence of the impact when the sheet material PA is fed. In other words, the rotation accuracy of the drum 62 may deteriorate. By applying the drive transmission structure of the driving side flange 63 and the drive transmission gear 81 of the above-described embodiment, the drum 62 can be driven with transmission between the driving side flange 63 and the drive transmission gear 81 in a backlashless state. For this reason, it is possible to suppress the rotation accuracy deterioration of the drum 62 attributable to, the absence of the rubber blade, as compared with the structure in which the drive is transmitted with the backlash and play in the rotational direction existing between the driving side flange and the drive member on the main assembly side.

<Application to structures without magnet rollers 34>

Further, in the above-described embodiment, the developer carrying member in which a magnet roller 34 is provided in a developing roller 32 has been described, but an elastic roller in which the magnet roller is not provided may be used.

<Application to the structure in which the developing roller gear 30 is engaged with the second gear portion 63d>

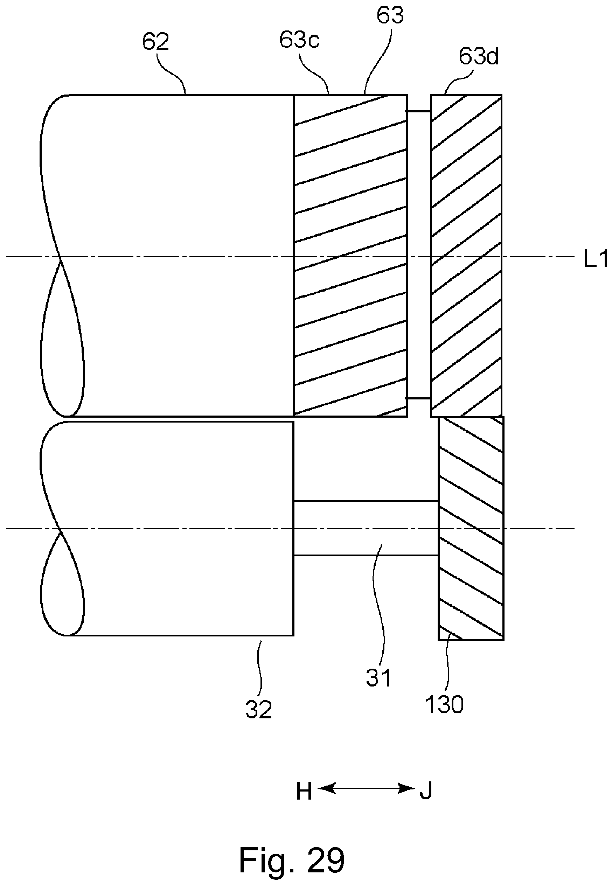

Further, in the above-described embodiment, the structure in which the developing roller gear 30 is in meshing engagement with the first gear portion 63c of the driving side flange 63 has been described. However, the developing roller gear 30 may be structured to be in meshing engagement with the second gear portion 63d. Referring to Figure 29, such a case will be described. Figure 29 is a schematic view illustrating the engagement between the driving side flange 63 and the developing roller gear 30. The developing roller gear 130 fixed to the end of the developing roller shaft 31 meshes with the second gear portion 63d. Since the second gear portion 63d has the larger helix angle than the first gear portion 63c, the meshing ratio also increases accordingly. Therefore, the developing roller gear 130 which meshes with the second gear portion 63d can have a smaller tooth width than the developing roller gear 30 which meshes with the first gear portion 63d.

<Application to drive transmission structure from driving side flange to developing roller gear>

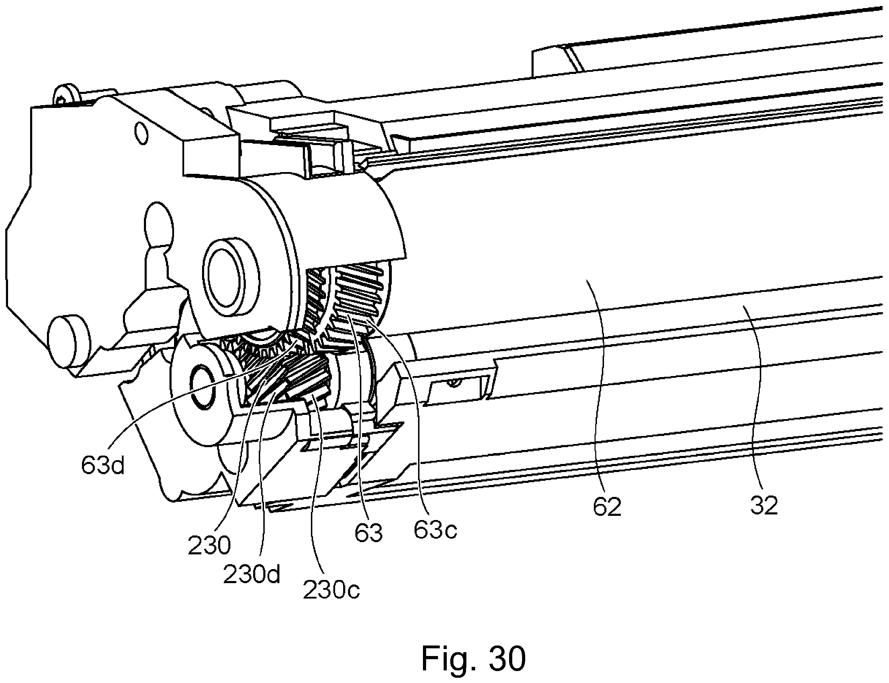

Further, the same structure as the driving force transmission structure from the drive transmission gear 81 to the driving side flange 63 may be further applied to the drive force transmission structure from the driving side flange 63 to the developing roller gear 230. Such a case will be described with reference to Figure 30. Figure 30 is a perspective view of the cartridge B. The developing roller gear 230 includes a first developing gear portion 230c and a second developing gear portion 230d which mesh with the first gear portion 63c and the second gear portion 63d of the driving side flange 63, respectively. When the driving side flange 63 is driven, the developing roller gear 230 moves in the direction of the rotational axis L1 by the same principle in the above-described embodiment, so that the drive transmission gear 81 moves in the direction of the rotational axis L1 and reaches the balanced position. In the state the developing roller gear 230 is in the balanced position, the developing roller gear 230 is driven in a backlashless state with respect to the driving side flange 63, so that the misalignment and the deterioration of the rotational accuracy of the developing roller 32 in the load fluctuates can be suppressed.

<Application to the structure of the driving the developing roller gear not through the driving side flange>

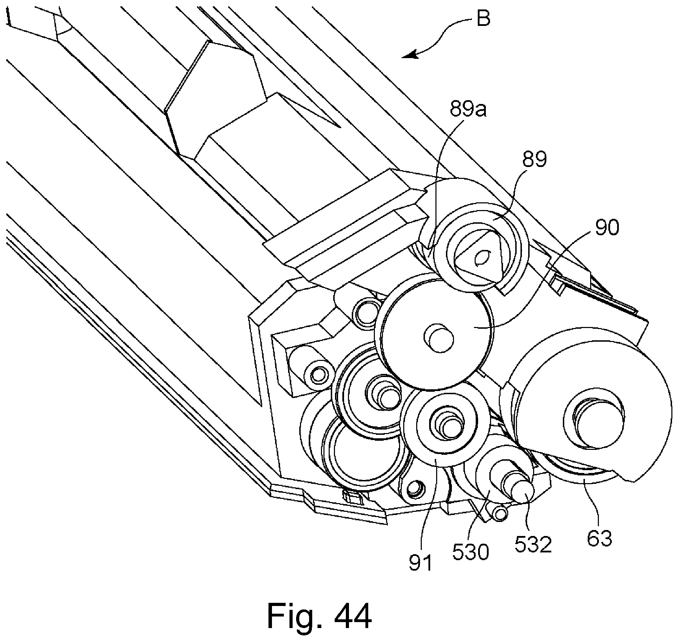

Further, the driving force may be transmitted to the developing roller 532 not through the driving side flange 63. Figure 44 is a partial perspective view of the cartridge B showing a drive train to the developing roller 532. For the sake of better illustration, a part of the frame of the cartridge B is not shown.

As shown in Figure 44, the developing roller 532 is not structured to received the driving force from the driving side flange 63, but is structured to received the driving force by way of another path. Specifically, the cartridge B is provided with a development coupling member 89 which can be engaged with a coupling member (not shown) of the apparatus main assembly A for driving the developing roller. Further, the cartridge B is provided with idler gears 90 and 91 which mesh with the gear portion 89a of the development coupling member 89, and is provided with a developing roller gear 530 which meshes with the idler gear 91 at one end of the shaft of the developing roller 532. With this structure, the developing roller 530 is driven by transmitting the driving force received by the development coupling member 89 by way of the idler gears 90 and 91 and the developing roller gear 530. Therefore, the driving of the development coupling member 89 can be controlled separately from the drive of the driving side flange 63, and the development coupling member 89 can be driven while the driving side flange 63 is not, for example.

<Application to drive transmission structure to rotatable members other than drums>

The driving side flange 63 is mounted to the end of the drum 62, but it is possible that the developing roller gear 30 is provided with the first gear portion 63c, the second gear portion 63d, and the cylindrical portion 63e, and the drive transmission gear 81 drives the developing roller 30. Further, the object to be driven by the drive transmission gear 81 is not limited to a developer carrier such as a drum 62 and a developing roller 30 which carries the toner (developer). The object to be driven by the drive transmission gear 81 may be, a feed member (or agitator member) 43 for transporting (or stirring) toner, a charging roller 66, or a supply member for supplying toner to the developing roller 30, for example. Further, when the object to be driven by the drive transmission gear 81 is a member other than the drum 62 included in the cartridge B, the cartridge B may be a cartridge including no photosensitive member such as the drum 62.

[Embodiment 2]

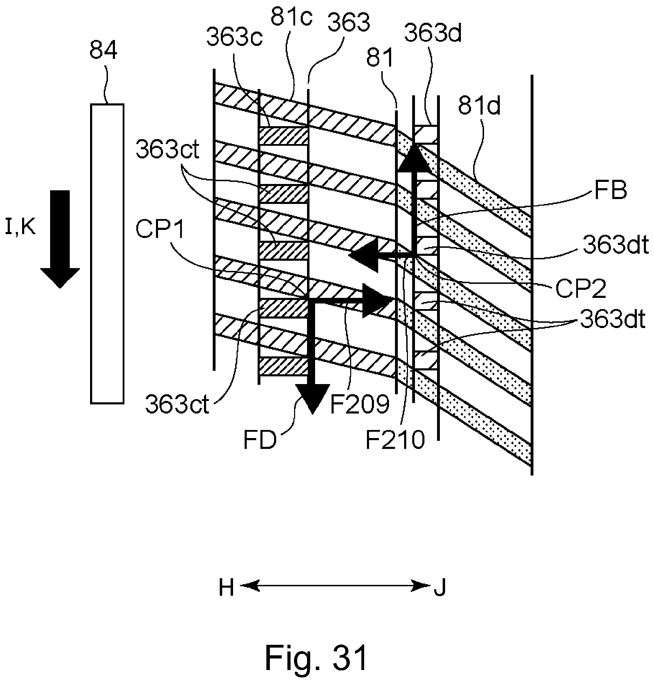

Next, referring to Figure 31, Embodiment 2 will be described below. In this embodiment, the structures of the first gear portion and the second gear portion provided on the driving side flange are different from those in Embodiment 1. Since the other points are the same as those in Embodiment 1, the description thereof will be omitted.

Figure 31 is a sectional view of a meshing engagement portion between the drive transmission gear 81 and the driving side flange 263, and the sectional plane is in contact with meshing pitch circles therebetween. The driving side flange 263 is provided with a first gear portion (first unit side gear portion) 263c and a second gear portion (second unit side gear portion) 263d. The first gear portion 263c includes a plurality of first flat teeth (first projections) 263ct having a tooth width which is sized so as to be insertable between the teeth of the first main assembly gear portion 81c. The second gear portion 263d includes a plurality of second flat teeth (second projections) 263dt having a tooth width which is sized so as to be insertable between the teeth of the second main assembly gear portion 81d. In addition, the width (tooth width) of the first flat tooth 263ct measured in the direction of the rotational axis L1 is larger than the width (tooth width) of the second flat tooth 263dt measured in the direction of the rotational axis L1. The plurality of first flat teeth and the plurality of second flat teeth are projections projecting in the radial direction with respect to the rotational axis L1 and are arranged at positions different in the circumferential direction about the rotational axis L1.

Also when such a driving side flange 263 is used, by the drive transmission gear 81 rotating in the I direction, the drive transmission gear 81 is moved to the balanced position and establishes a backlashless state as in Embodiment 1. That is, the first main assembly gear portion 81c meshes with the first gear portion 263c and receives the reaction force of the driving force FD and the thrust force F209 in the J direction from the contact point (contact portion) CP1 of the first gear portion 263c. The second main assembly gear portion 81d meshes with the second gear portion 263d and receives the reaction force of the restricting force FB and the thrust force F210 in the H direction from the contact point (contact portion) CP2 of the second gear portion 263d. Also with this, the drive transmission gear 81 is sandwiched between the first gear portion 263c and the second gear portion 263d of the driving side flange 263 in the rotational direction in the axial direction, so that the backlashless state is provided as in Embodiment 1.

[Embodiment 3]

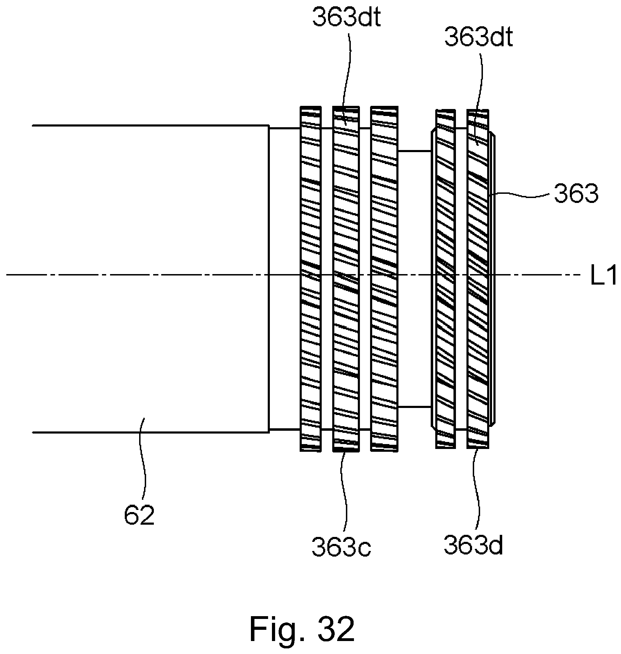

Next, referring to Figure 32, Embodiment 3 will be described. In this embodiment, the structures of the first gear portion and the second gear portion provided on the driving side flange are different from those in Embodiment 1. Since the other points are the same as those in Embodiment 1, the description thereof will be omitted.

Figure 32 is an illustration of a driving side flange 363. The driving side flange 363 is provided with a first gear portion 363c and a second gear 363d1. The first gear portion (first unit side gear portion) 363c includes a plurality of first helical tooth gears (first projections) 363ct provided by being divided into a plurality of portions in the direction of the rotational axis L1. Although the plurality of first helical tooth gears (projections) 363ct are provided by dividing in the direction of the rotational axis L1, they function as one helical tooth substantially extending in the direction of the rotational axis L1 with respect to the first main assembly gear portion 81c. Further, the tooth surface of the plurality of first helical tooth gears (projections) 363ct is a plurality of force receiving portions which receive force from the first main assembly gear portion 81c. Therefore, it can be said that the plurality of force receiving portions which receive the force from the first main assembly gear portion 81c are provided over the plurality of first helical tooth gears (first projections) 363ct. It can be said that the tooth surfaces of the plurality of first helical tooth gears (projections) 363ct constitute helical tooth surfaces provided by dividing into a plurality portions in the direction of the rotational axis L1, or they constitute a plurality of helical tooth surfaces which are provided by dividing in the circumferential direction centered on the rotational axis L1 of the driving side flange 363. As described above, the plurality of helical tooth-shaped projections 363ct constitute one tooth of the first main assembly gear portion 81c and one tooth of the corresponding helical tooth gear.

The tooth surfaces of the plurality of second helical tooth gears (projections) 363dt are force receiving portions which receive force from the second main assembly gear portion 81d. Therefore, it can be said that the plurality of force receiving portions which receive the force from the second main assembly gear portion 81d are provided over the plurality of second helical tooth gears (second projections) 363dt. The second gear portion (second unit side gear portion) 363d includes a plurality of second helical tooth gears (projections) 363dt provided by being divided into a plurality of portions in the direction of the rotational axis L1. Although the plurality of second helical tooth gears (second projections) 363dt are provided by dividing in the direction of the rotational axis L1, they function substantially as one helical tooth extending in the direction of the rotational axis L1, with respect to the second main assembly gear portion 81d. In addition, it can be said that the tooth surfaces of the plurality of second helical tooth gears (projections) 363dt constitute a plurality of helical tooth surfaces provided by dividing in the direction of the rotational axis L1, or they constitute helical tooth surfaces which are provided by dividing in the circumferential direction with respect to the rotational axis L1 of the driving side flange 363. As described above, the plurality of helical tooth-shaped projections 363dt constitute one helical tooth corresponding to one tooth of the second main assembly gear portion 81d.

Therefore, also when such a driving side flange 363 is used, by the drive transmission gear 81 rotating in the I direction, the drive transmission gear 81 is moved to the balanced position and establishes a backlashless state as in Embodiment 1.

[Embodiment 4]

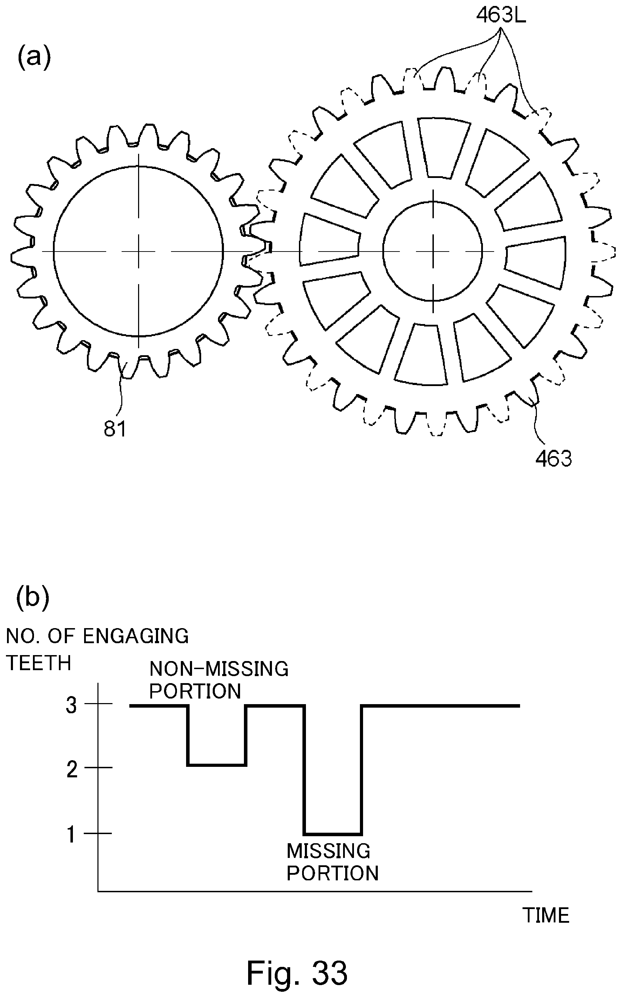

Next, referring to Figure 33, Embodiment 4 will be described. In this embodiment, the structures of the first gear portion and the second gear portion provided on the driving side flange are different from those in Embodiment 1. Since the other points are the same as those in Embodiment 1, the description thereof will be omitted.

The driving side flange 463 has two gear portions (first unit side gear portion and second unit side gear portion) as with the first gear portion 63c and the second gear portion 63d of the driving side flange 63 of Embodiment 1. At least one of the two gear portions has a missing tooth portion (apparently, a portion where the teeth of the gear are intermittently missing) 463L. Part (a) of Figure 33 is a view of the driving side flange 463 and the drive transmission gear 81 meshing with each other in a cross-section perpendicular to the rotational axis L1. Part (b) of Figure 33 is a graph showing the change in the number of teeth of the meshing gear. When the meshing ratio between the gear portion of the driving side flange 463 and the gear portion of the drive transmission gear 81 is N teeth with truncating after the decimal point, the gear portion of the driving side flange 463 may have tooth missing portion 463L at every N-1 tooth at the maximum. By satisfying this condition, even if the tooth missing portion 463L is provided, there are one or more teeth which are in meshing engagement with the drive transmission gear 81 (the meshing ratio is 1 or more). With such a structure, by the drive transmission gear 81 rotating in the I direction, the drive transmission gear 81 moves to the balanced position to establish a backlashless state as in Embodiment 1. As shown in part (b) of Figure 33, the number of gear teeth of the driving side flange 463 which meshes with each gear portion of the drive transmission gear 81 changes during driving.

[Embodiment 5]

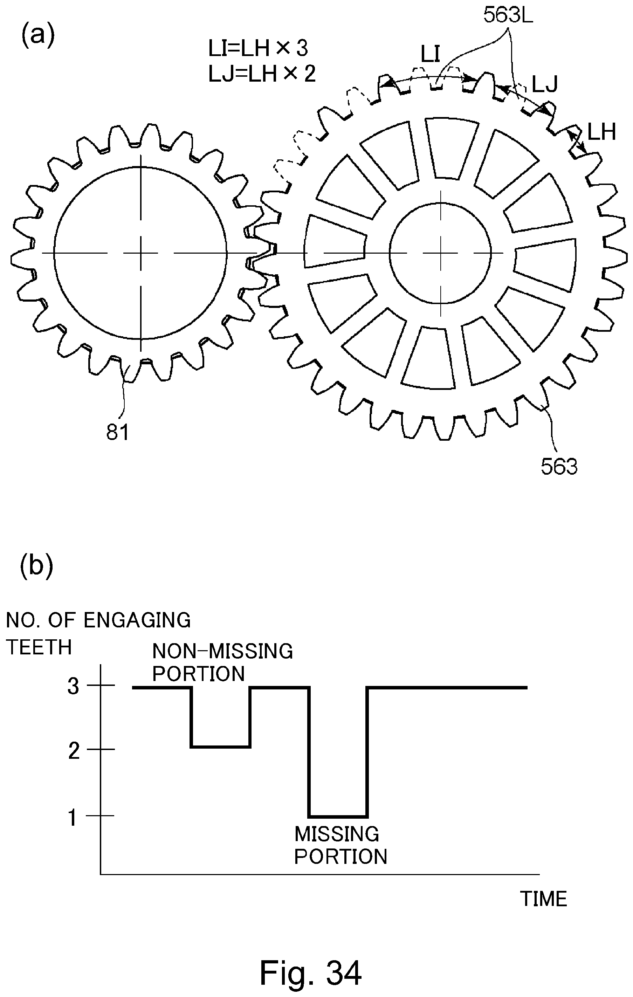

Next, referring to Figure 34, Embodiment 5 will be described. In this embodiment, the structures of the first gear portion and the second gear portion which are provided on the driving side flange are different from those in Embodiment 1. Since the other points are the same as those in Embodiment 1, the description thereof will be omitted.

The driving side flange 563 is provided with two gear portions (first unit side gear portion and second unit side gear portion) as with the first gear portion 63c and the second gear portion 63d of the driving side flange 63 of Embodiment 1. At least one of the two gear portions has a tooth missing portion 563L. Part (a) of Figure 34 is a view of the driving side flange 563 and the drive transmission gear 81 meshing with each other in a cross-section perpendicular to the rotational axis L1. Part (b) of Figure 34 is an illustration showing changes in the number of teeth of the meshing gears. As shown in part (a) of Figure 34, as is different from the driving side flange 463 of Embodiment 4, the teeth of the driving side flange 563 are not arranged at regular intervals in the circumferential direction. That is, it can be said that the size of the plurality of tooth missing portions 563 in the circumferential direction is not constant, or the apparent amount of all the tooth missing portions 563 is not the same. In other words, it will suffice if they are arranged in the rotational direction at intervals LI, LJ which are natural number (1, 2, ......) multiple of the minimum pitch LH between adjacent teeth. Even if such a tooth missing portion 563 is provided, it will suffice if there is at least one meshing tooth (the meshing ratio is 1 or more). With such a structure, by the drive transmission gear 81 rotating in the I direction, the drive transmission gear 81 moves to the balanced position to establish a backlashless state as in Embodiment 1. As shown in part (b) of Figure 34, the number of gear teeth of the driving side flange 463 which mesh with each gear portion of the drive transmission gear 81 changes.

[Embodiment 6]

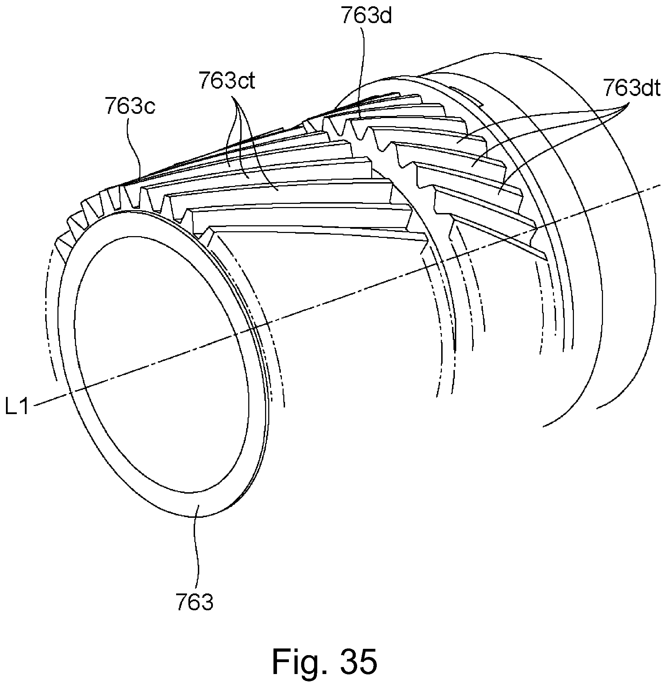

Next, referring to Figure 35, Embodiment 6 will be described below. In this embodiment, the structures of the first gear portion and the second gear portion provided on the driving side flange are different from those in Embodiment 1. Specifically, the first gear portion 63c and the second gear portion 63d of Embodiment 1 each have an involute tooth profile helical tooth, but this embodiment is different, in that the helical tooth does not have an involute tooth profile. Since the other points are the same as those in Embodiment 1, the description thereof will be omitted.

Figure 35 is a perspective view of the driving side flange 763. The driving side flange 763 has a first gear portion (first unit side gear portion) 763c and a second gear portion (second unit side gear portion) 763d. The first gear portion 763c includes a plurality of first projections 763ct, and the second gear portion 63d includes a plurality of second projections 763dt. The first projection 763ct and the second projection 763dt are projections projecting in the radial direction relative to the rotational axis L1, and the cross-sectional shape in the cross-section perpendicular to the rotational axis L1 is trapezoidal having a width narrowing toward the free end. In addition, the first projection 763ct and the second projection 763dt are helical teeth which are twisted around the rotational axis L1. Even with such a structure, the first gear portion 763c and the second gear portion 763d function as helical tooth gears in the meshing engagement with the drive transmission gear 81. Therefore, by the drive transmission gear 81 rotating in the I direction, the drive transmission gear 81 moves to the balanced position to establish a backlashless state as in Embodiment 1.

The cross-sectional shape of the first projection 763ct and the second projection 763dt is not limited to the trapezoid, but may be a projection shape such as a rectangle, a triangle, or a curved shape, or a shape with chamfered corners.

[Embodiment 7]

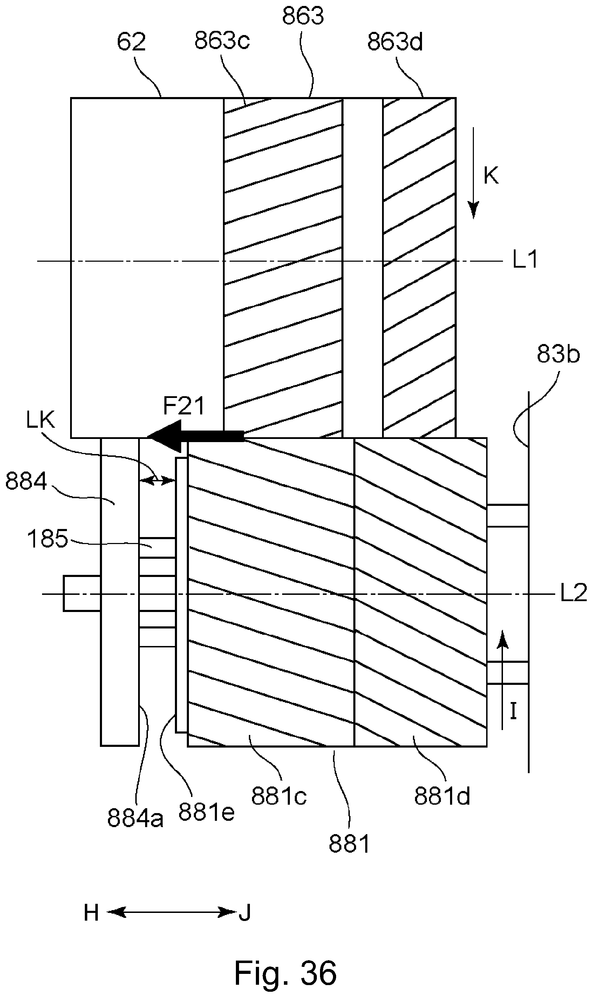

Next, referring to Figure 36, Embodiment 7 will be described. In this embodiment, the structures of the first gear portion and the second gear portion provided on the driving side flange are different from those in Embodiment 1. Specifically, the twisting directions are reversed as compared with the first gear portion 63c and the second gear portion 63d of Embodiment 1. In harmonization with this structure, the twisting directions of the first main assembly gear portion and the second main assembly gear portion of the drive transmission gear are also reversed as compared with Embodiment 1. Since the other points are the same as those in Embodiment 1, the description thereof will be omitted.

Figure 36 is a schematic view illustrating the engagement between the drive transmission gear 881 and the driving side flange 863. As shown in Figure 36, the twisting directions of the first gear portion (first unit side gear portion) 863c and the second gear portion (second unit side gear portion) 863d of the driving side flange 863 are such that the tooth surface shift in the I direction as go in the J direction. The twisting directions of the first gear portion 881c and the second gear portion 881d of the drive transmission gear 881 is such that the tooth surface shift in the K as go in the J direction.

Since the twisting direction is opposite to that of Embodiment 1, the direction of the thrust force F21 applied to the drive transmission gear 881 by the meshing engagement during driving of the drive transmission gear 881 is also opposite to that of Embodiment 1. Therefore, in moving to the balanced position in the axial direction, a space having a width LK for the drive transmission gear 881 to move in the H direction is required. For this reason, a compression spring 185 for urging the drive transmission gear 881 in the J direction is provided, so that the drive transmission gear 881 is placed in abutment against the positioning portion 83b of the second driving side plate 83 before mounting the cartridge B.

Also with such a structure, by the drive transmission gear 881 rotating in the I direction, the drive transmission gear 881 moves to the balanced position to establish a backlashless state as in Embodiment 1.

[Embodiment 8]

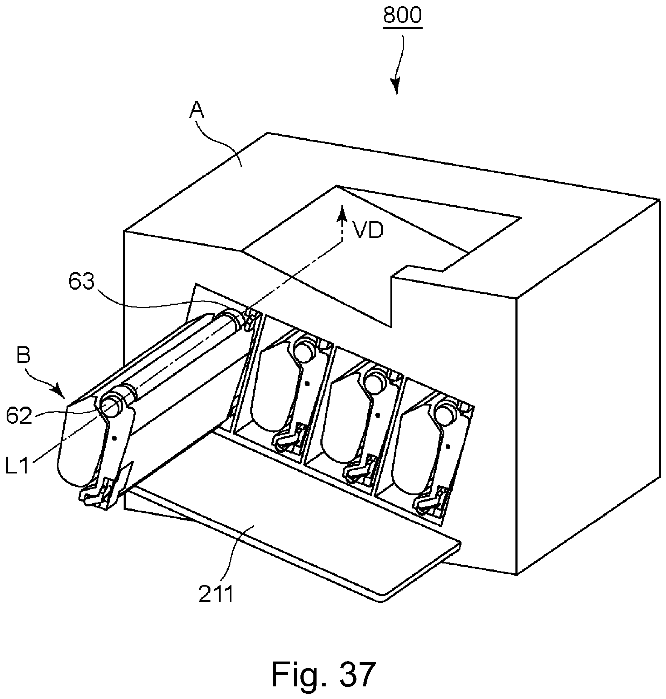

Next, referring to Figure 37, Embodiment 8 will be described. This embodiment has a different structure in which the cartridge B is mounted to the main assembly of the apparatus as compared with Embodiment 1. Since the other points are the same as those in Embodiment 1, the description thereof will be omitted.

Figure 37 is a perspective view of an image forming apparatus 800. In the image forming apparatus 800, the inserting direction for inserting the cartridge B into the apparatus main assembly A is parallel to or substantially parallel to the rotational axis L1 of the drum 62. Even if the cartridge B is completely inserted in the direction parallel to the rotational axis L1, the driving side flange 63 and the drive transmission gear (not shown) of the apparatus main assembly A cannot mesh with each other because there is a distance between them in the direction perpendicular to the rotational axis L1. Thereafter, by closing the door 211, the cartridge B is displaced at least in the direction VD perpendicular to the rotational axis L1 by the lift-up mechanism (not shown) provided in the apparatus main assembly A in connection with the door 211, and the driving side flange 63 and the drive transmission gear (not shown) of the apparatus main assembly A are meshed with each other.

The drive operation after the driving side flange 63 and the drive transmission gear (not shown) meshing engagement with each other is the same as in Embodiment 1, and the drive transmission gear moves to the balanced position to establish the backlashless state as in Embodiment 1.

When the cartridge B is displaced at least in the direction VD perpendicular to the rotational axis L1 by the lift-up mechanism, the cartridge B may be displaced not only in the direction perpendicular to the rotational axis L1 but also in the direction of the rotational axis L1. Further, the lift-up mechanism may be structured to rotate the cartridge B around an axis perpendicular to the rotational axis L1 and displace the driving side flange 63 in the direction VD perpendicular to the rotational axis L1.

Further, instead of the structure in which the door 211 is closed to operate the lift-up mechanism after the cartridge B is inserted into the apparatus main assembly A, the cartridge B may be displaced at least in the direction VD perpendicular to the rotational axis L1 in the process of inserting the cartridge B into the apparatus main assembly A. Specifically, at the initial stage of the insertion stroke of the cartridge B into the apparatus main assembly A, the cartridge B is guided by a guide (not shown) so as to move the cartridge B in a direction parallel to the rotational axis L1. Then, at the final stage of the insertion stroke, the cartridge B is guided by a guide (not shown) so as to displace the cartridge B in a direction VD perpendicular to at least the rotational axis L1. In this manner, the structure may be such that the moving direction (mounting direction) of the cartridge B changes during the insertion process.

[Embodiment 9]

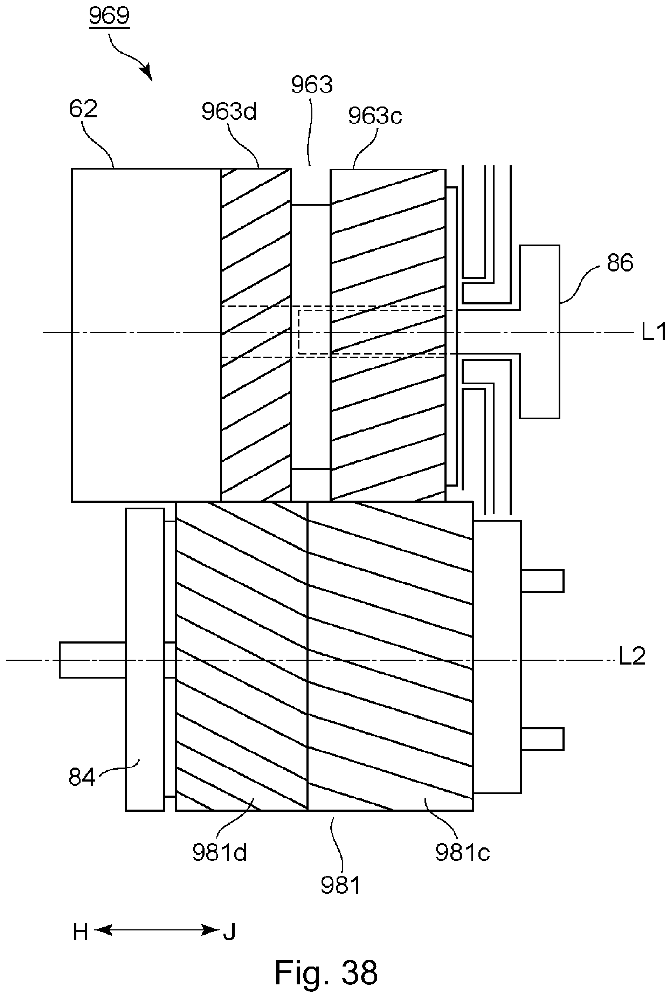

Next, referring to Figure 38, Embodiment 9 will be described. In this embodiment, the structures of the first gear portion and the second gear portion provided on the driving side flange are different from those in Embodiment 1. Specifically, in this embodiment, the arrangement of a first gear portion 963c and a second gear portion 963d in the direction of the rotational axis L1 is reversed as compared with that of the first gear portion 63c and the second gear portion 63d of Embodiment 1. In harmonization with this structure, the positions of the first main assembly gear portion and the second main assembly gear portion of the drive transmission gear in the direction of the rotational axis L1 are also reversed as compared with Embodiment 1. Since the other points are the same as those in Embodiment 1, the description thereof will be omitted.

Figure 38 is a schematic view illustrating the meshing engagement between the drive transmission gear 981 and the driving side flange 963. The driving side flange 963 is provided with the first gear portion (first unit side gear portion) 963c and the second gear portion (second unit side gear portion) 963d. The helix angle of the second gear portion 963d is larger than that of the first gear portion 963c. The first gear portion 963c is arranged on the downstream side (driving side), in the J direction, of the second gear portion 963d. That is, the second gear portion 963d is disposed between the first gear portion 963c and the drum 62 in the direction of the rotational axis L1. Similarly, the drive transmission gear 981 is provided with a first gear portion 981c which meshes with the first gear portion 963c and a second gear portion 981d which meshes with the second gear portion 963d. The positions of them in the direction of the rotational axis L1 is opposite to that in Embodiment 1.

Also with such a structure, by the drive transmission gear 981 being driven, the drive transmission gear 981 moves to the balanced position. During the subsequent driving operation, the first gear portion 963c receives the driving force FD (see part (d) of Figure 17) and the second gear portion 963d receives the restricting force FB (see part (d) of Figure 17) as in Embodiment 1, so that the backlashless state is established.

Here, the end portion, on the driving side (downstream side in the J direction), of the drum unit 969 in which the driving side flange 963 and the drum 62 are integrated is rotatably supported by the shaft member 86 (see also Figure 4). Further, the first gear portion 963c is disposed at a position closer to a root portion of the shaft member 86 than the second gear portion 963d. Further, in the driving side flange 963, the force applied to the tooth surface of the first gear portion 963c which receives the drive force FD is larger than that of the second gear portion 963d which receives the restricting force FB. Therefore, the driving force FD may act so as to cause the rotational axis L1 of the drum unit 969 to tilt, and therefore, the drum 62 may be tilted with respect to the ideal rotational axis L1. However, as in this embodiment, by disposing the first gear portion 963c which receives the driving force FD at a position closer to the root portion of the shaft member 86 than the second gear portion 963d, the tilting of the rotational axis L1 of the drum unit 969 nine six nine attributable to the reception of the driving force FD can be suppressed.

[Embodiment 10]

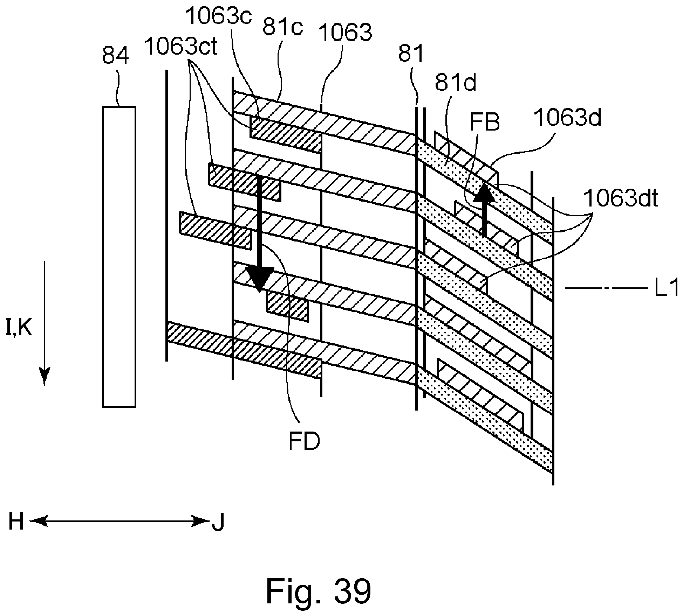

Next, referring to Figure 39, Embodiment 10 will be described below. In this embodiment, the structures of the first gear portion and the second gear portion provided on the driving side flange are different from those in Embodiment 1. Specifically, the positions and widths of the first gear portion 63c and the second gear portion 63d of Embodiment 1 in the direction of the rotational axis L1 are the same, but in this embodiment, the positions and widths, in the direction of the rotational axis L1, of the teeth are not the same, as is different from embodiment 1. Since the other points are the same as those in Embodiment 1, the description thereof will be omitted.

Figure 39 is a sectional view of the meshing engagement portion between the drive transmission gear 81 and the driving side flange 1063, and the sectional plane is in contact with the meshing pitch circles therebetween. The driving side flange 1063 is provided with a first gear portion (first unit side gear portion) 1063c and a second gear portion (second unit side gear portion) 1063d. The first gear portion 1063c includes a plurality of first helical teeth (first projections) 1063ct having different widths and positions in the direction of the rotational axis L1. The second gear portion 1063d includes a plurality of second helical teeth (second projections) 1063dt having different widths and positions in the direction of the rotational axis L1.

In the case of this structure, the meshing ratio is different from that in the case where the driving side flange 63 of Embodiment 1 is used, but the first gear portion 1063c and the second gear portion 1063d function as helical gears similarly to the first gear portion 63c and the second gear portion 63d, respectively. Therefore, as the drive transmission gear 81 rotating in the I direction, the drive transmission gear 81 moves to the balanced position so that the backlashless state is established as in Embodiment 1.

[Embodiment 11]

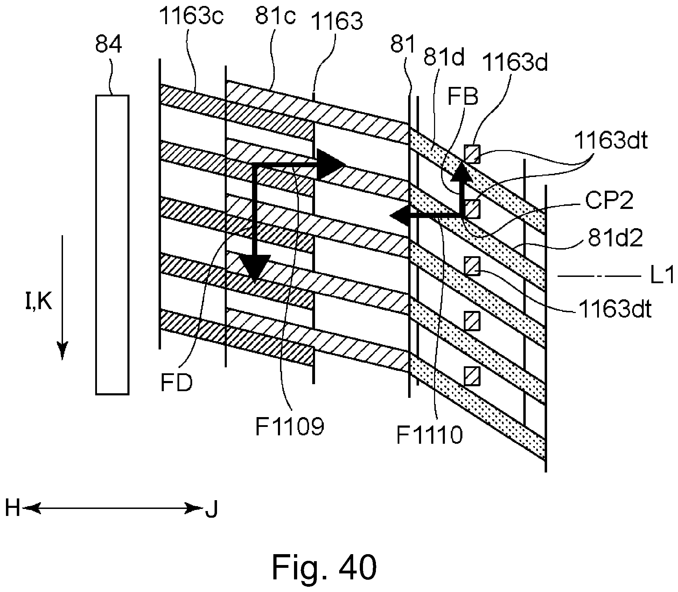

Next, referring to Figure 40, Embodiment 11 will be described. In this embodiment, the structure of the second gear portion provided on the driving side flange is different from that in Embodiment 1. Specifically, the second gear portion 63d of Embodiment 1 is an helical tooth gear, but in this embodiment, it is a spur tooth gear, as is different from embodiment 1. Since the other points are the same as those in Embodiment 1, the description thereof will be omitted.

Figure 40 is a sectional view of the meshing engagement portion between the drive transmission gear 81 and the driving side flange 1163, and the sectional plane is in contact with the meshing pitch circles therebetween. The driving side flange 1163 is provided with a first gear portion (first unit side gear portion) 1163c and a second gear portion (second unit side gear portion) 1163d. The first gear portion 1163c is the same as the first gear portion 63c of Embodiment 1. The second gear portion 1163d includes a plurality of second flat teeth (teeth, second projections) 1163dt. The plurality of second flat teeth 1163dt are flat teeth having a tooth width and a tooth thickness which are sized so as to be insertable between the teeth (intertooth portion) of the second main assembly gear portion 81d of the drive transmission gear 81. Therefore, the width (tooth width) of the second flat tooth (second projection) 1163dt in the direction of the rotational axis L1 is smaller than the width (tooth width) of the first gear portion 1163c in the direction of the rotational axis L1. In other words, the second gear portion 1163d has a second flat tooth (second projection) 1163dt having a narrower width than the first helical tooth having a largest width (tooth width), in the direction of the rotational axis L1, of the first gear portion 1163c.

The rotational direction (I direction) or circumferential width (length) of the second projection 1163dt is smaller than the rotational direction (I direction) or circumferential width (length) of one tooth of the first gear portion 1163c. In other words, the second gear portion 1163d includes a second projection 1163dt which is narrower in the rotational direction (I direction) or the circumferential direction as compared with the first helical tooth having the largest rotational direction (I direction) or circumferential direction width (length) of the first gear portion 1163c.

Further, the second projection 1163dt has a contact portion CP2 which contacts the second main assembly gear portion 81d. As shown in Figure 40, the contact portion CP2 is provided at the corner portion of the second projection 1163dt. The corner portion (contact point CP2) is provided so that the corner portion (contact point CP2) comes into contact with one tooth of the second main assembly gear portion 81d only at one point in the direction of the rotational axis L1. The radius of curvature of this corner portion can be set to a desired value, and the corner portion may have a sharper shape by making the radius of curvature smaller, or a less sharp corner may be formed by increasing the radius of curvature, as in the second projection 1363dt shown in Embodiment 13 which will be described hereinafter.

When the drive transmission gear 81 is driven, the drive transmission gear 81 receives a thrust force F1109 in the J direction and moves in the J direction in the same manner as in Embodiment 1. Then, the surface 81d2 on the upstream side in the I direction of the second main assembly gear portion 81d comes into contact with the contact portion CP2 of the second flat tooth 1163dt of the second gear portion 1163d, and receives the thrust force F1110 in the H direction. Therefore, the drive transmission gear 81 is positioned at the balanced position in the same principle as in Embodiment 1 to establish the backlashless state. Further, in the backlashless state, with respect to the driving in the rotational direction, the first gear portion 1163c receives the driving force FD and the second gear portion 1163d receives the restricting force FB at the contact portion CP2 of the second flat tooth 1163dt.

[Embodiment 12]

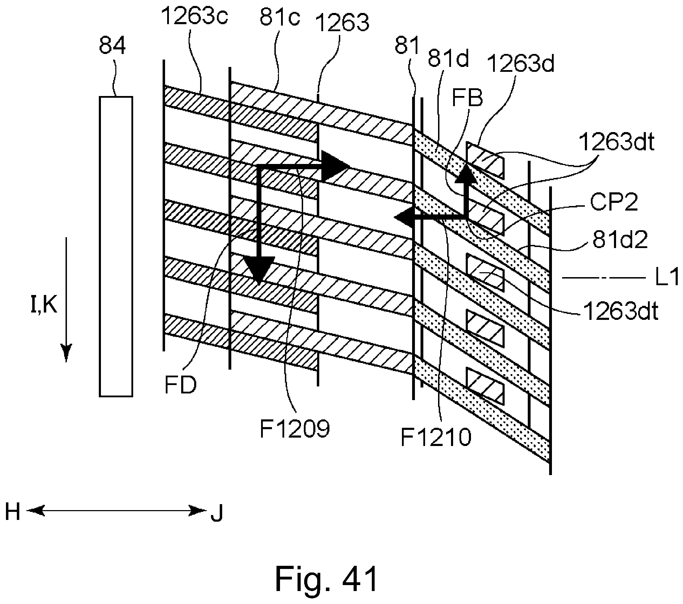

Next, referring to Figure 41, Embodiment 12 will be described. In this embodiment, the structure of the second gear portion provided on the driving side flange is different from that in Embodiment 1. Specifically, the helix angle of the second gear portion 63d of Embodiment 1 is larger than the helix angle of the first gear portion 63c, but such is not the case in the helix angle of the second gear portion 1263d of this embodiment. Since the other points are the same as those in Embodiment 1, the description thereof will be omitted.

Figure 41 is a sectional view of the meshing engagement portion between the drive transmission gear 81 and the driving side flange 1263, and the sectional plane is in contact with the meshing pitch circles therebetween. The driving side flange 1263 is provided with a first gear portion (first unit side gear portion) 1263c and a second gear portion (second unit side gear portion) 1263d. The first gear portion 1263c is the same as the first gear portion 63c of Embodiment 1. The second gear portion 1263d includes a plurality of second helical teeth (teeth, second projections) 1263dt. The helix angle of the plurality of second helical teeth 1263dt is the same as the helix angle of the helical teeth of the first gear portion 1263c. Further, similarly to the plurality of second helical teeth 1163dt of Embodiment 11, the plurality of second helical teeth 1263dt have tooth widths and tooth thicknesses which are sized so as to be insertable between the teeth (intertooth portion) of the second main assembly gear portion 81d of the drive transmission gear 81. Therefore, the width (tooth width) of the second helical tooth (second projection) 1263dt measured in the direction of the rotational axis L1 is smaller than the width (tooth width) of the first gear portion 1263c measured in the direction of the rotational axis L1. In other words, the second gear portion 1263d includes a second helical tooth (second projection) 1263dt having a narrower width than that of the first helical tooth having a largest width (tooth width) in the direction of the rotational axis L1 of the first gear portion 1263c.

Further, the rotational direction (I direction) or the circumferential width (length) of the second projection 1263dt is smaller than the rotational direction (I direction) or the circumferential width (length) of one tooth of the first gear portion 1263c. In other words, the second gear portion 1263d includes a second projection 1263dt having a rotational direction (I direction) or circumference width narrower than that of the first helical tooth having a largest rotational direction (I direction) or circumferential direction width (length) of the first gear portion 1263c.

Further, the second projection 1263dt has a contact portion CP2 which contacts the second main assembly gear portion 81d. As shown in Figure 40, the contact portion CP2 is provided at the corner portion of the second projection 1263dt. The corner portion (contact point CP2) is provided so that the corner portion (contact point CP2) contacts one tooth of the second main assembly gear portion 81d only at one point in the direction of the rotational axis L1. The radius of curvature of this corner portion can be set to a desired value, and the corner portion may have a sharper shape by making the radius of curvature smaller, or less sharp corner may be formed by increasing the radius of curvature, as in the second projection 1363dt shown in Embodiment 13 which will be described hereinafter.

By the drive transmission gear 81 being driven, the drive transmission gear 81 receives the thrust force F1209 in the J direction and moves in the J direction as in the first embodiment. Then, the surface 81d2, on the upstream side in the I direction, of the second main assembly gear portion 81d comes into contact with the contact portion CP2 of the second helical tooth 1163dt of the second gear portion 1263d, and receives the thrust force F1210 in the H direction. Therefore, the drive transmission gear 81 is positioned at the balanced position in the same principle as in Embodiment 1, so that the backlashless state is established,. Further, in the backlashless state with respect to the driving in the rotational direction, the first gear portion 1263c receives the driving force FD and the second gear portion 1263d receives the restricting force FB at the contact portion CP2 of the second helical tooth 1263dt.

[Embodiment 13]

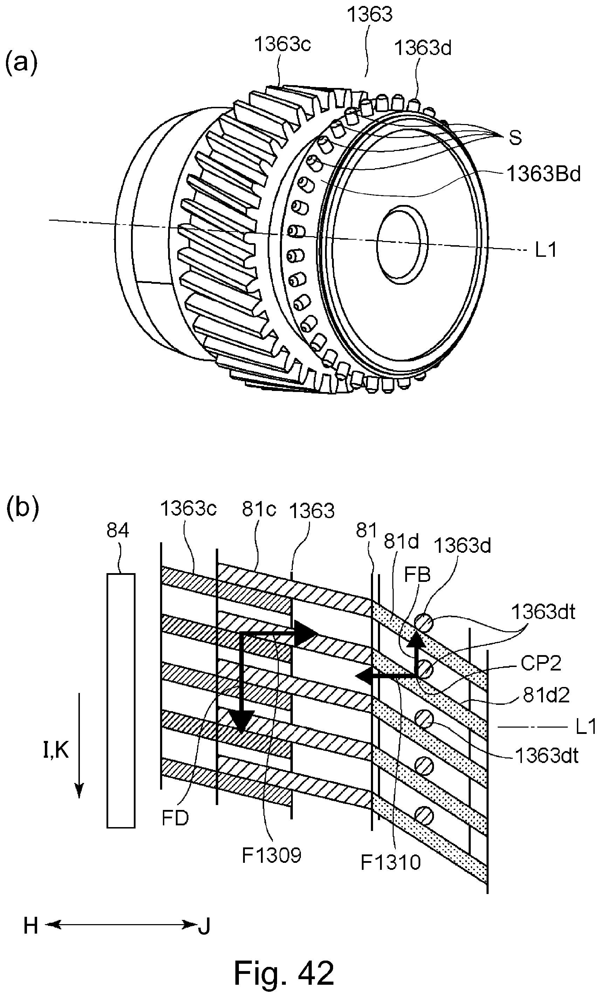

Next, referring to Figure 42, Embodiment 13 will be described below. In this embodiment, the structure of the portion corresponding to the second gear portion provided on the driving side flange is different from that in Embodiment 1. Specifically, the second gear portion 63d of Embodiment 1 is an helical tooth gear, but in this embodiment, it is a plurality of cylindrical projections, as is different from embodiment 1. Since the other points are the same as those in Embodiment 1, the description thereof will be omitted.

Part (a) of Figure 42 is a perspective view of the driving side flange 1363. Part (b) of Figure 42 is a sectional view of the meshing engagement portion between the drive transmission gear 81 and the driving side flange 1363, and the sectional plane is in contact with the meshing pitch circles therebetween.

The driving side flange 1363 is provided with a first gear portion (first unit side gear portion) 1363c and a second gear portion (second unit side gear portion) 1363d. The first gear portion 1363c is the same as the first gear portion 63c of Embodiment 1.

The second gear portion 1363d includes a plurality of cylindrical second projections (teeth) 1363dt projecting in the radial direction of the rotational axis L1 from the tooth bottom cylindrical portion (base cylinder portion) 1363Bd extending along the rotational axis L1. The second gear portion 1363d is a rotating portion which rotates integrally with the first gear portion 1363c. The plurality of second projections 1363dt are arranged at the same position (on the same plane perpendicular to the rotational axis L1) with respect to the direction of the rotational axis L1.

Further, the tips S of the plurality of second projections 1363dt are arranged on a predetermined circumference centered on the rotational axis L1 as viewed along the rotational axis L1, and are arranged at equal intervals in the circumferential direction. The addendum circle of the second gear portion 1363d is a circle as a rotation locus drawn by the free end S that is most remote from the rotational axis (rotational axis L1) of the second gear portion 1363d among the free ends S of the plurality of second projections 1363dt when the driving side flange 1363 rotates. In this embodiment, the shapes of all the second projections 1363dt are the same, and therefore, the distances of the free ends S of all the second projections 1363dt from the rotational axis L1 are the same, so that all the free ends S draw the same rotation locus. Further, the diameter/radius of the circle of this rotation locus is the addendum circle diameter/addendum circle radius of the second gear portion 1363d.

The plurality of second projections 1363dt are projections having a width in the direction of the rotational axis L1 and a width in the rotational direction (I direction) which are sized so as to be insertable between the teeth (intertooth portion) of the second main assembly gear portion 81d of the drive transmission gear 81. Therefore, the width of the second projection 1363dt measured in the direction of the rotational axis L1 is smaller than the width (tooth width) of the first gear portion 1363c measured in the direction of the rotational axis L1. In other words, the second gear portion 1363d has the second projection 1363dt having a width in the direction of the rotational axis L1 narrower than that of the first helical tooth having the largest width (tooth width), in the direction of the rotational axis L1, of the first gear portion 1363c. The rotational direction (I direction) or circumferential direction width (length) of the second projection 1363dt is larger than the rotational direction (I direction) or circumferential width (length) of one tooth of the first gear portion 1363c. In other words, the second gear portion 1363d includes a second projection 1363dt having a rotational direction (I direction) or circumferential width smaller than that of the first helical tooth having the largest rotational direction (I direction) or circumferential direction width (length) of the first gear portion 1363c.

Further, the second projection 1363dt has a contact portion CP2 which contacts the second main assembly gear portion 81d. As shown in part (b) of Figure 42, the contact portion CP2 is on the curved portion of the surface of the second projection 1363dt. The curved portion of the surface of the second projection 1363dt can be said to be a corner portion. The corner portion (contact point CP2) is provided so that the corner portion (contact point CP2) contacts one tooth of the second main assembly gear portion 81d only at one point in the direction of the rotational axis L1. The radius of curvature of this corner can be set to a desired value, and the radius of curvature may be made smaller to form a corner with a sharper shape, or the radius of curvature may be made larger to form a less sharp corner.

When the drive transmission gear 81 is driven, the drive transmission gear 81 receives a thrust force in the J direction and moves in the J direction, as in Embodiment 1. Then, the surface 81d2 on the upstream side in the I direction of the second main assembly gear portion 81d comes into contact with the contact portion CP2 of the second projection 1363dt of the second gear portion 1163d, and receives the thrust force F1310 in the H direction. Therefore, the drive transmission gear 81 is positioned at the balanced position in the same principle as in Embodiment 1, and the backlashless state is established. Further, in the backlashless state, the first gear portion 1363c receives the driving force FD, and the second gear portion 1363d receives the restricting force FB at the contact portion CP2 of the second projection 1363dt with respect to the driving in the rotational direction.

Thus, the second gear portion 1363d can engage with other gears such as the second main assembly gear portion 81d by using the plurality of second projections 1363dt and can receive the rotational driving force and/or the thrust force, and therefore, in this respect, it can be regarded as a kind of gear.

Further, the plurality of second projections 1363dt are not limited to a cylindrical shape, and may have at least a shape which projects in the radial direction relative to the rotational axis L1 and may be a polygonal column shape, for example. Further, all the plurality of second projections 1363dt do not have to have the same shape.

[Embodiment 14]

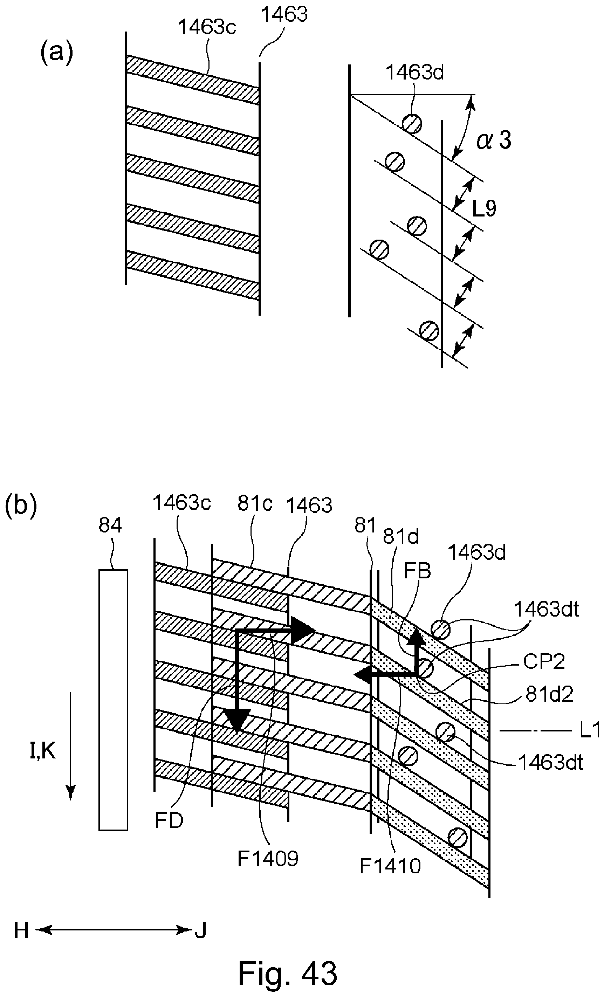

Next, referring to Figure 43, Embodiment 14 will be described. In this embodiment, the structure of the portion corresponding to the second gear portion provided on the driving side flange is different from that in Embodiment 1. Specifically, the second gear portion 63d of Embodiment 1 is an helical tooth gear, but in this embodiment, it is a plurality of cylindrical projections, as is different from embodiment 1. Since the other points are the same as those in Embodiment 1, the description thereof will be omitted. Further, in the comparison with Embodiment 13, this embodiment is different therefrom only in the arrangement of the plurality of cylindrical projections.

Part (a) of Figure 43 is a sectional view of the teeth and projections of the driving side flange 1463, and the sectional plane thereof is in contact with a circle centered on the rotational axis L1. Part (b) of Figure 43 is a sectional view of the meshing engagement portion between the drive transmission gear 81 and the driving side flange 1463, and the sectional plane thereof is in contact with the meshing pitch circles therebetween.

The driving side flange 1463 is provided with a first gear portion (first unit side gear portion) 1463c and a second gear portion (second unit side gear portion) 1463d. The first gear portion 1463c is the same as the first gear portion 63c of Embodiment 1.

The second gear 1463d includes a plurality of cylindrical second projections 1463dt projecting in the radial direction relative to the rotational axis L1. The second gear portion 1463d is a rotatable portion which is rotatable integrally with the first gear portion 1463c. The plurality of second projections 1463dt are arranged at positions shifted in the direction of the rotational axis L1.

Further, the free end S (see part (a) of Figure 42) of the plurality of second projections 1463dt are arranged on a predetermined circumference centered on the rotational axis L1 as viewed along the rotational axis L1. The plurality of second projections 1463dt are projections having a width measured in the direction of the rotational axis L1 and a width measured in the rotational direction (I direction) which are sized such that it can be inserted between the teeth (intertooth portion) of the second main assembly gear portion 81d of the drive transmission gear 81. Further, the plurality of second projections 1463dt are inserted between the teeth (intertooth portion) of the second main assembly gear portion 81d of the drive transmission gear 81, and are placed at positions where they can receive the restricting force FB from the second main assembly gear portion 81d in the backlashless state. Specifically, as shown in part (a) of Figure 43, a plurality of imaginary twisted lines (helical lines) L9 twisted at the same angle as the helix angle $\alpha2$ of the second main assembly gear portion 81d are drawn on the cylindrical surface centered on the rotational axis L1 at a predetermined pitch P9. This pitch P9 is the same as the pitch of the drive transmission gear 81 in the direction perpendicular to the tooth surface of the plurality of second helical teeth 81dt of the second main assembly gear portion 81d. Then, the plurality of second projections 1463dt are arranged so as to satisfy the following conditions in relation to the plurality of twisted lines L9. The condition is that a plurality of twisted lines L9 can be arranged such that some of the plurality of twisted lines L9 are in contact with some of the plurality of second projections 1463dt, and none of the plurality of twisted lines L9 passes through the cross-section of the plurality of second projections 1463dt. This embodiment can perform the same function as the plurality of second projections 1363dt of Embodiment 13, that is, by arranging the plurality of second projections 1463dt so as to satisfy such the condition, the plurality of second projections 1463dt receive the restricting force FB from the second main assembly gear portion 81d in a backlashless state. In addition, similarly to Embodiment 13, the corner portion (contact point CP2) of the second projection 1463dt is provided such that at only one corner portion (contact point CP2) in the direction of the rotational axis L1, it can contact with one tooth of the second main assembly gear portion 81d.

When the drive transmission gear 81 is driven, as shown in part (b) of Figure 43, the drive transmission gear 81 receives the thrust force F1409 and moves in the J direction as in embodiment 1. And, the surface 81d2, on the upstream side in the I direction, of the second main assembly gear portion 81d comes into contact with the contact portion CP of the second projection 1463dt of the second gear portion 1463d, and receives the thrust force F1410 in the H direction. Therefore, the drive transmission gear 81 is positioned at the balanced position in the same principle as in Embodiment 1 to establish the backlashless state. In addition, in the backlashless state, the first gear portion 1463c receives the driving force FD, and the second gear portion 1463d receives the restricting force FB at the contact portion CP2 of the second projection 1463dt, with respect to the driving in the rotational direction.

Since the second gear portion 1463d can engage with other gears such as the second main assembly gear portion 81d and can receive the rotational driving force and/or the thrust force by using the plurality of second projections 1463dt, it can be regarded as a kind of gear, in this respect,.

Further, the shapes of the plurality of second projections 1463dt are not limited to a cylindrical shape, and may have a shape which projects at least in the radial direction relative to the rotational axis L1, and all the plurality of second projections 1463dt do not have to have the same shape.

[Embodiment 15]

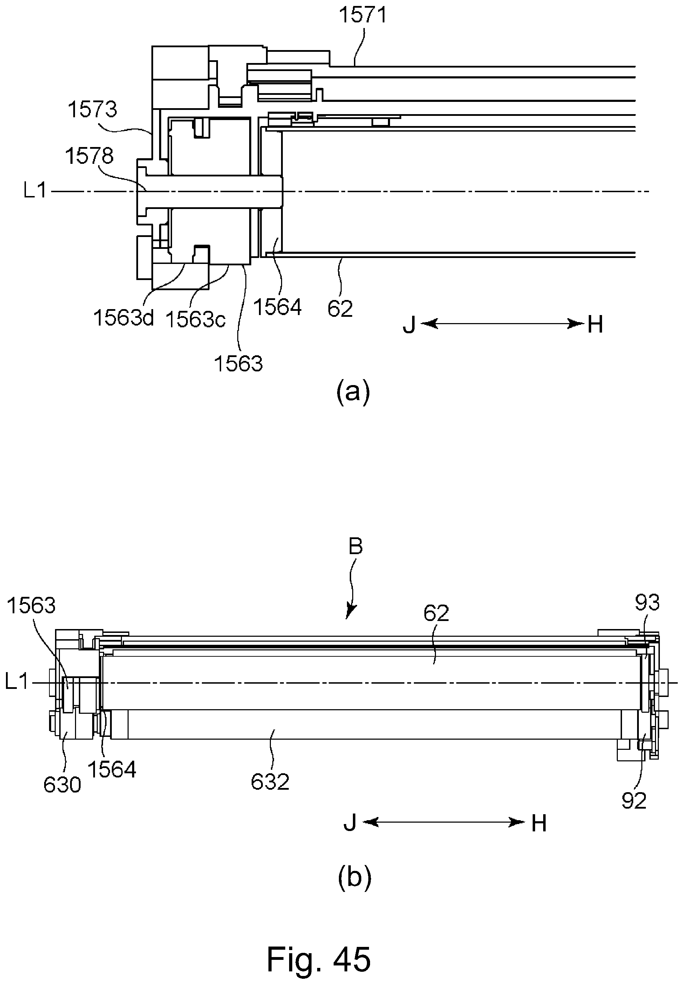

Next, referring to Figure 45, Embodiment 15 will be described. The drive transmission structure in the cartridge B is different from that of Embodiment 1. Part (a) of Figure 45 is a partial sectional view of the cartridge B in the neighborhood of the drum 62, taken along a line including the rotational axis L1. Part (b) of Figure 45 is a view of the drum 62 and the developing roller 632 of the cartridge B as viewed in a direction perpendicular to the rotational axis L1.

The gear that meshes with the drive transmission gear 81 does not have to be integrally fixed to the end of the drum 62. As shown in part (a) of Figure 45, the driven gear 1563 which meshes with the drive transmission gear 81 is rotatably supported at both end portions by a shaft 1578 fixed to one end of the cleaning frame 1571. That is, the shaft 1578 supports the driven gear 1563 in a state of penetrating the driven gear 1563. The driven gear 1563 is a first gear portion (first unit side gear portion) 1563c which is an helical tooth gear having a helix angle $\alpha1$ and a second gear portion (second unit side gear portion) 1563d which is an helical tooth gear having a helix angle $\alpha2$, similarly to the first gear portion 63c and the second gear portion 63d provided on the driving side flange 63 of Embodiment 1. In addition, a developing roller gear 632 is provided integrally with a developing gear 630 in meshing engagement with the second gear portion 1563d of the driven gear 1563 at one end of the developing roller 632, and a drum drive gear 92 is provided integrally with the developing roller 632 at the other end of the developing roller 632. Further, a drum gear 93 which meshes with the drum drive gear 92 is integrally mounted to one end of the drum 62 by clamping or the like, and is rotatably supported by the drum shaft. Furthermore, a drum flange 1564 is mounted to the other end of the drum by clamping or the like, and is rotatably supported by a shaft 1578. With such a structure, the driving force received by the driven gear 1563 from the drive transmission gear 81 is transmitted to the drum 62 in the order of the developing roller gear 630, the developing roller 632, the drum drive gear 92, and the drum gear 93.

[Embodiment 16]

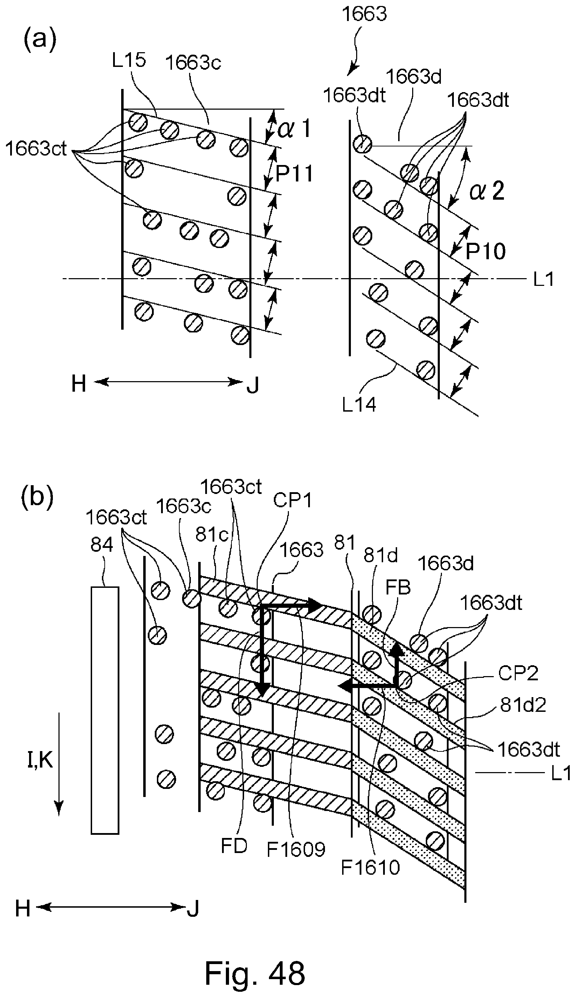

Next, referring to Figure 48, Embodiment 15 will be described. In this embodiment, the structures of the portions corresponding to the first gear portion and the second gear portion provided on the driving side flange, as is different from those in Embodiment 1. Specifically, the first gear portion 63c and the second gear portion 63d of Embodiment 1 are helical tooth gears, but in this embodiment, each gear portion is provided by a plurality of projections (projections form each tooth of the gears), as is different therefrom. Since the other points are the same as those in Embodiment 1, the description thereof will be omitted.

Part (a) of Figure 48 is a sectional view of the teeth and projections of the driving side flange 1663, and the sectional plane thereof is in contact with a circle centered on the rotational axis L1. Part (b) of Figure 48 is a sectional view of the meshing engagement portion between the drive transmission gear 81 and the driving side flange 1663, and the sectional plane is in contact with the meshing pitch circles therebetween.

The first gear portion (first unit side gear portion, first unit side helical tooth gear portion) 1663c includes a plurality of cylindrical first projections 1663ct projecting in the radial direction with respect to the rotational axis L1 from the tooth bottom cylindrical portion (base cylinder portion) extending along the rotational axis L1. The plurality of first projections 1663ct are arranged at the same position and at different positions with respect to the direction of the rotational axis L1.

In addition, the free ends S (see part (a) of Figure 42) of the plurality of first projections 1663ct are arranged on a predetermined circumference centered on the rotational axis L1 as viewed along the rotational axis L1. The plurality of first projections 1663ct are projections having a width in the direction of the rotational axis L1 and a width in the rotational direction (I direction) having which are sized such that it can be inserted between the teeth (intertooth portion) of the first main assembly gear portion 81c of the drive transmission gear 81. In addition, the plurality of first projections 1663ct are disposed at the positions so that they are inserted between the teeth (inthertooth portion) of the first main assembly gear portion 81c of the drive transmission gear 81, and to receive the driving force FD from the first main assembly gear portion 81c in the backlashless state. Specifically, as shown in part (a) of Figure 48, a plurality of imaginary twisted lines L15 twisted at the same angle as the helix angle $\alpha$1 of the first main assembly gear portion 81c on the cylindrical surface centered on the rotational axis L1 (helical line) are drawn at the predetermined pitch P11. This pitch P11 is the same as the pitch in the direction perpendicular to the tooth surface of the plurality of first helical teeth 81ct of the first main assembly gear portion 81c of the drive transmission gear 81. Then, the plurality of first projections 1663dt are arranged so as to satisfy the following conditions in relation to the plurality of twisted lines L5. The condition is that the plurality of twisted lines L11 can be arranged so that some of the plurality of twisted lines L15 are in contact with some of the plurality of first projections 1663ct, and none of the plurality of twisted lines L11 pass through the cross-sections of the plurality of first projections 1663ct. By arranging the plurality of first projections 1663ct so as to satisfy such a condition, the plurality of first projections 1663ct mesh with the first main assembly gear portion 81c in the backlashless state and rotate to receive the driving force FB.

The second gear portion (second unit side gear portion, second unit side helical tooth gear portion) 1663d includes a plurality of cylindrical second projections 1663dt projecting in the radial direction relative to the rotational axis L1. The second gear portion 1663d is a rotatable portion which rotates integrally with the first gear portion 1663c. The plurality of second projections 1663dt are arranged at positions shifted with respect to the direction of the rotational axis L1.

Further, the free ends S (see part (a) of Figure 42) of the plurality of second projections 1663dt are arranged on a predetermined circumference centered on the rotational axis L1 as viewed along the rotational axis L1. The plurality of second projections 1663dt are projections having a width in the direction of the rotational axis L1 and a width in the rotational direction (I direction) which are sized such that that they can be inserted between the teeth (intertooth portion) of the second main assembly gear portion 81d of the drive transmission gear 81. In addition, the plurality of second projections 1663dt are disposed at the positions such that they can be inserted between the teeth (intertooth portion) of the second main assembly gear portion 81d of the drive transmission gear 81, and can receive the restricting force FB from the second main assembly gear portion 81d in a backlashless state. Specifically, as shown in part (a) of Figure 48, a plurality of imaginary twisted lines L14 twisted at the same angle as the helix angle $\alpha$2 of the second main assembly gear portion 81d on the cylindrical surface centered on the rotational axis L1 (helical line) are drawn at a predetermined pitch P10. This pitch P10 is the same as the pitch in the direction perpendicular to the tooth surface of the plurality of second helical teeth 81dt of the second main assembly gear portion 81d of the drive transmission gear 81. And, the plurality of second projections 1663dt are arranged so as to satisfy the following conditions in relation to the plurality of twisted lines L14. The condition is that a plurality of the twisted lines L14 can be arranged such that some of the plurality of twisted lines L14 are in contact with some of the plurality of second projections 1663dt, and none of the plurality of twisted lines L14 pass through the cross-section of the plurality of second projections 1663dt. By arranging a plurality of second projections 1663dt so as to satisfy such a condition, the plurality of second projections 1663dt can perform the same function as the plurality of second projections 1363dt of Embodiment 13 can be performed, that is, the projections makes the meshing engagement with the second main assembly gear portion 81d to rotate in a backlashless state and receives the restricting force FB.

As shown in part (b) of Figure 48, when the drive transmission gear 81 is driven, the drive transmission gear 81 moves in the J direction as in Embodiment 1. This is because the first main assembly gear portion 81c comes into contact with the plurality of first projections 1663ct and receives a thrust force in the J direction. In the drive transmission gear 81 which has moved in the J direction, the surface 81d2 on the upstream side in the I direction of the second main assembly gear portion 81d finally comes into contact with the contact portion CP2 of the second projection 1663dt of the second gear portion 1663d, and receives the thrust force F1610 in the H direction. In addition, the surface 81c1 on the downstream side in the I direction of the first main assembly gear portion 81c comes into contact with the contact portion CP1 of the first projection 1663ct of the first gear portion 1663c and receives the thrust force F1609 in the J direction. Therefore, the drive transmission gear 81 is positioned at the balanced position in the same principle as in Embodiment 1, and the backlashless state is established. Further, in the backlashless state, the first gear portion 1663c receives the driving force FD and the second gear portion 1663d receives the restricting force FB at the contact portion CP of the second projection 1463dt with respect to the driving in the rotational direction.

The first gear portion 1663c can engage with other gears such as the first main assembly gear portion 81d by using the plurality of first projections 1663ct, it can receive a rotational driving force and/or the thrust force, and therefore, in this respect, it can be regarded as a kind of gear (helical tooth gear). That is, it can be said that the surfaces of the plurality of first projections 1663ct (plural contact portions CP1) constitute a plurality of helical tooth surfaces provided by division in the direction of the rotational axis L1, or constitute the helical tooth surfaces provided by division into a plurality of parts in the circumferential direction and centered on the rotational axis L1 of the driving side flange 1663.

Therefore, by connecting the plurality of contact portions CP1, the twisted line L15 can be defined. The plurality of first projections 1663ct are arranged so as to be contactable with one tooth of the first main assembly gear portion 81c at a plurality of positions separated from each other in the direction of the rotational axis L1. It can be said that the plurality of contact portions CP1 capable of simultaneously contacting one tooth of the first main assembly gear portion 81c are provided at positions separated from each other with respect to the direction of the rotational axis L1. In this manner, it can be said that the plurality of first projections 1663ct separately arranged in the direction of the rotational axis L1 constitute one tooth (helical tooth) which meshes with one tooth of the first main assembly gear portion 81c. Therefore, the plurality of first projections 1663ct function as helical tooth gears, and the first gear portion 1663c is the first helical tooth gear portion.

In addition, a circle drawn as the rotation locus when the free end (point) most remote from the rotational axis L1 among the free ends of the plurality of first projections 1663ct is rotated is the addendum circle of the first gear portion 1663c, and the diameter of the circle is the addendum circle.

Similarly, the second gear portion 1663d can engage with other gears such as the second main assembly gear portion 81d by using the plurality of second projections 1663dt, and can receive a rotational driving force and/or a thrust force, and therefore, in this respect, it can be regarded as a kind of gear. That is, it can be said that the surfaces of the plurality of second projections 1663dt (plural contact portions CP2) constitute a plurality of helical tooth surfaces provided by division in the direction of the rotational axis L1, or constitute the helical tooth surfaces provided by division into a plurality of parts in the circumferential direction and centered on the rotational axis L1 of the driving side flange 1663.

Therefore, by connecting the plurality of contact portions CP2, the twisted line L14 can be defined. The plurality of second projections 1663dt are arranged so as to be contactable with one tooth of the second main assembly gear portion 81d at the plurality of positions separated from each other in the direction of the rotational axis L1. It can be said that the plurality of contact portions CP2 capable of simultaneously contacting one tooth of the second main assembly gear portion 81d are provided at positions separated from each other in the direction of the rotational axis L1. In this manner, it can be said that the plurality of second projections 1663dt separately arranged in the direction of the rotational axis L1 constitute one tooth (helical tooth) which meshes with one tooth of the second main assembly gear portion 81d. Therefore, the plurality of second projections 1663dt function as a helical tooth gear, and the second gear portion 1663d is a second helical tooth gear portion.

Further, a circle drawn as the rotation locus when the free end (point) most remote from the rotational axis L1 among the free ends of the plurality of second projections 1663dt is the addendum circle of the second gear portion 1663d, and the diameter of the circle is the addendum circle.

Further, each of the plurality of first projections 1663ct and the plurality of second projections 1663dt is not limited to a cylindrical shape, and may have a shape that projects at least in the radial direction relative to the rotational axis L1. Further, the plurality of first projections 1663ct do not have to be a plurality of completely separated projections, and may include a plurality of contact portions CP1. For example, the cross-sectional shape in the tangential direction perpendicular to the radial direction relative to the rotational axis L1 may have a shape like a staircase in which parts of the cross-sectional shape portions are connected. The same applies to the plurality of second projections 1663dt. Further, all the plurality of first projections 1663ct may not have the same shape, and all the plurality of second projections 1663dt may not have the same shape.

[Embodiment 17]

Embodiment 17 differs from Embodiment 1 in the following points. First, the layout of the structure in the apparatus main assembly A to which the cartridge B is mountable is different. As a result, the attitude of the cartridge B in the apparatus main assembly A is different. In addition, the support structure of a driving side flange 1763 and an engagement structure of a drive transmission gear 1781 and an idler gear 1780 are different. A drive transmission structure to a developing roller 1732 is the same as that of other Modified Example of Embodiment 1. Further, the positional relationship between the first gear portion which receives the driving force FD and the second gear portion which receives the restricting force FB in the axial direction is the same as those of Embodiment 9. Other points are the same as in Embodiment 1, and detailed description thereof will be omitted. Further, among the elements in this embodiment, the element corresponding to the element of Embodiment 1 (example: drum 62) (example: drum 1762) is associated with the corresponding element of Embodiment 1 (for example, reference numeral "1762" corresponds to "62"). Regarding these elements, the matters not specifically explained are the same as the corresponding elements of Embodiment 1.

<Configuration of main assembly of apparatus>

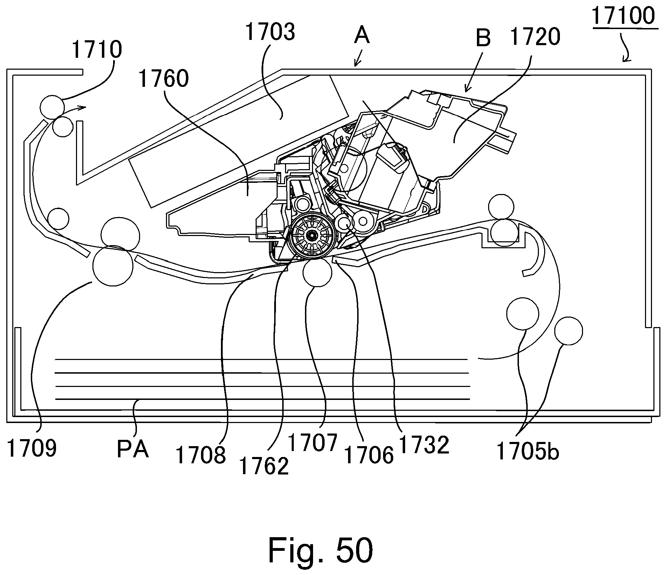

Figure 50 is a cross-sectional view of the apparatus main assembly A to which the cartridge B is mounted (the cross-sectional plane is perpendicular to the rotational axis L1). The apparatus main assembly A of the image forming apparatus 17100 comprises an exposure device (laser scanner unit) 1703 and a sheet tray 1704 for accommodating the sheet material PA. Further, the apparatus main assembly A comprises a pickup roller (not shown), a feeding roller pair 1705b, a transfer guide 1706, a transfer roller 1707, a feeding guide 1708, a fixing device 1709, a discharge roller pair 1710, and a discharge tray 1711, provided along a transfer path of the sheet material PA.

<Attitude of cartridge B in apparatus main assembly A>

As shown in Figure 50, the cartridge B is positioned in the apparatus main assembly A with the cleaning unit 1760 and the developing unit 1720 placed substantially horizontally. At this time, the transfer roller 1707 is below the drum 1762.

<Support structure for drum unit 1769 by cleaning unit 1760>

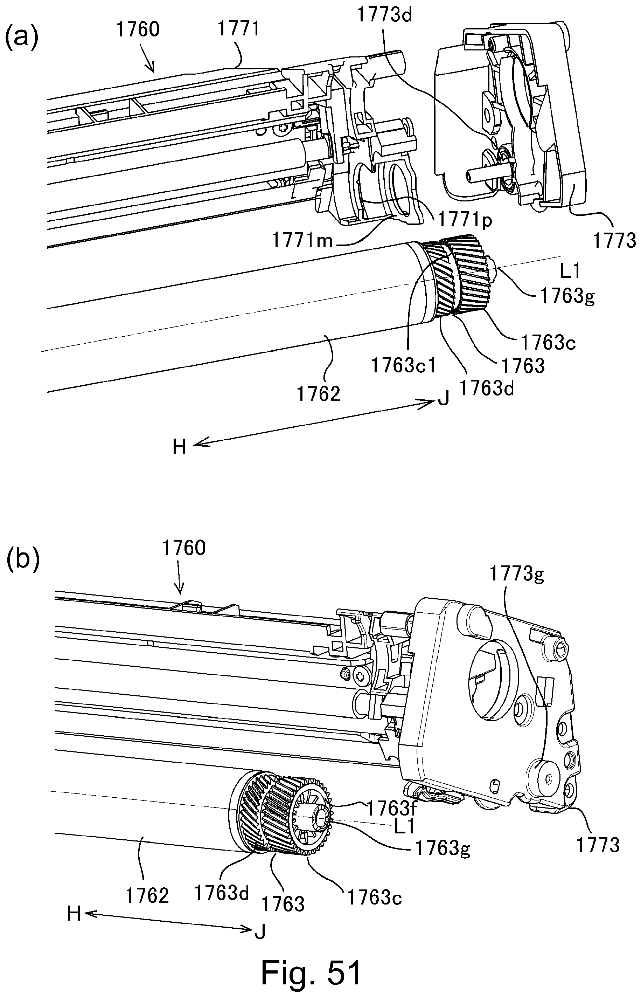

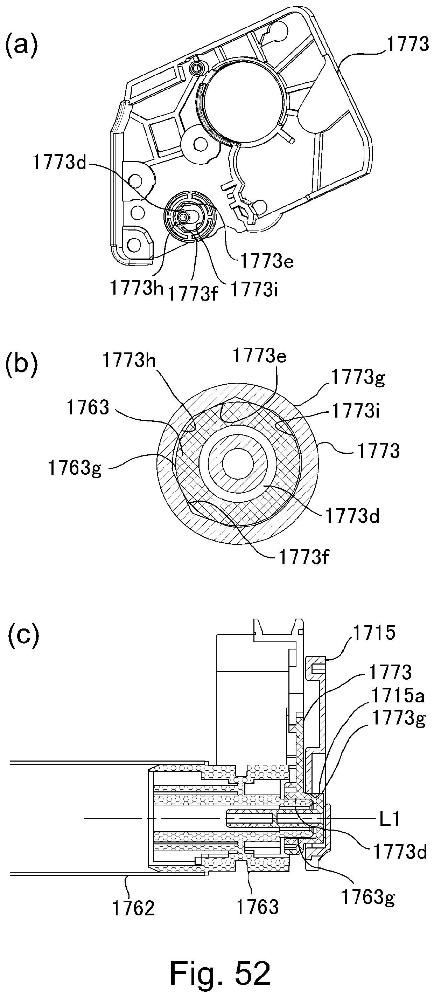

Next, referring to part (a) of Figure 51, part (b) of Figure 51 , part (a) of Figure 52 , part (b) of Figure 52 , part (c) of Figure 52 , Figure 58, and Figure 59, the support structure of the drum unit 1769 by the cleaning unit 1760 will be described.

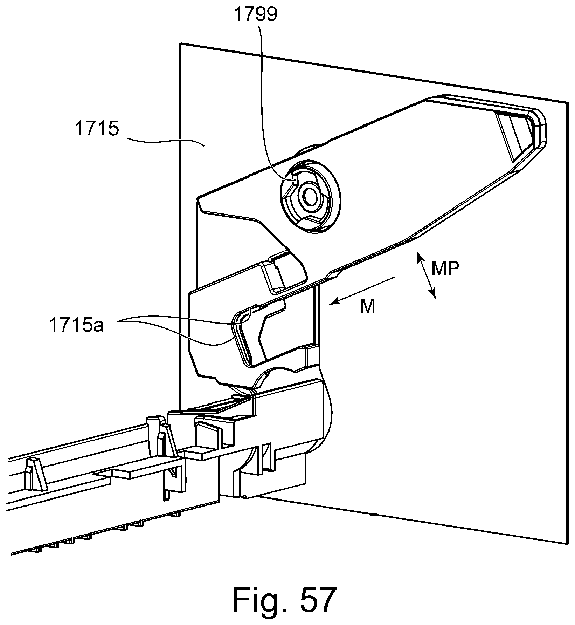

Part (a) of Figure 51 is an exploded perspective view of the cleaning unit 1760, and shows a state in which the cleaning unit 1760 is viewed from the developing unit side so that the inside of the drum bearing member 1773 can be seen. Part (b) of Figure 51 is an exploded perspective view of the cleaning unit 1760, and shows a state in which the cleaning unit 1760 is viewed from the developing unit side so that the outside of the drum bearing member 1773 can be seen. Part (a) of Figure 52 is a perspective view of the drum bearing member 1773 as viewed from the inside. Part (b) of Figure 52 is a cross-sectional view of a guided portion 1773g of the drum bearing member 1773 which supports the driving side flange 1763 taken along a cross-sectional plane perpendicular to the rotational axis L1. Here, this cross-sectional view shows a state in which the cross-section is viewed from the inside of the drum bearing member 1773. Part (c) of Figure 52 is a sectional view of, the portion adjacent to the driving side flange 1763 of the cartridge B mounted on the apparatus main assembly A, taken along a plane including rotational axis L1 and perpendicular to the mounting direction M (see Figure 57) of the cartridge B to the apparatus main assembly A.

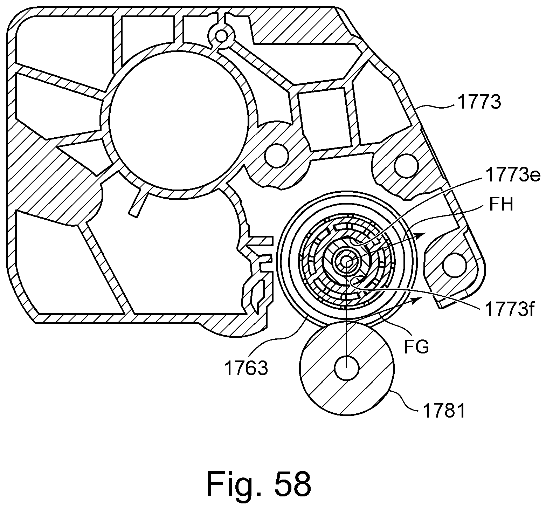

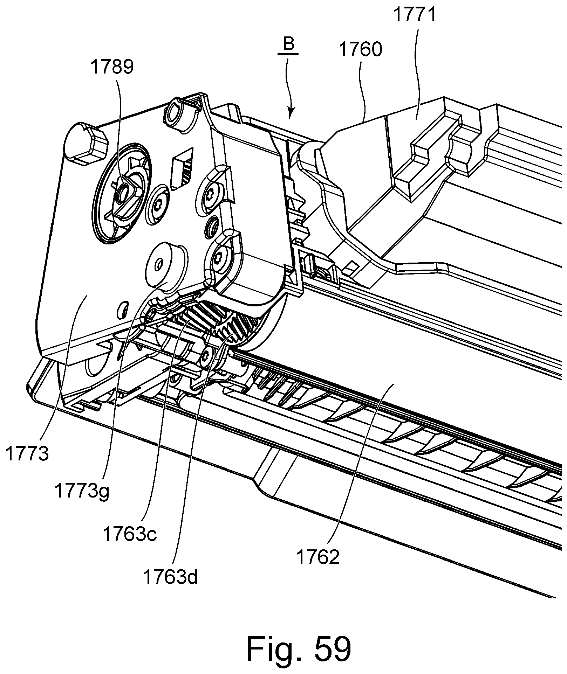

Figure 58 is a cross-sectional view of the cleaning unit 1760 and the drive transmission gear 1781 as viewed from the outside of the drum bearing member 1773, and the cross-sectional plane thereof passes through a hole 1773d of the drum bearing member 1773 which supports the driving side flange 1763 and perpendicular to the rotational axis L1. Figure 59 is a partial perspective view of the neighborhood of the driving side flange 1763 of the cartridge B.

As shown in part (a) of Figure 51 and part (b) of Figure 51 , the cleaning unit 1760 includes a frame member 1771 and a drum bearing member 1773 fixed to the frame member 1771, which constitute a drum frame which supports the drum 1762. The driving side flange 1763 is provided with a cylindrical projection (supported portion) 1763g centered on the rotational axis L1 and projecting outward (downstream in the J direction) from the end surface of the first gear portion 1763c in the rotational axis L1 so as to project from the end of the driving side flange 1763 toward the downstream side in the J direction. The drum bearing member 1773 is provided with a hole 1773d recessed in the direction of the rotational axis L1 (J direction) for supporting the projection 1763g. As shown in part (a) of Figure 52 and part (b) of Figure 52 , the inner peripheral surface of the hole 1773d has surfaces 1773e and 1773f and two circumferential surfaces 1773h and 1773i, each of which is parallel to the rotational axis L1. In addition, the two surfaces 1773e and 1773f are not parallel to each other and are arranged so as to provide a substantially V-shaped recess shape as viewed in the rotational axis L1 direction. The surface 1773e and the surface 1773f are support surfaces (support portions) having supporting points which contact and support the projections 1763g. As shown in Figure 58, the substantially V-shaped recess shape provided by the two surfaces 1773e and 1773f is oriented against a force FH parallel to a force FG starting at the rotational axis L1 so as to receive the meshing engagement force FG between the tooth surfaces of the gears when the driving force is transmitted from the driving transmission gear 1781 to the driving side flange 1763. Specifically, a bisector of an angle formed by the extension line of the surface 1773e and the extension line of the surface 1773f as viewed along the rotational axis L1 and the force FH is substantially parallel with the force FH. The orientations of the two surfaces 1773e and 1773f are not limited to this example, and may be selected, taking into account various forces which apply loads to the driving side flange 1763.

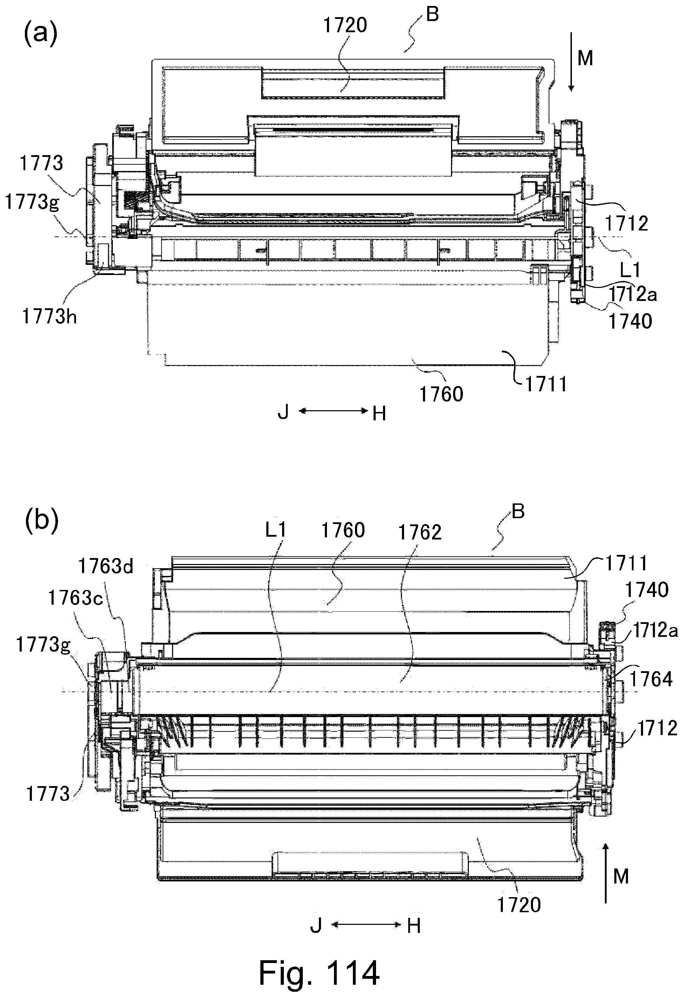

After the drum unit 1769 is incorporated inside the frame member 1771, the drum bearing member 1773 is mounted to the frame member 1771 and fixed, so that the projection 1763g of the driving side flange 1763 fits the hole 1773d of the drum bearing member 1773. By this, the drum unit 1769 is rotatably supported by the frame member 1771 and the drum bearing member 1773. In addition, as shown in Figure 59 and part (b) of Figure 114, in the completed state as the cartridge B, parts of the driving side flange 1763 (a part of the first gear portion 1363c and the second gear portion 1363d) and the drum 1762 are not covered by the drum frame (drum bearing member 1773 and frame member 1771) but is exposed to an outside of the cartridge B. That is, it can be said that the drum frame has an opening to expose a part of the driving side flange 1763 (a part of the first gear portion 1363c, a part of the second gear portion 1363d, and so on) and a part of the drum 1762 toward the outside.

As shown in part (c) of Figure 52, when the cartridge B is mounted in the apparatus main assembly A, the arc surface of the guided portion 1773g contacts two positioning portions 1715a of a first driving side plate 1715 of the apparatus main assembly A, and the position of the rotational axis L1 of the cartridge B with respect to the apparatus main assembly A is determined in two directions perpendicular to the rotational axis (the mounting direction M and the orthogonal direction MP perpendicular to the mounting direction M) (see Figure 57). The guided portion 1773g is a projecting portion having a shape projecting outward (J direction) in the direction of the rotational axis L1, and the above-mentioned hole 1773d is provided inside the projecting portion. The apparatus main assembly A is provided with a pressing member (not shown) which presses the cartridge B so as to press the guided portion 1773g toward the two positioning portions 1715a. In addition, the meshing force FG on the tooth surface of the gears at the time of transmitting the driving force from the driving transmission gear 1781 to the driving side flange 1763 also acts to press the guided portion 1773g toward the two positioning portions 1715a. Further, the force of the transfer roller 1707 (see Figure 50) to press the drum 1762 also acts to press the guided portion 1773g toward the positioning portions 1715a in the orthogonal direction MP.

At least a part of the guided portion 1773g, at least a part of the two flat surface portions 1773f and 1773e, and at least a part of the projection 1763g are placed at the same position in the direction of the rotational axis L1. In other words, at least a part of the guided portion 1773g, at least a part of the two flat portions 1773f and 1773e, and at least a part of the projection 1763g are arranged on one surface perpendicular to the rotational axis L1. By such an arrangement relationship, it is possible to suppress such deformation that the drum bearing member 1773 is inclined with respect to the rotational axis L1, and it is possible to suppress inclination (tilt) of the driving side flange 1763 with respect to the rotational axis L1. As a result, deterioration of the meshing engagement accuracy between the driving side flange 1763 and the drive transmission gear 1781 can be suppressed. Further, by abutting the projections 1763g against the two flat surface portions 1773f and 1773e, the play of the fitting is gathered in one direction (the direction along the bisector of the angle formed between the extension line of the flat surfaces 1773e and 1773f as viewed along the rotational axis L1), by which the positional accuracy of the driving side flange 1763 in the direction perpendicular to the rotational axis L1 is improved, and the deterioration of the meshing engagement accuracy with the drive transmission gear 1781 can be suppressed.

In this embodiment, the projection 1763g is integrally formed with the driving side flange 1763, but the projection 1763g may be formed of another part of metal or the like and press-fitted into the driving side flange 1763.

Next, positioning of the driving side flange 1763 in the axial direction will be described. As shown in part (a) of Figure 51 and part (b) of Figure 51, the first gear portion 1763c of the driving side flange 1763 is provided with a projecting portion 1763c1 slightly projecting in the H direction on the end surface on the downstream side in the H direction, and is provided with a projection 1763f slightly projecting in the J direction is provided on the end surface on the downstream side (upstream side in the H direction) in the J direction. Further, the frame member 1771 includes a rib 1771p and a side wall 1771m provided so as to extend in a direction perpendicular to the rotational axis L1. The projecting portion 1763c1 is in contact with the side surface of the rib 1771p, and the projection 1763f is in contact with the side surface of the side wall 1771m. The driving side flange 1763 is slidably fitted and held between the rib 1771p and the side wall 1771m in the direction of the rotational axis L1. By this, the driving side flange 1763 is positioned on the frame member 1771 in the direction of the rotational axis L1, and as a result, the position of the drum unit 1769 in the frame member 1771 is determined.

<Mounting and dismounting of cartridge B relative to apparatus main assembly A, and positioning within apparatus main assembly A>

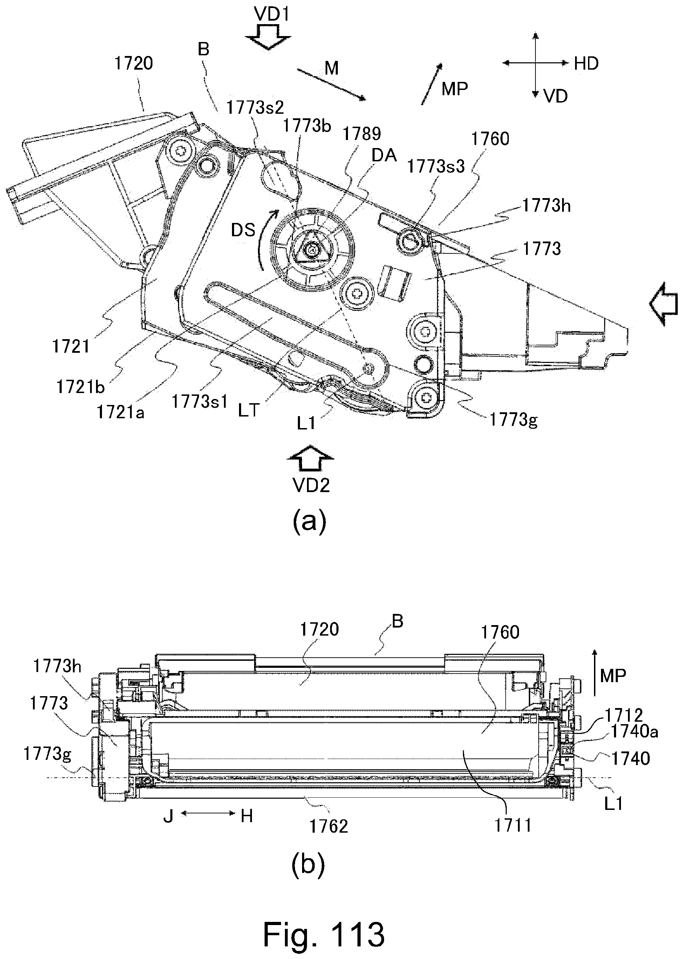

Part (a) of Figure 113 is a view of the cartridge B mounted in the apparatus main assembly A installed on the horizontal installation surface, as viewed in the direction (K direction) along the rotational axis L1, and the horizontal direction is HD and the vertical direction is VD. A plane perpendicular to the rotational axis L1 is parallel to the vertical direction VD. Part (b) of Figure 113 is a view of the cartridge B as viewed along the HD1 direction parallel to the horizontal HD shown in part (a) of Figure 113. Part (a) of Figure 114 is a view of the cartridge B as viewed along the VD1 direction parallel to the vertical VD shown in part (a) of Figure 113. Part (b) of Figure 114 is a view of the cartridge B as viewed along the VD2 direction parallel to the vertical VD shown in part (a) of Figure 113. As will be understood from Figure 50 as viewed along the direction of the rotational axis L1, a straight line connecting the rotation center of the developing roller 1732 and the rotation center of the photosensitive drum 1762 (rotational axis L1) are substantially parallel to the mounting direction M. Therefore, the mounting direction M in the following description can be read as a direction perpendicular to the rotational axis L1 and parallel to the straight line connecting the rotation center of the developing roller 1732 and the rotation center of the photosensitive drum 1762 (rotational axis L1).

Similar to Embodiment 1, the mounting direction M of the cartridge B to the apparatus main assembly A and the removing direction from the apparatus main assembly A (the direction opposite to the mounting direction M) are directions substantially perpendicular to the rotational axis L1. In addition, the mounting direction of the drum unit 69 to the apparatus main assembly A and the dismounting direction from the apparatus main assembly A are the same as the mounting direction M of the cartridge B to the apparatus main assembly A and the dismounting direction from the apparatus main assembly A, respectively.

As shown in part (a) of Figure 113, the drum bearing member 1773 is provided with a guided portion 1773s1, a guided portion 1773s2, and a guided portion 1773s3 in addition to the guided portion 1773g described above. These guided portions are projections having shapes projecting in the direction of the rotational axis L1 from the main assembly portion of the drum bearing member 1773. When the cartridge B is mounted on the apparatus main assembly A and taken out from the apparatus main assembly A, it comes into contact with and guided by a guide portion (not shown) provided on the apparatus main assembly A. As shown in other Figures, the guided portion 1773s1 may be omitted. The guided portion 1773s3 may also be omitted in consideration of necessity. However, it is made more stable to mount and dismount the cartridge B by providing the guided portion 1773s1 and the guided portion 1773s3. In addition, the guided portion 1773s1 is a projection which is long in the mounting direction M (or is long in the direction perpendicular to the rotational axis L1 and parallel to the straight line connecting the rotation center of the developing roller 1732 and the rotation center of the photosensitive drum 1762 (rotational axis L1). By making the guided portion 1773s1 a long projection in this manner, the stiffness of the drum bearing member 1773 is enhanced. Further, although the guided portion 1773s1 and the guided portion 1773g are provided as one connected projection, they may be provided as separate projections. However, the stiffness of the drum bearing member 1773 is enhanced when it is provided as one connected projection.

In addition, as described above, in the state that the cartridge B is mounted in the apparatus main assembly A, the guided portion 1773g contacts the two positioning portions 1715a of the apparatus main assembly A and the position of the rotational axis L1 of the cartridge B with respect to the apparatus main assembly A is determined in two directions perpendicular to the rotational axis L1 (mounting direction M and the orthogonal direction MP) (see part (c) of Figure 52 and Figure 57). Further, by the guided portion 1773s2 being brought into contact with the positioning portion of the apparatus main assembly A (not shown), the position (attitude) of the cartridge B with respect to the apparatus main assembly A is determined in the rotational direction about the rotational axis L1.

Furthermore, the positioning of the cartridge B with respect to the apparatus main assembly A in the direction of the rotational axis L1 is the same as that of Embodiment 1. Specifically, as shown in part (b) of Figure 113 and part (a) of Figure 114 , the drum bearing member 1773 has a recess fitted portion 1773h recessed along the mounting direction M, and into the fitted portion 1773h, the projection fitting portion projecting along the mounting direction M (not shown) of the apparatus main assembly A is fitted, so that the position of the cartridge B with respect to the apparatus main assembly A in the direction of the rotational axis L1 is determined.

Further, as shown in part (a) of Figure 113, the drum bearing member 1773 is provided with a substantially cylindrical developing unit support portion 1773b extending in the direction of the rotational axis L1. The developing unit support portion 1773b supports a cylindrical portion 1721a which is placed surrounding a development coupling member 1789 and the coupling portion 1789a of the frame 1721 of the developing unit 1720, so as to be rotatable (swingable) around the rotational axis DA. The rotational axis DA is coaxial with the rotational axis of the development coupling member 1789 and parallel to the rotational axis L1. The developing unit 1720 can rotate (swing) about the rotational axis DA in the DS direction relative to the cleaning unit 1760, by receiving a force from a force applying portion (not shown) of the apparatus main assembly A at the force receiving portion 1721b of the frame 1721 of the developing unit 1720. By this rotation, the developing roller 1732 can be spaced from the drum 1762.

Further, as shown in part (a) of Figure 113, as the cartridge B is viewed in the direction of the rotational axis L1, the guided portion 1773s2 is disposed on the straight line LT passing through the rotational axis L1 and the rotational axis DA, and in a direction parallel with the line LT, the developing unit support portion 1773b and the rotational axis DA are disposed between the rotational axis L1 and the guided portion 1773s2. Therefore, the cleaning unit 1760 can securely support the relatively heavy developing unit 1760. Thus, it can be said that the developing unit support portion 1773b and the rotation axis DA are disposed between the rotational axis L1 and the guided portion 1773s2, in any of the mounting direction M (or the longitudinal direction of the guided portion 1773s1), the orthogonal direction MP perpendicular to the mounting direction M (or the direction perpendicular to the longitudinal direction of the guided portion 1773s1), the horizontal direction HD, and the vertical direction VD.

Further, when the region are divided into two regions by a straight line LT, as the cartridge B is viewed in the direction of the rotational axis L1, the guided portion 1773s1 is disposed in one region and the guided portion 1773s3 is disposed in the other region, and therefore, the attitude of the cartridge B during mounting and dismounting of the cartridge B is stabilized.

Further, as shown in part (b) of Figure 113, part (a) of Figure 114 and part (b) of Figure 114 , the drum frame of the cleaning unit 1760 includes the above-mentioned drum bearing member (first bearing member) 1773 and the frame member 1711, and in addition, it includes a non-driving side drum bearing member (second bearing member) 1712 mounted to the frame member 1711. In the drum unit 1769, the driving side flange 1763 (first flange member) is rotatably supported by the drum bearing member 1773 as described above. On the other hand, the non-driving side flange (second flange member) 1764 of the drum unit 1769 is rotatably supported by the non-driving side drum bearing member 1712. The non-driving side flange 1764 is a member fixed to the downstream end portion of the drum 1762 in the H direction. That is, the drum bearing member (first bearing member) 1773 is placed at the first end of the frame in the direction of the rotational axis L1 of the drum frame, and the non-driving side drum bearing member (secondly bearing member) 1712 is placed at the second end opposite to the first end. Of the two ends of the drum 62 in the direction of the rotational axis L1, the first end of the photosensitive member is an end located closer to the first end of the frame than the second end of the frame, and the second end of the photosensitive member on the opposite side of the first end is an end located at a position closer to the second end of the frame than the first end of the frame. As will be understood from part (a) of Figures 114 and 114 (b)a non-driving side drum bearing member 1712 includes a projecting shape portion 1712a having a shape projecting downstream in the mounting direction M. Here, as will be understood from Figure 50, as viewed along the direction of the rotational axis L1, a straight line connecting the rotation center of the developing roller 1732 and the rotation center of the photosensitive drum 1762 (rotational axis L1) is parallel with the mounting direction M. Therefore, the projecting shape portion 1712a has a shape projected toward the downstream of the drum bearing member 1773 or the drum 1762, with respect to a direction which is perpendicular to the rotational axis L1 and which is directed from the rotation center of the developing roller 1732 toward the rotation center of the photosensitive drum 1762 (direction substantially parallel to the mounting direction M). A memory board 1740 on which a non-volatile memory chip is mounted is mounted to the projecting shape portion 1712a. The memory board 1740 is provided with an electrode portion (electrode surface) 1740a which is a surface that is electrically connected with the non-volatile memory chip and is electrically connectable by contacting an electrode portion on the main assembly side (not shown) of the apparatus main assembly A. With respect to the direction of the rotational axis L1, the electrode portion 1740a is provided at a position close to the end portion (the end portion of the second frame) on the side (non-driving side) opposite to the end portion (first frame end portion) on the side (driving side) where the drum bearing member 1773 and the driving side flange 1763 are provided,. Specifically, with respect to the direction of the rotational axis L1, the region where the electrode portion 1740a is provided is a region including a position of the end portion (second end portion of the photosensitive member) on the downstream side in the H direction of the drum 1762. However, with respect to the direction of the rotational axis L1, the region where the electrode portion 1740a is provided may be located close to the outside the drum frame (or outside of the cartridge B) than the position of the end portion (second end portion of the photosensitive member), on the downstream side in the H direction, of the drum 1762. Further, with respect to the direction of the rotational axis L1, of the region where the electrode portion 1740a is provided and the region where the non-driving side flange 1764 is provided are at least partly at the same position (at least partly overlap). However, with respect to the direction of the rotational axis L1, the region where the electrode portion 1740a is provided is closer to the outside of the drum frame (or the outside of the cartridge B) than the region where the non-driving side flange 1764 is disposed (downstream side position in the H direction). In addition, the electrode portion 1740a is disposed on the downstream side of the rotational axis L1 and the photosensitive drum 1762 with respect to the mounting direction M. Further, the electrode portion 1740 is disposed on the downstream side of the rotational axis L1 or the photosensitive drum 1762 with respect to the direction which is perpendicular to the rotational axis L1 and which is directed from the rotation center of the developing roller 1732 toward the rotation center of the photosensitive drum 1762 (direction substantially parallel to the mounting direction M). Furthermore, the memory board 1740 is supported by the cleaning unit 1760 in an attitude in which the electrode portion (electrode surface) 1740a is oriented perpendicular to the mounting direction M.

<Driving side flange 1763>

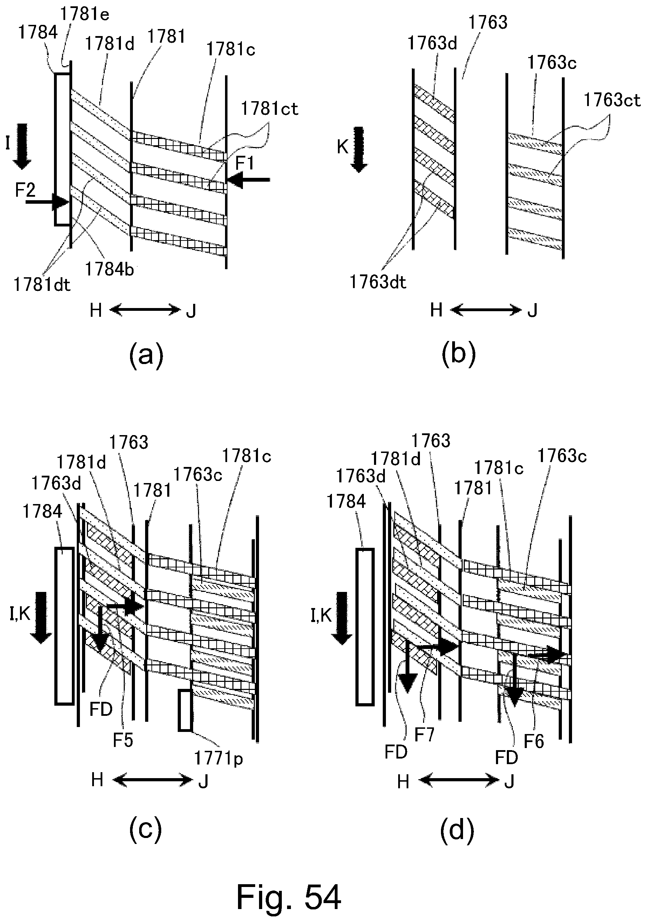

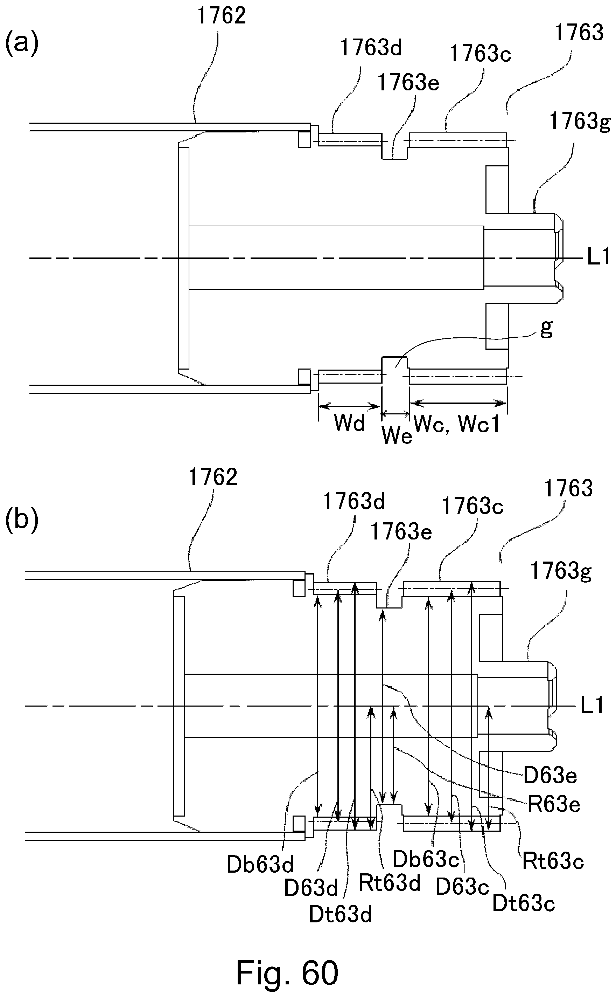

Next, referring to part (b) of Figure 54 and Figure 60, the driving side flange 1763 will be described. Part (b) of Figure 54 is a schematic cross-sectional view of the gear portion of the driving side flange 1763. The cross-section is a plane in contact with a meshing pitch circle at the time of meshing with the drive transmission gear 1781. Part (a) of Figure 60 and part (b) of Figure 60 are sectional views of the drum unit 1769 in the neighborhood of the driving side flange 1763, taken along a plane including the rotational axis L1.

The driving side flange 1763 includes a first gear portion (first unit side gear portion, first unit side helical tooth gear portion) 1763c and a second gear portion (second unit side gear portion, second unit side helical tooth gear portion) 1763d as helical tooth gear portions, and they are coaxial with each other. The first gear portion 1763c is disposed on the upstream side in the H direction (downstream side in the J direction) with respect to the second gear portion 1763d. That is, the second gear portion 1763d is disposed between the first gear portion 1763c and the drum 1762 in the direction of the rotational axis L1. The first gear portion 1763c includes a plurality of first helical teeth (teeth, first projections) 1763ct arranged at different positions in the circumferential direction about the rotational axis L1, and the second gear portion 1763d includes a plurality of second helical teeth (teeth, second projections) 1763dt arranged at different positions in the circumferential direction about the rotational axis L1. The first helical tooth 1763ct and the second helical tooth 1763dt both have involute tooth profiles, and are projections projecting in the radial direction with respect to the rotational axis L1. The first gear portion 1763c and the second gear portion 1763d are integrally resin-molded and integrally rotatable, and therefore, it can be said that the first gear portion 1763c and the second gear portion 1763d are integrally rotatable first and second rotatable portions. The first gear portion 1763c meshes with the first main assembly gear portion 1781c of the drive transmission gear 1781, and the second gear portion 1763d meshes with the second main assembly gear portion 1781d of the drive transmission gear 1781.

The twisting directions of the first gear portion 1763c and the second gear portion 1763d of the driving side flange 1763 is the same, and the tooth surface is twisted so as to go in the K direction as goes in the J direction. The twisting direction of the first gear portion 1763c and the second gear portion 1763d is opposite to the twisting direction of the first main assembly gear portion 1781c and the second main assembly gear portion 1781d of the drive transmission gear 1781. In addition, as in Embodiment 1, the helix angle of the second gear portion 1763d is larger than the helix angle of the first gear portion 1763c. The helix angle of the first gear portion 1763c is the same as the helix angle of the first main assembly gear portion 1781c which will be described hereinafter, and the helix angle of the second gear portion 1763d is the same as the helix angle of the second main assembly gear portion 1781d which will be described hereinafter. Further, the numbers of teeth of the first gear portion 1763c and the second gear portion 1763d of the driving side flange 1763 are the same.

Further, as shown in part (a) of Figure 60, the width (tooth width) Wc of the first helical tooth (tooth, first projection) 1763ct measured in the direction of the rotational axis L1 is larger than the width (tooth width) Wd of the second helical tooth (tooth, second projection) 1763dt measured in the direction of the rotational axis L1. That is, each of the first gear portion 1763c and the second gear portion 1763d has at least one tooth satisfying the following formula A1, wherein Wc is tooth width of the first helical tooth 1763ct (tooth, first projection) in the direction of the rotational axis L1, and Wd is tooth width of the second helical tooth 1763dt in the direction of the rotational axis L1: Wc> Wd. . (Formula A1).While the driving side flange 1763 is being driven by the drive transmission gear 1781 in a balanced state, the driving force FD received by the first gear portion 1763c is larger than the restricting force FB received by the second gear portion 1763d, and therefore, it is preferable to satisfy such a relationship..

Further, the width (engagement width), in the rotational axis L1, of the portion where the first gear portion 1763c meshes (contacts) with the first main assembly gear portion 1781c and the engagement width of the second helical tooth gear portion 1763c with the second main assembly gear portion 1781d are preferably larger since then the drive transmission accuracy is better. However, if the meshing width is set to be larger than necessary, the widths of the first gear portion 1763c and the second gear portion 1763d in the direction of the rotational axis L1 is large, and the driving side flange 1763, the drum unit 1769, the cartridge B, and eventually the apparatus main assembly A will be upsized. Therefore, the tooth width Wc1 of the first helical tooth (teeth) 1763ct having the widest tooth width in the first gear portion 1763c and the tooth width Wd1 of the second helical tooth (teeth) 1763dt having the widest tooth width in the second gear portion 1763d preferably satisfy preferably satisfies the following Formula A2, further preferably formula A3.

$$Wd1 \leqq (4/5) \cdot Wc1 \ ...... \ (Formula\ A2)$$

$$Wd1 \leqq (3/4) \cdot Wc1 \ ...... \ (Formula\ A3).$$

Further, from the standpoint of the strength of the second helical tooth (teeth) 1763dt of the second gear portion 1763d, it is preferable that the second helical tooth (teeth) 1763dt has a tooth width of a certain level or more, and the tooth width Wc1 and the tooth width Wd1 satisfy the following formula A4.

$$Wd1 \geqq (1/10) \cdot Wc1 \ ...... \ (Formula\ A4).$$

Further, the width (length) We of the cylindrical portion 1763e (or the gap g) in the direction of the rotational axis L1 is selected so as to satisfy the formulas B1, B2 and B3 with reference to the widths Wc and Wd, as in Embodiment 1:.

When the tooth width Wc of the first gear portion 1763c is not constant, it is assumed that the tooth width Wc1 of the tooth having the widest tooth width is taken as the tooth width.

$$We \geqq Wc/5 \ldots \text{(Formula B1)}$$

$$We \leqq Wc \ldots \text{(Formula B2)}$$

$$We \leqq Wd \ldots \text{(Formula B3)}.$$

In this embodiment, the tooth width of each tooth of the first gear portion 1763c is the same, the tooth width of each tooth of the second gear portion 1763d is also the same, the tooth width Wc is 8.2 mm, and the tooth width Wd is 5.2 mm. The width We is 3.1 mm.

In addition, as shown in part (b) of Figure 60, the meshing pitch circle diameters D63c and D63d of the first gear portion 1763c and the second gear portion 1763d in the meshing between the driving side flange 1763 and the drive transmission gear 1781 are substantially the same. Similarly, the meshing pitch circle diameters of the first main assembly gear portion 1781c and the second main assembly gear portion 1781d are substantially the same. By this, the meshing between the first gear portion 1763c and the first main assembly gear portion 1781c and the meshing between the second gear portion 1763d and the second main assembly gear portion 1781d can be appropriate without tooth tip hitting.

Further, as in Embodiment 1, the addendum circle diameter Dt63c of the first gear portion 1763c and the dedendum circle diameter Db63d of the second gear portion 1763d are substantially the same such that the meshing with the first main assembly gear portion 1781c and the second main assembly gear portion 1781d establishes an proper meshing engagement without tooth top hitting.

Specifically, it is preferable that the size of the addendum circle diameter Dt63c of the first gear portion 1763c is larger than that of the dedendum circle diameter Db63d of the second gear portion 1763d, or larger than 0. 8 times (further preferably 0.9 times) than the addendum circle diameter Dt63d of the second gear portion 1763d. In addition, the size of the addendum circle diameter Dt63c of the first gear portion 1763c is preferably smaller than 1. 1 times the addendum circle diameter Dt63d of the second gear portion 1763d.

Further, it is preferable that the size of the dedendum circle diameter Db63c of the first gear portion 1763c is smaller than that of the addendum circle diameter Dt63d of the second gear portion 1763d. Further, the size of the dedendum circle diameter Db63c of the first gear portion 1763c is preferably larger than that of 0. 9 times the dedendum circle diameter Db63d of the second gear portion 1763d.

Furthermore,, the size of the addendum circle diameter Dt63d of the second gear portion 1763d is larger than that of the dedendum circle diameter Db63c of the first gear portion 1763c, or larger than 0. 8 times (further preferably 0.9 times) of the addendum circle diameter Dt63c of the first gear portion 1763c. Further, the size of the addendum circle diameter Dt63d of the second gear portion 1763d is preferably smaller than 1. 1 times the addendum circle diameter Dt63c of the first gear portion 1763c.

Further, it is preferable that the size of the dedendum circle diameter Db63d of the second gear portion 1763d is smaller than that of the addendum circle diameter Dt63c of the first gear portion 1763c. Further, the size of the dedendum circle diameter Db63d of the second gear portion 1763d is preferably larger than 0. 9 times the dedendum circle diameter Db63c of the first gear portion 1763c.

In this embodiment, the addendum circle diameter Dt63c, the pitch circle diameter D63c, and the dedendum circle diameter Db63c of the first gear portion 1763c are 22.3 mm, 21.1 mm, and 19.6 mm, respectively. The addendum circle diameter Dt63d, pitch circle diameter D63d, and dedendum circle diameter Db63d of the second gear portion 1763d are 22.1 mm, 21.1 mm, and 19.8 mm, respectively. The diameter of the cylindrical portion 1763e is 17.5 mm.

Further, the modules and/or amounts of addendum modification are made different between the first gear portion 1763c and the second gear portion 1763d such that the meshing pitch circle diameters D63c and D63d are the same while making the helix angles of the first gear portion 1763c and the second gear portion 1763d different from each other. Similarly, ass for the drive transmission gear 1781, the modules and/or amounts of addendum modification are made different between the first main assembly gear portion 1781c and the second main assembly gear portion 1781d.

In addition, the driving side flange 1763 is provided with a cylindrical portion (intermediate portion, small diameter portion, shaft portion) 1763e between the first gear portion 1763c and the second gear portion 63d in the direction of the rotational axis L1. The maximum diameter D63e centered on the rotational axis L1 of the cylindrical portion 1763e is smaller than the addendum circle diameter Dt63c of the first gear portion 1763c and the addendum circle diameter Dt63d of the second gear portion 1763d. Further, in this embodiment, the maximum diameter D63e centered on the rotational axis L1 of the cylindrical portion 1763e is smaller than the dedendum circle diameter Db63c of the first gear portion 1763c and the dedendum circle diameter Db63d of the second gear portion 1763d. However, the maximum diameter D63e centered on the rotational axis L1 of the cylindrical portion 1763e is not limited to such a condition if there is no contact with the drive transmission gear 1781 while the driving side flange 1763 is being driven by the drive transmission gear 1781. As will be described hereinafter in Embodiments 22 and 23, the structure may be such that a distance (radius) R63e from the rotational axis L1 to the outer diameter of the cylindrical portion 1763e is at least temporarily smaller than the addendum circle radius Rt63ct of the first gear portion 1763c or the addendum circle radius Rt63d of the second gear portion 1763d so that the driving side flange 1763 and the drive transmission gear 1781 are engaged with each other to transmit the drive force.

It is self-evident that the portions showing the relationship between these dimensions using various diameters of the first gear portion 1763c, the second gear portion 1763d, and the cylindrical portion 1763e apply also when the diameter is replaced with a radius.

<Drive transmission gear 1781>

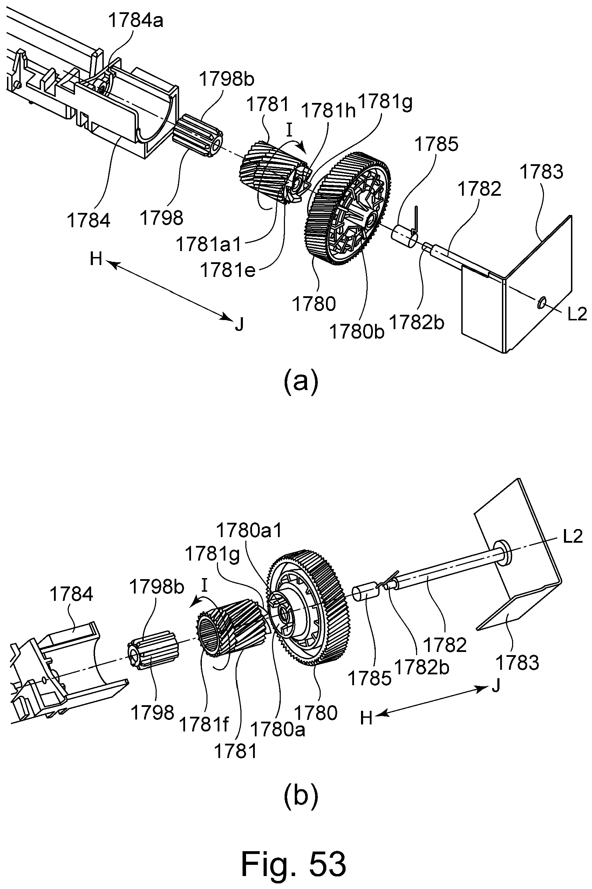

Next, referring to Figure 53 and part (a) of Figure 54 , the drive transmission gear 1781 of the apparatus main assembly A which meshes with the driving side flange 1763 will be described. Part (a) of Figure 53 and part (b) of Figure 53 are exploded perspective views of the peripheral portion of the drive transmission gear 1781 of the apparatus main assembly A, in which part (a) is a view as seen from the second driving side plate 1783 side, and part (b) is a view as seen from the main frame 1784 side. Part (a) of Figure 54 is a schematic sectional view of the gear portion of the drive transmission gear 1781. The sectional plane is in contact with the meshing pitch circle at the time of meshing with the driving side flange 1763.

The drive transmission gear 1781 coaxially includes a first main assembly gear portion (first main assembly helical tooth gear portion) 1781c and a second main assembly gear portion (second main assembly helical tooth gear portion) 1781d as helical tooth gear portions. The first main assembly gear portion 1781c is arranged on the upstream side in the H direction (downstream side in the J direction) with respect to the second main assembly gear portion 1781d. The first main assembly gear portion 1781c includes a plurality of first main assembly helical teeth 1781ct, and the second main assembly gear portion 1781d includes a plurality of second main assembly helical teeth 1781dt. The first main assembly helical tooth 1781ct and the second main assembly helical tooth 1781dt have both involute tooth profiles. The first main assembly gear portion 1781c and the second main assembly gear portion 1781d are integrally resin-molded and integrally rotatable. In addition, the twisting directions of the first main assembly gear portion 81c and the second main assembly gear portion 81d are the same, and the tooth surface is twisted so as to be displaced in the I direction as goes in the J direction. Further, similarly to Embodiment 1, the helix angle of the second main assembly gear portion 1781d is larger than the helix angle of the first main assembly gear portion 1781c. Furthermore, the number of teeth of the first main assembly gear portion 81c and the second main assembly gear portion 81d are the same. In the state that the cartridge B is mounted on the apparatus main assembly A, the first gear portion 1763c meshes with the first main assembly gear portion 1781c, and the second gear portion 1763d meshes with the second main assembly gear portion 1781d.

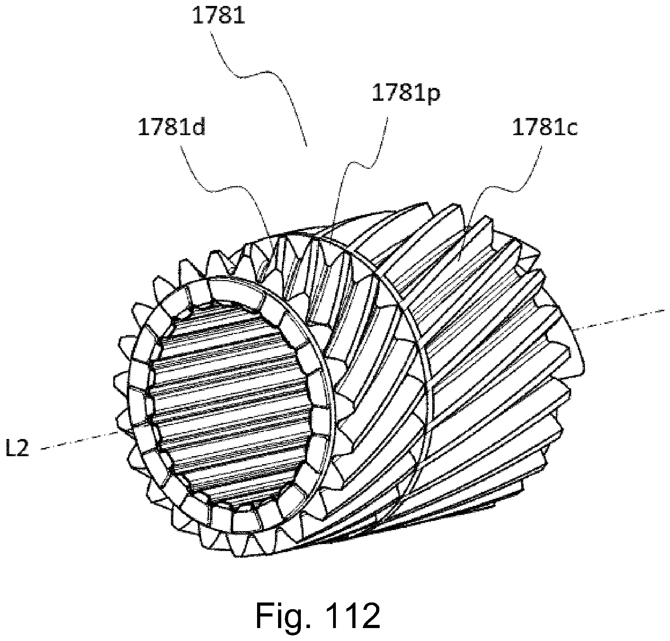

Figure 112 is a perspective view of another structure example of the drive transmission gear 1781. As shown in Figure 112, a rib-shaped portion (projecting portion, radial projection main portion) 1781p projecting in the radial direction with respect to the rotational axis L2 may be provided between the first main assembly gear portion 1781c and the second main assembly gear portion 1781d in the direction of the rotational axis L2. Depending on the manufacturing method of the drive transmission gear 1781, it may be possible to improve the molding accuracy, suppress the deterioration, or reduce the manufacturing cost, by providing the rib-shaped portion 1781p. The diameter of the rib-shaped portion 1781p is about the same as the diameter of the addendum circle of the first main assembly gear portion 1781c and the diameter of the addendum circle of the second main assembly gear portion 1781d. The rib-shaped portion 1781p may be provided over the entire circumference or may be provided only partially in the circumferential direction centered on the rotational axis L2. Here, by providing the driving side flange 1763 with the cylindrical portion 1763e, a gap g is formed between the first gear portion 1763c and the second gear portion 1763d in the direction of the rotational axis L1 (see Figure 60 and so on). Because of the provision of this gap g, even when the drive transmission gear 1781 has the rib-shaped portion 1781p, the rib-shaped portion 1781p and the driving side flange 1763 are prevented from coming into contact with each other, and the drive transmission gear 1781 and the gear portions of the driving side flange 1763 can be properly meshed with each other. At this time, the rib-shaped portion 1781p is inserted (entered) into the gap g between the first gear portion 1763c and the second gear portion 1763d.

As shown in part (a) of Figure 53 and part (b) of Figure 53 , the apparatus main assembly A comprises a motor (not shown), an idler gear 1780, a drive transmission gear 1781, a second driving side plate 1783, a main frame 1784, a driving shaft 1782, a reinforcing member 1798 and a compression spring 1785. The second driving side plate 1783 is a member corresponding to the second driving side plate 83 of Embodiment 1. The driving force from the motor is transmitted to the drive transmission gear 1781 by way of the idler gear 1780. The idler gear 1780, the drive transmission gear 1781, and the reinforcing member 1798 are supported by the driving shaft 1782 which is a fixed shaft, so as to be rotatable coaxially with the rotational axis L2 as the rotational axis and movable in the direction of the rotational axis L2. One end of the driving shaft 1782 is fixed to the second driving side plate 1783, and the other end 1782b is fitted in and supported by a hole 1784a of the main frame 1784. The driving shaft 1782 is provided so that the rotational axis L2 of the drive transmission gear 1781 is parallel to the rotational axis L1 of the drum 62 in a state where the cartridge B is mounted on the apparatus main assembly A.

A compression spring 1785 is provided between the other end 1780b of the idler gear 1780 and the second driving side plate 1783, and the idler gear 1780 is urged (H direction) toward the main frame 1784 with respect to the direction of the rotational axis L2. A recess portion 1780a recessed in the direction of the rotational axis L2 is provided at the end of the idler gear 1780 opposing the drive transmission gear 1781, and a projection (driving force transmission portion) 1780a1 is provided inside the recess portion 1780a.

At the end of the drive transmission gear 1781 opposing the idler gear 1780, a projection 1781a1 projecting in the direction of the rotational axis L2 is provided at a position opposing the recess 1780a1 of the idler gear 1780. The projection 1781a1 has a surface 1781e at the upstream end and a slope 1781h at the downstream end, in the rotational direction I. The surface 1781e is perpendicular to the plane perpendicular to the rotational axis L2, and the slope 1781h is inclined with respect to the plane perpendicular to the rotational axis L2. By engaging the projection 1780a1 of the idler gear 1780 and the surface 1781e of the projection 1781a1 with each other, the driving force is transmitted from the idler gear 1780 to the drive transmission gear 1781, so that they rotate integrally in the rotational direction I.

On the other hand, when the drive transmission gear 1781 rotates relative to the idler gear 1780 in the rotational direction I, the slope 1781h of the projection 1781a1 of the drive transmission gear 1781 is brought into contact with the projection 1780a1 of the idler gear 1780. By this, a force acts tending to separate the idler gear 1780 from the drive transmission gear 1781 in the rotational axis L2 direction, and the idler gear 1780 moves in the J direction against the spring force of the compression spring 1785, and the projection 1780a1 rides over the projection 1781a1, and therefore, the structure is such that the driving force in the rotational direction I is not transmitted from the drive transmission gear 1781 to the idler gear 1780. In the process of mounting the cartridge B inn the apparatus main assembly A, the drive transmission gear 1781 may be rotated in the rotational direction I by engagement with the driving side flange 1763, but on such occasion, the driving force in the rotational direction I is not transmitted to the idler gear 1780 from the drive transmission gear 1781 due to the above-described structure. Therefore, when the user mounts the cartridge B, it is not necessary to rotate the motor for driving the idler gear 1780 or the photosensitive drum 1762, so that the load required when mounting the cartridge B in the apparatus main assembly A can be reduced.

Further, the drive transmission gear 1781 is provided with a hole 1781f, and an engaging portion 1781g having a shape of a plurality of recesses and projections is provided on the inner peripheral portion thereof. The reinforcing member 1798 is provided with an engaging portion 1798b having a shape of a plurality of recesses and projections on an outer peripheral portion thereof, and is inserted into the hole 1781f. The engaging portion 1781g of the drive transmission gear 1781 and the engaging portion 1798b of the reinforcing member 1798 are in meshing engagement with each other. The reinforcing member 1798 contacts the driving shaft 1782 and is directly supported by the driving shaft 1782, and the drive transmission gear 1781 is indirectly supported by the driving shaft 1782 by way of the reinforcing member 1798. However, the drive transmission gear 1781 may be structured to be directly supported by the driving shaft 1782.

However, in the case of manufacturing the drive transmission gear 1781 having a relatively large diameter by resin molding as in this embodiment, it is preferable that the drive transmission gear 1781 is supported by the driving shaft 1782 by way of the reinforcing member 1798, because it is advantageous from the standpoint of both molding accuracy and strength. This is because when a gear having a relatively large radial wall thickness (radial distance from the inner peripheral surface of the hole through which the shaft passes to the dedendum circle of the gear) is produced in one resin molded member, it is necessary to provide a lightening shape in order to avoid deterioration of gear molding accuracy due to the resin sink marks and so on. When the lightening shape is provided, the strength of the gear may decrease. Therefore, in this embodiment, without the drive transmission gear 1781 being directly supported by the driving shaft 1782, a separate resin-molded reinforcing member 1798 is provided to provide a resin-molded drive transmission gear 1781, by which while suppressing the deterioration of the molding accuracy of the above, it is possible to suppress the decrease in strength.

<Drive transmission operation>

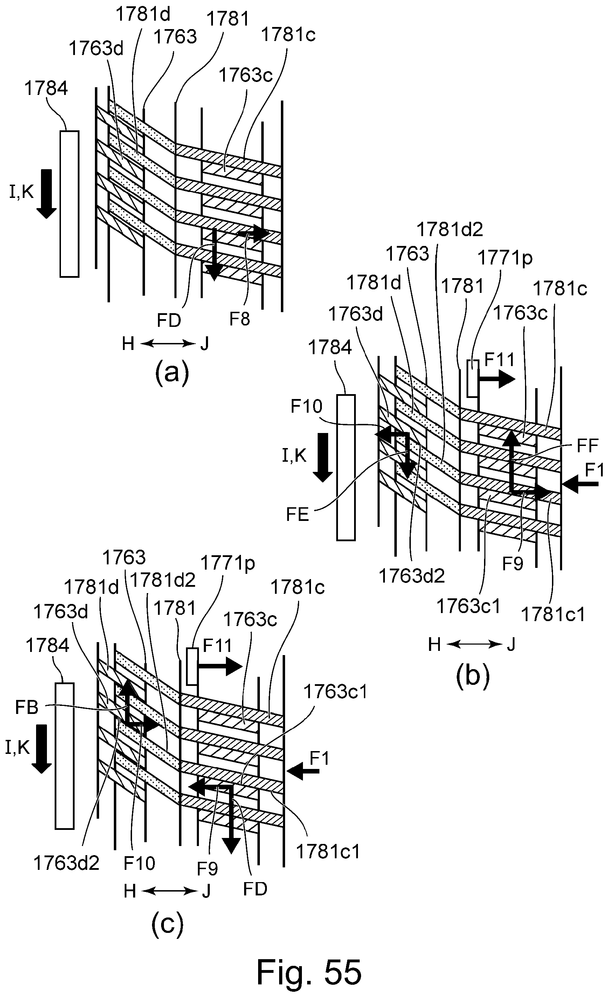

Next, referring to Figures 54 and 55, the meshing operation between the drive transmission gear 1781 and the driving side flange 1763 will be described. Part (c) of Figure 54 , part (d) of Figure 54, part (a) of Figure 55, part (b) of Figure 55 and part (c) of Figure 55 are schematic sectional views in the meshing engagement portion between the gear portion of the drive transmission gear 1781 and the gear portion of the driving side drum flange 1763. The sectional plane is in contact with the meshing pitch circle between the drive transmission gear 1781 and the driving side flange 1763. Part (c) of Figure 54 , part (d) of Figure 54 , part (a) of Figure 55 , part (b) of Figure 55 , and part (c) of Figure 55 all show states after the drive transmission gear 1781 is started, with elapse of time.

First, in a state where the cartridge B is not mounted to the main assembly A, the drive transmission gear 1781 is urged in the H direction by the compression spring 1785 and abuts against the main frame 1784 as shown in part (a) of Figure 54.

<Operation after starting drive>

After the cartridge B is mounted in the main assembly A, the drive transmission gear 1781 is driven by a motor (not shown) of the apparatus main assembly A by way of the idler gear 1780 (see Figure 53) to rotate in the I direction. The driving side flange 1763 receives a driving force from the drive transmission gear 1781 that rotates in the I direction and rotates in the K direction.

The case will be described in which the force FD is first transmitted through the meshing engagement between the second main assembly gear portion 1781d of the drive transmission gear 1781 and the second gear portion 1763d of the driving side flange 1763, immediately after the start of rotation of the drive transmission gear 1781 in the I direction, as shown in part (c) of Figure 54. The second main assembly gear portion 1781d produces a thrust force which pushes the second gear portion 1763d in the H direction. However, the driving side flange 1763 is constrained from moving in the H direction by the rib 1771p (see part (a) of Figure 51), and receives a reaction force in the J direction corresponding to the thrust force in the H direction. Therefore, the second main assembly gear portion 1781d receives a thrust force F5 in the J direction due to the action of the reaction force received from the second gear portion 1763d. This thrust force F5 moves the drive transmission gear 1781 in the J direction.

When the drive transmission gear 1781 moves in the J direction while with further rotation continued, as shown in part (d) of Figure 54, the first gear portion 1763c is also brought into meshing engagement with the first main assembly gear portion 1781c to transmit the drive force FD, and at the same time, a thrust force F6 is generated in the first main assembly gear portion 1781c. The thrust force F6 is the same thrust force in the J direction as the thrust force F5 previously received by the second main assembly gear portion 1781d by meshing with the second gear portion 1763d. By this, the drive transmission gear 1781 further moves in the J direction.

When the drive transmission gear 1781 further rotates and moves in the J direction, the second main assembly gear portion 1781d becomes out of meshing engagement with the second gear portion 1763d, as shown in part (a) of Figure 55. On the other hand, the meshing engagement between the first gear portion 1781c and the first gear portion 1763c is maintained, and the first gear portion 1781c receives the thrust force F8 in the J direction. At this time, the drive transmission gear 81 transmits the drive force FD only by the engagement between the first main assembly gear portion 1781c and the first gear portion 1763c, to rotate the driving side flange 1763.

When the drive transmission gear 1781 further rotates and moves in the J direction, the second main assembly gear portion 1781d finally brought into contact with the downstream side (in I direction) of the tooth surface (contact portion) 1763d2 of the second gear portion 1763d as shown in part (b) of Figure 55 and part (c) of Figure 55. The surface 1781c1 of the first main assembly gear portion 1781c and the surface 1763c1 of the first gear portion 1763c maintain in contact with each other. That is, the teeth of the first gear portion 1763c contacts the first main assembly gear portion 1781c disposed on the upstream side in the I direction, and the teeth of the second gear portion 1763d contacts the second main assembly gear portion 1781d disposed on the downstream side in the I direction. In addition, the first gear portion 1763c and the second gear portion 1763d are integrally molded with resin, and therefore, the teeth of the first gear portion 1763c are fixed so as not to move (rotate) in the I direction relative to the teeth of the second gear portion 1763d, and the teeth of the second gear portion 1763d are fixed so as not to move (rotate) in the I direction relative to the teeth of the first gear portion 1763c. Therefore, in this state, the first main assembly gear portion 1781c of the drive transmission gear 1781 presses the tooth surface (contact portion) 1763c1 on the tooth surface 1781c1 to rotate the driving side flange 1763, and the tooth surface 1781d2 of the second main assembly gear portion 1781d of the drive transmission gear 1781 contacts with the tooth surface 1763d2, it is sandwiched by the driving side flange 1763. Then, the movement of the drive transmission gear 1781 in the direction of the rotational axis L1 stops. The position of the drive transmission gear 1781 at this time in the direction of the rotational axis L1 is a balanced position.

In the balanced state, as shown in part (b) of Figure 55, a force F9, a force F10, and a force F1 are applied to the drive transmission gear 1781 with respect to the direction of the rotational axis L1. The force F9 is a thrust force in the J direction received by the first main assembly gear portion 1781c by the meshing engagement force with the first gear portion 1763c, the force F10 is a thrust force in the H direction received by the second main assembly gear portion 1781d by the meshing engagement force with the second gear portion 6173d, and the force F1 is an urging forces of the compression spring 1785 received by way of the idler gear 1780. In addition, the driving side flange 1763 receives a force from the drive transmission gear 1781, to abut to the rib 1771p or the side wall 1771m, so that it, is positioned with respect to the direction of the rotational axis L1, and a reaction force F11 is produced, in the direction of the rotational axis L1, which balances with the thrust force received from the drive transmission gear 1781. Part (b) of Figure 55 shows a case where the driving side flange 1763 is positioned in contact with the rib 1771p. In the balanced state, with respect to the direction of the rotational axis L1, if frictions are ignored, the force F9, the force F10, the force F1, and the force F11 are balanced, so that the drive transmission gear 1781 and the driving side flange 1763 are in a state of being positioned in the direction of the rotational axis L1.

Further, as shown in part (c) of Figure 55, in the balanced state, the driving side flange 1763 is sandwiched (contacted) between the first main assembly gear portion 1781c and the second main assembly gear portion 1781d of the drive transmission gear 1781 in the K direction (rotational direction), so that it is in a state of receiving the following forces. That is, the tooth surface (contact portion) 1763c1 of the first gear portion 1763c contacts the first main assembly gear portion 1781c disposed on the upstream side in the K direction (first circumferential direction), by which it receives the driving force FD as the force having a component in the direction of rotating the driving side flange 1763 in the K direction (predetermined direction). At the same time, the tooth surface (contact portion) 1763d2 of the second gear portion 1763d contacts the second main assembly gear portion 1781d disposed on the downstream side in the K direction (first circumferential direction), by which it receives the restricting force (braking force) FB as the force having a component in the direction which suppresses (restricts) the rotation of the driving side flange 1763 in the K direction. Therefore, it can be said that the first gear portion 1763c is a driving force receiving portion which receives the driving force FD, and the second gear portion 1763d is a restricting force receiving portion which receives the restricting force FB. Part (b) of Figure 55 shows the reaction force FF of the driving force FD received by the first main assembly gear portion 1781c and the reaction force FE of the restricting force FB received by the second main assembly gear portion 1781d.

Further, when the first main assembly gear portion 1781c of the drive transmission gear 1781 first meshes with the first gear portion 1763c of the driving side flange 1763 and transmits the driving force FD immediately after the start of rotation of the drive transmission gear 1781 in the I direction, the state shown in part (d) of Figure 54 or part (a) of Figure 55 results. Thereafter, the drive transmission gear 1781 moves in the J direction toward the driving side while transmitting the drive force FD to the first gear portion 1763c in the same manner as described above, and the state changes to the balanced state shown in part (b) of Figure 55 and part (c) of Figure 55.

As described above, also in this embodiment, the state in which the first gear portion 1763c receives the driving force FD and the second gear portion 1763d receives the restricting force FB is a backlashless state of no backlash (backlash) in the direction (I direction) between the driving side flange 1763 and the drive transmission gear 1781. In this manner, the driving side flange 1763 is rotationally driven in the K direction while maintaining the backlashless state. While the drive is transmitted by engaging with each other in the backlashless state, the drive transmission with high rotation accuracy is possible.

Further, with respect to the direction of the rotational axis L1, the first gear portion 1763c is arranged at a position closer to the projection 1763g which is a supported portion supported by the surface 1773e and the surface 1773f than the second gear portion 1763d. In the driving side flange 1763, a larger force applied to the tooth surface of the first gear portion 1763c which receives the driving force FD than that of the second gear portion 1763d which receives the restricting force FB. Therefore, the driving force FD acts to cause the rotational axis L1 of the drum unit 1769 to tilt, and the drum 1762 may be tilted with respect to the ideal rotational axis L1. However, as in this embodiment, by arranging the first gear portion 1763c which receives the driving force FD at a position closer to the projection 1763g which is the supported portion than the second gear portion 1763d, it is possible to suppress the tilting of the rotational axis L1 of the drum unit 1769 attributable to the driving force FD is received.

<Drive transmission structure developing roller 1732>

Further, the driving force transmission structure to the developing roller 1732 in this embodiment is similar to that described in other Modified Examples of Embodiment 1 to transmit the driving force referring to Figure 44, which engages with the coupling member of the apparatus main assembly A so that the driving force is transmitted to the developing roller 532 by way of the input development coupling member 89.

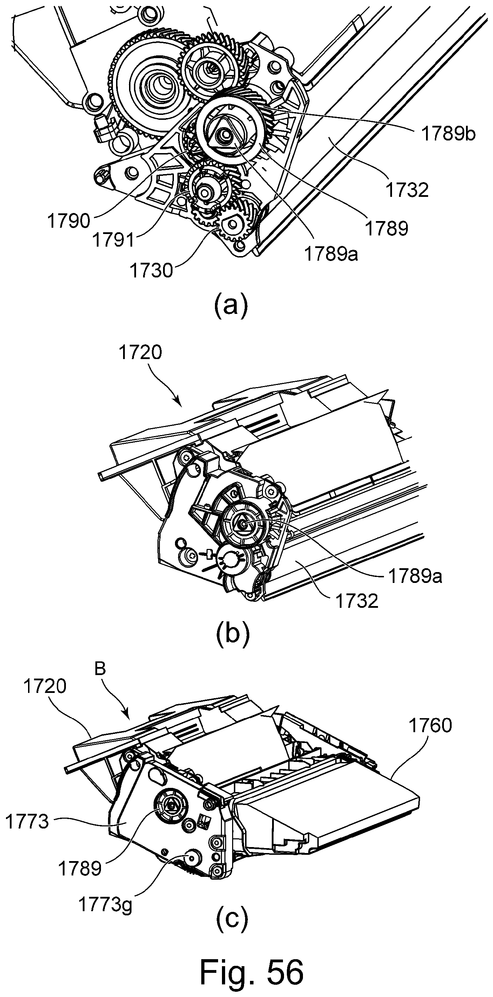

Referring to Figures 56 and 57 the specific structure will be described. Part (a) of Figure 56 is a perspective view of a drive train which drives the developing roller 1732 of the developing unit 1720. Part (b) of Figure 56 is a partial perspective view of the developing unit 1720 in the neighborhood of the coupling member 1789. Part (c) of Figure 56 is a perspective view of the cartridge B. Figure 57 is a partial perspective view of the apparatus main assembly A in the neighborhood of the main assembly side coupling member 1799.

The developing unit 1720 includes a development coupling member 1789 having a coupling portion 1789a and a gear portion 1789b, an idler gear 1790 which meshes with the gear portion 1789b, an idler gear 1791 which meshes with the idler gear 1790, and the developing roller gear 1730 which is fixed to one end of the shaft portion of the developing roller 1732 and meshes with the idler gear 1791, wherein they constitute a developing drive train for driving the developing roller 1732.

In the apparatus main assembly A, a main assembly side coupling member 1799 driven by a motor (not shown) is supported by a first driving side plate 1715. The main assembly side coupling member 1799 is provided so as to be movable in the direction of the rotational axis. The driving force is transmitted from the main assembly side coupling member 1799 to the development coupling member 1789 by integrally rotating the coupling portion 1789a of the main assembly side coupling member 1799 and the development coupling member 1789 in an engaged state. Then, the driving force is transmitted from the development coupling member 1789 to the developing roller 1732 in the order of the idler gears 1790, 1791, and the developing roller gear 1730.

Further, the developing unit 1720 is provided with a toner moving member (stirring member) (not shown) which stirs or conveys the toner in the toner accommodating container, and the driving force received by the development coupling member 1789 is transmitted, by way of another gear, to the toner moving member to drive the toner moving member.

The member driven by the driving force from the development coupling member 89 is not limited to the above-mentioned developing roller 1732 and the toner moving member (not shown), but it may be some member other than the drum unit 1769 included in the cartridge B (for example, a charging member, a seal member, a cleaning member, and so on). Therefore, the member to which the driving force is transmitted from the development coupling member 1789 (the member connected to the development coupling member 1789 so as to be able to transmit the driving force) is not limited to the developing roller 1732.

As described above, the apparatus main assembly A is provided with two systems of driving force output means, that is, the drive transmission gear 1781 and the main assembly side coupling member 1799 as the driving force output means to the cartridge B. By this, it possible to perform control such as drive-stopping one of the drive transmission gear 1781 and the main assembly side coupling member 1799 while driving the other. As a specific example, it is possible to control such that the developing roller 1732 is driven while the drum 1762 is stopped.

In addition, in the cartridge B, the driving side flange 1763 is not included in the development drive train for driving the developing roller 1732 or the member connected to the development coupling member 1789 so as to transmit the driving force. Therefore, even if the user rotates the drum 1762 in the state in which the cartridge B has been removed from the apparatus main assembly A, the member connected, for drive transmission, to the developing roller 1732 or the development coupling member 1789 is prevented from rotating in accordance with the rotation of is the drum 1762. Therefore, it is possible to reduce the possibility that the developing roller 1732 or the development coupling member 1789 and the member connected so as to be able to transmit the driving force are unnecessarily driven to cause toner leakage or the like.

As described above, in this embodiment, the developing roller 1732 is driven by the driving force inputted to the development coupling member 1789, but the driving force may be transmitted from the driving side flange 1763 to the developing roller gear 1730 as in Embodiment 1 to drive the developing roller 1732.

As described above, according to this embodiment, the same effect as that of the first embodiment can be provided. Further, the elements of each of the above-described embodiments can be applied to the structure of this embodiment. In particular, the structures of the first helical tooth (first projection) 1763ct of the first gear portion 1763c of the driving side flange 1763 and the second helical tooth (second projection) 1763dt of the second gear portion 1763d may be modified to Use the helical teeth, spur teeth, projections and the like shown in embodiment 2, 3, 4, 5, 6, 10, 11, 12, 13, 14, or 16.

[Embodiment 18]

This embodiment is different from embodiment 17 in that a ring-shaped elastic member is provided so as to cover the driving side flange 1763. The other points are the same as in Embodiment 17, and detailed description thereof will be omitted. In addition, among the elements in this embodiment, the elements corresponding to the elements of Embodiment 1 are assigned the reference numerals associated with the corresponding elements of Embodiment 1. Regarding these elements, the matters not specifically explained are the same as the corresponding elements of Embodiment 1.

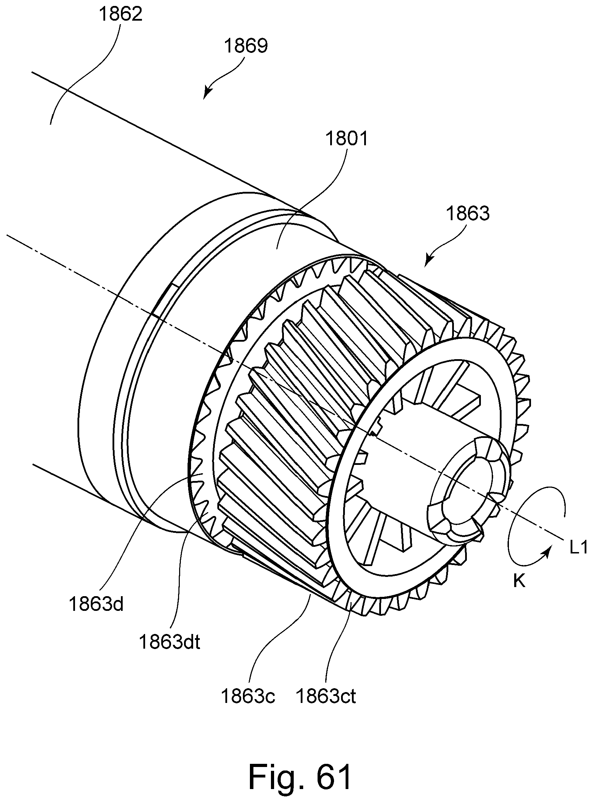

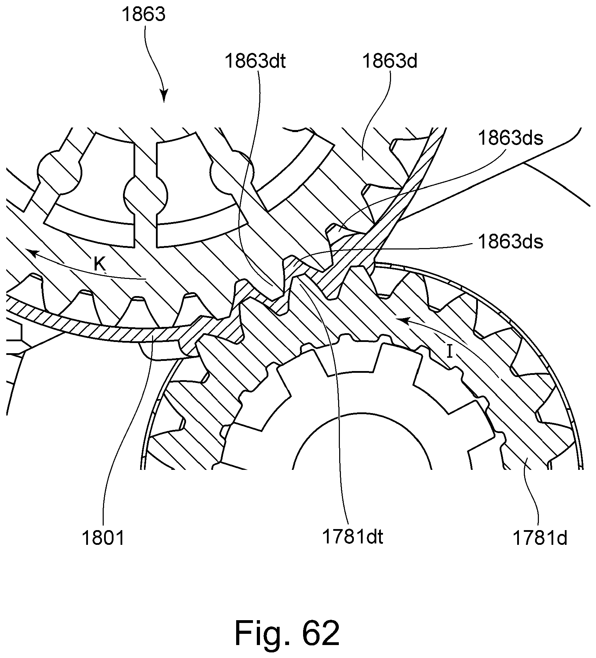

Figure 61 is a partial perspective view of the drum unit 1869 in the neighborhood of the driving side flange 1863. Figure 62 is a cross-sectional view of the second gear portion 1863d and the second main assembly gear portion 1881d, and the cross-sectional plane thereof is perpendicular to the rotational axis L1.

The driving side flange 1863 has the same shape as the driving side flange 1763 of embodiment 17. In this embodiment, the elastic ring 1801, which is the ring-shaped elastic member which can be elastically deformed, is provided so as to cover the entire outer or a part of the outer circumference of the second gear portion (second unit side gear portion) 1863d.

The elastic ring 1801 is a thin film rubber or sponge, and the thickness is preferably about 0. 01 to 1 mm for rubber such as nitrile rubber and about 1 to 6 mm for sponge. Further, it is desirable that the inner diameter of the elastic ring before being mounted to the driving side flange 1863 is about 0.5 to 0.9 times the outer diameter of the second gear portion 1863d. In this embodiment, the outer diameter of the second gear portion 1863d is $\Phi$20 mm, and an inner diameter of the elastic ring 1801 is $\Phi$14 mm. When the outer diameter of the second gear portion 1863d is $\Phi$20 mm, it is desirable that the inner diameter of the elastic ring 1801 is appropriately selected in the range of $\Phi$10 mm to 18 mm, which is slightly smaller than $\Phi$20 mm. If it is larger than $\Phi$18 mm, it may disengage from the second gear portion 1863d, and if it is smaller than $\Phi$10 mm, the force tightening the second gear portion 1863d is so strong that the second gear portion 1863d may be deformed.

As shown in Figure 62, when the cartridge B is mounted to the apparatus main assembly A, the elastic ring 1801 is elastically deformed so as to follow the shapes of the second helical tooth 1863dt of the second gear portion 1863d and the second helical tooth 1781dt of the drive transmission gear 81, so that the second gear portion 1863d and the second main assembly gear portion 1781d are in meshing engagement with each other by way of the elastic ring 1801. Further, the first gear portion (first unit side gear portion) 1863c meshes with the first main assembly gear portion 1781c.

When the drive transmission gear 1781 rotates in the direction of the arrow I, a force is transmitted to the second gear portion 1863d from the second main assembly gear portion 1781d by way of the elastic ring 1801. Therefore, the second gear portion 1863d provides the same function as the second gear portion 1763d of embodiment 17. That is, when the drive transmission gear 1781 rotates in the arrow I direction, there is no backlash (backlash) in the rotational direction (I direction) between the driving side flange 1863 and the drive transmission gear 1781, that is, the backlashless state results, as in the case of embodiment 17.

The elastic ring 1801 may be provided, at an inner peripheral portion of the driving side flange 1863, with a plurality of projections projecting in the direction toward the rotational axis L1 to fill the plurality of gaps 1863ds of the plurality of second helical teeth 1863dt of the second gear portion 1863d in a state in which the cartridge B is not in contact with the drive transmission gear 1781 such as before mounting the cartridge B to the apparatus main assembly A.

Further, in this embodiment, the elastic ring 1801 is provided on the outer periphery of the second gear portion 1863d, but the elastic ring 1801 may be provided on the entire or a part of the outer circumference of the first gear portion 1863c, or on the entire or parts of the outer circumferences of both of the second gear portion 1863d and the first gear portion 1863c. Also in these cases, the force is transmitted between the tooth surfaces of the respective gears by way of the elastic ring 1801. Therefore, the first gear portion 1863c and the second gear portion 1863d provide the same functions as the first gear portion 1763c and the second gear portion 1763d of the embodiment 17. In other words, when the drive transmission gear 1781 rotates in the arrow I direction, there is no backlash (backlash) in the rotational direction (I direction) between the driving side flange 1863 and the drive transmission gear 1781, that is, a backlash-less state results.

Further, the driving side flange 1863 has the same shape as the driving side flange 1763 of embodiment 17, but the addendum shape of the gear and the size of the gear may be appropriately changed in consideration of the thickness of the elastic ring 1801 and the like.

As described above, according to this embodiment, the same effect as that of embodiment 17 can be obtained. Further, the elements of each of the above-described embodiments can be applied to the structure of this embodiment. In particular, the structures of the first helical tooth (first projection) 1863ct of the first gear portion 1863c of the driving side flange 1863 and the second helical tooth (second projection) 1863dt of the second gear portion 1863d may be modified to use the helical teeth, the spur teeth, the projections and the like of Embodiment 2, 3, 4, 5, 6, 10, 11, 12, 13, 14, or 16.

[Embodiment 19]

In this embodiment, as compared with Embodiment 17, the difference is that the rotational axis (L19, and so on) of the first gear portion (external tooth gear portion 1902b, and so on) which receives the driving force FD and the rotational axis (L1) of the second gear portion (1963d) which receives the regulatory force FB are not coaxial but parallel. The other points are the same as in the embodiment 17, and the detailed description thereof will be omitted. In addition, among the elements in this embodiment, the elements corresponding to the elements of Embodiment 1 are assigned the reference numerals associated with the corresponding elements of Embodiment 1. Regarding these elements, the matters not specifically explained are the same as the corresponding elements of Embodiment 1.

<Drum unit 1969>

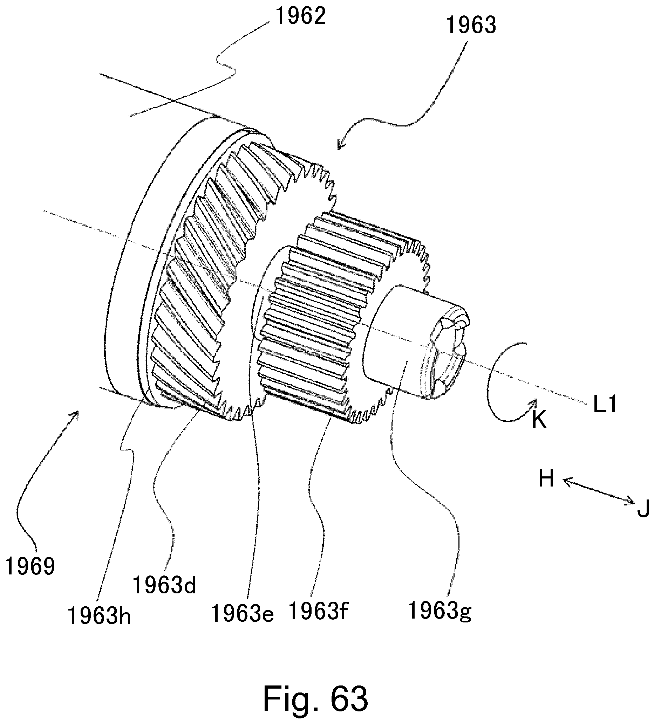

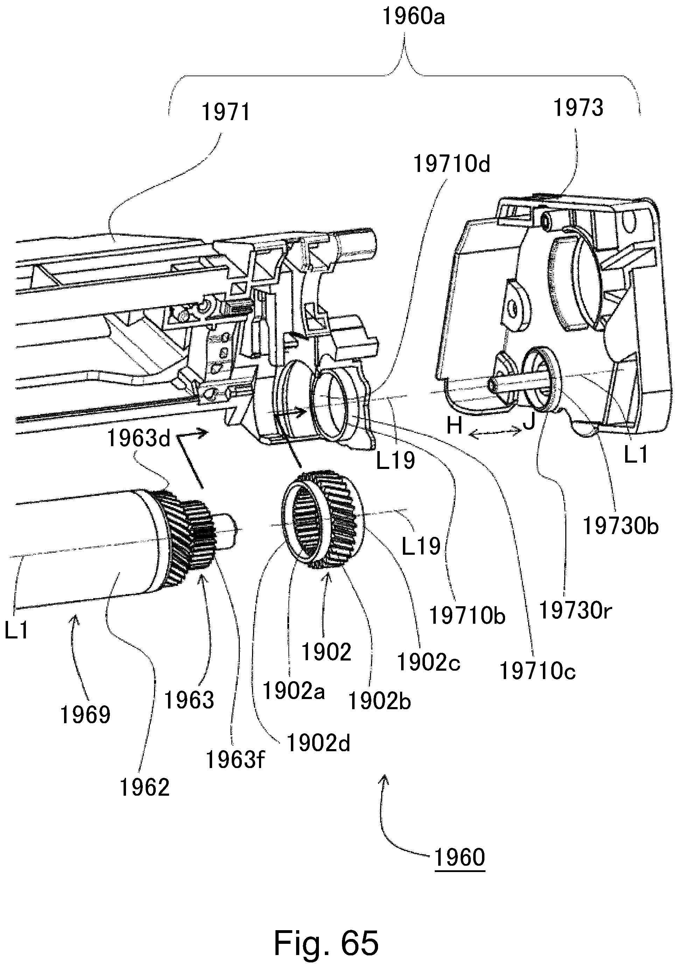

Figure 63 is a partial perspective view of the drum unit 1969. As shown in Figure 63, the driving side flange 1963 of the drum unit 1969 includes an internal gear portion 1963f, a second gear portion 1963d, a projection 1963g, a small diameter portion 1963e, and a flange portion 1963h with the drum rotational axis L1 as the center. The internal gear portion 1963f is a spur tooth gear. The drum unit 1969 further includes a gear 1902, which will be described in detail hereinafter (Figure 65 and the like). The gear 1902 includes an external tooth gear portion 1902b as a first gear portion and an internal tooth gear portion 1902a which meshes with the internal gear portion 1963f.

The projection 1963g has a generally cylindrical shape, and is provided so as to project from the internal gear portion 1963f in the direction opposite to the drum 1962 side (downstream side with respect to the J direction) along the drum rotational axis L1. The small diameter portion (cylindrical portion) 1963e has a generally cylindrical shape, and is provided so as to project beyond the internal gear portion 1963f toward the drum side (downstream side in the H direction) 1962 along the drum rotational axis L1. The second gear portion 1963d is an helical tooth having a helix angle $\alpha 2$ as in embodiment 17, and is provided on the drum 1962 side (downstream side in the H direction) of the small diameter portion 1963e. The flange portion 1963h has a thin disk shape having a diameter equal to or larger than the diameter of the drum 1962, and is provided on the drum 1962 side (downstream side in the H direction) of the second gear portion 1963d.

<Support structure for drum unit 1969>

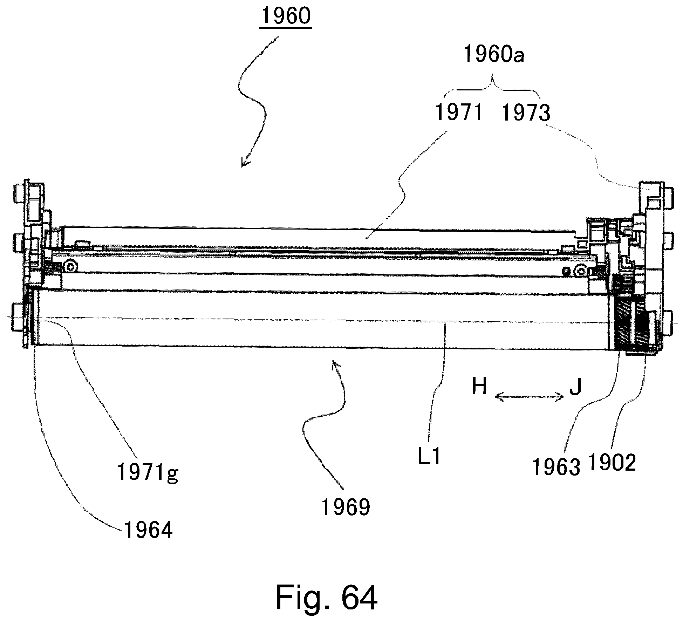

Next, referring to Figures 64, 65, 66, and 67, the structure for supporting the drum unit 1969 will be described.

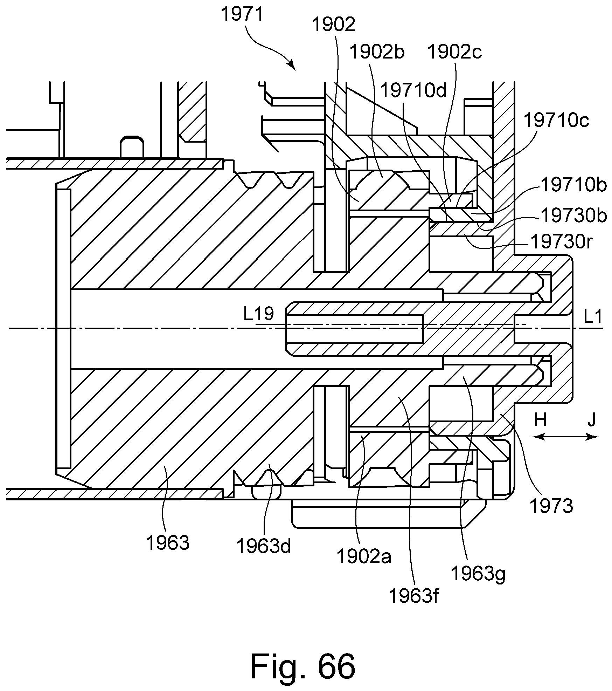

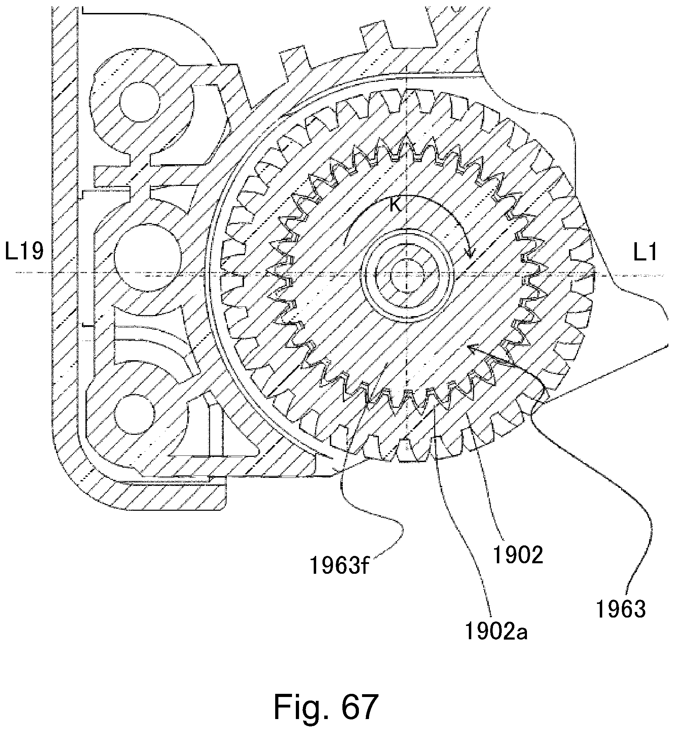

Figure 64 is a side view (viewed in a direction perpendicular to the rotational axis L1) of the cleaning unit 1960 to which the drum unit 1969 is mounted. Figure 65 is an exploded perspective view of a driving side portion of the cleaning unit 1960. Figure 66 is a partial sectional view of the cleaning unit 1960 in the neighborhood of the driving side flange 1963, and the sectional plane thereof includes the rotational axis L1. Figure 67 is a partial cross-sectional view of the cleaning unit 1960, which is a cross-section, as viewed along the J direction, of perpendicular to the rotational axis L1 and passing through the internal gear portion 1963f.

As shown in Figure 64, the cleaning frame 1960a of the cleaning unit 1960 supports the drum unit 1969. The cleaning frame 1960a of the cleaning unit 1960 comprises a frame member 1971 and a drum bearing member 1973. The cleaning frame 1971 is provided with a drum sliding portion 1971g.

The driving side flange 1963 is rotatably supported by the drum bearing member 1973 in the same manner as in embodiment 17. Similarly to that described in Embodiment 17, when the drive transmission gear 1781 rotates in a predetermined direction after the driving side flange 1963 of the drum unit 1969 engages with the drive transmission gear 1781, the driving side flange 1963 rotates in interrelation with the drive transmission gear 1781, and as described above, and a thrust force in the H direction is produced in the drum unit 1969. By this thrust force, the non-driving side flange 1964 and the drum sliding portion 1971g are brought into contact with each other, and the movement of the drum unit 1969 in the H direction is restricted.

As shown in Figure 65, the bearing member 1973 is supported by the frame member 1971. In the frame member 1971, a cylindrical portion 19710b, which is a positioning portion relative to the bearing member 1973, is provided so as to project toward the drum unit 1969 side. In the bearing member 1973, a cylindrical portion 19730r, which is a positioning portion relative to the frame member 1971, is provided so as to project toward the drum unit 1969 side.

The inner peripheral surface 19710d of the cylindrical portion 19710b is formed in an arc shape, and is provided at such a position that the center of the arc is on the drum rotational axis L1. In addition, the outer peripheral surface 19730b of the cylindrical portion 19730r is formed in an arc shape, and is provided at such a position that the center of the arc is on the drum rotational axis L1. On the other hand, the outer peripheral surface 19710c of the cylindrical portion 19710b is formed in the shape of an arc surface, but the central axis L19 of the arc surface (coaxial with the rotational axis L19 of the gear 1902) is provided, in parallelism with but not coaxial with the drum rotational axis L1. In other words, the outer peripheral surface 19710c of the cylindrical portion 19710b is provided at a position eccentric with respect to the inner peripheral surface 19710d.

The outer peripheral surface 19710c of the cylindrical portion 19710b rotatably supports the gear 1902 about the rotational axis L19. The gear 1902 has a generally cylindrical shape and includes, coaxially with the rotational axis L19 of the cylinder,, the internal tooth gear portion 1902a on the inner peripheral side, and the external tooth gear portion 1902b as the first gear portion (first unit side gear portion) on the outer peripheral side. The internal tooth gear portion 1902a is a flat tooth, and the external tooth gear portion 1902b is an helical tooth having a helix angle $\alpha 1$, and has the same the number of teeth as that of the second gear portion (second unit side gear portion) 1963d of the driving side flange 1963. In addition, a support portion 1902c is provided on one end side of the gear 1902, and a cylindrical portion 1902d is provided on the other end side. The support portion 1902c has a generally cylindrical shape, and is provided along the rotational axis L19 so as to project beyond the external tooth gear portion 1902b and the internal tooth gear portion 1902a in the direction away from the drum 1962 (downstream side in the J direction). The cylindrical portion 1902d has a generally cylindrical shape, and is provided along the rotational axis L19 so as to project beyond the external tooth gear portion 1902b and the internal tooth gear portion 1902a toward the drum 1962 side (downstream side in the H direction).

As shown in Figure 66, the inner peripheral surface (supported portion) of the support portion 1902c engages with the outer peripheral surface 19710c of the cylindrical portion 19710b, and the gear 1902 is supported on the frame member 1971 rotatably about the rotational axis L19. In addition, the outer peripheral surface 19730b of the cylindrical portion 19730r engages with the inner peripheral surface 19710d of the cylindrical portion 19710b, and the bearing member 1973 is positioned and supported by the frame member 1971. The driving side flange 1963 penetrates the inner peripheral portion of the gear 1902 and is provided on the cleaning frame 1960a. In the driving side flange 1963, the projection 1963g is rotatably supported by the bearing member 1973 on the rotational axis L1 as with the case of the embodiment 17.

Further, as shown in Figure 67, the internal gear portion 1963f of the driving side flange 1963 is a spur gear and has the same number of teeth as the internal gear portion 1902a of the gear 1902. The internal gear portion 1902a of the gear 1902 is provided so as to be fitted into the internal gear portion 1963f, and the tooth surfaces of the internal tooth gear portion 1902a and the internal gear portion 1963f engage with each other in the rotational direction. That is, the internal gear portion 1902a and the internal gear portion 1963f are in meshing engagement with each other so as to be able to transmit the rotational driving force.

As described above, the outer peripheral surface 19710c of the cylindrical portion 19710b of the frame member 1971 is provided at a position eccentric with respect to the inner peripheral surface 19710d. Therefore, the gear 1902 supported by the outer peripheral surface 19710c is engaged with the inner peripheral surface 19710d at an eccentric position with respect to the driving side flange 1963 supported by way of the bearing member 1973. That is, the gear 1902 and the driving side flange 1963 are rotatably arranged in a state that the rotational axis L19 and the rotational axis L1 are parallel and non-coaxial with each other, and the rotation driving force can be transmitted to each other. In Figure 67, the positions of the rotational axis L19 and the rotational axis L1 are shown by the intersections between horizontal chain lines extend in left-right direction and a vertical line extending vertically, and the difference between the horizontal line corresponding to the rotational axis L19 and the horizontal line corresponding to the rotational axis L1 can be seen. In addition, the gear 1902 can also be referred to as a non-coaxial rotating member connected to the driving side flange 1963 so as to be able to transmit a driving force.

<Transmission of driving force to drum unit 1969>

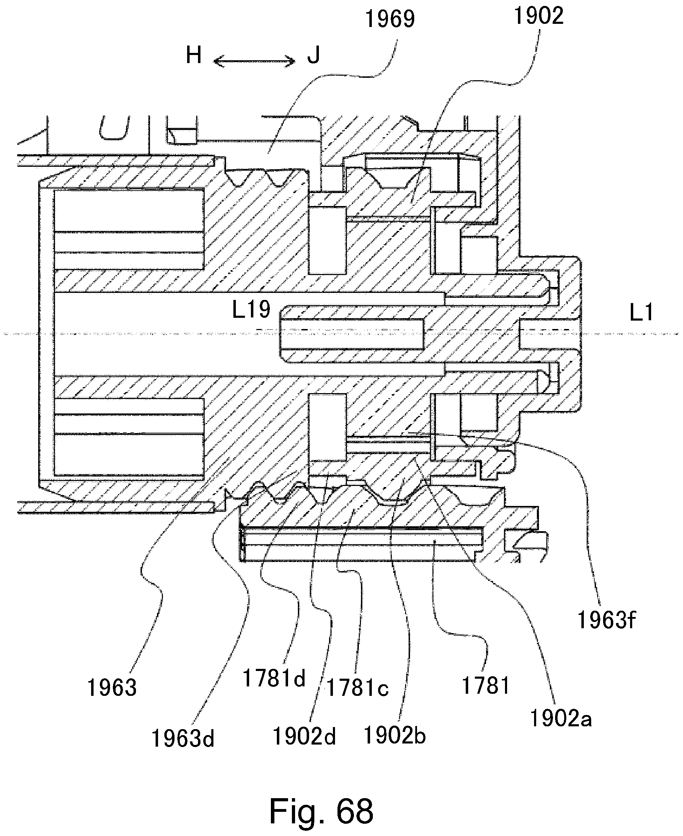

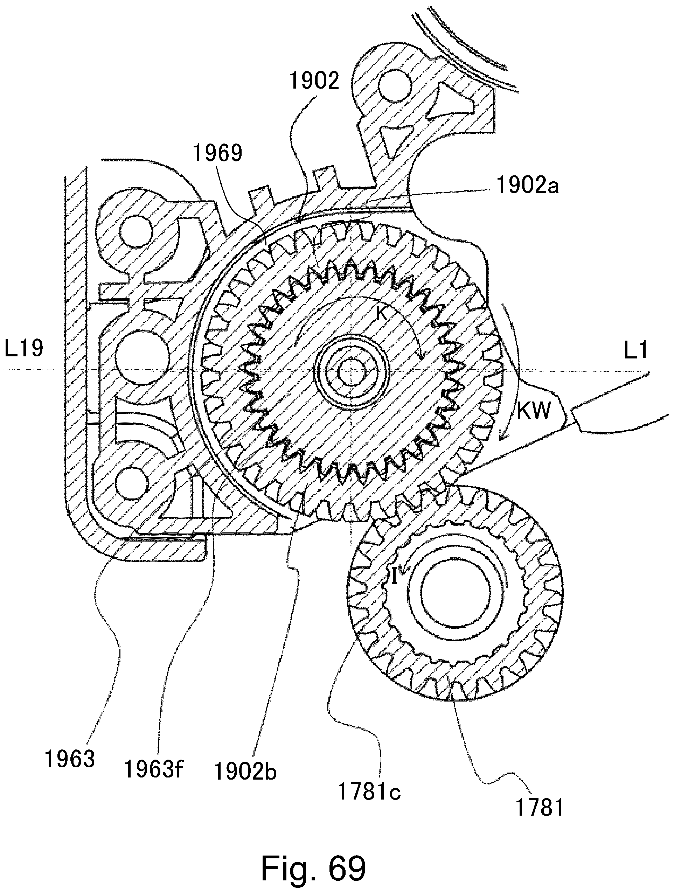

Next, referring to Figures 68 and 69, the driving force transmission to the drum unit 1969 will be described. Figure 68 is a sectional view illustrating an engaged state between the drum unit 1969 and the drive transmission gear 1781, and the sectional plane thereof includes the rotational axis L1. Figure 69 is a cross-sectional view illustrating the engaged state between the drum unit 1969 and the drive transmission gear 1781, taken along a plane perpendicular to the rotational axis L1 and passing through the internal gear portion 1963f the J direction of a cross-section, as viewed in the J direction.

As shown in Figure 68, as in embodiment 17, the second main assembly gear portion 81d of the drive transmission gear 1781 meshes with the second gear portion 1963d of the driving side flange 1963. In addition, the first main assembly gear portion 1781c of the drive transmission gear 1781 meshes with the external tooth gear portion (first gear portion) 1902b of the gear 1902, and the internal gear portion 1902a of the gear 1902 engages with the internal gear portion 1963f of the driving side flange 1963.

As shown in Figure 69, by rotation of the drive transmission gear 1781 in the direction of the arrow I, the gear 1902 receives the driving force by the meshing engagement between the external tooth gear portion 1902b and the first main assembly gear portion 1781c, so that the gear 1902 rotates in the direction of the arrow KW about the rotational axis L19. At this time, the internal gear portion 1902a engages with the internal gear portion 1963f of the driving side flange 1963 in the rotational direction, and transmits the driving force to the driving side flange 1963. By this, the driving side flange 1963 rotates in the direction of arrow K about the rotational axis L1.

By the rotation of the drive transmission gear 1781 in the direction of arrow I, the external tooth gear portion 1902b receives a thrust force in the direction of arrow H (see Figure 68) because of the meshing with the first main assembly gear portion 1781c. For this reason, as shown in Figure 68, the gear 1902 moves in the arrow H direction, the cylindrical portion 1902d abuts to the end surface of the second gear portion 1963d of the driving side flange 1963, and the movement of the gear 1902 in the arrow H direction is restricted (stopped).

On the other hand, the drive transmission gear 1781 receives a thrust force due to meshing with the external tooth gear portion 1902b and moves in the direction of arrow J. Then, similarly to embodiment 17, the second main assembly gear portion 1781d moves to the balanced position where it engages with the second gear portion 1963d of the driving side flange 1963, and the movement in the direction of the rotational axis L1 stops.

In this balanced state, the external tooth gear portion (first gear portion) 1902b receives the driving force FD from the first main assembly gear portion 1781c. The gear 1902 can be regarded as a rigid assembly, and therefore, this driving force FD is transmitted to the driving side flange 1963 by the meshing (engagement) between the internal gear portion 1902a and the internal gear portion 1963f. That is, the driving side flange 1963 is in a state of receiving the drive force FD by way of the gear 1902. In addition, the driving side flange 1963 is in a state that the second gear portion 1963d receives the restriction force (braking force) FB from the second main assembly gear portion 1781d. The teeth of the second gear portion 1963d are fixed so as not to move (rotate) in the direction opposite to the I direction relative to the teeth of the first gear portion 1902b. Therefore, the drum unit 1969 (drum 1962, driving side flange 1963, and gear 1902) is driven in a backlashless state. For this reason, the same effect as that of Embodiment 17 can be provided also when the structure of this Embodiment is used.

Immediately after the start of rotation of the drive transmission gear 1781, the driving side flange 1963 may rotate in the K direction due to the engagement between the second gear portion 1963d and the second main assembly gear portion 1781d, and the gear 1902 may be rotated in the KW direction due to the engagement between the internal gear portion 1902a and the internal gear portion 1963f. Also in this case, in the process of the drive transmission gear 1781 moving in the J direction, the first main assembly gear portion 1781c is brought into meshing engagement with the external tooth gear portion 1902b, and finally reaches the above-mentioned balanced state.

As described above, in this embodiment, the rotational axis L19 of the external gear portion 1902b (first gear portion) and the rotational axis L1 of the second gear portion 1963d are not coaxial but parallel, relative to each other. Then, in the balanced state, the gear 1902 has the following portions (i) to (iii). (i) input portion: At least a portion of the external gear portion 1902b which meshes with the drive transmission gear 1781 (at least a part of the first gear portion), (ii) transmission portion: such a part of the internal gear portion 1902a as meshes with the internal gear portion 1963f to transmit the driving force to the driving side flange 1963, (iii) output portion: a part between the input portion (i) and the output portion (ii). Since the portions (i) to (iii) of the gear are substantially rigid bodies in the K direction, they move integrally along the K direction. Therefore, in the balanced state, the portions (i) to (iii) of the gear 1902 and the second gear portion 1963d of the driving side flange 1963 are integrally moves in the K direction (rotational direction about the rotational axis L1). For this reason, a force corresponding to the driving force FD and the restricting force FB act on the driving side flange 1963, so that the driving in the backlashless state is accomplished, and the same effect as that of the driving embodiment 17 can be provided. In addition, this can be done as long as the first gear portion which receives the driving force FD, a rotational axis thereof and the second gear portion which receives the restricting force FB can move integrally in the K direction in the balanced state, as described above, and it is understood that the first gear portion and the second gear portion do not have to be fixed integrally to the driving side flange 1963 at all times as in embodiments 1-8.

Further, this embodiment is an example of a structure in which the rotational axis of the first gear portion which receives the driving force FD and the rotational axis of the second gear portion which receives the restricting force FB are not coaxial. That is, while the rotational axis of the second gear portion (1963d) which receives the restricting force FB is coaxial with the rotational axis (L1) of the driving side flange (1963), the rotational axis of the first gear portion (1902b) which receives the drive force FD is not coaxial with the rotational axis (L1) of the driving side flange (1963). Specifically, the first gear portion (1902b) is provided on the gear 1902 as a non-coaxial rotating member connected to the driving side flange 1963 so as to be able to transmit the driving force. However, the structure in which the rotational axis of the first gear portion which receives the driving force FD and the rotational axis of the second gear portion which receives the restricting force FB are not coaxial is not limited to such an example.

As another example, the rotational axis of the first gear portion which receives the driving force FD is coaxial with the rotational axis of the driving side flange, and the rotational axis of the second gear portion which receives the restricting force FB may not be coaxial with the rotational axis of the driving side flange. With such a case of the structure, specifically, the first gear portion is provided on the driving side flange, and the second gear portion is provided on the non-coaxial rotating member connected to the driving side flange for drive force transmission. As a more specific example of the structure, in the driving side flange 1763 of Embodiment 17, the first gear portion 1763c is employed as it is, and the gear 1902 provided with the second gear portion is provided in place of the second gear portion 1763d in the same manner as in this embodiment.

As a further example, the rotational axis of the first gear portion which receives the driving force FD, the rotational axis of the second gear portion which receives the restricting force FB, and the rotational axis of the driving side flange may not be coaxial one another. In the case of such a structure, specifically, the first gear portion is provided on the first non-coaxial rotating member connected to the driving side flange for driving force transmission, and the second gear portion is provided on the second non-coaxial rotating member which is connected to the driving side flange for driving force transmission and rotates non-coaxially with the non-coaxial rotating member. As a more specific example of this structure, in the driving side flange 1763 of embodiment 17, the gear 1902 provided with the first gear portion is provided place of the first gear portion 1763c in the same manner as in this embodiment, and the gear 1902 provided with the second gear portion is provided in place of the second gear portion 1763d in the same manner as in this embodiment.

The connection structure capable of transmitting the driving force between the driving side flange 1963 and the non-coaxial rotating member (gear 1902) is not limited to such a spur gear meshing structure as the internal tooth gear portion 1902a and the internal gear portion 1963f. For example, the connection structure may be such that the driving force can be transmitted by the helical tooth gear or a plurality of projections arranged in the circumferential direction. In addition, a non-coaxial driving force transmission joint such as an Oldham joint (detailed in Modified Example 2 of Embodiment 19) may be used as a connection structure capable of transmitting the driving force between the driving side flange 1963 and the non-coaxial rotating member (gear 1902).

<Modified Example 1 of Embodiment 19>

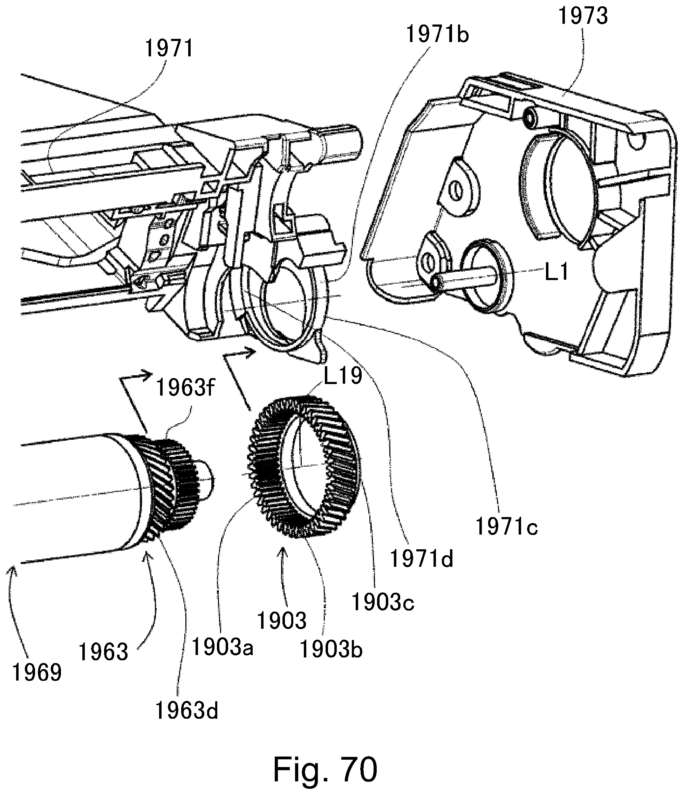

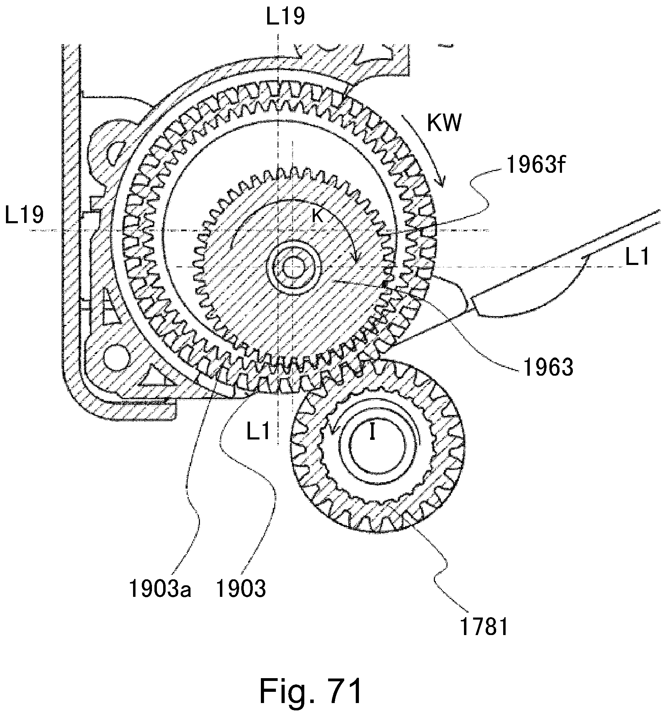

In above-described Embodiment 19, the internal gear portion 1963f of the driving side flange 1963 and the internal gear portion 1902a of the gear 1902 have the same number of teeth and rotate integrally, but in this Modified Example, the rotational speeds of the driving side flange 1963 and the gear 1902 are different from each other. Figure 70 is an exploded perspective view of the driving side portion of the cleaning unit 1960. Figure 71 is a cross-sectional view illustrating an engaged state between the drum unit 1969 and the drive transmission gear 1781 taken along a cross-sectional plane perpendicular to the rotational axis L1 and passing through the internal gear portion 1963f, as viewed in the J direction.

In place of the gear 1902 having the above-described structure, a gear 1903 is provided as a non-coaxial rotating member, and in place of the driving side flange 1963, the driving side flange 1963 is provided. Similarly to the structure described above, the gear 1903 is rotatably supported by the outer peripheral surface 1971c of the cylindrical portion 1971b of the cleaning frame 1971, and the driving side flange 1963 is rotatably supported by the bearing member 1973 through the gear 1903.

As shown in Figure 71, the internal gear portion 1903a of the gear 1903 has a large structure with respect to the first gear portion 1963c of the driving side flange 1963, and is more eccentric than that in the above-described structure. In Figure 71, the positions of the rotational axis L19 and the rotational axis L1 are indicated by intersections between horizontal chain lines and vertical chain lines.

In the balanced state, at least such a part of the gear 1903 as meshes with the drive transmission gear 1781 of the external tooth gear portion 1903b (at least a part of the first gear portion) and the second gear portion 1963d move integrally in the rotational direction about the rotational axis L1. Therefore, the same effect as that of Embodiment 19 described above can be provided.

In this embodiment, the first gear portion 1963c of the driving side flange 1963 and the internal tooth gear portion 1903a of the gear 1903 are spur tooth gears, but helical gears may be employed if the structure permits the eccentricity.

<Modified Example 2 of Embodiment 19>

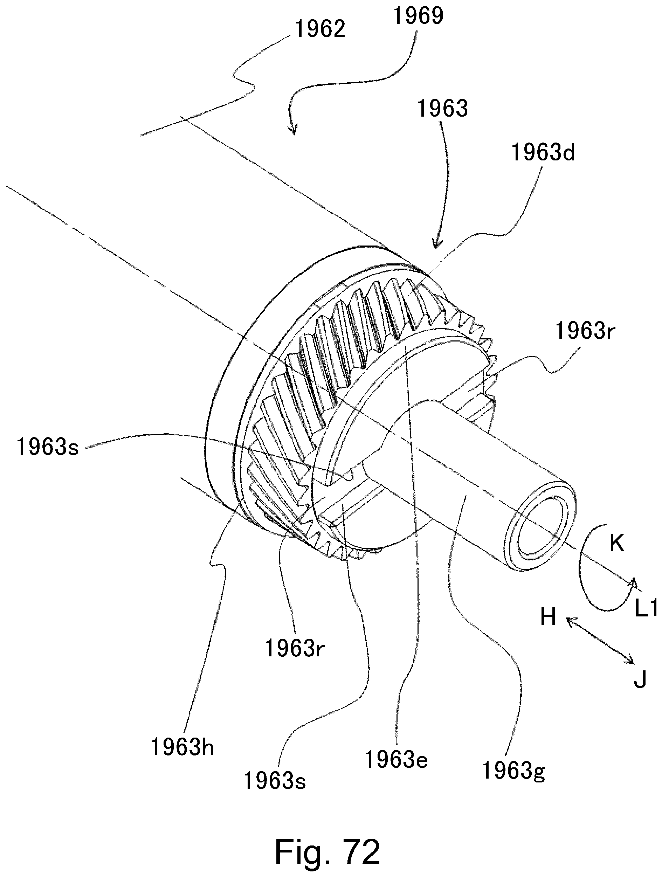

A structure using an Oldham joint as a driving force transmission structure between the non-coaxial rotating member and the driving side flange 1963 will be described. Figure 72 is a partial perspective view of the drum unit 1969. As shown in Figure 72, the driving side flange 1963 includes a gear portion 1963d, a projection 1963g, a small diameter portion 1963e, and a flange portion 1963h which are provided centered on the drum rotational axis L1.

The small diameter portion 1963e has a substantially cylindrical shape, and is provided projected from the gear portion 1963c on the side opposite from the drum 1962 (downstream side in the J direction) along the drum rotational axis L1. The small diameter portion 1963e is provided with a recess 1963r recessed toward the drum 1962 side (downstream side in the H direction). A side surface portion 1963s of the recess 1963r has a planar shape parallel to the direction of the drum rotational axis L1, and are arranged at equal intervals with the drum rotational axis L1 interposed therebetween. Further, the recesses 1963r are provided at two positions symmetrically with the small diameter portion 1963g interposed therebetween in the direction perpendicular to the drum rotational axis L1.

The projection 1963g has a cylindrical shape and is provided so as to project from the small diameter portion 1963e in the direction away from the drum 1962 (downstream in the J direction) along the drum rotational axis L1. The flange portion 1963h has a thin disk shape having a diameter equal to or larger than the diameter of the drum 1962, and is provided on the drum 1962 side (downstream side in the H direction) of the gear portion 1963d. The gear portion 1963d is an helical tooth having a helix angle $\alpha2$, as in embodiment 17.

Further, the drum unit 1969 includes a gear 1904 having a gear portion 1904c as a first gear portion, which will be described in detail hereinafter, and a driven coupling 1905.

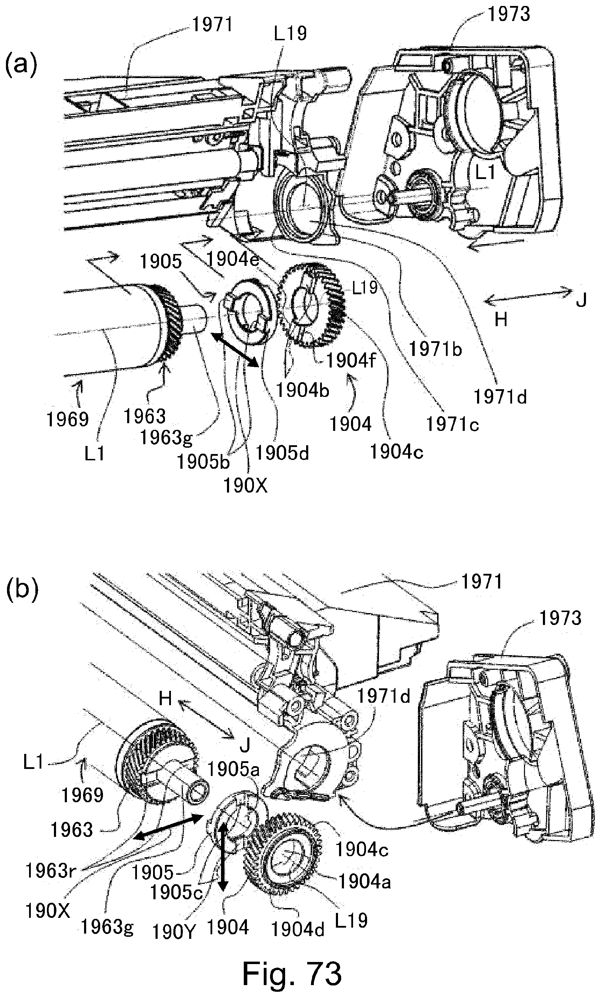

Next, referring to Figure 73, the structure of the cleaning unit will be described. Figure 73 is an exploded perspective view of a driving side of the cleaning unit, wherein part (a) is a view as seen from the driving side toward the non-driving side, and part (b) is a view as seen from the non-driving side toward the driving side. As shown in part (a) of Figure 73 and part (b) of Figure 73 , the bearing member 1973 is supported by the frame member 1971. A hole 1971d is a positioning portion with the bearing member 1973, and is provided on the side surface of the frame member 1971, wherein the hole 1971d is formed in an arc shape, and the center of the arc is provided in alignment with a position corresponding to the drum rotational axis L1. In addition, the frame member 1971 is provided with the cylindrical portion 1971b projecting downstream in the H direction. The inner peripheral surface 1971c of the cylindrical portion 1971b has an arcuate shape, and the center line L19 of the arcuate surface is provided at a position not coaxial with the drum rotational axis L1 but parallel to it. In other words, the hole 1971d is provided at a position eccentric with respect to the inner peripheral surface 1971c.

A gear 1904 as a non-coaxial rotating member is rotatably supported on the inner peripheral surface 1971c of the cylindrical portion 1971b. The gear 1904 has a substantially cylindrical shape, and is provided with a through hole 1904a, a gear portion 1904c as a first gear portion on the outer circumference, and a cylindrical portion 1904d coaxially with the axis of the cylinder as the center. The gear portion 1904c is an helical tooth having a helix angle $\alpha1$. From the side surface of the gear 1904, the projection 1904b is provided so as to project downstream in the H direction.

When the rotational axis of the gear 1904 is the gear rotational axis L19, the side surface portions 1904e and 1904f of the projections 1904b have planar shapes parallel to the direction of the gear rotational axis L19, and are positioned at equal intervals across the gear rotational axis L19. In addition, the projection 1904b has an arc shape which does not project beyond a tooth bottom portion of the gear portion 1904c in the radial direction with respect to the rotational axis L1. Further, the projection 1904b is provided at each of two positions symmetrical with respect to the through hole 1904a interposed therebetween in the direction perpendicular to the gear rotational axis 1901. The cylindrical portion 1904d projects downstream in the J direction. The gear 1904 is rotatably supported by the frame member 1971 by fitting the cylindrical portion 1904d into the inner peripheral surface 1971c of the cylindrical portion 1971b of the frame member 1971.

A driven coupling 1905 is installed on the downstream side of the gear 1904 in the H direction. The driven coupling 1905 has a generally cylindrical shape, and is coaxially provided with a through hole 1905a and a cylindrical portion 1905d around a cylindrical axis. A projection 1905b is provided on the downstream side of the cylindrical portion 1905d in the H direction so as to project downstream in the H direction. In addition, a recess 1905c is provided on the downstream side of the cylindrical portion 1905d in the J direction and is recessed toward the downstream side in the H direction. The projection 1905b has parallel surfaces which are spaced by a distance equal to the distance between the side surface portions 1963s of the recess portion 1963r with the cylindrical axis as the center, and the recess portion 1905c has parallel surfaces which are spaced by a distance equal to the distance between the side surface portions 1904e and 1904f of the projection 1904b with the cylindrical axis as the center, and in addition, the projections 1905b and the recess portions 1905c are extended in orthogonal directions passing through the cylindrical axis.

The projection 1904b of the gear 1904 fits into the recess portion 1905c of the driven coupling 1905 in the direction of the rotational axis L1 of the cylinder, and the projection 1904b is movable (slidable) in the recess portion 1905c in directions indicated by double head arrow 190Y (see part (b) of Figure 73). The 190Y direction is parallel to the plane perpendicular to the rotational axis L1. Further, the projection 1904b can transmit the driving force for rotating the driven coupling 1905 about the rotational axis L1 to the recess portion 1905c.

Further, the projection 1963g of the driving side flange 1963 penetrates the through hole 1905a of the driven coupling 1905 and the through hole 1904a of the gear 1904. Here, a diametrical sizes of the through hole 1905a and the through hole 1904a are sufficiently larger than the outer diameter of the projection 1963g.

Further, the projection 1905b of the driven coupling 1905 is fitted into the recess portion 1963r of the driving side flange 1963 in the direction of the rotational axis L1, and the projection 1905b is movable (slidable) in the recess portion 1963r in directions indicated by double head arrow 190X. The 190X direction is parallel to the plane perpendicular to the rotational axis L1 and is a direction perpendicular to the 190Y direction as viewed along the rotational axis L1. In addition, the projection 1905b can transmit the driving force for rotating the driving side flange 1963 about the rotational axis L1 to the recess portion 1963r.

The free end of the projection 1963g is rotatably supported by the drum bearing member 1973 as in embodiment 17.

As described above, the inner peripheral surface 1971c of the cylindrical portion 1971b of the frame member 1971 is placed eccentrically with respect to the hole 1971d. Therefore, the gear 1904 supported on the inner peripheral surface 1971c and the driving side flange 1963 supported coaxially with the hole 1971d are rotatably supported at eccentric positions.

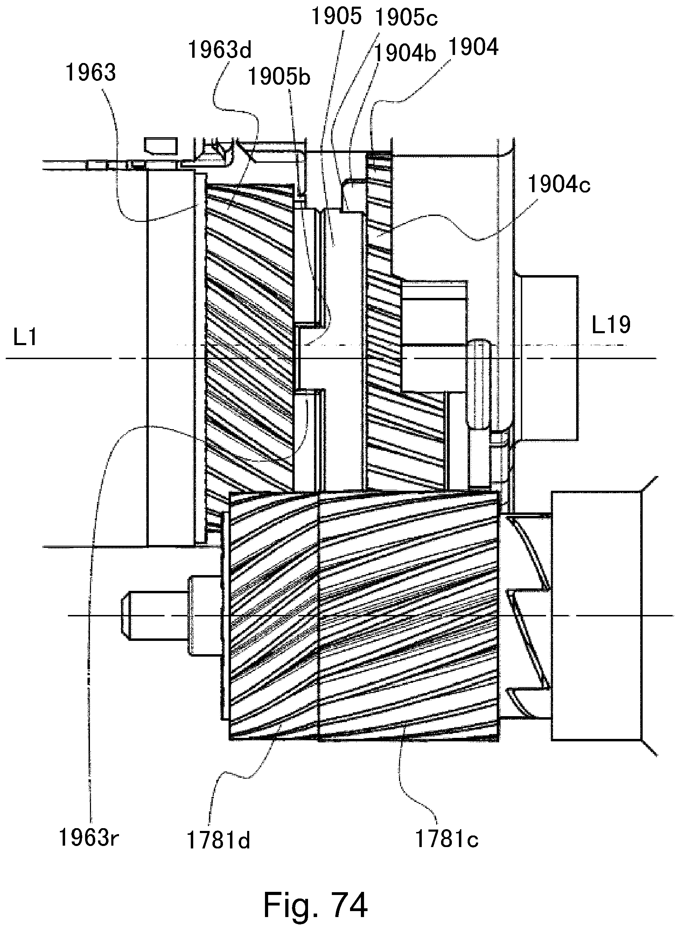

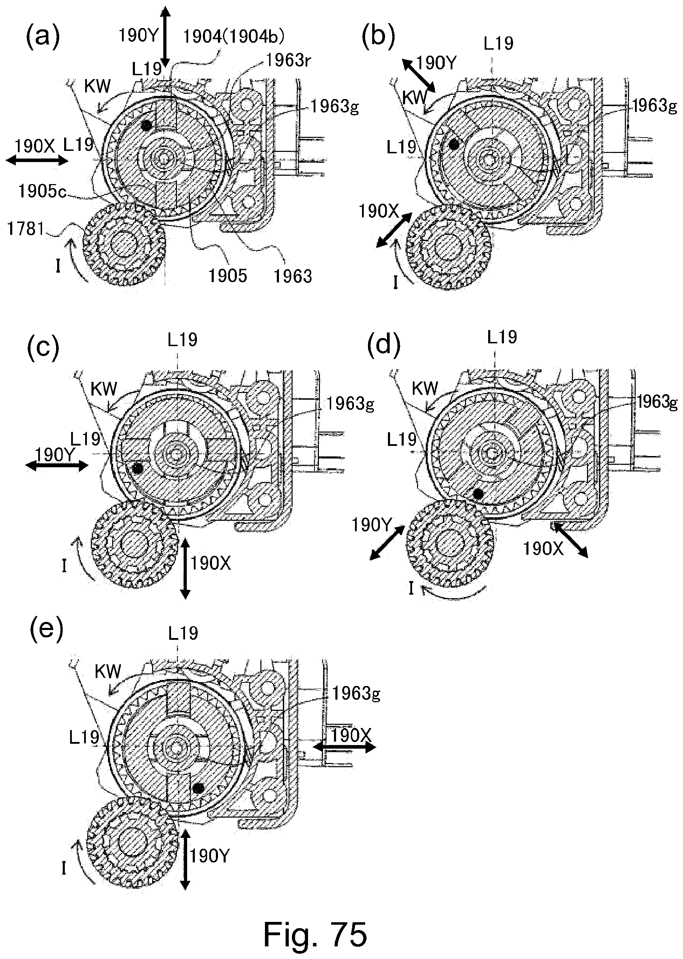

Next, referring to Figures 74 and 75, the engagement with the drive transmission gear 1781 will be described. Figure 74 is an illustration showing a drum unit 1969 which meshes with the drive transmission gear 1781, and is a view as seen in a direction perpendicular to the rotational axis L1. Part (a) of Figure 75 to part (e) of Figure 75 are cross-sectional views showing engaged states between the drum unit 1969 and the drive transmission gear 178, and are cross-sectional views taken along a plane perpendicular to the rotational axis L1 and passing through the projection 1904b of the gear 1904, as viewed in the H direction. In Figure 75, the position of the rotational axis L19 is indicated by an intersection between a horizontal chain line extending left and right and the vertical chain line extending vertically, and on the other hand, the position of the rotational axis L1 is omitted for the sake of simplicity because it is the center of the projection 1963g. Further, a black dot shown on the driven coupling 1905 in Figure 75 is a mark indicating a specific portion of the driven coupling 1905, and is described for easy understanding of the rotation phase of the driven coupling 1905.

As shown in Figure 74, the second main assembly gear portion 1781d of the drive transmission gear 1781 is engaged with the second gear portion 1963d of the driving side flange 1963, and the first main assembly gear portion 81c is engaged with the gear 1904 (first gear portion).

As shown in part (a) of Figure 75 to part (e) of Figure 75, by rotation of the drive transmission gear 1781 in the I direction, the drive force is transmitted from the drive transmission gear 1781 to the gear portion 1904c (first gear portion), so that the gear 1904 rotates in a KW direction about the gear rotational axis L19. The driving force of the drive transmission gear 1781 is transmitted to the driving side flange 1963 by way of the driven coupling 1905 which engages with the gear 1904, so that the driving side flange 1963 is rotated in the K direction (see Figure 72) about the rotational axis L1.

As the gear 1904 and the drum unit 1969 rotate, the driven coupling 1905 moves in the recess portion 1963r of the driving side flange 1963 so that the projection 1905b (see Figure 74) moves in the 190X direction with respect to the driving side flange 1963. In addition, the gear 1904 moves in the 190Y direction with respect to the driven coupling 1905 by the movement of the projection 1904b in the recess portion 1905c. By this, the gear 1904 (rotational axis L19) and the driving side flange 1963 (rotational axis L1) can transmit the driving force for rotation between the gear 1904 and the driving side flange 1963 while maintaining the eccentric position (non-coaxial and parallel state).

Then, by the same operation as in embodiment 19, the drive transmission gear 1781 is moved to the balanced position and is in the balanced state. In the balanced state, the drive transmission gear 1781 receives the force FB at the second gear portion 1963d, and receives, at the side surface portion 1963s, a force corresponding to the drive force FD received by the gear portion 1904c (first gear portion) of the gear 1904, by way of the driven coupling 1905. The teeth of the second gear portion 1963d are in a fixed state such that it cannot move (rotate) in the direction opposite to the I direction relative to the teeth of the first gear portion 1904c. Therefore, the backlashless state is provided, and the same effect as that of embodiment 17 can be provided.

As described in the foregoing, according to embodiment 19, Modified Example 1 of embodiment 19, and Modified Example 2 of embodiment 19, the same effect as that of embodiment 17 can be provided. Further, the elements of each of the above-described embodiments can be applied to the structure of this embodiment. In particular, the structures of the first helical tooth (first projection) of the first gear portion and the second helical tooth (second projection) of the second gear portion may be modified to the helical gear, the super gear and/or the projection described in Embodiments 2, 3, 4, 5, 6, 10, 11, 12, 13, 14 or 16.

[Embodiment 20]

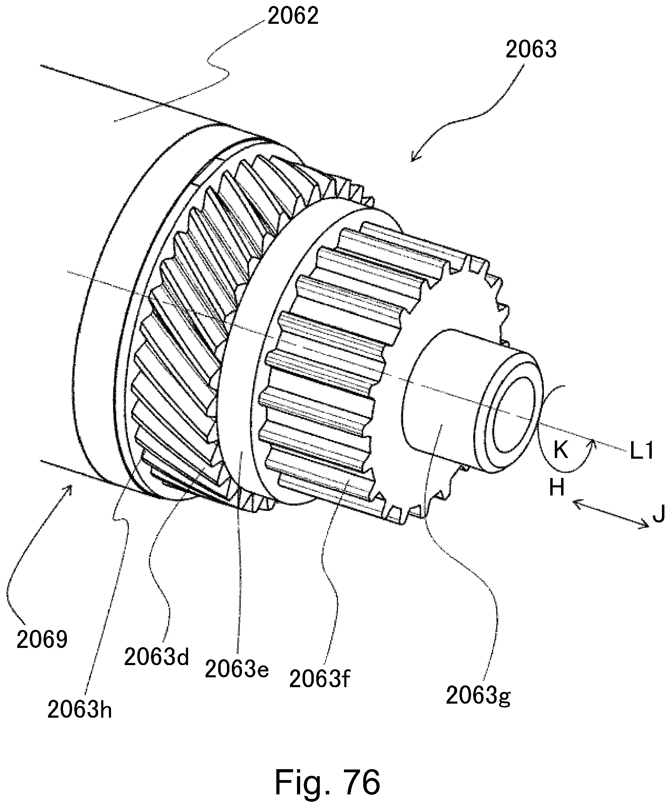

Next, referring to Figures 76, 77, 78, and 79, Embodiment 20 will be described below. As compared with Embodiment 17, this embodiment is different in that the first gear portion (outer tooth portion 2002b) which receives the driving force FD rotates coaxially with the rotational axis (L1) of the second gear portion (2063d) which receives the force FB, only in a part of the region. In other words, in this embodiment, as compared with embodiment 17, it can be said that the movement of the first gear portion (outer tooth portion 2002b) is not composed of only the rotation about one rotational axis (L1). The other points are the same as in embodiment 17, and therefore, the detailed description thereof will be omitted. Further, among the elements in this embodiment, the elements corresponding to the elements of Embodiment 1 are assigned reference numerals associated with the corresponding elements of Embodiment 1. Regarding these elements, the matters not specifically explained are the same as the corresponding elements of Embodiment 1.

<Drum unit 2069>

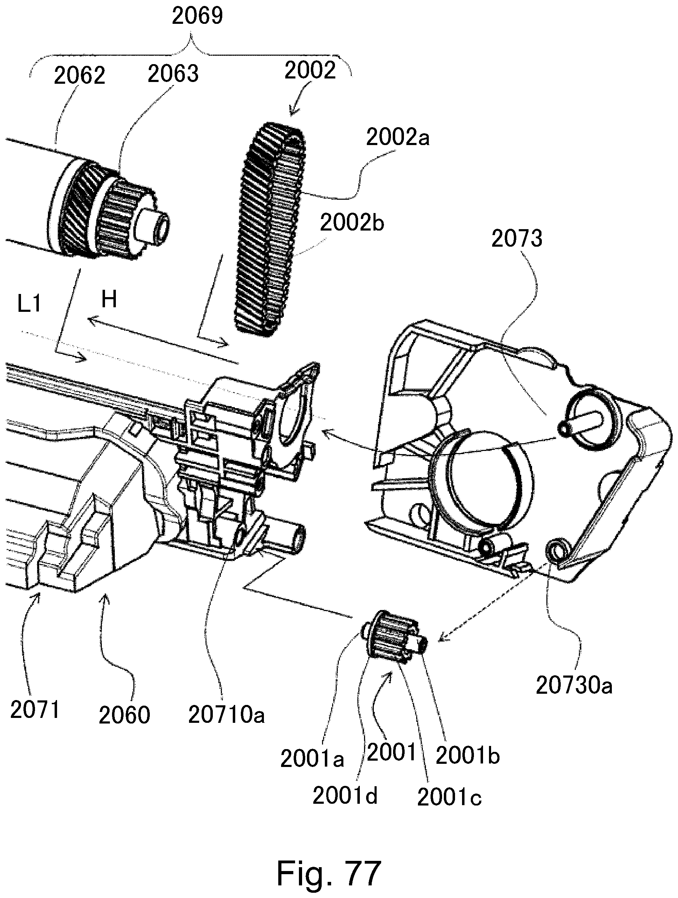

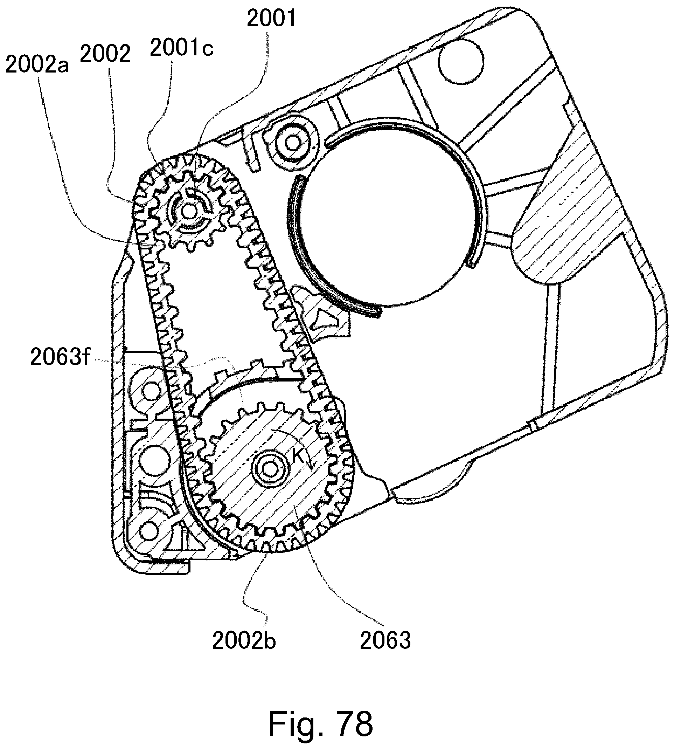

Figure 76 is a partial perspective view of the drum unit 2069. Figure 77 is an exploded perspective view of a driving side of a cleaning unit 2060 and a drum unit 2069. Figure 78 is a cross-sectional view of a driving side flange 2063 of the cleaning unit 2060 at the position of a gear portion 2063f.

As shown in Figure 76, the driving side flange 2063 includes the gear portion 2063f, the second gear portion (second unit side gear portion) 2063d, a projection 2063g, a small diameter portion 2063e, and a flange portion 2063h around the drum rotational axis L1. The gear portion 2063f has a pulley shape corresponding to a toothed belt.

The projection 2063g has a substantially cylindrical shape, and is provided so as to project beyond the gear portion 2063f in the direction away from the drum 2062 side (downstream side in the J direction) along the drum rotational axis L1. The small diameter portion 2063e has a substantially cylindrical shape with a diameter equal to or larger than the diameter of the gear portion 2063f and equal to or smaller than the diameter of the second gear portion 2063d, and is provided on the side closer to the drum 2062 (downstream side in the H direction) than the gear portion 2063f in the direction of the drum rotational axis L1. The second gear portion 2063d is an helical tooth having a helix angle $\alpha2$ as in embodiment 17, and is provided on the drum 2062 side (downstream side in the H direction) of the small diameter portion 2063e. The flange portion 2063h has a thin disk shape having a diameter equal to or larger than the diameter of the drum 2062, and is provided on the side closer to the drum 2062 (downstream side in the H direction) than the second gear portion 2063d.

As shown in Figure 77, the drum unit 2069 further includes a belt 2002 (see Figure 77 and so on). The belt 2002 is provided with an outer tooth portion 2002b as a first gear portion (first unit side gear portion) on the outer peripheral portion thereof, and an inner tooth portion 2002a which meshes with the gear portion 2063f. On the inner peripheral portion. The belt 2002 is an elastic belt-shaped member. The outer tooth portion 2002b is an helical tooth having a helix angle $\alpha1$.

Next, referring to Figures 77 and 78, the structure of the cleaning unit 2060 on the driving side will be described. As shown in Figure 77, a bearing member 2073 is supported by a frame member 2071. The frame member 2071 is provided with a generally cylindrical hole 20710a. The bearing member 2073 is provided with a generally cylindrical hole 20730a facing the hole 20710a at a position facing the hole 20710a. A pulley 2001 is provided between the hole 20710a and the hole 20730a. The pulley 2001 has a generally cylindrical shape extending in the direction of the axis parallel to the rotational axis L1. The pulley 2001 is provided with supported portions 2001a and 2001b which are generally cylindrical projections at the opposite ends in a direction parallel to the rotational axis L1, and is provided with a tooth portion 2001c in the form of a pulley corresponding to the inner tooth portion 2002a of the belt 2002 on a peripheral surface of a central portion. Further, the pulley 2001 is provided with a flange portion 2001d having a diameter larger than that of the tooth portion 2001c, between the supported portion 2001a and the tooth portion 2001c.

The supported portions 2001a and 2001b are rotatably supported by the holes 20710a and 20730a, respectively, so that the pulley 2001 can rotate about a rotational axis parallel to the rotational axis L1.

<Support structure of drum unit 2069>

The support structure for the driving side flange 2062 and the drum 2062 in the drum unit 2069 by the bearing member 2073 and the frame member 2071 is the same as that of embodiment 19, and therefore, the description thereof will be omitted. On the other hand, as shown in Figure 78, in the belt 2002 of the drum unit 2069, the inner tooth portion 2002a is supported by the pulley 2001 and the gear portion 2063f in a state that the gear portion 2063f of the driving side flange 2063 and the tooth portion 2001c of the pulley 2001 are in meshing engagement with each other. In addition, the belt 2002 is supported by the driving side flange 2063 and the pulley 2001 with an appropriate tension so that the portion not in contact with any of the driving side flange 2063 and the pulley 2001 is significantly flex. Further, the belt 2002 can be circulated and moved by the rotation of the driving side flange 2063 (gear portion 2063f) and the pulley 2001 (tooth portion 2001c).

<Transmission of driving force to drum unit 2069>

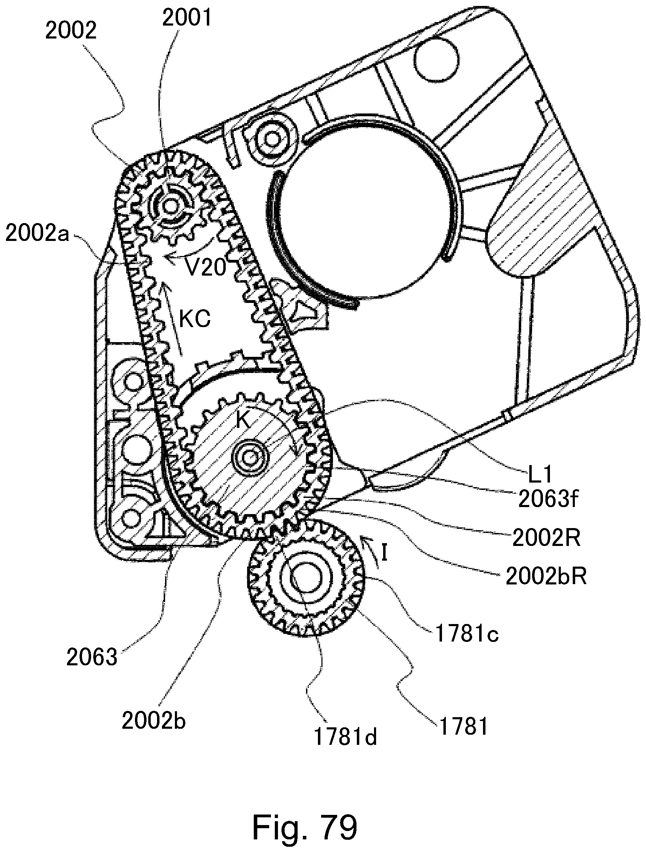

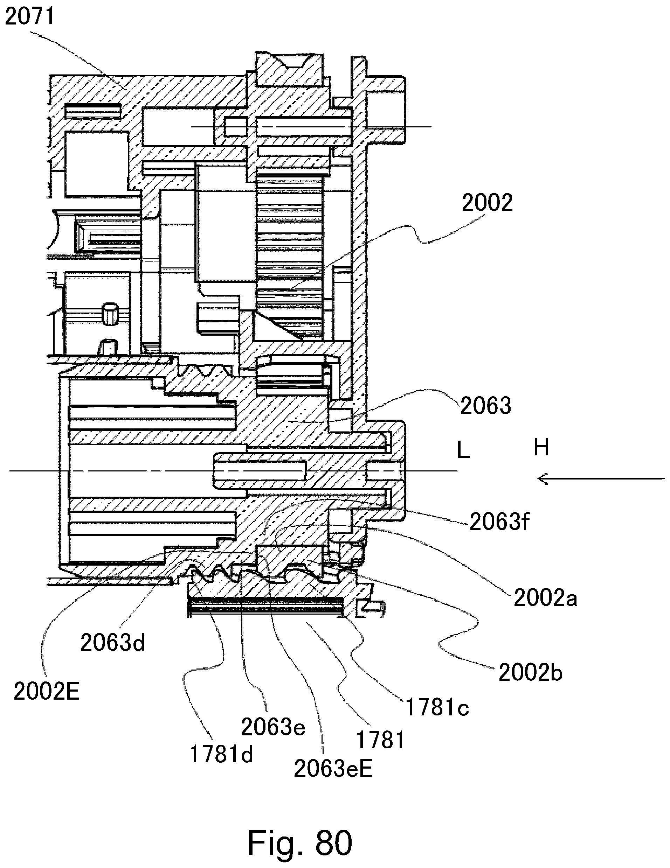

Next, referring to Figures 79 and 80, the engagement state with the drive transmission gear 1781 will be described. Figure 79 is a cross-sectional view illustrating an engaged state between the drum unit 2069 and the drive transmission gear 1781, taken along a plane perpendicular to the rotational axis L1 and passing through the belt 2002, as viewed in the J direction, and Figure 80 is sectional view illustrating the engaged state between the drum unit 2069 and the transmission gear 1781, taken along a plane including the rotational axis L1.

As shown in Figure 79, by rotation of the drive transmission gear 1781 in the direction of arrow I, the outer tooth portion 2002b of the belt 2002 engages with the first main assembly gear portion 1781c and circulates in the direction of arrow KC, which is the circulation movement direction. With the circulation movement of the belt 2002, the gear portion 2063f of the driving side flange 2063 which engages with the inner tooth portion 2002a of the belt 2002 rotates in the direction of the arrow K. At this time, assuming that the portion of the belt 2002 that is engaged with the inner tooth portion 2002a is the rotating portion 2002R, the rotating portion 2002R rotates about the rotational axis L1 in the K direction. Therefore, the circulation movement direction KC of the rotating portion 2002R of the belt 2002 is the same as the K direction. Therefore, when such a part of the outer tooth portion 2002b as the first gear portion as is included in the rotating portion 2002R is the rotating gear portion 2002bR, the rotating gear portion 2002bR rotates about the rotational axis L1 coaxially and integrally with the driving side flange 2063 and the second gear portion 2063d. Further, as the belt 2002 circulates in the KC direction, the pulley 2001 rotates in an arrow V20 direction.

By rotation of the drive transmission gear 1781 in the direction of arrow I, the outer tooth portion 2002b receives a thrust force in the direction of arrow H through the meshing engagement with the first main assembly gear portion 1781c, and the belt 2002 tends to move in the direction of arrow H. However, as shown in Figure 80, the diameter of the small diameter portion 2063e of the driving side flange 2063 is larger than the diameter of the gear portion 2063f, and therefore, the end surface 2002E of the belt 2002 abuts on the end surface 2063eE of the small diameter portion 2063e, so that the movement of the belt 2002 in the direction of the arrow H is restricted (stopped).

On the other hand, the drive transmission gear 1781 receives a thrust force through the meshing engagement with the outer tooth portion 2002b and to move in the direction of arrow J. Then, similarly to embodiment 17, the second main assembly gear portion 1781d moves to the balanced position in which it engages with the second gear portion 2063d of the driving side flange 1963, and the movement in the direction of the rotational axis L1 stops. The operations and actions of the first gear portion (outer tooth portion 2002b) and the second gear portion 2063d from the start of driving the drive transmission gear 1781 to the reaching of the drive transmission gear 1781 to the balanced position are the same as those in embodiment 19.

In this balanced state, the rotating gear portion 2002bR of the external tooth portion (first gear portion) 2002b receives the driving force FD from the first main assembly gear portion 1781c. Since the rotating portion 2002R of the belt 2002 can be regarded as a rigid assembly, this driving force FD is transmitted to the driving side flange 2063 by the meshing (engagement) between the inner tooth portion 2002a and the gear portion 2063f. That is, the driving side flange 2063 is in a state of receiving the driving force FD by way of the rotating portion 2002R of the belt 2002. In addition, the driving side flange 2063 is in a state that the second gear portion 2063d receives the restriction force (braking force) FB from the second main assembly gear portion 1781d. The teeth of the second gear portion 2063d are fixed so as not to move (rotate) in the direction opposite to the I direction relative to the teeth of the first gear portion 2002b. Therefore, the drum unit 2069 (drum 2062, driving side flange 2063, and belt 2002) is driven in a backlashless state. Accordingly, the same effect as that of Embodiment 17 can be obtained even if the structure of this Embodiment is used.

In this embodiment, the belt 2002 is provided with the first gear portion which receives the driving force FD in the balanced state, but the second gear portion which receives the force FB in the balanced state may be provided on the belt supported in the same manner as the belt 2002. In addition, the belt 2002 may be provided with the first gear portion which receives the driving force FD, and the second gear portion which receives the force FB may be provided on another belt.

Further, in this embodiment, the belt 2002 is provided with the inner tooth portion 2002a and the outer tooth portion 2002b as the first gear portion, but the present invention is not limited to this example. For example, the belt may be a belt which deforms into a shape which follows the shape of the gear of the driving side flange 2063 and the gear of the drive transmission gear 1781, such as the elastic ring 1801 shown in embodiment 18. In such a case, the gear portion 2063f of the driving side flange 2063 has a shape corresponding to the first main assembly gear portion 1781c of the drive transmission gear 1781, and the gear portion 2063f meshes with the first main assembly gear portion 1781c by way of the belt. In this case, the gear portion 2063f may be regarded as the first gear portion which receives the driving force FD. If the belt covers the second gear portion 2063d of the driving side flange 2063 and the belt is provided so as to follow the gear shape of the second gear portion 2063d, the second gear portion 2063d is can be regarded as the second gear which receives the regulatory force FD.

As described above, according to this embodiment, the same effect as that of embodiment 17 can be provided. In addition, the elements of each of the above-described embodiments can be applied to the structure of this embodiment. In particular, the structures of the first helical tooth (first projection) of the first gear portion and the second helical tooth (second projection) of the second gear portion may be modified into the helical teeth, spur gear teeth, projections and the like which have been described in Embodiments 2, 3, 4, 5, 6, 10, 11, 12, 13, 14 or 16.

[Embodiment 21]

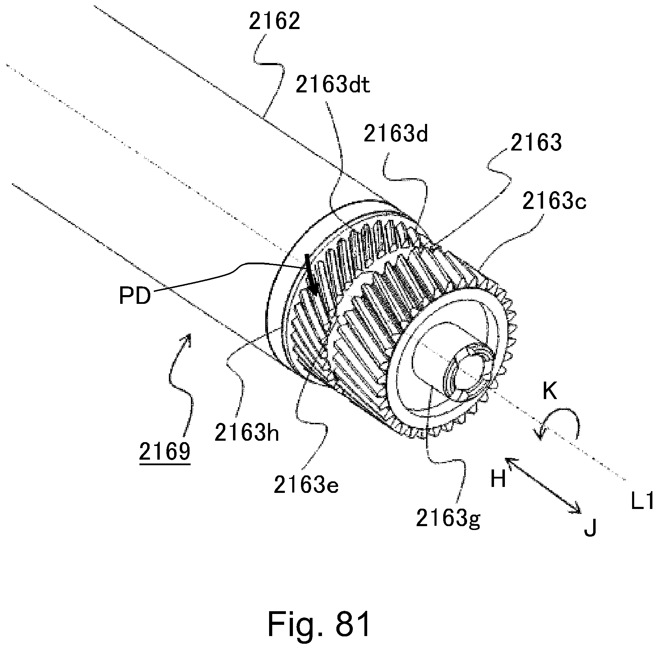

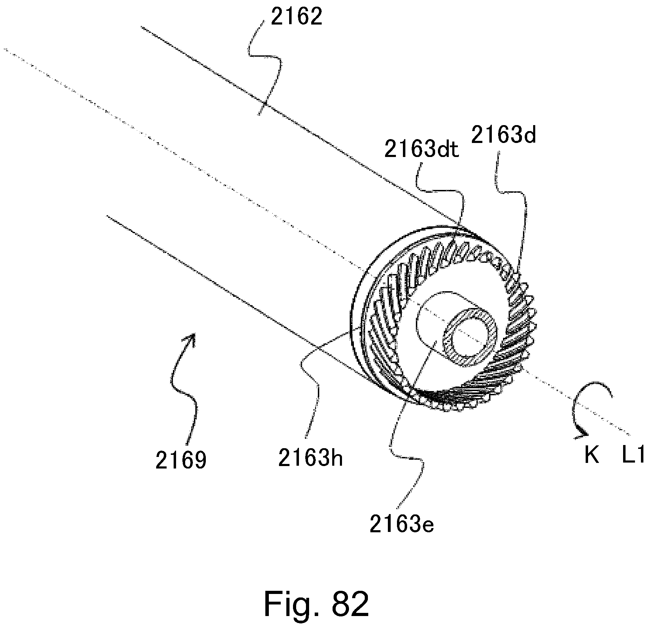

Next, referring to Figures 81 and 82, Embodiment 21 will be described. This embodiment is different from embodiment 17 in the projecting direction of the teeth of the gear portion. That is, in Embodiment 17, the projecting direction of the teeth of each gear portion (first gear portion, second gear portion) is the radial direction centered with respect to the rotational axis L1, but in this embodiment, the projecting direction of the teeth has a directional component parallel to the axis L1. The other points are the same as in embodiment 17, and detailed description thereof will be omitted. In addition, among the elements in this embodiment, the elements corresponding to the elements of Embodiment 1 are assigned reference numerals associated with the corresponding elements of Embodiment 1. Regarding these elements, the matters not specifically explained are the same as the corresponding elements of Embodiment 1.

<Drive side flange 2163>

Figure 81 is a partial perspective view of the driving side portion of the drum unit 2169. Figure 82 is a partial perspective view of the drum unit 2169 taken along a plane perpendicular to the rotational axis L1 and passing through the projection 2163d of the driving side flange 2163. As shown in Figure 81, the driving side flange 2163 is provided, around the rotational axis L1 as the center, with a first gear portion (first unit side gear portion) 2163c, a projection 2163d as a second gear portion (second unit side gear portion), a projection (supported portion) 2163g, a small diameter portion 2163e, and a flange portion 2163h.

The first gear portion 2163c is an helical tooth having a helix angle α1, and has substantially the same shape as the first gear portion 1763c of embodiment 17. The projection (supported portion) 2163g has a substantially cylindrical shape having a center on the rotational axis L1 and projects from the first gear portion 2163c in the direction away from the drum 2162 (downstream side in the J direction) along the rotational axis L1. The projection 2163g has substantially the same shape as the projection 1763g of Embodiment 17.

The small diameter portion 2163e has a substantially cylindrical shape, and is provided projected from the first gear portion 2163c toward the drum 2162 side (downstream side in the H direction) along the rotational axis L1. The flange portion 2163h has a thin disk shape having a diameter equal to or larger than the diameter of the drum 2162, and is provided on the drum 62 side (downstream side in the H direction) of the small diameter portion 2163e.

The projection 2163d as the second gear portion comprises a plurality of projections (teeth) 2163dt. The number of the projections 2163dt is the same as the number of teeth of the first gear portion 2163c, and the projections 2163dt are formed in a shape which can be engaged with the second main assembly gear portion 1781d of the drive transmission gear 1781. In addition, the plurality of projections (teeth) 2163dt are helical projections which project from the flange portion 2163h so as to extend in the J direction away from the drum 2162 along the rotational axis L1, and are twisted at a helix angle α2 so as to go downstream in the K direction (rotational direction K of the driving side flange 2163) which is a circumferential direction about the rotational axis L1, as goes in the J direction. That is, the projecting direction PD of the projection (teeth) 2163dt from the flange portion 2163h is a direction having at least an H direction component parallel to the rotational axis L1 and a K direction component in the circumferential direction about the rotational axis L1. The helix angle of the plurality of projections 2163dt is the helix angle α2. When the projection 2163dt is structured to have a flat tooth shape instead of an helical tooth shape, the projection direction PD has an H direction component parallel to the rotational axis L1 but has no circumferential direction (K direction) component.

Further, each of the projections 2163dt is an involute tooth-shaped teeth having an involute surface portion on the lateral side surface, and has substantially the same shape as the second helical tooth (second projection) 1763dt of the second gear portion 1763d of Embodiment 17. Therefore, the projections 2163d can engage with the second main assembly gear portion 1781d of the drive transmission gear 1781 to receive the driving force and the restricting force FB, and function as the second gear equivalently to the second gear portion 1763d of embodiment 17.

Further, as shown in Figure 82, the plurality of projections 2163dt are arranged at equal intervals in the rotational direction K about the rotational axis L1. Further, the plurality of projections 2163dt are formed so that the free end portion thereof is away by the same distance from the rotational axis L1 in the radial direction with respect to the rotational axis L1, and the rear end portion is away from the small diameter portion 2163e by a certain distance. Therefore, a space is formed between the rear end portion of the plurality of projections 2163dt and the outer peripheral surface of the small diameter portion 2163e in the radial direction with respect to the rotational axis L1.

Also with such a driving side flange 2163, the teeth (projections 2163dt) of the second gear portion 2163d cannot move (rotate) in the opposite direction to the I direction relative to the teeth of the first gear portion 2163c, thus it is in a fixed state. Therefore the drive force FD and the restriction force FB are received from the drive transmission gear 1781, and is rotationally driven in the K direction while maintaining the backlashless state, and it is possible to the same effect as that of embodiment 17.

The driving side flange 2163 in this embodiment may be manufactured by forming parts thereof separately and then adhering them into the flange 2163. In addition, the driving side flange 2163 may be formed by using different materials such as resin and metal. In particular, since the projection 2163dt has a relatively thin shape, it may be preferable to use a metal material in some cases.

Further, in this embodiment, the projection direction PD of the projection 2163dt from the flange portion 2163h which is the tooth of the second gear portion (projection 2163d), is selected to be a direction having the J direction component parallel to the rotational axis L1. However, the projecting direction PD may be a direction having an H-direction component parallel to the rotational axis L1. In such a case, the flange portion 2163h is placed at least on the upstream side in the H direction from the second gear portion (projection 2163d). In addition the teeth of the first gear portion 2163c may be formed by projections projecting in the projecting direction having a component (H direction component or J direction component) parallel to the axis L1, while the second gear portion comprises teeth having a shape projecting in the radial direction with respect to the rotational axis L1, similarly to the second gear portion 1763d of embodiment 17. Alternatively, the teeth of the first gear portion 2163c and the teeth of the second gear portion (projection 2163d) may be formed by projections projecting in the projecting direction having a component (H direction component or J direction component) parallel to the rotational axis L1.

As described above, according to this embodiment, the same effect as that of embodiment 17 can be provided. Further, the elements of each of the above-described embodiments can be applied to the structure of this embodiment. In particular, the structure of the first gear portion of the driving side flange may be modified to the helical teeth, the flat teeth and the projections of in any of Embodiment 2, 3, 4, 5, 6, 10, 11, 12, 13, 14, 16, or the like.

[Embodiment 22]

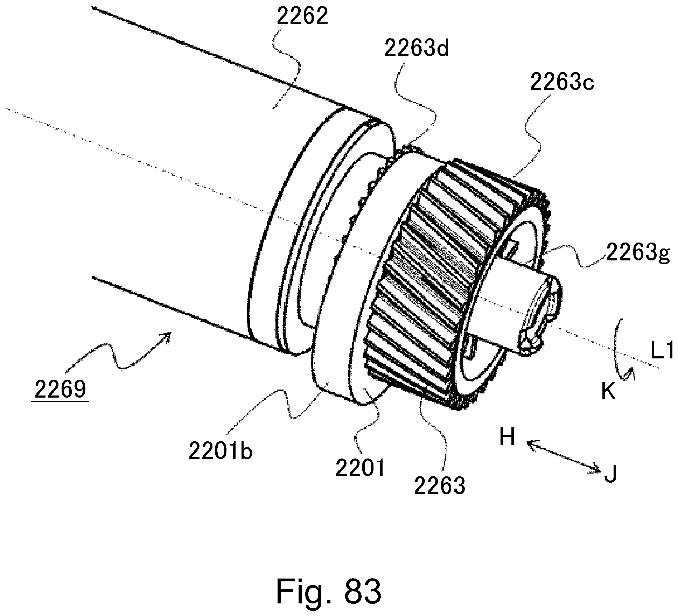

Next, referring to Figures 83 to 87, Embodiment 22 will be described. This embodiment is different from embodiment 17 in that it has a member capable of filling the gap g between the first gear portion and the second gear portion. The other points are the same as in embodiment 17, and detailed description thereof will be omitted. Further, among the elements in this embodiment, the elements corresponding to the elements of Embodiment 1 are assigned reference numerals associated with the corresponding elements of Embodiment 1. Regarding these elements, the matters not specifically explained are the same as the corresponding elements of Embodiment 1.

<Drive side flange 2263>

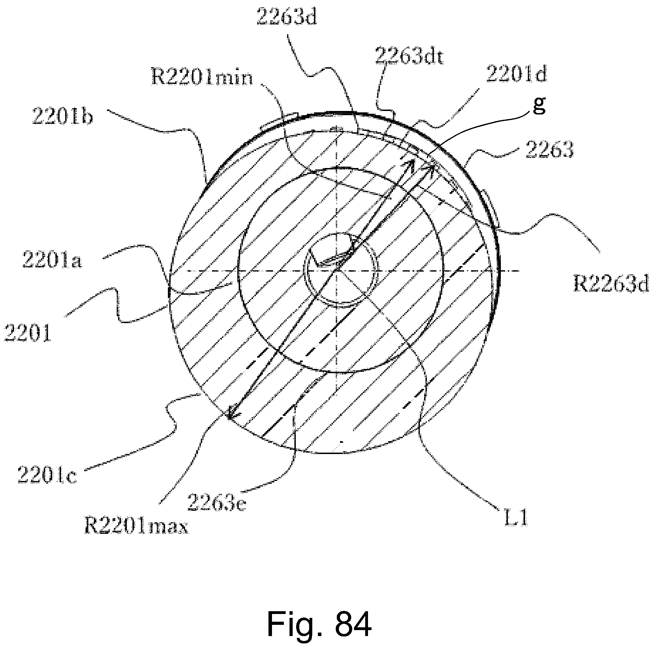

First,, referring to Figures 83 and 84, the structure of the driving side flange 2263 will be described. Figure 83 is a partial perspective view of the driving side of the drum unit 2269. Figure 84 is a cross-sectional view of the drum unit 2269, taken along a plane perpendicular to the rotational axis L1 and passing through an eccentric ring 2201. The driving side flange 2263 is provided with a first gear portion (first unit side gear portion) 2263c, a projection 2263d, a small diameter portion 2263e, and a cylindrical support portion 2263g, centered on the rotational axis L1, and the eccentric ring 2201 is mounted on the small diameter portion 2263e.

The first gear portion 2263c is a helical tooth including a helix angle $\alpha1$. The cylindrical support portion (projection) 2263g has a cylindrical shape centered on the rotational axis L1, and is provided so as to project from the first gear portion 2263c in the direction away from the drum 2262 (downstream side in the J direction) along the rotational axis L1. The small diameter portion 2263e has a generally cylindrical shape, and is provided so as to project beyond the first gear portion 2263c toward the drum 2262 (downstream side in the H direction) along the rotational axis L1. The projections (second gear portion, second unit side gear portion, second rotation part) 2263d comprise a plurality of projections (second projections, teeth) 2263dt extending in the radial direction with respect to the rotational axis L1, and it is provided at a position closer to the drum 2262 (downstream side in the H direction) than the small diameter portion 2263e along the axis L1. The plurality of projections 2263dt are formed in a shape capable of transmitting (meshing engagement) the driving force by engaging with the second main assembly gear portion 1781d of the drive transmission gear 1781. Specifically, the plurality of projections 2263dt are projections projecting in the radial direction with respect to the rotational axis L1, and the tips thereof are structured to be substantially at the same position as the addendum circle diameter of the first gear portion 2263c. In addition, the plurality of projections 2263dt have the same number of teeth as the number of teeth of the first gear portion 2263c, and are arranged at equal intervals in the rotational direction K about the rotational axis L1. In this manner, the plurality of projections 2263dt can mesh with the second main assembly gear portion 1781d and transmit the rotational driving force, and therefore, in this respect, the plurality of projections 2263dt can be said to be the second gear, and the projection 2263d is the second gear portion. The projection 2263d may be a gear portion shown in the second gear portion 1763d or the like in the embodiment 17.

As shown in Figure 84, the eccentric ring (intermediate member) 2201 is a cylindrical member having an inner diameter portion 2201a and an outer diameter portion 2201b, but the inner diameter portion 2201a and the outer diameter portion 2201b have different center positions. In addition, the most projecting portion of the outer diameter portion 2201b is referred to as a thick portion 2201c, and the closest portion is referred to as a thin portion 2201d with respect to the inner diameter portion 2201a. Further, the inner diameter portion 2201a has a diameter substantially the same as the small diameter portion 2263e of the driving side flange 2263. The radius of the eccentric ring 2201 from the rotational axis L1 includes a maximum radius R2201max at the position of the thick portion 2201c and a minimum radius R2201min at the thin portion 2201d.

The inner diameter portion 2201a of the eccentric ring 2201 is rotatably supported by the small diameter portion 2263e of the driving side flange 2263. The thick portion 2201c of the eccentric ring 2201 projects beyond the first gear portion 2263c and the projection 2263d of the driving side flange 2263 in the radial direction. That is, the radius R2201max is larger than the maximum radius R2263d of the projection 2263d and the radius of the addendum circle of the first gear portion 2263c.

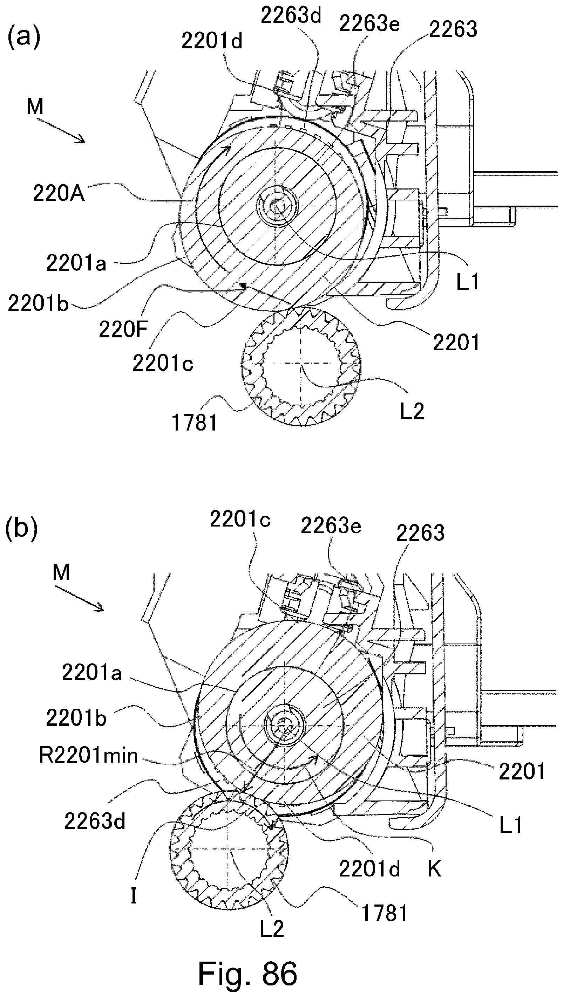

Further, the thin portion 2201d is retracted from the first gear portion 2263c and the projection 2263d of the driving side flange 2263 in the radial direction. That is, the radius R2201min is smaller than the maximum radius R2263d of the projection 2263d and the radius of the addendum circle of the first gear portion 2263c. That is, by providing the thin portion 2201d, a gap g provided between the first gear portion 2263g and the projection 2263d is formed in the direction of the rotational axis L1. Further, the radius R2201min is selected so that, the thin portion 2201d does not enter the tooth free end of the drive transmission gear 1781 in a state where the first gear portion 2263c and the projection 2263d, which will be described hereinafter, are engaged with the drive transmission gear 1781 (see part (b) of Figure 86).

As described above, the eccentric ring (intermediate member) 2201 has a thin portion 2201d as a portion for forming the above-mentioned gap g and a thick portion 2201c as a portion for filling the gap g. Then, the eccentric ring (intermediate member) 2201 rotates around the rotational axis L1 to move the thin portion 2201d and the thick portion 2201c, and it is possible to selectively form the gap g (fill the gap g). As described above, it can be said that the eccentric ring (intermediate member) 2201 can move between the position where the gap g is formed and the position where the gap g is filled by rotating around the rotational axis L1.

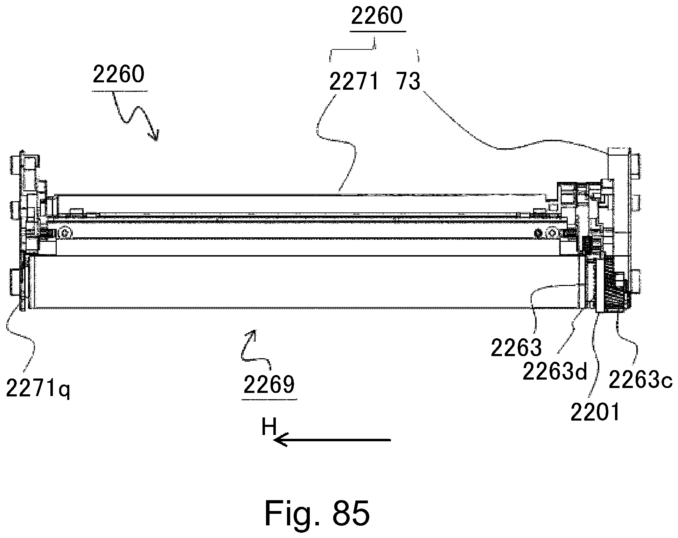

Next, a state in which the drum unit 2269 is assembled to the cleaning unit 2260 will be described referring to Figure 85. Figure 85 is an illustration showing a state in which the drum unit 2269 is assembled to the cleaning unit 2260. The cleaning frame 2260a of the cleaning unit 2260 supports the drum unit 2269. The cleaning frame 2260a comprises a frame member 2271 and a drum bearing member 73. The frame member 2271 is provided with a drum sliding portion 2271q.

Similarly to that described in Embodiment 17, when the drive transmission gear 1781 rotates in a predetermined direction after the driving side flange 2263 of the drum unit 2269 engages with the drive transmission gear 1781, the driving side flange 2263 rotates in interrelation with the drive transmission gear 1781, and as described above, a thrust force in the H direction is produced in the drum unit 2269. By this thrust force, the non-driving side flange 2264 and the drum sliding portion 2271q are brought into contact with each other, and the movement of the drum unit 2269 in the H direction is restricted. In the other respects, the cleaning unit 2260 has the same structure as that in embodiment 17, the description thereof will be omitted.

<Engagement between driving side flange 2263 and drive transmission gear 1781t>

Next, referring to Figure 86, the engagement between the driving side flange 2263 and the drive transmission gear 1781 will be described. Figure 86 is a cross-sectional view of the driving side flange 2263 and the drive transmission gear 1781, taken along a plane perpendicular to the rotational axis L1 and passing through the eccentric ring 2201, wherein part (a) of this Figure shows a state at the instance of contact of the eccentric ring 2201 with the drive transmission gear 1781, and part (b) shows a state in which the cartridge B has been mounted in the apparatus main assembly A. Figure 86, the developing unit is not shown for the sake of simplicity.

As shown in part (a) of Figure 86, the thick portion 2201c of the eccentric ring 2201 projects toward the drive transmission gear 1781 due to the influence of gravity or the like in the radial direction with respect to the rotational axis L1. That is, the gap g is filled at the portion where the thick portion 2201c exist. Therefore, at the time of the cartridge is being mounted along the mounting direction M, the thick portion 2201c comes into contact with the drive transmission gear 1781 sooner or later. At this time, the thick portion 2201c receives the reaction force 220F from the drive transmission gear 1781 against the mounting of the cartridge. As the cartridge moves in the mounting direction M, the eccentric ring 2201 is rotated in the rotational direction 220A about the rotational axis L1 by the reaction force 220F. Then, when the mounting of the cartridge is completed, as shown in part (b) of Figure 86, the phase of the eccentric ring 2201 in the rotational direction is determined in a state that the thin portion 2201d is in contact with the tooth free end of the drive transmission gear 1781. As described above, the thickness of the thin portion 2201d satisfies that it retracts from the first gear portion 2263c and the projection 2263d of the driving side flange 2263 to provide the gap g (see Figure 84), so that the interference between the ring 2201 and the drive transmission gear 1781 is avoided. For this reason, the driving side flange 2263 can be moved to the mounting completion position without interference between the eccentric ring 2201 and the drive transmission gear 1781, and the first gear portion 2263c and the projection 2263d are properly brought into engagement with the drive transmission gear 1781, thus establishing the drive transmittable state. As has been described in embodiment 17, when the drive transmission gear 1781 rotates in a predetermined direction, the driving side flange 2263 rotates in interrelation with the drive transmission gear 1781, and the eccentric ring 2201 rotates idly while maintaining the phase in the rotational direction. The backlashless state in the rotational direction during driving is the same as that in Embodiment 17, and therefore, the description thereof will be omitted.

In this embodiment, the eccentric ring 2201 provided between the first gear portion 2263c and the projection 2263d with respect to the direction of the rotational axis L1 has such a structure that it has a portion (thick wall portion 2201c) projecting beyond the first gear portion 2263c and the projection 2263d in the radial direction of the center of the rotational axis L1. For the eccentric ring 2201, the thin portion 2201d is placed at a position opposing the drive transmission gear 1781 in a state in which the driving side flange 2263 and the drive transmission gear 1781 are engaged with each other, so that the eccentric ring 2201 can be retracted in the radial direction beyond the first gear portion 2263c and the projection 2263d (reduce the radius from the rotational axis L1). By this, the driving side flange 2263 and the drive transmission gear 1781 are properly brought into meshing engagement with each other, so that the driving side flange 2263 receives the drive force FD and the restriction force FB and can be driven in a backlashless state as in the case of the eighteenth embodiment.

In this embodiment, the eccentric ring 2201 is provided with one thick portion 2201c and one thin portion 2201d, but it may be provided with a plurality of thick portions 2201c and/or a plurality of thin portions 2201d. In addition, although the eccentric ring 2201 is rotatably provided with respect to the small diameter portion 2263e, it may be fixed to the small diameter portion 2263e so as to be non-rotatable, and in such a case, as shown in part (b) of Figure 86, the thin portion 2201d may be fixed in a phase in which the thin portion 2201d is placed at a position opposing the drive transmission gear 1781.

In addition, the thick portion 2201c may be structured to fill only a part of the gap g without filling the entirety of the area of the gap g. That is, the radius R2201max is selected to be smaller than the radius R2263d and larger than the radius R2201min. The eccentric ring 2201 cannot fill the gap g, and the gap g always exists. In such a case, it can be said that the eccentric ring 2201 functions as a member for changing the size of the gap g, and movable between a position where a large gap g is formed by the thin portion 2201d and a position where a small gap g is formed by the thick portion 2201c.

<Modified example of Embodiment 22>

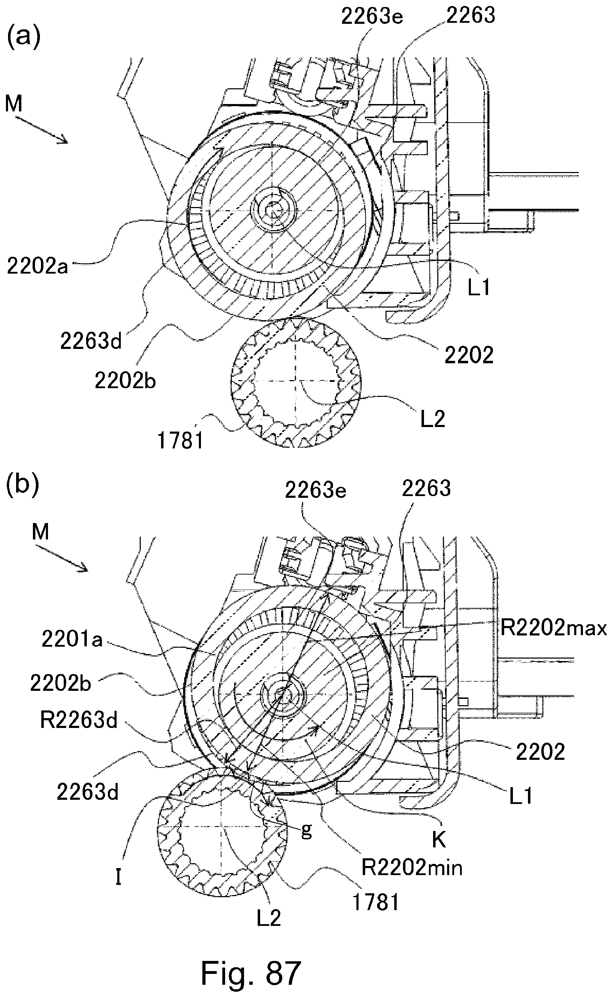

Referring to Figure 87, a modified example of Embodiment 22 will be described. Figure 87 is a cross-sectional view of the driving side flange 2263 and the drive transmission gear 1781, taken along a plane perpendicular to the rotational axis L1 and passing through the eccentric ring 2202, wherein part (a) shows a state immediately before the eccentric ring 2202 contacts the drive transmission gear 1781, and part (b) shows a state in which the cartridge B has been mounted in the apparatus main assembly A.

As shown in part (a) of Figure 87, the eccentric ring (intermediate member) 2202 has cylindrical shapes of an inner diameter portion 2202a and an outer diameter portion 2202b, and the center positions of them are substantially the same. The eccentric ring 2202 is provided at the position of the small diameter portion 2263e of the driving side flange 2263. A diameter of the inner diameter portion 2202a is larger than the diameter of the small diameter portion 2263e of the driving side flange 2263. A diameter of the outer diameter portion 2202b is larger than the diameter of the addendum circle (length obtained by doubling the radius R2263d) of the first gear portion (not shown) of the driving side flange 2263 and the projection 2263d. By this, for the eccentric ring 2202, the outer diameter portion 2202b projects radially beyond the first gear portion (not shown) and the projection 2263d of the driving side flange 2263, on the side where the gap between the inner diameter portion 2202a and the small diameter portion 2263e expands at the time when the inner diameter portion 2202a is shifted in the radial direction centered on the rotational direction L1 so as to eliminate the gap therebetween. That is, the maximum value R2201max of the radius (distance) of the outer diameter portion 2202b of the eccentric ring 2202 from the rotational axis L1 is larger than the maximum radius R2263d of the projection 2263d and the radius of the addendum circle of the first gear portion 2263c. In addition, on the side where the gap between the inner diameter portion 2202a and the small diameter portion 2263e is narrowed, the outer diameter portion 2202b is retracted in the radial direction beyond the first gear portion (not shown) of the driving side flange 2263 and the projection 2263d. That is, the minimum value R2201min of the radius (distance) of the outer diameter portion 2202b of the eccentric ring 2202 from the rotational axis L1 is smaller than the maximum radius R2263d of the projection 2263d and the radius of the addendum circle of the first gear portion 2263c.

Next, the operation when the cartridge is mounted to the image forming apparatus will be described. As shown in part (a) of Figure 87, the eccentric ring 2202 is in a state of shifting to the drive transmission gear 1781 side due to the influence of gravity or the like. That is, the gap g between the first gear portion (not shown) and the projection 2263d in the region facing the drive transmission gear 1781 is filled with the eccentric ring 2202. When the cartridge is mounted along the mounting direction M, the eccentric ring 2202 comes into contact with the drive transmission gear 1781. Then, as the cartridge mounting operation progresses, the cartridge is moved to the mounting position, then, as shown in part (b) of Figure 25, the portion of the eccentric ring 2202 opposing the drive transmission gear 1781 abuts on the drive transmission gear 1781 to move in the direction of the rotational axis L1. At this time, the outer diameter portion 2202b is retracted in the 220B direction beyond the first gear portion (not shown) and the projection 2263d. Therefore, a gap g is formed between the first gear portion (not shown) and the projection 2263d. By this, the driving side flange 2263 can be moved to the mounting position without the eccentric ring 2202 interfering with the drive transmission gear 1781, and the first gear portion (not shown) and the projection 2263d can be properly brought into meshing engagement with the drive transmission gear 1781. As described above, in this Modified Example, the eccentric ring (intermediate member) 2202 moves in the direction perpendicular to the rotational axis L1 (radial direction centered on the rotational axis L1), so that it is possible to take a position for providing the gap g and the position for filling the gap g.

As described above, according to this embodiment and the modified examples, the same effects as those of embodiment 17 can be obtained. In addition, the elements of each of the above-described embodiments can be applied to the structure of this embodiment. In particular, the structures of the first helical tooth (first projection) of the first gear portion of the driving side flange and the second helical tooth (second projection) of the second gear portion (projection 2263d) may be modified to the helical teeth, the flat teeth, the projections and the like shown in Embodiment 2, 3, 4, 5, 6, 10, 11, 12, 13, 14, 16 or 17.

[Embodiment 23]

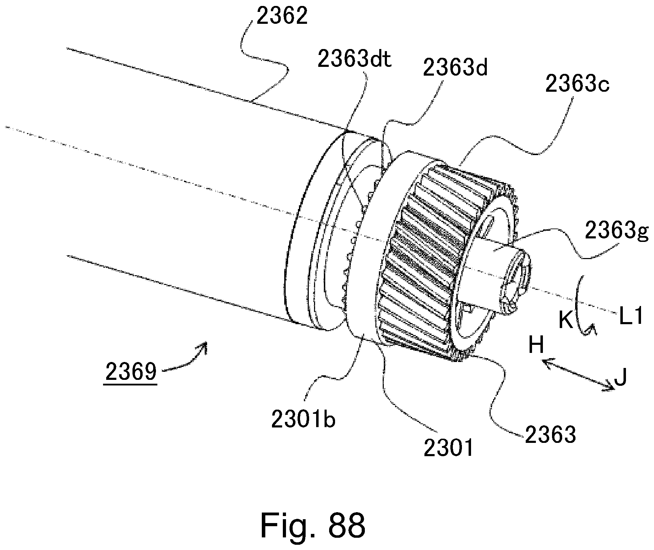

Next, Embodiment 23 will be described below referring to Figures 88 to 91. This embodiment is different from Embodiment 17 in that it has a member capable of filling the gap g between the first gear portion and the second gear portion. The other points are the same as in Embodiment 17, and detailed description thereof will be omitted. In addition, among the elements in this embodiment, the elements corresponding to the elements of Embodiment 1 are assigned the reference numerals associated with the corresponding elements of Embodiment 1. Regarding these elements, the matters not specifically explained are the same as the corresponding elements of Embodiment 1.

<Drive side flange 2363>

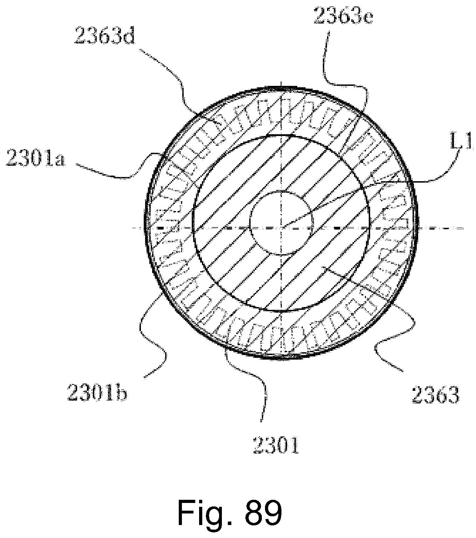

First, referring to Figures 88 and 89, the structure of the driving side flange 2363 will be described. Figure 88 is a partial perspective view of the driving side of the drum unit 2369. Figure 89 is a cross-sectional view of the driving side flange 2363 taken along a plane perpendicular to the rotational axis L1 and passing through the elastic member 2301. The driving side flange 2363 is provided, around the rotational axis L1, with a first gear portion (first unit side gear portion) 2363c, a projection 2363d, a small diameter portion 2363e, and a cylindrical support portion 2363g, and further, the small diameter portion 2363e is provided with an elastic member 2301 mounted thereon.

The first gear portion 2363c is an helical tooth having a helix angle $\alpha1$. The cylindrical support portion (projection) 2363g has a cylindrical shape centered on the rotational axis L1 and is provided so as to project from the first gear portion 2363c in the direction opposite to the drum 2362 (downstream side in the J direction) along the rotational axis L1. The small diameter portion 2363e has a substantially cylindrical shape, and is provided so as to project from the first gear portion 2363c toward the drum 2362 side (upstream side in the J direction) along the rotational axis L1. The projections (second unit side gear portion, second gear portion, second rotation part) 2363d includes a plurality of projections (second projections, teeth) 2363dt extending in the radial direction with respect to the rotational axis L1 and is provided on the drum 2362 side (upstream side in the J direction) of the small diameter portion 2363e along the axis L1. The plurality of projections 2363dt are formed in a shape capable of engaging with the second main assembly gear portion 1781d of the drive transmission gear 1781 and transmitting (meshing) the driving force. Specifically, the plurality of projections 2263dt are projections projecting in the radial direction with respect to the rotational axis L1, and the free ends thereof are structured to be substantially at the same position as the addendum circle diameter of the first gear portion 2363c. In addition, the number of projections 2363dt is the same as the number of teeth of the first gear portion 2363c, and they are arranged at equal intervals in the rotational direction K about the rotational axis L1. In this manner, the plurality of projections 2363dt can mesh with the second main assembly gear portion 1781d and transmit the rotational driving force, and therefore, in this respect, the plurality of projections 2363dt can be said to be the second gear, and the projection 2363d is the second gear portion. The projection 2363d may be the gear portion shown in the second gear portion 1763d of Embodiment 17.

As shown in Figure 89, the elastic member (intermediate member) 2301 has a generally cylindrical shape, and includes an inner diameter portion 2301a and an outer diameter portion 2301b. The diameter of the inner diameter portion 2301a is selected to be equal to or smaller than the diameter of the small diameter portion 2363e of the driving side flange 2363. In addition, the radius of the outer diameter portion 2301b is selected to be larger than the radius of the addendum circle of the first gear portion 2363c and the projection 2363d of the driving side flange 2363. The elastic member 2301 is made of an elastically deformable material such as sponge or rubber. The elastic member (intermediate member) 2301 is a member which fills the gap g between the first gear portion 2363c and the projection 2363d.

The driving side flange 2363 and the elastic member 2301 are supported in a state that the inner diameter portion 2301a is press-fitted around the small diameter portion 2363e. Even if the tightening to the small diameter portion 2363e is loose such that the relative rotation therebetween is easy, no problem arises, and therefore, any setting may be used. In addition, as described above, the outer diameter portion 2301b of the elastic member 2301 has a radius larger than that of the first gear portion 2363c and the projection 2363d, so that the outer diameter portion 2301b projects beyond the first gear portion 2363c and the projection 2363d in the radial direction.

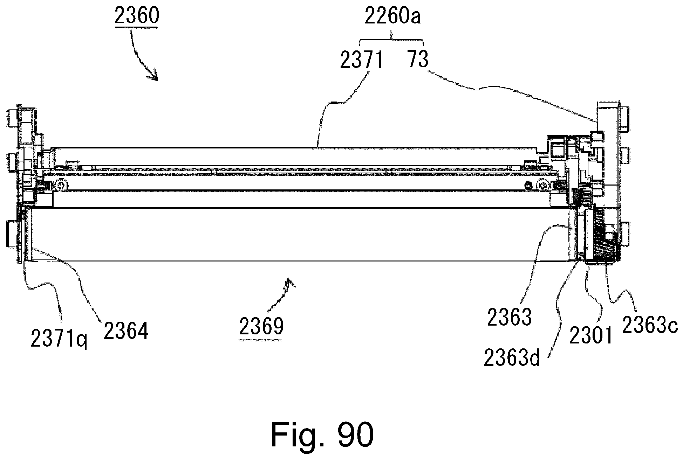

Next, referring to Figure 90, a state in which the drum unit 2369 is assembled to the cleaning unit 2360 will be described. Figure 90 is an illustration showing a state in which the drum unit 2369 is assembled to the cleaning unit 2360. The cleaning frame 2360a of the cleaning unit 2360 supports the drum unit 2369. The cleaning frame 2360a includes a frame member 2371 and a drum bearing member 73. The frame member 2371 is provided with a drum sliding portion 2371q.

Similarly to that described in Embodiment 17, when the drive transmission gear 1781 rotates in a predetermined direction after the driving side flange 2363 of the drum unit 2369 engages with the drive transmission gear 1781 the driving side flange 2363 rotates in interrelation with the drive transmission gear 1781, and on the other hand,, a thrust force in the H direction is produced to the drum unit 2369, as described above, and the thrust force brings the non-drive drum flange 2364 and the drum sliding portion 2271q into contact with each other, so that movement the drum unit 2269 in the H direction is restricted. The other structures of the cleaning unit 2360 are the same as those of Embodiment 17, the description thereof will be omitted.

<Engagement between driving side flange 2363 and drive transmission gear 1781>

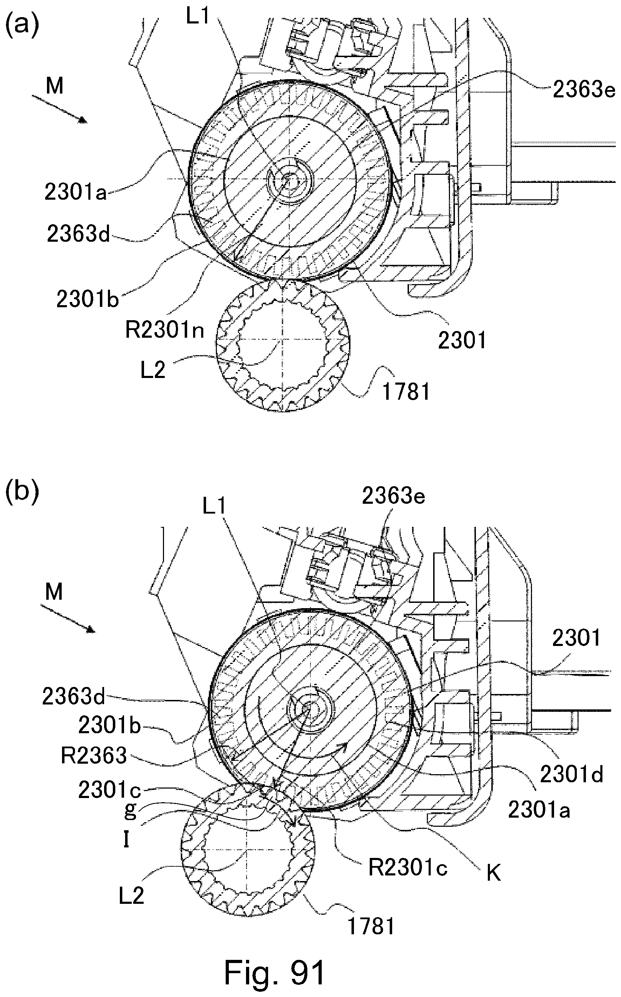

Next, referring to Figure 91, the engagement between the driving side flange 2363 and the drive transmission gear 1781 will be described. Figure 91 is a cross-sectional view of the driving side flange 2363 and the drive transmission gear 1781, taken along a plane perpendicular to the rotational axis L1 and passing through the eccentric ring 2201, wherein part (a) show a state at the instance when the elastic member 2301 is brought into contact with the drive transmission gear 1781, and part (b) shows a state in which the cartridge B has been mounted on the apparatus main assembly A. The developing unit is not shown in Figure 91 for the sake of simplicity.

As shown in part (a) of Figure 91, the outer diameter portion 2301b of the elastic member 2301 is in a state of protruding toward the drive transmission gear 1781 in the radial direction with respect to the rotational axis L1. That is, the radius R2301n centered on the rotational axis L1 of the elastic member 2301 is larger than the maximum radius R2263d of the projection 2263d and the radius of the addendum circle of the first gear portion 2263c. Therefore, when the cartridge is mounted along the mounting direction M, the outer diameter portion 2301 of the elastic member 2301 comes into contact with the drive transmission gear 1781. Then, when the mounting of the cartridge is completed, as shown in part (b) of Figure 91, the elastic member 2301 is compressed and deformed along the shape of the drive transmission gear 1781 due to interference with the drive transmission gear 1781 to form a gap g. Therefore, in the driving side flange 2363, the first gear portion 2363c (Figure 88) and the projection 2363d (Figure 88) project beyond the elastic member 2301 in the deformed portion 2301c of the elastic member 2301. That is, the radius R2301c centered on the rotational axis L1 of the deformed portion 2301c of the elastic member 2301 is smaller than the maximum radius R2263 of the projection 2263d and the radius of the addendum circle of the first gear portion 2263c. In addition, by the elastic deformation of the elastic member 2301, the driving side flange 2363 can be moved to the mounting position, and the first gear portion 2363c and the projection 2363d are properly brought into meshing engagement with the drive transmission gear 1781 to enable the transmission of the drive force.

Then, when the drive transmission gear 1781 rotates in the I direction, the driving side flange 2363 rotates in the K direction, and the elastic member 2301 also rotates accordingly. The elastic member 2301 is deformed in accordance with the shape of the drive transmission gear 1781 when the undeformed portion 2301d of the elastic member 2301 enters the drive transmission gear 1781 as the driving side flange 2363 rotates. Then, the driving side flange 2363 further rotates and is released from the interference state with the drive transmission gear 1781, so that the shape of the deformed portion 2301c is restored. The elastic member 2301 repeats the above-descried states. By this, the driving side flange 2363 and the drive transmission gear 1781 can be appropriately meshed with each other to transmit the drive force. As a result, similarly to the eighteenth embodiment, the driving side flange 2363 receives the driving force FD and the restricting force FB, and can be driven in a backlashless state. Even when the small diameter portion 2363e and the inner diameter portion 2301a rotate relative to each other, the elastic member 2301 is rotated by the drive transmission gear 1781, so that the same state is provided.

In this embodiment, the elastic member 2301 placed between the first gear portion 2363c and the projection 2363d with respect to the direction of the rotational axis L1 has a portion projecting beyond the first gear portion 2363c and the projection 2363d in the radial direction from the center of the rotational axis L1. By deformation, the elastic member 2301 can be retracted in the radial direction beyond the first gear portion 2363c and the projection 2363d (the radius from the center of the rotational axis L1 is reduced). That is, the elastic member 2301 can establish a state in which the gap g is filled and a state in which the gap g is formed. By this, the driving side flange 2363 and the drive transmission gear 1781 can be appropriately meshed with each other, and the driving side flange 2363 can be driven in a backlashless state by receiving the drive force FD and the restriction force FB.

In this embodiment, the elastic member 2301 is provided so as to cover the entire circumference of the small diameter portion 2363e in the circumferential direction about the rotational axis L1, but it may be partially provided. Further, in this embodiment, the radius of the outer diameter portion 2301b of the elastic member 2301 about the rotational axis L1 is constant in the circumferential direction (perfect circular shape as viewed in the direction along the rotational axis L1) before being mounted on the apparatus main assembly A. However, the radius of the outer diameter portion 2301b about the rotational axis L1 may be non-uniform in the circumferential direction.

In this embodiment, an example is shown in which the member provided between the first gear portion 2363c and the projection 2363d with respect to the direction of the rotational axis L1 is an elastic member 2301. However, the member provided between the first gear portion 2363c and the projection 2363d may be a movable member. In such a case, any structure may be used, if the radius R of the movable member from the rotational axis L1 is variable, and the radius R can be reduced to a value smaller than the maximum radius R2363 of the projection 2263d and the radius of the addendum circle of the 1 gear portion 2263c so that the driving side flange 2363 and the drive transmission gear 1781 can be appropriately meshed with each other. As described above, according to this embodiment, the same effect as that of Embodiment 17 can be provided. In addition, the elements of each of the above-described embodiments can be applied to the structure of this embodiment. In particular, the structures of the first helical tooth (first projection) of the first gear portion of the driving side flange and the second helical tooth (second projection) of the second gear portion (projection 2363d) may be modified to the structures of the helical teeth, the flat teeth, the projections and the like of Embodiment 2, 3, 4, 5, 6, 10, 11, 12, 13, 14, 16 or 17.

[Embodiment 24]

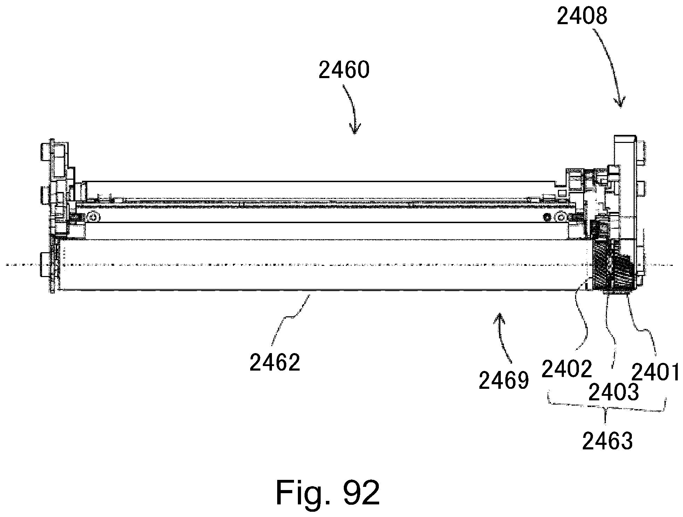

Next, referring to Figures 92 to 99, Embodiment 24 will be described below. This embodiment is different from Embodiment 17, in that the first gear portion and the second gear portion are connected with a play, and/or the connection between the first gear portion and the second gear portion is releasable. The other points are the same as in Embodiment 17, and therefore, the detailed description thereof will be omitted. Further, among the elements in this embodiment, the elements corresponding to the elements of Embodiment 1 are assigned reference numerals associated with the corresponding elements of Embodiment 1. Regarding these elements, the matters not specifically explained are the same as the corresponding elements of Embodiment 1.

<Drive side drum flange 2463>

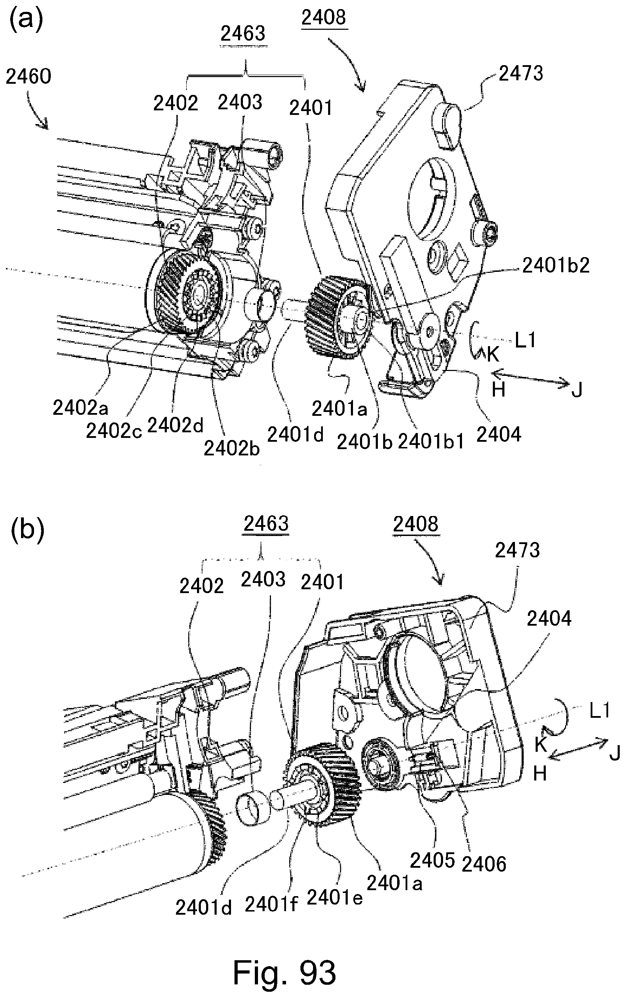

First, referring to Figures 92 and 93, the structure of the driving side drum flange 2463 will be described. Figure 92 is a side view of the cleaning unit 2460 as viewed from the developing unit side along the direction perpendicular to the rotational axis L1. Figure 93 is an exploded perspective view of the cleaning unit 2460 and the driving side drum flange 2463 on the driving side, wherein part (a) is a view as seen from the driving side, and part (b) is a view as seen from the non-driving side.

As shown in Figure 92, in this embodiment, the driving side drum flange 2463 comprises a first gear 2401, a second gear 2402, and a compression spring 2403, and there is provided a drum bearing unit 2408 for functioning the driving side drum flange 2463. Further, as shown in Figure 93, the driving side drum flange 2463 is provided with a second gear 2402, a compression spring 2403, and a first gear 2401 in this order from the drum 2462 side toward the downstream side in the J direction along the rotational axis L1.

The first gear 2401 comprises a first gear portion (first unit side gear portion) 2401a, a cylindrical portion 2401b, a shaft portion 2401d, a ratchet portion 2401e, and a cylindrical portion 2401f, around the rotational axis L1 as the center. The first gear portion 2401a has helical teeth (projections) having a helix angle $\alpha$1, and is a gear portion having the same shape as the first gear portion 1763c of Embodiment 17. The cylindrical portion 2401b has a generally cylindrical shape, and is provided so as to project beyond the end of the first gear portion 2401a on the side away from the drum 2462 (downstream side in the J direction) along the rotational axis L1 direction. In the cylindrical portion 2401b, a hole portion 2401b1 is provided at the center of the rotational axis L1 along the rotational axis L1. In addition, an end surface 2401b2 substantially perpendicular to the rotational axis L1 is provided at the free end of the cylindrical portion 2401b in the projecting direction (downstream side with respect to the J direction). The shaft portion 2401d has a generally cylindrical shape, and projects beyond the end portion of the first gear portion 2401a on the drum 2462 side (downstream side in the H direction) along the rotational axis L1 direction. The ratchet portion 2401e is formed of a plurality of recess and projection slopes arranged in the rotational direction about the rotational axis L1 and is provided so as to project from the end portion of the first gear portion 2401a on the drum 2462 side (downstream side in the H direction). The cylindrical portion 2401f has a generally cylindrical shape, and is provided so as to be inside the ratchet portion 2401e and outside the shaft portion 2401d in the radial direction with respect to the rotational axis L1. In addition, the end surface of the cylindrical portion 2401f in the direction of the rotational axis L1 is provided so as to be at a position recessed from the ratchet portion 2401e (downstream side in the J direction).

The second gear 2402 comprises a second gear portion (second unit side gear portion) 2402a, a hole portion 2402b, a ratchet portion 2402c, and a cylindrical portion 2402d around the rotational axis L1. The second gear portion 2402a has helical teeth (projections) having a helix angle $\alpha$2, has the same number of teeth as the first gear portion 2401a, and has the same shape as the second gear portion 1763d of Embodiment 17. The hole portion 2402b is a through hole provided coaxial with the rotational axis L1 of the second gear portion 2402, and the through hole has such a diameter as to permit rotation relative to the shaft portion 2401d of the first gear portion 2401a. The ratchet portion 2402c is formed of a plurality of recess and projection slopes arranged in the rotational direction about the rotational axis L1 so as to project from the end of the second gear portion 2402a on the side away from the drum 2462 (downstream side in the J direction). The cylindrical portion 2402d has a generally cylindrical shape, and is provided so as to be inside the ratchet portion 2402c and outside the hole portion 2402b in the radial direction with respect to the rotational axis L1. In addition, the end surface of the cylindrical portion 2402d in the rotational axis L1 direction is provided so as to be at a position retracted from the ratchet portion 2402c (upstream side with respect to the J direction). The inner diameter of the compression spring 2403 is larger than the outer diameter of the cylindrical portion 2401f of the first gear 2401 and the outer diameter of the cylindrical portion 2402d of the second gear 2402.

<Drum bearing unit 2408>

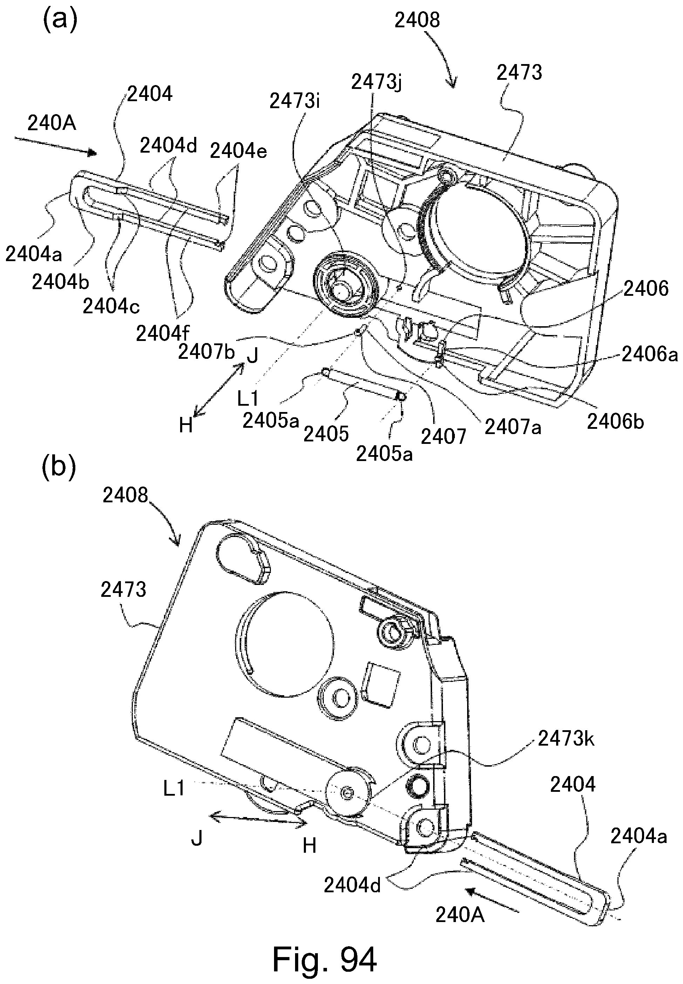

Next, referring to Figure 94, the drum bearing unit 2408 will be described. Figure 94 is an exploded perspective view of the drum bearing unit 2408, wherein part (a) of Figure 94 shows a state as viewed from the non-driving side, and part (b) of Figure 94 shows a state as viewed from the driving side. As shown in part (a) of Figure 94, the drum bearing unit 2408 comprises a drum bearing member 2473, a movable member 2404, a tension spring 2405, a hook member 2406, and a hook pin 2407.

The drum bearing member 2473 is provided with a support shaft 2473i extending coaxially with the rotational axis L1 toward the non-driving side (downstream side in the H direction), and having such a shaft diameter that it is rotatable and movable in the hole portion 2401b1 of the first gear 2401. On the surface of the drum bearing member 2473 viewed from the non-driving side, a pin hole 2473j is provided on the downstream side of the movable member 2404 (which will be described hereinafter) in the movable direction 24A with respect to the rotational axis L1. The drum bearing member 2473 is provided with a hole portion 2473k in the movable direction 24A of the movable member 2404 (which will be described hereinafter) at a position which is on the upstream side of the rotational axis L1 in the movable direction 24A of the movable member 2404 and which faces the support shaft 2473i.

The movable member 2404 has a generally U-shape, and if a bottom portion of the U-shape is a pressed surface 2404a, the movable member 2404 includes projecting portions 2404d extending substantially perpendicular to the pressed surface 2404a from the respective ends of the pressed surface 2404a. The projection 2404d is provided inside the free end thereof with grooves 240e facing each other. From the neighborhood of the root of the projection 2404d to the pressed surface 2404a, the thickness in the direction of the rotational axis L1 is thicker as compared with the free end side, and the thickness different portions are connected by a slope 2404c. The surface on the side with a large thickness is referred to as a thick portion surface 2404b, and the surface on the side with a small thickness is referred to as a thin portion surface 2404f. In addition, the thickness of the thin portion surface 2404f is substantially constant.

The tension spring 2405 is provided with hooking portions 2405a at the respective ends of the spring. The hook member 2406 comprises a substantially I-shaped body portion 2406a and a hook portion 2406b projecting from the center of the body portion 2406a. The hook pin 2407 comprises a substantially cylindrical body portion 2407a and a hook portion 2407b provided at the free end of the body portion 2407a.

<Assembly of drum bearing unit 2408>

Next, the assembly of the drum bearing unit 2408 will be described. As shown in part (b) of Figure 94, the movable member 2404 is assembled to the drum bearing member 2473 by inserting the projecting portion 2404d into the hole portion 2473k. The inserting direction is the movable direction 240A of the movable member 2404. Thereafter, as shown in part (b) of Figure 93, the hook member 2406 is assembled by engaging and fixing both ends of the body portion 2406a with the groove portion 2404e (see part (a) of Figure 94) of the movable member 2404. The fixing method may use any means such as press fitting or bonding. In addition, as shown in part (a) of Figure 94, the hook pin 2407 is assembled to the drum bearing member 2473 by inserting and fixing the body portion 2407a into the pin hole 2473j. The fixing method may be any means such as press fitting or bonding. Then, the tension spring 2405 is mounted to the hook member 2406 and the hook pin 2407 by hooking the hook portion 2406a to the hook portion 2406 and the hook portion 2407b, respectively. As described above, the drum bearing unit 2408 is assembled as shown in Figure 93. When the movable member 2404 is assembled to the drum bearing unit 2408, it is urged by the tension spring 2405 in the direction opposite to the movable direction 2404.

<Assembly of driving side drum flange 2463>

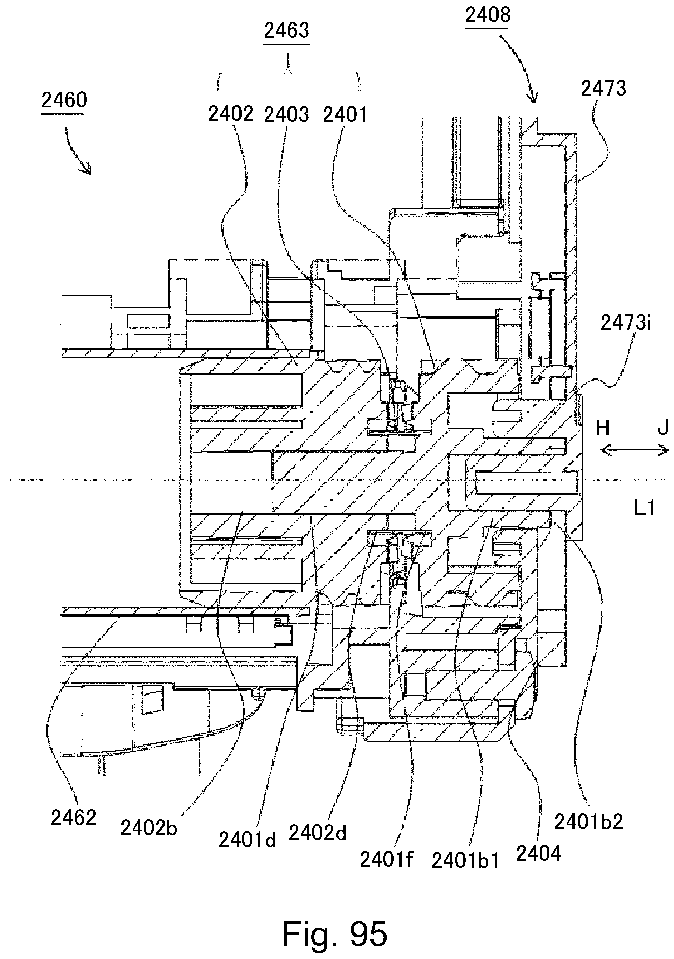

Next, referring to Figure 95, the assembly of the driving side drum flange 2463 will be described. Figure 95 is a partial sectional view of the cleaning unit 2460 in the neighborhood of the driving side drum flange 2463, taken along a plane including the rotational axis L1. As shown in Figure 95, the second gear 2402 is fixed to the end of the drum 2462. The first gear 2401 is supported at the hole portion 2402b so that the shaft portion 2401d is rotatable and movable in the direction of the rotational axis L1 relative to the second gear 2402. In addition, the first gear 2401, is rotatably supported at the hole portion 2401b1 by the support shaft 2473i, movably in the direction of the rotational axis L1 with respect to the drum bearing member 2473. The ends of the compression spring are supported by the cylindrical portion 2401f and the cylindrical portion 2402d with respect to the first gear 2401 and the second gear 2402, respectively and the compression spring 2403 is compressed therebetween. The first gear 2401 and the second gear 2402 are urged by the urging force of the compression spring 2403 in a direction away from each other along the rotational axis L1. Therefore, the first gear 2401 is urged toward the downstream side in the J direction by the urging force of the compression spring 2403, and the end surface 2401b2 of the first gear 2401 is in contact with the movable member 2404.

<Connecting/disconnecting operation between the first gear 2401 and second gear 2402>

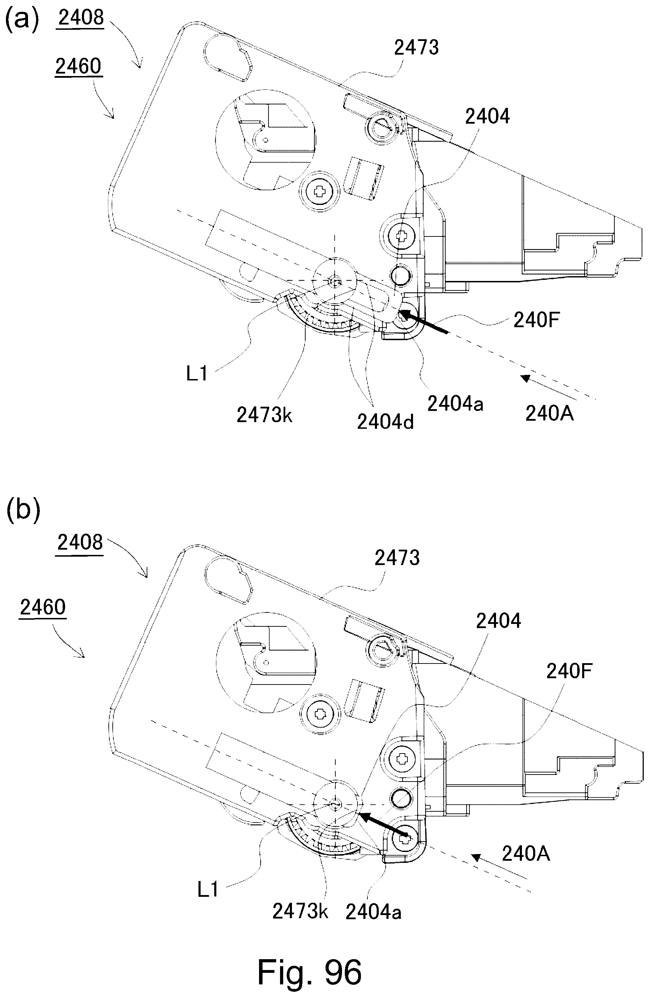

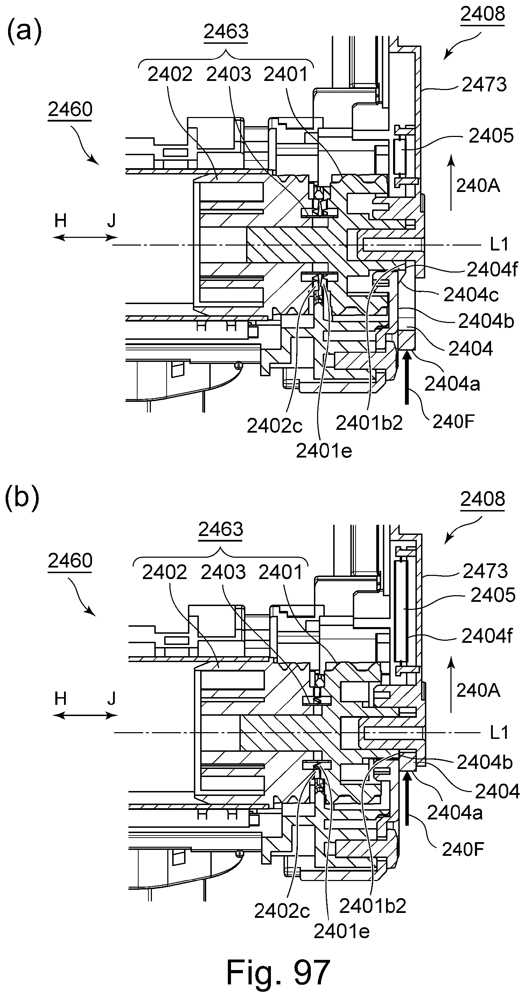

Next, referring to Figures 96 and 97, the connection and disconnection operations between the first gear 2401 and the second gear 2402 will be described. Figure 96 is a view of the cleaning unit 2460 as viewed from the driving side along the rotational axis L1, wherein part (a) shows a state in which no external force is applied to the movable member 2404, and part (b) shows a state in which the movable member 2404 is pressed in the movable direction 240A. Figure 97 is a partial sectional view of the cleaning unit 2460 in the neighborhood of the driving side drum flange 2463, taken along a plane including the rotational axis L1, wherein part (a) shows a state in which no external force is applied to the movable member 2404, and part (b) shows a state in which the movable member 2404 is pressed in the movable direction 240A.

As shown in part (a) of Figure 96, when no external force is applied to the movable member 2404, the tension spring 2405 (see Figures 93 and 94) urges the movable member 2404 in the direction opposite to the movable direction 240A, and a projecting state beyond the drum bearing member 2473 (disconnected state) is maintained. On the other hand, as shown in part (b) of Figure 96, when an external force 240F is applied to the pressed portion 2404a in the movable direction 240A, the movable member 2404 is pushed in the movable direction 240A against the spring force of the tension spring 2405 into a pushed state (connected state).

Next, referring to part (a) of Figure 97, a state of the driving side drum flange 2463 in a state in which no external force is applied to the movable member 2404 will be described. In this state, the movable member 2404 is in a position projecting in the direction opposite to the movable direction 240A (state of part (a) of Figure 96. Therefore, it is urged by the compression spring 2403 toward the drum bearing member 2473 side, and therefore,, the first gear 2401 moves to the downstream side in the J direction, and the end surface 2401b2 is in contact with the thin portion surface 2404f of the movable member 2404. At this time, the ratchet portion 2401e of the first gear 2401 and the ratchet portion 2402c of the second gear 2402 are in a state of being separated in the direction of the rotational axis L1. That is, the driving side drum flange 2463 is in the disconnected state, the rotational driving force cannot be transmitted between the first gear 2401 and the second gear 2402, and the first gear 2401 can idly rotate with respect to the second gear 2402.

Next, a state in which an external force 240F acts on the pressed surface 240a of the movable member 2404 and the movable member 2404 is pushed into the movable direction 240A will be described. When an external force 240F acts on the movable member 2404, the movable member 2404 moves in the movable direction 240A. By this, in the first gear 2401, as shown in part (b) of Figure 97, the end surface 2401b2 moves toward the drum 2462 side (upstream side in the J direction) by the cam action of the slope 2404 of the movable member 2404. Then, the ratchet portion 2401e of the first gear 2401 and the ratchet portion 2402c of the second gear 2402 become close to each other in the direction of the rotational axis L1 so that engagement in the rotational direction with each other is enabled. That is, the driving side drum flange 2463 becomes in a connected state, and the first gear 2401 and the second gear 2402 are in a state of being integrally rotatably connected to transmit the rotational driving force (connected state). Thereafter, the first gear 2401 is in a state in which the end surface 2401b2 is constrained from moving in the direction of the rotational axis L1 by the thick portion surface 2404b and is maintained at a position closer to the drum 2462 side.

Next, the description will be made as to operation in which the external force 240F acting on the movable member 2404 is lost and the movable member 2404 projects in the direction opposite to the movable direction 240A. When the external force 240F of the pressed surface 2404a is lost, the movable member 2404 moves in the direction opposite to the movable direction 240A by the spring force of the tension spring 2405. Then, the thin portion surface 2404f of the movable member 2404 moves to a position facing the end surface 2401b2 of the first gear 2401. Here, since the first gear 2401 is urged toward the drum bearing member 2473 by the spring force of the compression spring 2403, the first gear 2401 moves toward the drum bearing member 2473 until the end surface 2401b2 abuts on the thin portion surface 2401f. At this time, the ratchet portion 2401e of the first gear 2401 and the ratchet portion 2402c of the second gear 2402 are in a state of being separated in the direction of the rotational axis L1. That is, the rotational driving force cannot be transmitted between the first gear 2401 and the second gear 2402 (disconnection state).

As described above, the cartridge B comprises a clutch mechanism including a ratchet portion 2401e, a ratchet portion 2402c, a movable member 2404, and a compression spring 2403, and by the movement of the movable member 2404 relative to the drum bearing member 2473, the first gear 2401 and the second gear 2402 of the driving side drum flange 2463 are connected and separated relative to each other so that switching is capable between a state in which the driving force is transmitted with integrally rotatable connection therebetween and a state in which the driving force cannot be transmitted (disconnection).

<Mounting of cartridge B to main assembly A>

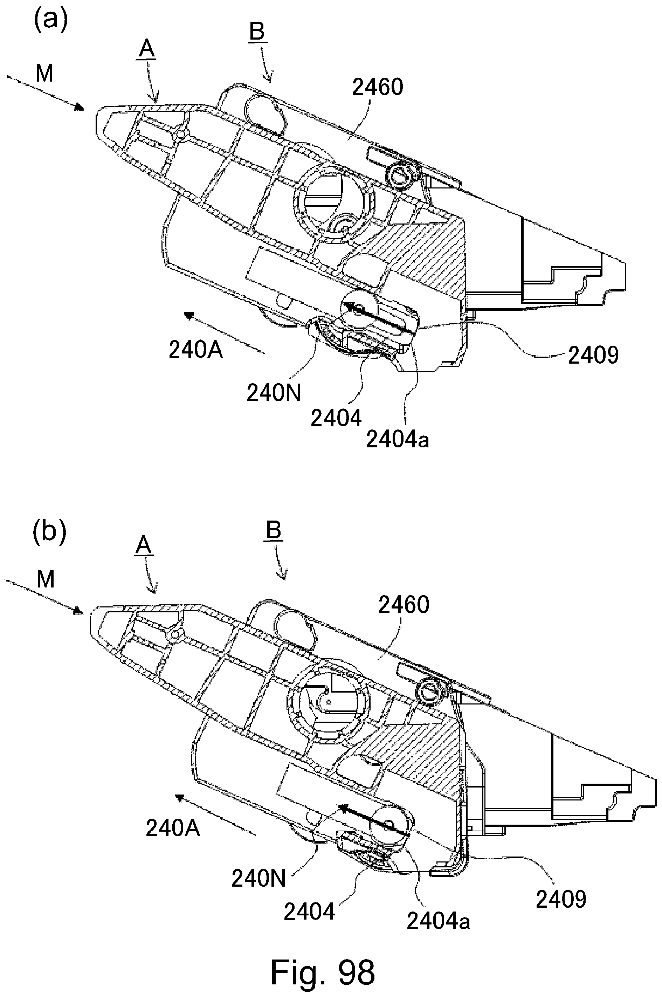

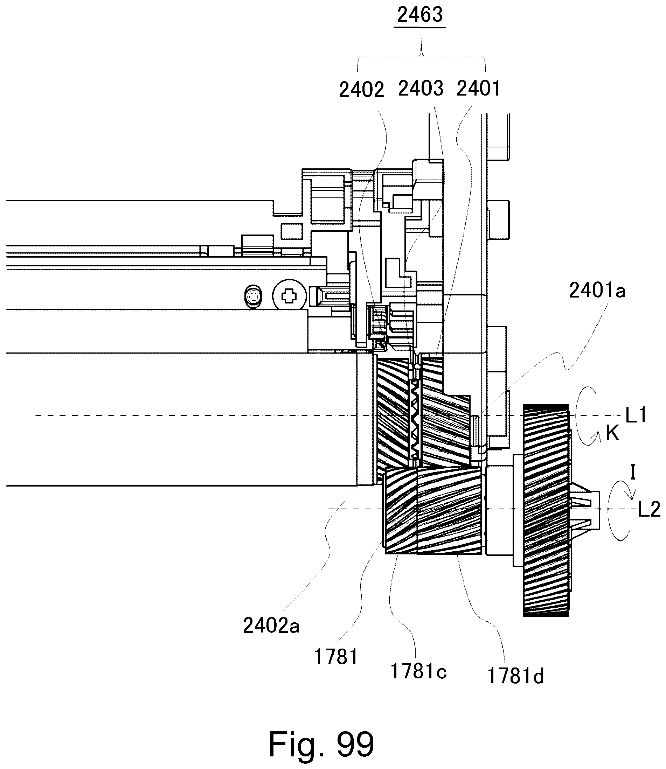

Next, referring to Figures 98 and 99, operation of mounting the cartridge B to the apparatus main assembly A will be described. Figure 98 is an illustration of the cartridge B and the apparatus main assembly A as viewed along the rotational axis L1. Part (a) of Figure 98 shows a state in which the movable member 2404 has started to come into contact with a first driving side plate 2409 while the cartridge B is being mounted to the apparatus main assembly A, and part (b) of Figure 98 shows a state in which the cartridge B has been completely mounted to the apparatus main assembly A. In addition, Figure 99 is an illustration of the driving side drum flange 2463 engaged with the drive transmission gear 1781, as viewed along the direction perpendicular to the rotational axis L1. Figures 98 and 99 do not show portions that are not necessary for explanation in order to simplify the drawings.

As shown in part (a) of Figure 98, the movable direction of the movable member 2404 is structured to be substantially parallel to the mounting direction M of the cartridge B. As the mounting operation of the cartridge B progresses, the movable member 2404 is brought into contact with the first driving side plate 2409 of the apparatus main assembly A at the pressed surface 2404a to receive a reaction force 240N against the mounting operation of the cartridge B. By this reaction force 240N, the movable member 2404 is pushed in the movable direction 240A. When the mounting operation of the cartridge B is completed, the movable member 2404 is completely pushed in the movable direction 240A by the first driving side plate 2409. At this time, as described above, the driving side drum flange 2463 is in the connected state, so that the drive transmission is enabled between the first gear 2401 and the second gear 2402 (see part (b) of Figure 97). Then, as shown in Figure 99, the driving side drum flange 2463 is engaged with the drive transmission gear 1781 in the connected state, the first gear portion 2401a is engaged with the first main assembly gear 1781c, and the second gear portion 2402a is engaged with the second main assembly gear 1782d, respectively.

<Drive operation between driving side drum flange 2463 and drive transmission gear 1781>

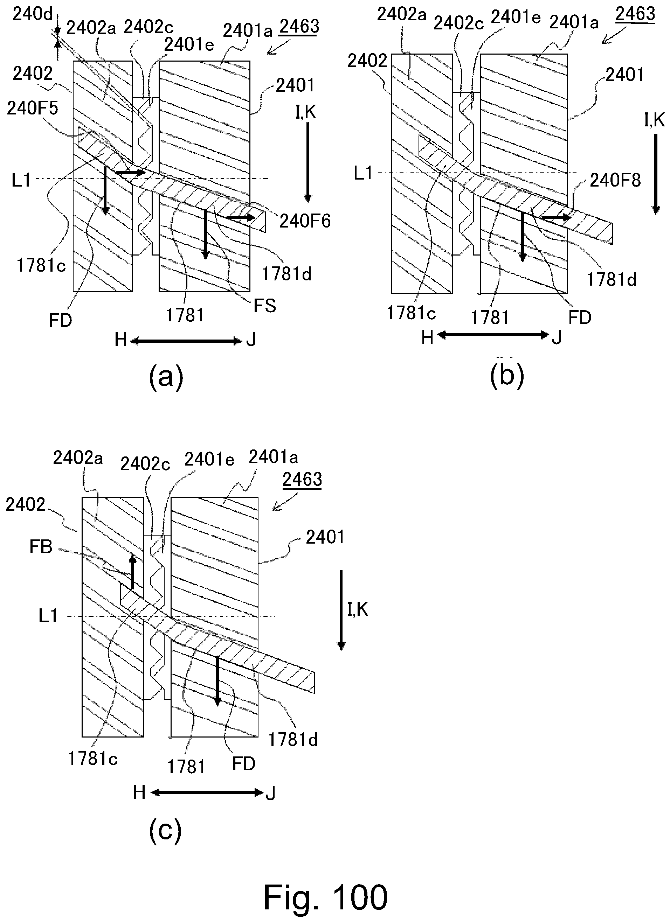

Next, referring to Figure 100, drive operation between the driving side drum flange 2463 and the drive transmission gear 1781 will be described. Figure 100 is a schematic sectional view of the meshing engagement portion between the driving side drum flange 2463 and the drive transmission gear 1781, taken along a plane tangential with a pitch circle of the meshing engagement between the driving side drum flange 2463 and the drive transmission gear 1781, as viewed from the drive transmission gear 1781 side. Part (a) of Figure 100 shows a state in which the ratchet portion 2401e is not engaged with the ratchet portion 2402 in the K direction (state before engagement). In addition, part (b) of Figure 100 shows a state in which the ratchet portion 2401e is engaged with the ratchet portion 2402 in the K direction (engaged state). Part (c) of Figure 100 shows a backlashless state in which the drive transmission gear 1781 is in the balanced position. Figure 100 schematically shows the shapes for the sake of better illustration, the dimensions and the shapes may differ from those shown in Figures 92 to 99.

As shown in part (a) of Figure 100, immediately after the driving side drum flange 2463 in the connected state and the drive transmission gear 1781 mesh with each other, a gap (play) 240d exists between the ratchet portion 2401e and the ratchet portion 2402c, and in many cases, the ratchet portion 2401e and the ratchet portion 2402c are not engaged in the K direction (pre-engagement state). The size of the gap (play) 240d in the K direction can be appropriately selected. Since the second gear 2402 is fixed to the drum 2462, a load is produced in the rotation in the K direction. The drum 2462 also rotates by the driving force FD being applied in the K direction in the state that the second main assembly gear portion 1781d is in contact with the second gear portion 2402a. Therefore, when the drive transmission gear 1781 is driven in the I direction, the second main assembly gear portion 1781d receives a reaction force of the driving force FD from the second gear portion 2402a, and this reaction force produces a thrust force 240F5 in the J direction. Therefore, the drive transmission gear 1781 moves in the J direction by the thrust force 240F5 while being in contact with the second gear portion 2402a. Sooner or later, the first main assembly gear portion 1781c comes into contact with the first gear portion 2401a and applies a driving force FS in the K direction. Here, since there is a gap (play) 240d in the K direction between the ratchet portion 2401e and the ratchet portion 2402c, the first gear 2401 receives the driving force FS to rotate relative to the second gear 2402 to kill the play. Therefore, when the drive transmission gear 1781 is driven in the I direction in the state in which the ratchet portion 2401e and the ratchet portion 2402c are not engaged with each other (the state in which the play exist in the rotational direction between the first gear 2401 and the second gear 2402), the drive transmission gear 1781 moves in the J direction and rotates the first gear 2401 in the K direction relative to the second gear portion 2402a. By this, as shown in part (b) of Figure 100, the ratchet portion 2401e of the first gear 2401 is engaged with the ratchet portion 2402c of the second gear 2402 in the K direction (engaged state, state in which play is killed). In addition, the first main assembly gear portion 1781c receives a reaction force of the driving force FS from the first gear portion 2401a, and this reaction force produces a thrust force 240F6 in the J direction.

As shown in part (b) of Figure 100, in a state in which the ratchet portion 2401e is engaged with the ratchet portion 2402c in the K direction (a state in which the play is killed), the first gear 2401 transmits the driving force FD in the K direction to the second gear 2402 and the drum 2462. That is, after the ratchet portion 2401e engages with the ratchet portion 2402c in the K direction (the play is killed), the first gear 2401 and the second gear 2402 can be regarded as a gear that rotates integrally, as long as the first gear portion 2401 receives the driving force in the K direction. Therefore, the first gear 2401 and the second gear 2402 have the same functions as the driving side drum flange 1764 of Embodiment 17. In addition, the first main assembly gear portion 1781c receives a reaction force of the driving force FD from the first gear portion 2401a, and this reaction force produces a thrust force 240F8 in the J direction. Therefore, by the drive transmission gear 1781 continuing to rotate in the I direction, the drive transmission gear 1781 receives the thrust force 240F8 and further moves in the J direction to reach the balanced position shown in part (c) of Figure 100 to establish the backlashless state. In this backlashless state, the first gear portion 2401a receives the driving force FD from the first main assembly gear portion 1781c, and the second gear portion 2402a receives the restricting force FB from the second main assembly gear portion 1781d, as in the case of Embodiment 17.

As described in the foregoing, in this embodiment, when the cartridge B is alone, the driving side drum flange 2463 is in the state that the first gear 2401 and the second gear 2402 cannot transmit the driving force (relatively rotatable) in the disconnected state, but when the cartridge B is mounted to the apparatus main assembly A, it becomes the connected state in which the first gear 2401 and the second gear 2402 can rotate integrally (the first gear 2401 and the second gear 2402 transmit the driving force) (connected). However, the connected state of the driving side drum flange 2463 of this embodiment is a connected state in which the first gear 2401 and the second gear 2402 have a play in the rotational direction. That is, the ratchet portion 2401e and the ratchet portion 2402c have a gap (play) 240d in the K direction, and the first gear 2401 and the second gear 2402 can rotate relatively by the amount of the gap (play) 240d. When the first gear 2401 rotates in the K direction relative to the second gear 2402 and the ratchet portion 2401e engages with the ratchet portion 2402c in the K direction and the gap is killed, the first gear 2401 and the second gear 2402 rotate integrally. That is, the first gear 2401 and the second gear 2402 rotate in the state that the teeth of the first gear portion 2401a are fixed so as not to move (rotate) in the I direction relative to the teeth of the second gear portion 2402a, and the teeth of the second gear portion 2402a are fixed so as not to move (rotate) in the direction opposite to the I direction relative to the first gear portion 2401a. Even if the driving side drum flange 2463 is structured to be capable of taking a connected state and a disconnected state as described above, the same effect as that of Embodiment 17 can be provided. In addition, even if the first gear 2401 and the second gear 2402 are connected in a state of having play, the same effect as that of Embodiment 17 can be provided.

In this embodiment, when the driving side drum flange 2463 is in the disconnected state, the first gear 2401 cannot transmit the drive force to the second gear 2402 and the drum 2462, but the present invention is not limited to such an example. That is, when the driving side drum flange 2463 is in the disconnected state, the second gear 2402 may be in a state in which the driving force cannot be transmitted to the first gear or the drum 2462, or the first gear 2401 and the second gear 2402 may be in a state in which the driving force cannot be transmitted to the drum 2462. In addition, in this embodiment, by changing the position of the first gear 2401 with respect to the drum 2462, the switching is effected between the disconnected state and the connected state of the driving side drum flange 2463, but, the driving side drum flange may be switched between the disconnected state and the connected state of the driving side drum flange 2463, by changing the position of the second gear 2402 with respect to the drum 2462.

Further, in this embodiment, The use is made with the clutch mechanism for switching between the connecting this state and disconnected state of the driving side drum flange 2463, by relative movement between the first gear 2401 and the second gear 2402 in the direction of the rotational axis L1 toward and away from each other. However, the relative movement of the first gear 2401 and the second gear 2402 in the direction of the rotational axis L1 is not essential, and for example, the use can be made with a clutch mechanism with which at least a part of at least one of the first gear 2401 and the second gear 2402 is moved in a radial direction with respect to the rotational axis L1 to switch between the disconnected state and the connecting this state.

Further, in this embodiment, the movable member 2404 is moved with respect to the drum bearing member 2473 in order to switch between the disconnected state and the connected state of the driving side drum flange 2463. The movement of the movable member 2404 with respect to the drum bearing member 2473 is caused by the movement of the cartridge B relative to the apparatus main assembly A. However, The structure for moving the movable member 2404 with respect to the drum bearing member 2473 may be such that the movable member 2404 is moved in interrelation with the movement of a member such as a door provided in the apparatus main assembly A, in a state where the cartridge B is mounted on the apparatus main assembly A.

In addition, in this embodiment, when the driving side drum flange 2463 is in the disconnected state, the first gear 2401 is structured to be able to rotate one or more full-rotation relative to the second gear 2402, but the structure may be such that the rotation is less than one full-rotation.

Further, in this embodiment, the driving side drum flange 2463 is structured to be to be capable of taking the connected state and the disconnected state, but the structure may be such that the disconnected state cannot be taken. That is, The structure may be such that the connected state is taken in which the drive transmission is enabled in the state that the play (gap 240d) exists in the rotational direction between the first gear 2401 and the second gear 2402, but the disconnected state is not taken. Further, the size of the play (gap 240d) in the rotational direction between the first gear 2401 and the second gear 2402 may be such that the amount of rotation that the first gear 2401 can rotate relative to the second gear 2402 is less than one full-rotation.

Further, in this embodiment, The structure may be such that when the driving side drum flange 2463 is in the connected state, no play (gap 240d) exists always in the rotational direction between the first gear 2401 and the second gear 2402.

As described above, according to this embodiment, the same effect as that of Embodiment 17 can be provided. Further, the elements of each of the above-described embodiments can be applied to the structure of this embodiment. In particular, the structures of the helical teeth of the first gear portion 2401a and the helical teeth of the second gear portion 2402a of the driving side flange 2463 are modified to the helical teeth, the flat teeth, the projections, and so on of Embodiments 2, 3, 4, 5, 6, 10, 11, 12, 13, 14, and 16.

[Embodiment 25]

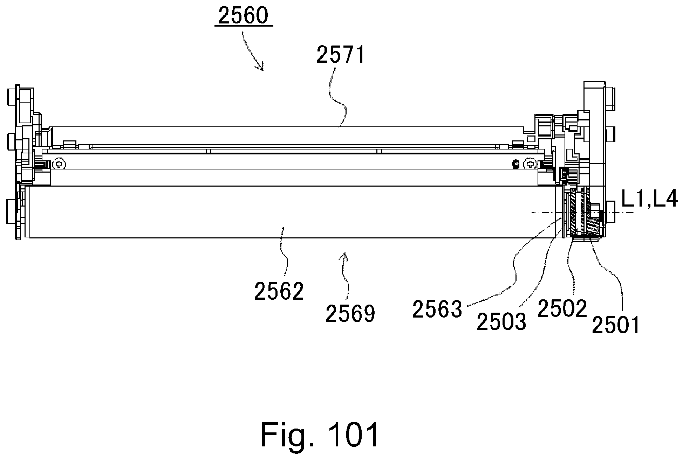

Next, referring to Figures 101 to 107, Embodiment 25 will be described. This embodiment shows another structure of the cartridge B that can be operated by receiving a driving force from the driving transmission gear 1781 of the apparatus main assembly A described in Embodiment 17. In this embodiment, the gear (idler gear 2502) driven in the backlashless state does not transmit the driving force to the drum, and another gear (drive gear portion 2501) transmits the driving force to the drum, as is different from embodiment 17. The other points are the same as in Embodiment 17, and detailed description thereof will be omitted. Further, among the elements in this embodiment, the elements corresponding to the elements of Embodiment 1 are assigned reference numerals associated with the corresponding elements of Embodiment 1. Regarding these elements, the matters not specifically explained are the same as the corresponding elements of Embodiment 1.

<Drum unit 2569 and cleaning unit 2560 >

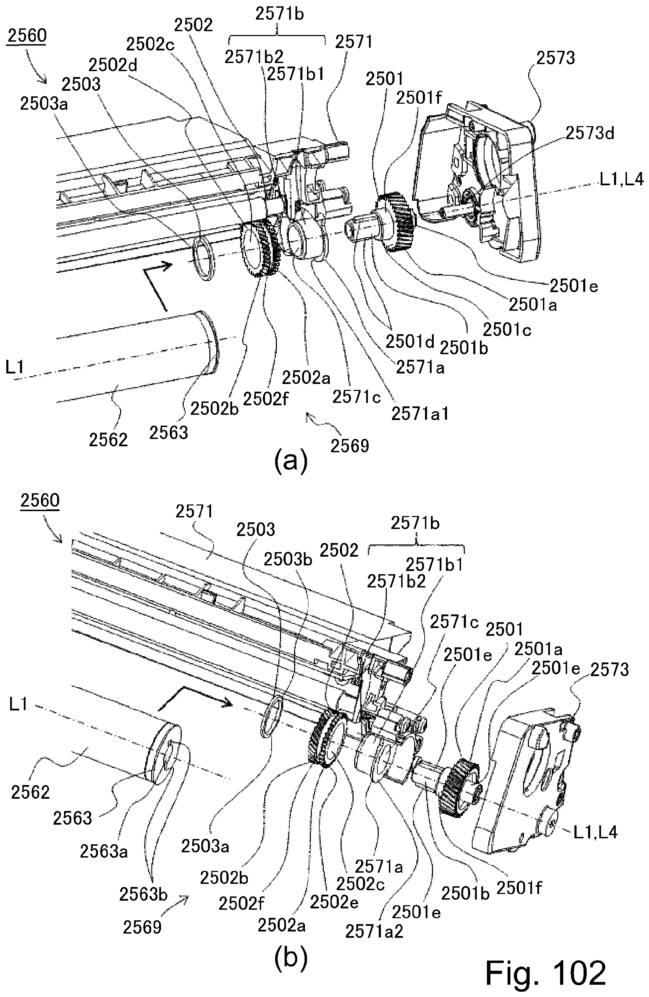

Referring to Figure 101 the structure of this embodiment will be described. Figure 101 is a view of the cleaning unit 2560 as viewed from the developing unit side along the direction perpendicular to the rotational axis L1. As shown in Figure 101, the drum unit 2569 is provided with a drive gear portion 2501, an idler gear 2502, and a locking member 2503, as is different from Embodiment 17. Further, the structures of the frame member 2571 and the driving side flange 2563 are different. These will be described in detail referring to Figure 102. Figure 102 is an exploded perspective view of the driving side of the cleaning unit 2560 and the drum unit 2569, wherein part (a) shows a state as viewed from the non-driving side and part (b) shows a state as viewed from the driving side.

The drive gear portion 2501 comprises, around the rotational axis L1 of the drum, a drive gear portion 2501a, a shaft portion 2501b, an end surface 2501c, a projection 2501d, a cylindrical portion 2501e, and a large diameter shaft portion 2501f. The drive gear (third gear) 2501 is a drive force receiving portion which meshes with (engages with) the drive transmission gear 1781 to receive a drive force for rotationally driving the drum 2562. The drive gear (third gear) 2501 is connected to the drum 2562 so as to be able to transmit a rotational driving force. The drive gear portion 2501a has helical teeth having a helix angle $\alpha 1$. The large diameter shaft portion 2501f has a generally cylindrical shape, and projects from the end surface 2501c on the drum 2562 side of the drive gear portion 2501a along the rotational axis L1. The shaft portion 2501b has a generally cylindrical shape, and projects from the end surface of the large diameter shaft portion 2501f on the drum 2562 side along the rotational axis L1. The projection 2501d is a pair of opposed rib-shaped projections, and projects from the circumference of the shaft portion 2501b in the radial direction with respect to the rotational axis L1. Here, the radius of the free end portion of the projection 2501d is selected to be smaller than the radius of the large diameter shaft portion 2502f. The cylindrical portion 2501e has a generally cylindrical shape, and projects from the end surface of the drive gear portion 2501a on the side away from the drum 2562 along the rotational axis L1.

The idler gear 2502 is a gear integrally molded with a resin which can rotate about the rotational axis L4. The idler gear 2502 portion includes a first gear portion (first portion side gear portion) 2502a, a second gear portion (second portion side gear portion) 2502b, a hole portion 2502c, an inner side surface 2502d, an outer surface 2502e, and a small diameter portion 2502f. The first gear portion 2502a has helical teeth (projections) having a helix angle $\alpha 1$, and the number thereof is the same as the number of the teeth of the drive gear portion 2501a. The second gear portion 2502b has helical teeth (projections) having a helix angle $\alpha 2$, and the number thereof is the same as the number of the teeth of the first gear portion 2502a. The small diameter portion 2502f has a generally cylindrical shape and is provided between the first gear portion 2502a and the second gear portion 2502b. The hole portion 2502c is a round hole penetrating from the first gear portion 2502a to the second gear portion 2502b. The inner side surface 2502d is an end surface of the idler gear 2502 on the drum 2562 side. The outer side surface 2502e is an end surface of the idler gear 2502 opposite to the drum 2562. In this embodiment, the first gear portion 2502a has the same number of teeth as the drive gear portion 2501a, but the number of teeth of each of the first gear portion 2502a and the second gear portion 2502b is the drive gear portion may be different from that of the drive gear portion 2501a.

The locking member 2503 has a ring shape centered on the rotational axis L1. The inner diameter portion of the ring is an inner diameter portion 2503a, and the end surface opposite to the drum 2562 is an end surface 2503b.

The driving side flange 2563 has a generally cylindrical shape, and is provided with a hole portion 2563a and a locking groove 2563b centered on the rotational axis L1. The hole portion 2563a is a round hole along the rotational axis L1 of the driving side flange 2563. The locking groove 2563b is a pair of opposing grooves, which project radially from the circumference of the hole portion 2563a about the rotational axis L1.

As described above, the drum unit 2569 mainly includes the drum 2562, the drive gear portion 2501, the idler gear 2502, the locking member 2503, and the driving side flange 2563.

The frame member 2571 is provided with a locking wall 2571a, a cylindrical portion 2571b, and an inner diameter portion 2571c. The locking wall 2571a has a substantially disk shape centered on the rotational axis L1, and the end surface on the drum 2562 side is the inner side surface 2571a1 and the end surface on the opposite side to the drum 2562 is the outer surface 2571a2. The cylindrical portion 2571b has a generally cylindrical shape with a step having a free end diameter which is smaller by the size of the step. The outer peripheral surface of the cylindrical portion 2571b is the outer peripheral surface 2571b1. In addition, the portion where the diameter of the free end of the cylindrical portion 2571b is small is referred to as the stepped portion 2571b2. The inner diameter portion 2571c has a round hole shape penetrating the locking wall 2571a and the cylindrical portion 2571b.

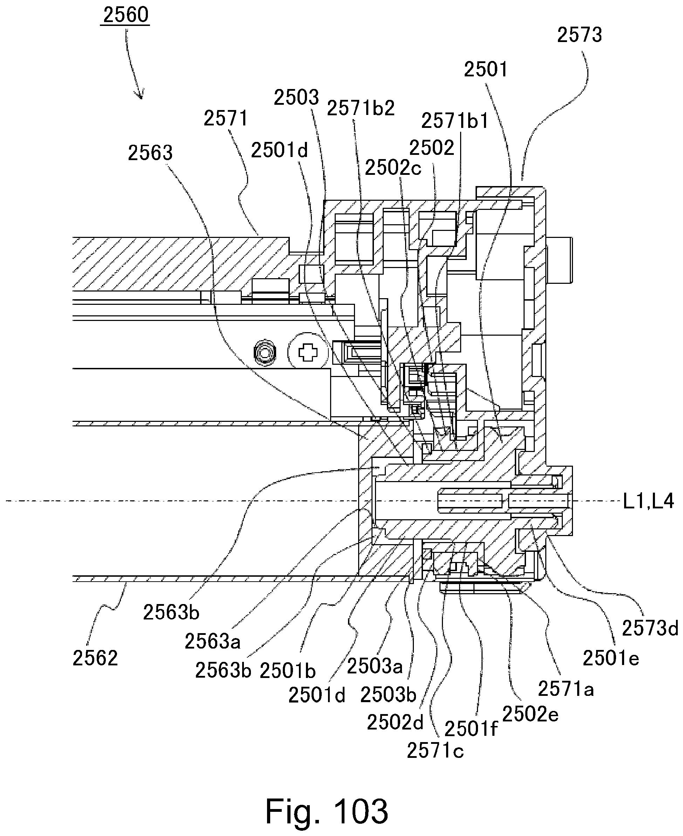

Next, referring to Figure 103, the assembly of the cleaning unit 2560 will be described. Figure 103 is a partial sectional view of the cleaning unit 2560 taken along a plane including the rotational axis L1 in the neighborhood of the driving side flange 2563.

As shown in Figure 103, the driving side flange 2563 is fixed to the end of the drum 2562 by any means such as adhesion, clamping or press-fitting. The hole portion 2502c of the idler gear 2502 is fitted around the outer peripheral surface 2571b1 of the frame member 2571 and is supported rotatably about the rotational axis L1. In addition, the outer surface 2502e of the idler gear 2502 and the locking wall 2571a of the frame member 2571 are arranged so as to oppose each other.

The inner diameter portion 2503a of the locking member 2503 is fitted around the stepped portion 2571b2 of the frame member 2571, and is fixed by any means such as adhesion or press fitting. As shown in the Figure, the outer peripheral surface diameter of the locking member 2503 is selected to be larger than the diameter of the outer peripheral surface 2571b1 of the frame member 2571. By this, the locking member 2503 prevents the idler gear 2502 from disengagement toward the drum 2562.

The drive gear portion 2501 is mounted so that the shaft portion 2501b is passed through the inner diameter portion 2571c of the frame member 2571 from the side opposite to the drum 2562, and the large diameter shaft portion 2501f is rotatably supported by the inner diameter portion 2571c. In addition, the drive gear portion 2501 is set so that the phase of the projection 2501d and the phase of the locking groove 2563b of the driving side flange 2563 match each other (insertable state), and the shaft portion 2501b of the drive gear portion 2501 is inserted into the hole portion 2563a. By doing so, the drive gear portion 2501 and the driving side flange 2563 are integrally and rotatably engaged (rotatable drive force can be transmitted).

Next, the cylindrical portion 2501e of the drive gear portion 2501 is inserted into the hole 2573d of drum bearing member 2573. Thereafter, the drum bearing member 2573 is fixed to the frame member 2571 by screw tightening or the like. By doing so, the drive gear portion 2501 is supported by the cleaning unit 2560 rotatably about the rotational axis L1.

With the cleaning unit 2560 assembled in this manner, the drive gear portion 2501, the idler gear 2502, the driving side flange 2563, and the drum 2562 can rotate about the rotational axis L1. That is, the rotational axis L4 of the idler gear 2502 is coaxial with the driving side flange 2563 and the rotational axis L1 of the drum 2562.

In addition, the rotational driving force received by the driving gear 2501 can be transmitted to the driving side flange 2563 and the drum 2562. On the other hand, the idler gear 2502 is supported rotatably about the rotational axis L1 relative to the drive gear portion 2501, the driving side flange 2563, and the drum 2562, and the rotational drive force received by the idler gear 2502 is not transmitted to the drive gear portion 2501, the driving side flange 2563 or the drum 2562.

<Drive transmission operation>

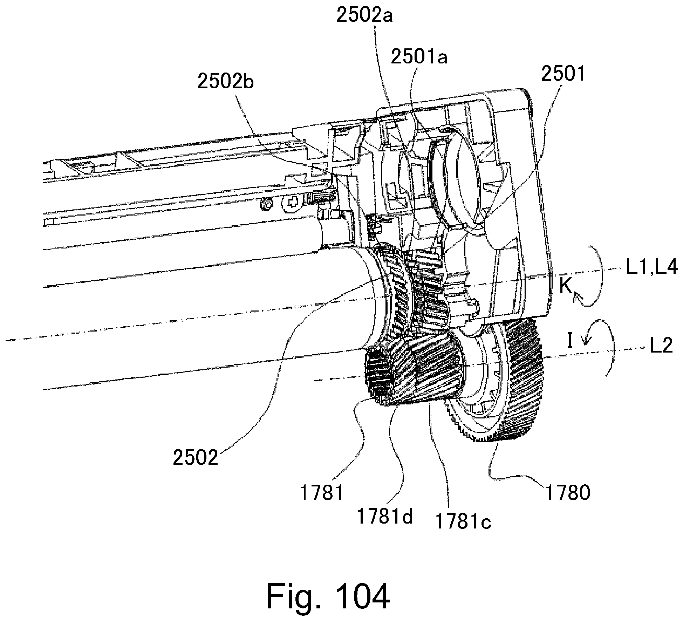

Next, referring to Figure 104, a state in which the cartridge is mounted in the image forming apparatus will be described. Figure 104 is a perspective view illustrating a cleaning unit 2560 and a drive transmission gear 1781 in a state in which the cartridge B is mounted in the apparatus main assembly A. However, for the sake of better illustration, a part of the cleaning unit 2560, a developing unit, and a part of the apparatus main assembly A are not shown.

As shown in Figure 104, when the cartridge is mounted in the image forming apparatus, the drive gear portion 2501a of the drive gear portion 2501 meshes with the first main assembly gear portion 1781c of the drive transmission gear 1781. In addition, in the idler gear portion 2502, the first gear portion 2502a meshes with the first main assembly gear portion 1781c of the drive transmission gear 1781, and the second gear portion 2502b meshes with the second main assembly gear portion 1781d.

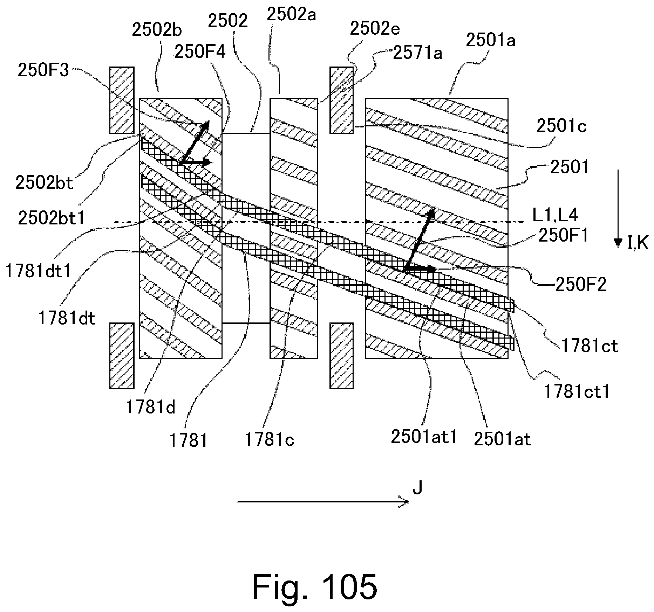

Next, referring to Figures 105, 106 and 107, a state in which the drive is transmitted from the drive transmission gear 1781 to the drive gear portion 2501 when the drive transmission gear 1781 is rotated in the I direction (see Figure 104) will be described. Figures 105, 106 and 107 are schematic sectional views of meshing engagement portion between the drive gear portion 2501, the idler gear 2502 and the drive transmission gear 1781, and the meshing of the drive gear portion 2501 and the idler gear 2502 with the drive transmission gear 1781, taken along a plane tangent to the pitch circle, as viewed from the drive transmission gear 1781 side. The shapes shown in Figures 105, 106 and 107 are schematically shown for the sake of better illustration, and therefore, the dimensions and shapes may differ from those shown in Figures 101 to 104.

In the following description, in the drive gear portion 2501a of the drive gear portion 2501, one gear tooth is a drive helical teeth 2501at, and a surface on the upstream side thereof in the I direction is a tooth surface 2501at1. In the first gear portion 2502a of the idler gear 2502, one gear 1 tooth is a first helical tooth 2502at, and a tooth surface on the upstream side thereof in the I direction is a tooth surface 2502at1. In the second gear portion 2502b of the idler gear 2502, one gear tooth is a second helical tooth 2502bt, and a tooth surface on the downstream side thereof in the I direction is a tooth surface 2502bt1.

As shown in Figure 105, when the drive transmission gear 1781 rotates in the I direction and the first main assembly gear portion 1781c drives the drive gear portion 2501a of the drive gear portion 2501, the tooth surface 1781ct1, on the downstream side in the I direction, of the first main assembly gear portion 1781c receives a drive reaction force 250F1 from the tooth surface 2501at1, on the upstream side in the I direction, of the drive gear portion 2501a. At this time, since the first main assembly gear portion 1781c of the drive transmission gear 1781 has helical teeth, the drive transmission gear 1781 moves in the J direction by the thrust force 250F2 in the J direction which is a component force direction of the reaction force 250F1.

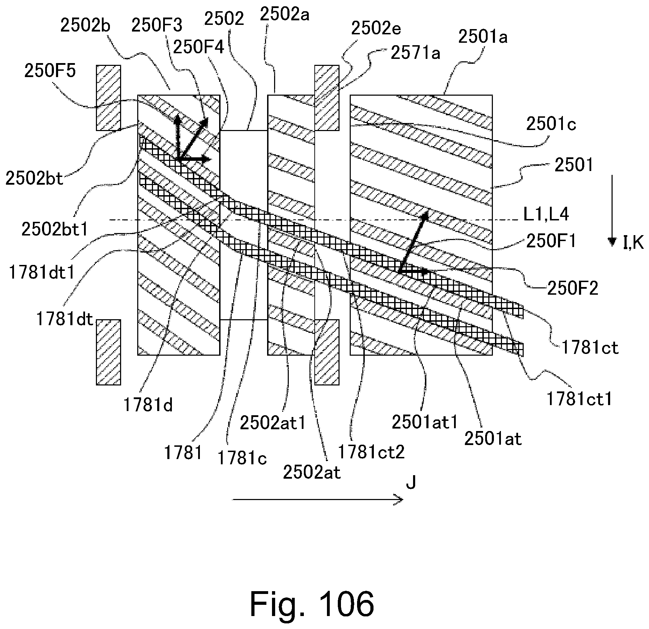

In the process of the drive transmission gear 1781 moving in the J direction while driving the drive gear portion 2501a, the tooth surface 1781dt1, on the upstream side in the I direction of the second main assembly gear portion 1781d, is brought into contact with the tooth surface 2502bt1, on the downstream side in the I direction, of the second gear portion 2502b of the idler gear 2502. At this time, the idler gear 2502 receives a force 250F3 at the tooth surface 2502bt1. The idler gear 2502 moves in the J direction by the component force 250F4 of the force 250F3 in the J direction, and as shown in Figure 106, the outer surface 2502e abuts on the locking wall 2571a, so that the position in the J direction is determined.

Thereafter, in the process of the drive transmission gear 1781 further moving in the J direction while driving the drive gear portion 2501a, the tooth surface 2502bt1, on the downstream side in the I direction, of the second gear portion 2502b receives a component force 250F5, in the I direction, of the force 250F3. By this component force 250F5, the second gear portion 2502b of the idler gear 2502 is moved toward the downstream side in the I direction relative to the second main assembly gear portion 1781d at the position of the engagement with the second main assembly gear portion 1781d of the drive transmission gear 1781. At the same time, the idler gear 2502 rotates toward the downstream side in the I direction relative to the drive gear portion 2501.

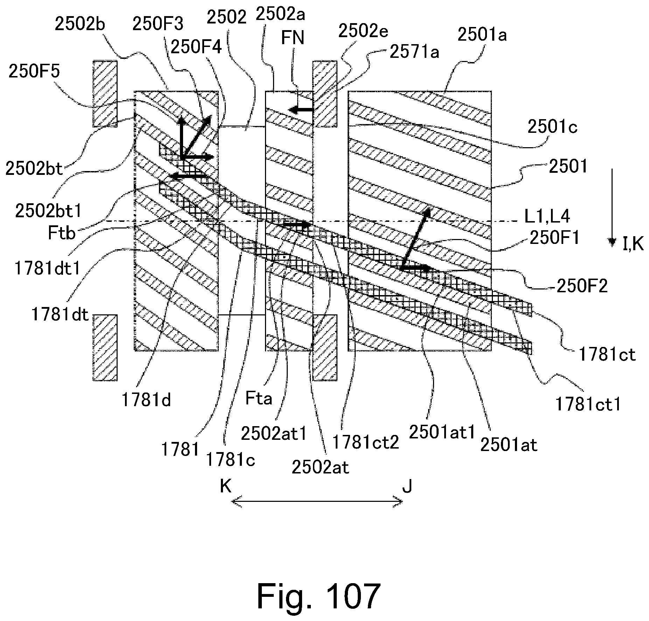

Thereafter, the drive transmission gear 1781 further moves in the J direction while driving the drive gear portion 2501a, and the second gear portion 2502b rotates toward the downstream side in the I direction relative to the second main assembly gear portion 1781d at the engagement portion with the second main assembly gear portion 1781d. Then, as shown in Figure 107, the tooth surface 2502at1, on the upstream side in the I direction, of the first gear portion 2502a of the idler gear 2502 comes into contact with the tooth surface 1781ct2, on the downstream side in the I direction, of the first main assembly gear portion 1781c.

At this time, the tooth surface 1781dt1, on the upstream side in the I direction, of the second main assembly gear portion 1781d is brought into contact with the tooth surface 2502bt1, on the downstream side in the I direction, of the second gear portion 2502b of the idler gear 2502, and the tooth surface 2502at1, on the upstream side in the I direction, of the first gear 2502a of the idler gear 2502 is brought into contact with the tooth surface 1781ct2, on the downstream side in the I direction, of the first main assembly gear portion 1781c. The tooth of the first gear portion 2502a is fixed so as not to move (rotate) in the I direction relative to the teeth of the second gear portion 2502b, and the tooth of the second gear portion 2502b is fixed so that it cannot move (rotate) in the direction opposite to the I direction relative to the tooth of the first gear portion 2502a. Therefore, the relative movement of the second gear portion 2502b relative to the second main assembly gear portion 1781d in the I direction stops at the engagement portion with the second main assembly gear portion 1781d, and the relative movement of the first gear portion 2502a relative to the first main assembly gear portion 1781c in the I direction stops at the engagement portion with the first main assembly gear portion 1781c. At the same time, the relative rotation of the idler gear 2502 relative to the drive gear portion 2501 also stops.

Here, in general, in the meshing engagement of helical tooth gears, if the gear portions cannot move relative to each other in the rotational direction in the meshing engagement portion therebetween, the gear portions cannot move relative to each other in the rotational axis direction. Also in this embodiment, the drive transmission gear 1781 and the idler gear 2502 cannot move in the rotational direction (I direction, K direction) relative to each other at the engagement portion due to the meshing engagement between the second gear portion 2502b and the second main assembly gear portion 1781d and the meshing engagement between the first gear portion 2502a and the first main assembly gear portion 1781c. In other words, the relative position of the drive transmission gear 1781 and the idler gear 2502 in the J direction is determined at the meshing engagement portion. That is, the second main assembly gear portion 1781d receives a thrust force Ftb in the K direction by the meshing engagement with the second gear portion 2502b, and the first main assembly gear portion 1781c receives the thrust force Fta in the J direction by the meshing engagement with the first gear portion 2502a.

In addition, the first main assembly gear portion 1781c continues to receive the thrust force 250F2 in the J direction by the meshing engagement with the drive gear portion 2501a, and tends to move in the J direction integrally with the idler gear 2502. However, as described above, the outer surface 2502e of the idler gear 2502 is in contact with the locking wall 2571a and receives the reaction force FN in the K direction to, and therefore, the position in the J direction is determined. For this reason, the position, in the J direction, of the drive transmission gear 1781 which cannot move in the J direction relative to the idler gear 2502, is also determined, and this is the balanced position of the drive transmission gear 1781. That is, the force Fta, the force Ftb, and the force 250F1 are in a balanced state. Therefore, the drive transmission gear 1781 rotates in a state in which the position is fixed at the balanced position, and drives the drive gear portion 2501 and the idler gear 2502. The idler gear 2502 is driven in a backlashless state.

As described in the foregoing, in this structure, the drive force can be transmitted from the drive transmission gear 1781 to the drive gear portion 2501 in a state in which the positions of the drive transmission gear 1781 and the idler gear 2502 in the J direction are fixed.

In the above description, the description of the movement of the idler gear 2502 by the component force 250F4 and the component force 250F5 acting on the tooth surface 2502bt1 of the idler gear 2502 has been made separately. However, both forces act at the same time, and therefore, the movement of the idler gear 2502 in the J direction and the rotation of the idler gear 2502 relative to the drive transmission gear 1781 may occur at the same time due to the torque required to drive the idler gear 2502.

In this manner, by providing the idler gear 2502 including two helical tooth gear portions having the same twisting direction and different helix angles so as to mesh with the first main assembly gear portion 1781c and the second main assembly gear portion of the drive transmission gear 1781, a cartridge B can be provided which is applicable to the apparatus main assembly A including the drive transmission gear 1781 described in Embodiment 17. Further, by providing the drive gear portion 2501 which meshes with the drive transmission gear 1781, it is possible to receive the driving force from the drive transmission gear 1781 and drive the drum 2562 or the like included in the cartridge B.

In this embodiment, the rotational axis L4 of the idler gear 2502 is coaxial with the rotational axis L1 of the drum 2562, but the present invention is not limited to such an example. The rotational axis L4 and the rotational axis L1 may be non-coaxial but parallel, or the rotational axis L4 and the rotational axis L1 may be non-coaxial and non-parallel. In addition, although the idler gear 2502 is rotatably supported by the outer peripheral surface 2571b1 of the frame member 2571, it may be rotatably supported by the driving side flange 2563 or the drive gear portion 2501. Further, the idler gear 2502 may be structured to mesh with other gears or the like and transmit the driving force received from the drive transmission gear 1781 to a member other than the drum 2562 such as a developing roller or a charging roller.

Furthermore, in this embodiment, the drive gear (driving force receiving portion) 2501 is structured to engage with the first main assembly gear portion 1781c of the drive transmission gear (driving force applying portion) 1781 to receive the driving force, but it may be structured to engage with the second main assembly gear portion 1781d of the drive transmission gear 1781 and receive the driving force.

Moreover, the elements of each of the above-described embodiments can be applied to the structure of this embodiment. In particular, the structures of the first helical teeth (first projection) 2502at of the first gear portion 2502a of the idler gear 2502 and the second helical teeth (second projection) 2502bt of the second gear portion 2502b may be modified to the helical teeth, the flat teeth, the projection of Embodiment 2, 3, 4, 5, 6, 10, 11, 12, 13, 14 or 16.

[Embodiment 26]

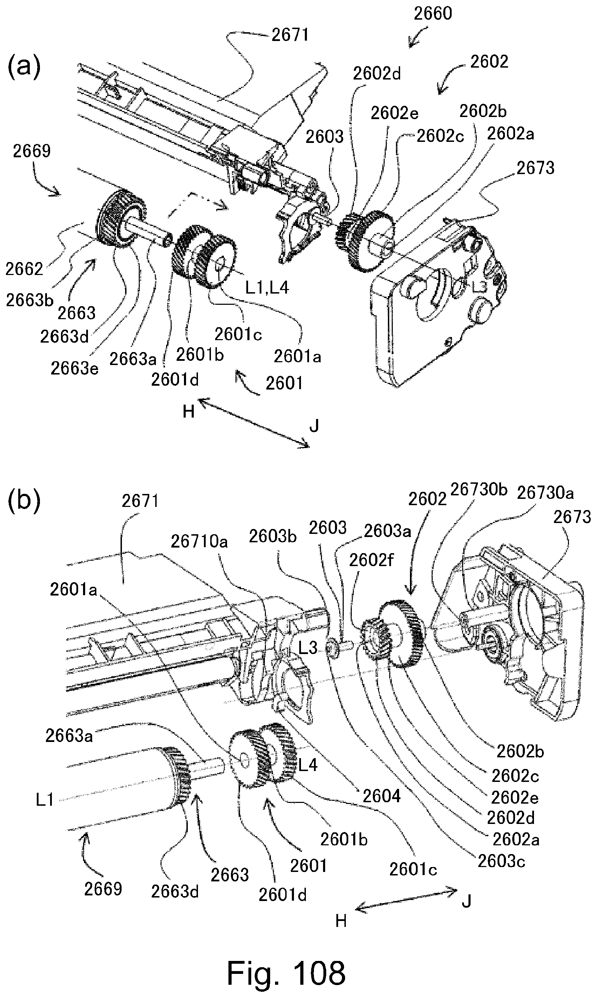

Next, referring to Figures 108 to 111, Embodiment 26 will be described. This embodiment shows another structure of the cartridge B that can be operated by receiving a driving force from the driving transmission gear 1781 of the apparatus main assembly A described in Embodiment 17. In this embodiment, the gear (idler gear 2601) driven in the backlashless state does not transmit the driving force to the drum, and another gear (driving gear 2602) transmits the driving force to the drum, as is different from Embodiment 17. The other points are the same as in Embodiment 17, and detailed description thereof will be omitted. Further, among the elements in this embodiment, the elements corresponding to the elements of Embodiment 1 are assigned reference numerals associated with the corresponding elements of Embodiment 1. Regarding these elements, the matters not specifically explained are the same as the corresponding elements of Embodiment 1.

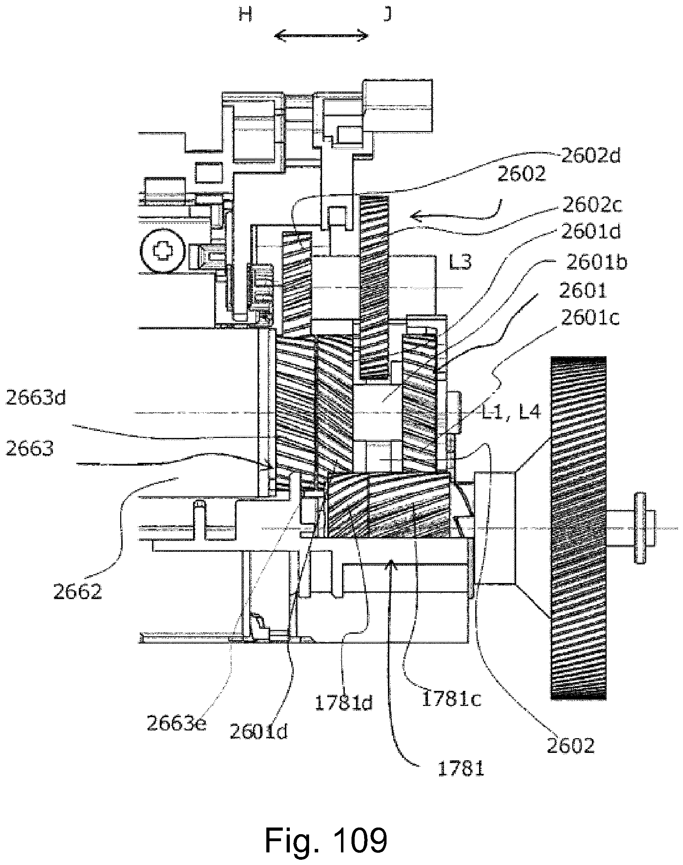

Figure 108 is an exploded perspective view of the driving side of the cleaning unit 2660 and the drum unit 2669, wherein part (a) shows a state as viewed from the driving side, and part (b) shows a state as viewed from the non-driving side. Further, Figure 109 is an illustration of an engaged state between the cleaning unit 2660 and the drive transmission gear 1781, and shows a state as viewed along a direction perpendicular to the rotational axis L1.

< Cleaning unit2660 >

The cleaning unit 2660 includes a frame member 2671 and a drum bearing member 2673 which form a cleaning frame. The drum bearing member 2673 includes a cylindrical portion 26730a. The cylindrical portion 26730a has a cylindrical shape projecting in the H direction so as to form a rotational axis L3 parallel to the rotational axis L1 of the drum 2662. A screw hole 26730b is provided at the free end of the cylindrical portion 26730a on the drum 2662 side. A driving gear 2602 is rotatably mounted to the cylindrical portion 26730a.

The driving gear 2602 has a generally cylindrical shape, and includes a first cylindrical portion 2602b, a first gear portion (first unit side gear portion) 2602c, a second cylindrical portion 2602e, and a second gear portion (second gear portion side gear portion) 2602d, arranged coaxially in this order from the upstream side along the H direction, and the cylindrical portion 26730a is provided with a through hole 2602a. Further, on the drum 2662 side of the second gear portion 2602d, a recess portion 2602f recessed in a cylindrical shape in the direction opposite to the drum 2662 side is formed. The driving gear 2602 is mounted so that the through hole 2602a is penetrated by the cylindrical portion 26730a of the drum bearing member 2673, and the driving gear 2602 is supported by the drum bearing member 2673 rotatably about the rotational axis L3.

Further, a screw 2603 is threaded in the screw hole 26730b. The screw 2603 includes a screw portion 2603a, a flange portion 2603b, and a screw head 2603c. The outer diameter of the flange portion 2603b is smaller than the inner diameter of the recess portion 2602f of the driving gear 2602, and therefore, when the screw 2603 is threaded into the screw hole 26730b, the screw 2603 penetrates into the recess portion 2602f. In addition, the flange portion 2603b faces the bottom surface of the recess portion 2602f of the driving gear 2602 with a small gap. In this manner, the screw 2603 prevents the driving gear 2602 from disengaging from the drum bearing member 2673.

Next, the structure of the driving flange 2663 will be described. As shown in part (a) of Figure 108, the driving flange 2663 includes a gear portion (third gear portion) 2663d, a cylindrical support portion 2663a, a cylindrical portion 2663e, and a flange portion 2663b, which are arranged about the rotational axis L1 as the center. The cylindrical support portion 2663a has a generally cylindrical shape, and is provided projected from the gear portion 2663d in the direction opposite to the drum 2662 along the rotational axis L1. The cylindrical portion 2663e has a generally cylindrical shape, and is provided projected from the gear portion 2663d on the side opposite to the drum 2662 along the rotational axis L1. The flange portion 2663b has a thin disk shape having a diameter equal to or larger than the diameter of the drum 2662, and is provided on the drum 2662 side of the gear portion 2663d. In addition, it can be said that the gear portion (third gear portion) 2663d is connected to the drum 2662 so as to be able to transmit the driving force.

An idler gear 2601 is rotatably mounted to the cylindrical support portion 2663a. The idler gear 2601 is integrally molded with a resin and includes a first gear portion 2601c, a cylindrical portion 2601b, and a second gear portion 2601d in order from the upstream along the drum 2662 and the H direction, and further includes a through hole 2601a centered on the rotational axis L1. The first gear portion 2601c has a helical tooth gear having a helix angle $\alpha1$, and the second gear portion 2601d has a helical tooth gear having the same twisting direction as the helical tooth gear of the first gear portion 2601c and having a helix angle $\alpha2$. In addition, the outer diameter of the cylindrical portion 2601b is smaller than that of the first gear portion 2601c and the second gear portion 2601d.

The idler gear 2601 is mounted so that the through hole 2601a is fitted around the cylindrical support portion 2663a of the driving flange 2663, and is supported by the driving flange 2663 rotatably about the rotational axis L4. The rotational axis L4 of the idler gear 2601 is coaxial with the rotational axis L1 of the drum 2662. As will be described hereinafter, the second gear portion 2601d receives a force in the direction of arrow H along the rotational axis L4 and abuts on the cylindrical portion 2663e.

The driving flange 2663 is rotatably supported by the bearing member 2673, as in Embodiment 17. Thus, the drum unit 2669 is rotatably supported by the cleaning unit 2660.

As shown in part (b) of Figure 108, the frame member 2671 is has a circumferential surface 26710a. The circumferential surface 26710a is a cylindrical surface coaxial with the rotational axis L4 of the idler gear 2601 after being assembled to the cleaning unit 2660, and has a diameter larger than the diameter of the cylindrical portion 01b of the idler gear 2601. In addition, the friction member 2604 is mounted on the circumferential surface 26710a by means such as double-sided tape or adhesive. The friction member 2604 contacts the cylindrical portion 2601b of the idler gear 2601, and, a frictional force that hinders the rotation is generated when the idler gear 2601 rotates.

As shown in Figure 109, in a state that the drum unit 2669 and the driving gear 2602 are assembled to the cleaning unit 2660, the rotational axis L3 of the driving gear 2602 is parallel to the rotational axis L1 of the drum 2662 and the driving side flange 2663. In addition, the first gear portion 2602c of the driving gear 2602 is assembled so as to be located between the first gear portion 2601c and the second gear portion 2601d of the idler gear 2601, with respect to the direction of the rotational axis L1 of the drum unit 2669. Further, the second gear portion 2602d of the driving gear 2602 meshes with the gear portion 2663d of the driving flange 2663, and the driving force can be transmitted from the driving gear 2602 to the driving flange 2663.

<Drive of idler gear 2601>

Next, the drive transmission with the drive transmission gear 1781 of the main assembly of the apparatus will be described. When the cartridge B is mounted in the apparatus main assembly A, as shown in Figure 109, the first gear portion 2601c of the idler gear 2601 meshes with the first main assembly gear portion 1781c of the drive transmission gear 1781, and the second gear portion 2601d of the idler gear 2601 meshes with the second main assembly gear portion 1781d. As described above, since the friction member 2604 receives a frictional force that hinders rotation, a predetermined torque is required to drive the idler gear 2601. In addition, the idler gear 2601 receives the spring force of the compression spring 1785 (see Figure 53) in the H direction by way of the drive transmission gear 1781, moves in the H direction to abut to the cylindrical portion 2663e of the driving flange 2663.

Then, when the drive transmission gear 1781 is driven, the drive transmission gear 1781 receives a thrust force by meshing engagement with the idler gear 2601 and moves to a balanced position by the same principle as in Embodiment 17. The teeth of the second gear portion 2601d are fixed so as not to move (rotate) in the opposite direction of the I direction relative to the teeth of the first gear portion 2601c, and therefore,, in the balanced state, there exists no play (backlash) in the I direction between the drive transmission gear 2681 and the idler gear 2601, that is, a backlash-less state is established.

<Drive of drum 2662>

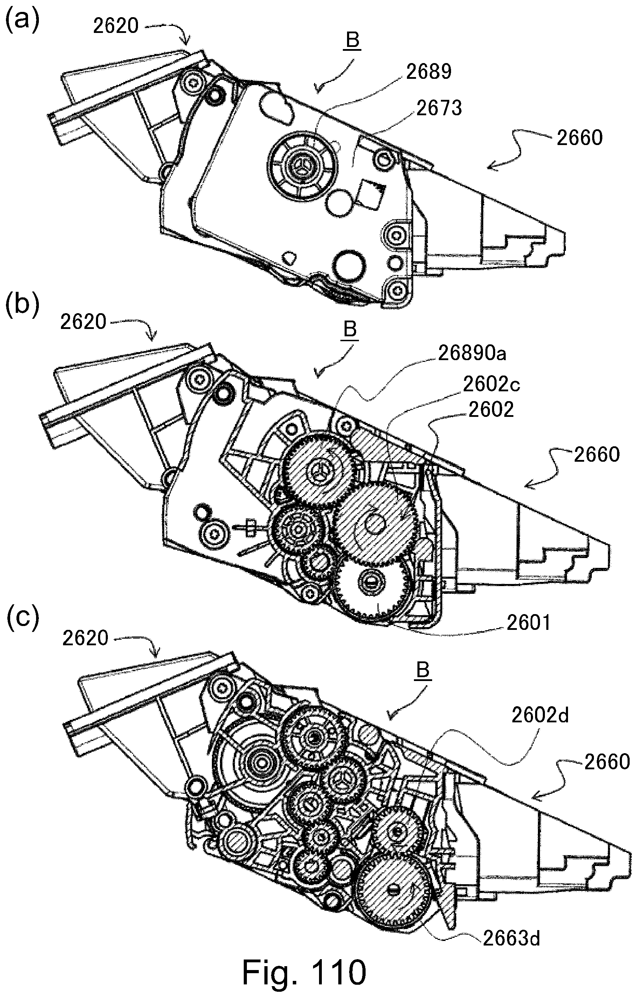

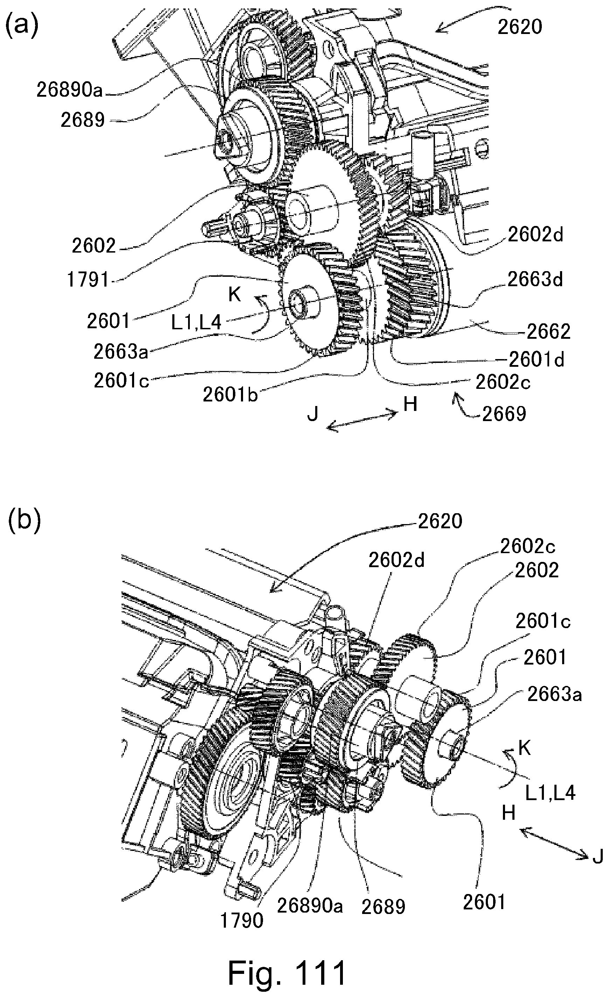

Next, referring to Figures 110 and 111, the driving of the drum 2662 will be described. Figure 110 is a view of the cartridge B as seen along the direction of the rotational axis L1 of the drum 2662, wherein part (a) shows the appearance of the cartridge B, part (b) shows a view taken along a plane passing through the first gear portion 2601c of the driving gear 2602, and part (c) shows a view taken along a plane passing through the second gear portion 2601d of the driving gear 2602. It shows the state of the gear. Figure 111 is a perspective view of the drive transmission mechanism of the cartridge B, and parts (a) and (b) show states as viewed from different angles, and the drum bearing member 2673 and the like are not shown so that the structure of the drive transmission mechanism can be understood.

The development coupling member 2689 engages with the main assembly side coupling member 1799 (see Figure 57) of the apparatus main assembly A to transmit the driving force, similarly to the development coupling member 1789 of Embodiment 17. In addition, the development coupling member 2689 meshes with the idler gear 1790, and transmits the driving force to the developing roller 1732 (see Figure 50) by way of the idler gear 1791 or the like on the downstream side in the driving force transmission path.

Further, the development coupling member 2689 is provided with a gear portion 26890a, and as shown in part (b) of Figure 110, the gear portion 26890a meshes with the first gear portion 2602c of the driving gear 2602 provided in the cleaning unit 2660.

Further, the developing unit 2620 is structured to be rotatable (swing) relative to the cleaning unit 2660 about an axis coaxial with the rotating axis of the development coupling member 2689. Therefore, even when the developing unit 2620 swings with respect to the cleaning unit 2660 about the rotational axis of the development coupling member 2689, the distance between the gear portion 26890a of the development coupling member 2689 and the rotational axis of the driving gear 2602 remains the same. Therefore, the gears of the developing unit 2620 and the cleaning unit 2660 can be stably meshed with each other.

In addition, as shown in part (c) of Figure 110, the second gear portion 2602d of the driving gear 2602 meshes with the gear portion 2663d of the driving flange 2663.

In this manner, the driving force transmitted through engagement of the development coupling member 2689 with the main assembly side coupling member 1799 (see Figure 57) is transmitted to the driving flange 2663 by way of the driving gear 2602 and is the transmitted to the drum 2662. That is, the main assembly side coupling member 1799 is a driving force applying portion, and the development coupling member 2689 is a driving force receiving portion which receives the driving force for rotationally driving the drum 2662 from the main assembly side coupling member 1799.

As described above, in this embodiment, the idler gear 2601 including two helical tooth gear portions having the same twist direction but different twist angles so as to mesh with the first main assembly gear portion 1781c and the second main assembly gear portion of the drive transmission gear 1781, by which a cartridge B applicable to the apparatus main assembly A including the drive transmission gear 1781 described in Embodiment 17 can be provided. Further, in the structure of this embodiment, the driving force received from the apparatus main assembly A by the development coupling member 2689 is transmitted to the driving flange 2663 by way of the driving gear 2602 to drive the drum 2662 and the like included in the cartridge B.

In this embodiment, the rotational axis L4 of the idler gear 2601 is coaxial with the rotational axis L1 of the drum 2662, but the present invention is not limited to such an example. The rotational axis L4 and the rotational axis L1 may be non-coaxial and parallel, or the rotational axis L4 and the rotational axis L1 may be non-coaxial and non-parallel. In addition, although the idler gear 2601 is supported by the driving flange 2663, it may be rotatably supported by the frame member 2671. Further, the idler gear 2601 may be structured to mesh with another gear or the like and transmit the driving force received from the drive transmission gear 1781 to a member other than the drum 2662 such as a charging roller or the developing roller 1732.

Furthermore, the elements of each of the above-described embodiments can be applied to the structure of this embodiment. In particular, the structures of the first helical tooth (first projection) of the first gear portion 2601c of the idler gear 2601 and the second helical tooth (second projection) of the second gear portion 2601d may be modified to the helical teeth, the flat teeth, the projections and the like of Embodiment 2, 3, 4, 5, 6, 10, 11, 12, 13, 14 or 16.

<Examples of the disclosed structure or concept>

The following are examples of the structures or concepts of the embodiments disclosed in the foregoing. However, these are merely non-claimed examples, and the above-mentioned disclosure of this embodiment is not limited to the structure or concept in the following.

<<Structure A>>

[Structure A1]

A photosensitive member unit detachably mountable to a main assembly of an image forming apparatus, the image forming apparatus including a first main assembly side helical gear portion and a second main assembly side helical gear portion which are coaxially rotatable, the photosensitive member unit comprising:

a photosensitive member rotatable about a rotational axis thereof;
a first unit side helical gear portion for meshing engagement with the first main assembly side helical gear portion; and
a second unit side helical gear portion for meshing engagement with the second main assembly side helical gear portion,
wherein a twisting direction of a tooth of the second unit side helical gear portion is the same as the twisting direction of a tooth of first unit side helical gear portion,
wherein a helix angle of the tooth of the second unit side helical gear portion is larger than a helix angle of the tooth of the first unit side helical gear portion, and wherein the first unit side helical gear portion and the second unit side helical gear portion are rotatable in a state in which the first unit side helical gear portion is in meshing engagement with the first main assembly side helical gear portion, and the second unit side helical gear portion is in meshing engagement with the second main assembly side helical gear portion.

[Structure A2]

A photosensitive member unit according to Structure A1, wherein with respect to the rotational axis of the photosensitive member, the second unit side helical gear portion is disposed between the photosensitive member and the first unit side helical gear portion.

[Structure A3]

A photosensitive member unit according to Structure A1 or A2, wherein with respect to the rotational axis of the photosensitive member, a gap is provided between the first unit side helical gear portion when the second unit side helical gear portion.

[Structure A4]

A photosensitive member unit according to Structure A3, wherein the main assembly of the image forming apparatus includes a projected portion between the first main assembly side helical gear portion and the second main assembly side helical gear portion, and in a state in which the first unit side helical gear portion is in meshing engagement with the first main assembly side helical gear portion, and second unit side helical gear portion is in meshing engagement with the second main assembly side helical gear portion, and the projected portion is inserted in the gap.

[Structure A5]

A photosensitive member unit according to Structure A3 or A4, wherein the unit comprises an intermediary member between the first unit side helical gear portion and the second unit side helical gear portion with respect to the rotational axis of the photosensitive member, the intermediary member being capable of filling the gap.

[Structure A6]

A photosensitive member unit according to Structure A5, wherein the intermediary member is movable between a position for providing the gap and a position for filling the gap, by rotation thereof.

[Structure A7]

A photosensitive member unit according to Structure A5, wherein the intermediary member is movable between the position for providing the gap and the position for filling the gap, by movement thereof in a direction perpendicular to the rotational axis of the photosensitive member.

[Structure A8]

A photosensitive member unit according to Structure A5, wherein the intermediary member is made of an elastic member and is capable of taking a position for providing the gap and a position for filling the gap, by elastic deformation thereof.

[Structure A9]

A photosensitive member unit according to any one of Structures A3 - A8, wherein with respect to the rotational axis of the photosensitive member, a tooth width Wc of the first unit side helical gear portion and a width We of the gap satisfy,

$$Wc > We \geqq Wc/5.$$

[Structure A10]

A photosensitive member unit according to Structure A9, wherein with respect to the rotational axis of the photosensitive member, the width We of the gap and a tooth width Wd of the second unit side helical gear portion satisfy,

$$Wd > We.$$

[Structure A11]

A photosensitive member unit according to any one of Structures A1 - A10, wherein the first helical gear portion and the second helical gear portion each have at least one tooth having a width satisfying,

$$Wc > Wd,$$

where Wc is a tooth width of the first helical gear portion and Wd is a tooth width of the second helical gear portion, measured in the rotational axis of the photosensitive member.

[Structure A12]

A photosensitive member unit according to any one of Structures A1 - A11, wherein the helix angle of the tooth of the first unit side helical gear portion is not less than 15° and not more than 40°.

[Structure A13]

A photosensitive member unit according to any one of Structures A1 - A11, wherein the helix angle of the tooth of the first unit side helical gear portion is not less than 20° and not more than 35°.

[Structure A14]

A photosensitive member unit according to any one of Structures A1 - A13, wherein the helix angle of the tooth of the first unit side helical gear portion is not less than 20° and not more than 40°.

[Structure A15]

A photosensitive member unit according to any one of Structures A1 - A13, wherein a helix angle of the second unit side helical gear portion is not less than 25° and not more than 35°.

[Structure A16]

A photosensitive member unit according to any one of Structures A1 - A15, wherein the first unit side helical gear portion includes a plurality of such teeth, at least one of which is constituted by a plurality of first projections provided separately in the direction of the rotational axis of the photosensitive member or in a rotational movement direction of the first unit side helical gear portion, the first projections being provided so as to be contactable with one of the teeth of the first main assembly side helical gear portion at respective positions away from each other in the direction of the rotational axis.

[Structure A17]

A photosensitive member unit according to any one of Structures A1 - A16, wherein the second unit side helical gear portion includes a plurality of such teeth, at least one of which is constituted by a plurality of second projections provided separately in the direction of the rotational axis of the photosensitive member or in a rotational movement direction of the second unit side helical gear portion, the second projections being provided so as to be contactable with one of the teeth of the second main assembly side helical gear portion at respective positions away from each other in the direction of the rotational axis.

[Structure A18]

A photosensitive member unit according to any one of Structures A1 - A17, wherein the first unit side helical gear portion includes a number of such teeth, and the second unit side helical gear portion includes the same number of such teeth.

[Structure A19]

A photosensitive member unit according to any one of Structures A1 - A17, wherein first unit side helical gear portion includes a tooth missing part.

[Structure A20]

A photosensitive member unit according to any one of Structures A1 - A17, wherein second unit side helical gear portion includes a tooth missing part.

[Structure A21]

A photosensitive member unit according to any one of Structures A1 - A20, wherein a projecting direction of the first unit side helical gear portion and a projecting direction of the second unit side helical gear portion include respective components parallel with the rotational axis of the photosensitive drum.

[Structure A22]

A photosensitive member unit according to any one of Structures A1 - A21, further comprising an elastic member covering the first unit side helical gear portion and/or the second unit side helical gear portion.

[Structure A23]

A photosensitive member unit according to any one of Structures A1 - A22, wherein while the first unit side helical gear portion and the second unit side helical gear portion are rotated in a predetermined direction by rotation of the first main assembly side helical gear portion and the second main assembly side helical gear portion, the first unit side helical gear portion and the second unit side helical gear portion are in a state that the tooth of first unit side helical gear portion is in contact with such a tooth of first main assembly side helical gear portion as is at a position on an upstream side in the predetermined direction, the tooth of the second unit side helical gear portion is in contact with such a tooth of the second main assembly side helical gear portion as is at a position on an upstream side in the predetermined direction, and the tooth of the second unit side helical gear portion is fixed so as not to be rotated in a direction opposite to the predetermined direction relative to the first unit side helical gear portion.

[Structure A24]

A photosensitive member unit according to any one of Structures A1 - A23, wherein the first unit side helical gear portion is capable of transmitting a driving force to the second unit side helical gear portion.

[Structure A25]

A photosensitive member unit according to any one of Structures A1 - A24, wherein the first unit side helical gear portion and the second unit side helical gear portion are rotatable coaxially with each other.

[Structure A26]

A photosensitive member unit according to [Structure A25, wherein a rotational axis of the first unit side helical gear portion and a rotational axis of the second unit side helical gear portion are coaxial with the rotational axis of the photosensitive member.

[Structure A27]

A photosensitive member unit according to [Structure A25 or 26, wherein the first unit side helical gear portion and the second unit side helical gear portion are integrally molded.

[Structure A28]

A photosensitive member unit according to [Structure A27, wherein the first unit side helical gear portion when the second unit side helical gear portion integrally resin-molded.

[Structure A29]

A photosensitive member unit according to any one of Structures A25 - A28, wherein a diameter of an addendum circle of the second unit side helical gear portion is larger than a diameter of a dedendum circle of the first unit side helical gear portion or 0.8 times a diameter of an addendum circle of the first unit side helical gear portion, and smaller than 1.1 times the diameter of the addendum circle of the first unit side helical gear portion.

[Structure A30]

A photosensitive member unit according to any one of Structures A1 - A24, wherein the rotational axis of the first unit side helical gear portion and the rotational axis of the second unit side helical gear portion are not coaxial with each other.

[Structure A31]

A photosensitive member unit according to [Structure A30, wherein the rotational axis of the first unit side helical gear portion or the rotational axis of the second unit side helical gear portion are coaxial with the rotational axis of the photosensitive member.

[Structure A32]

A photosensitive member unit according to [Structure A30 or 31, wherein the rotational axis of the first unit side helical gear portion and the rotational axis of the second unit side helical gear portion are parallel with each other.

[Structure A33]

A photosensitive member unit according to any one of Structures A1 - A24, wherein the first unit side helical gear portion and/or the second unit side helical gear portion is provided on a belt-like member.

[Structure A34]

A photosensitive member unit according to any one of Structures A1 - A23, wherein the first unit side helical gear portion is connected with the second unit side helical gear portion so as to be capable of transmitting the driving force.

[Structure A35]

A photosensitive member unit according to [Structure A34, wherein the first unit side helical gear portion is connected with the second unit side helical gear portion with a play therebetween in the rotational direction.

[Structure A36]

A photosensitive member unit according to [Structure A34 or 35, wherein the first unit side helical gear portion is capable of being in a connected state of being connected with the second unit side helical gear portion to transit the driving force thereto and in a disconnected state of being incapable of transmitting the driving force to the second unit side helical gear portion.

[Structure A37]

A photosensitive member unit according to any one of Structures A1 - A24, wherein a rotational force received by the first unit side helical gear portion is transmitted to the photosensitive member.

[Structure A38]

A photosensitive member unit according to any one of Structures A1 - A24, further comprising a flange mounted to an end of the photosensitive member in the direction of the rotational axis of the photosensitive member, wherein the first unit side helical gear portion and the second unit side helical gear portion are provided on the flange.

[Structure A39]

A photosensitive member unit according to any one of Structures A1 - A36, further comprising a driving force receiving portion capable of meshing engagement with the first main assembly side helical gear portion or the second main assembly side helical gear portion to receive a driving force for rotating the photosensitive member.

[Structure A40]

A photosensitive member unit according to any one of Structures A1 - A36, further comprising a driving force receiving portion capable of engagement with a drive force applying portion provided in the main assembly of the image forming apparatus to receive a driving force for rotating the photosensitive member.

[Structure A41]

A photosensitive member unit according to [Structure A11, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \leqq (4/5) \cdot Wc1.$$

[Structure A42]

A photosensitive member unit according to [Structure A11, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \leqq (3/4) \cdot Wc1.$$

[Structure A43]

A photosensitive member unit according to any one of Structures A11, 41 or 42, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \geqq (1/10) \cdot Wc1.$$

[Structure A44]

A photosensitive member unit according to any one of Structures A1 - A43, wherein a twisting direction of the tooth of the second main assembly side helical gear portion is the same as a twisting direction of the tooth of the first main assembly side helical gear portion, wherein a helix angle of the tooth of the second main assembly side helical gear portion is larger than a helix angle of the tooth of the first main assembly side helical gear portion, and wherein the first main assembly side helical gear portion and the second main assembly side helical gear portion are integrally rotatable.

[Structure A45]

A photosensitive member unit according to any one of Structures A1 - A44, wherein the photosensitive member unit is mountable to and dismountable from the main assembly of the image forming apparatus by movement thereof in a direction perpendicular to a rotational axis of the first main assembly side helical gear portion.

[Structure A46]

A cartridge comprising the photosensitive member unit according to any one of Structures A1 - A45, and a frame rotatably supporting the photosensitive member unit.

<<Structure AX1>>

[Structure AX1]

A cartridge detachably mountable to a main assembly of an image forming apparatus, the image forming apparatus including a first main assembly side helical gear portion and a second main assembly side helical gear portion which are coaxially rotatable, the cartridge comprising:

a rotatable member rotatable about a rotational axis thereof;
a frame rotatably supporting the rotatable member;
a first unit side helical gear portion for meshing engagement with the first main assembly side helical gear portion; and
a second unit side helical gear portion for meshing engagement with the second main assembly side helical gear portion;
wherein a twisting direction of a tooth of the second unit side helical gear portion is the same as the twisting direction of a tooth of first unit side helical gear portion,

wherein a helix angle of the tooth of the second unit side helical gear portion is larger than a helix angle of the tooth of the first unit side helical gear portion, and wherein the first unit side helical gear portion and the second unit side helical gear portion are rotatable in a state in which the first unit side helical gear portion is in meshing engagement with the first main assembly side helical gear portion, and the second unit side helical gear portion is in meshing engagement with the second main assembly side helical gear portion.

<Structures incorporatable in Structure AX1 (dependent structure)>

The elements of the above-described Structures A1 - A45 are incorporatable in Structure AX1.

<<Structure AY1>>

[Structure A Y1]

An image forming apparatus comprising,

a main assembly including a first main assembly side helical gear portion and a second main assembly side helical gear portion which are coaxially rotatable; and
a cartridge detachably mounted in the main assembly,
the cartridge including (i) a rotatable member rotatable about a rotational axis thereof, (ii) a frame rotatably supporting the rotatable member, (iii) a first unit side helical gear portion for meshing engagement with the first main assembly side helical gear portion, and (iv) a second unit side helical gear portion for engagement with the second main assembly side helical gear portion,
wherein a twisting direction of a tooth of the second unit side helical gear portion is the same as the twisting direction of a tooth of first unit side helical gear portion,
wherein a helix angle of the tooth of the second unit side helical gear portion is larger than a helix angle of the tooth of the first unit side helical gear portion, and wherein in a state that the cartridge is mounted in the main assembly, the first unit side helical gear portion and the second unit side helical gear portion are rotatable in a state in which the first unit side helical gear portion is in meshing engagement with the first main assembly side helical gear portion, and the second unit side helical gear portion is in meshing engagement with the second main assembly side helical gear portion.

<Structures incorporatable in Structure AY1 (dependent structure)>

The elements of the above-described Structures A1 - A45 are incorporatable in Structure AY1.

<<Structure B>>

[Structure B1]

A photosensitive member unit detachably mountable to a main assembly of an image forming apparatus, the main assembly including a first main assembly side helical gear portion and a second main assembly side helical gear portion which are rotatable coaxially with each other, wherein a twisting direction of a tooth of the second main assembly side helical gear portion is the same as a twisting direction of a tooth of the first main assembly side helical gear portion, and a helix angle of the tooth of the second main assembly side helical gear portion is larger than a helix angle of the tooth of the first main assembly side helical gear portion, said photosensitive member unit comprising:

a photosensitive member rotatable about a rotational axis thereof;
a first unit side gear portion as a helical gear portion capable of meshing engagement with the first main assembly side helical gear portion; and
a second unit side gear portion including a plurality of teeth capable of engagement with the second main assembly side helical gear portion,
wherein the first unit side gear portion and the second unit side gear portion a rotatable in a state in which the first unit side gear portion is meshing engagement with the first main assembly side helical gear portion and the second unit side gear portion is in meshing engagement with the second main assembly side helical gear portion.

[Structure B2]

A photosensitive member unit according to Structure B 1, wherein with respect to the rotational axis of the photosensitive member, the second unit side gear portion is disposed between the photosensitive member and the first unit side gear portion.

[Structure B3]

A photosensitive member unit according to Structure B1 or B2, wherein with respect to the rotational axis of the photosensitive member, a gap provided between the first unit side gear portion and the second unit side gear portion.

[Structure B4]

A photosensitive member unit according to Structure B4, wherein the main assembly of the image forming apparatus includes a projected portion between the first main assembly side helical gear portion and the second main assembly side helical gear portion, wherein the projected portion is inserted into the gap in a state in which the first unit side gear portion is in meshing engagement with the first main assembly side helical gear portion and the second unit side gear portion is in meshing engagement with the second main assembly side helical gear portion.

[Structure B5]

A photosensitive member unit according to Structure B3 or B4, further comprising an intermediary member between the first unit side gear portion and the second unit side gear portion, the intermediary member is capable of filling the gap.

[Structure B6]

A photosensitive member unit according to Structure B5, wherein the intermediary member is movable between a position for providing the gap and a position for filling the gap, by rotation thereof.

[Structure B7]

A photosensitive member unit according to Structure B5, wherein the intermediary member is movable between the position for providing the gap and the position for filling the gap, by movement thereof in a direction perpendicular to the rotational axis of the photosensitive member.

[Structure B8]

A photosensitive member unit according to Structure B5, wherein the intermediary member is made of an elastic member and is capable of taking a position for providing the gap and a position for filling the gap, by elastic deformation thereof.

[Structure B9]

A photosensitive member unit according to any one of Structures B3 - B8, wherein with respect to the rotational axis of the photosensitive member, a tooth width Wc of the first unit side gear portion and a width We of the gap satisfy,

$$Wc > We \geqq Wc/5.$$

[Structure B10]

A photosensitive member unit according to Structure B11, wherein with respect to the rotational axis of the photosensitive member, a width We of the gap and a tooth width Wd of the second unit side gear portion satisfy,

$$Wd > We.$$

[Structure B11]

A photosensitive member unit according to any one of Structures B1 - B10, wherein the first helical gear portion and the second helical gear portion each have at least one tooth having a width satisfying,

$$Wc > Wd,$$

where Wc is a tooth width of the first helical gear portion, and Wd is a tooth width of the second helical gear portion, measured in the direction of the rotational axis of the photosensitive member.

[Structure B12]

A photosensitive member unit according to any one of Structures B1 - B11, wherein a helix angle of the tooth of the first unit side gear portion is not less than 15° and not more than 40°.

[Structure B13]

A photosensitive member unit according to any one of Structures B1 - B11, wherein a helix angle of the tooth of the first unit side gear portion is not less than 20° and not more than 40°.

[Structure B14]

A photosensitive member unit according to any one of Structures B1 - B13, wherein the first unit side gear portion includes a plurality of such teeth, at least one of which is constituted by a plurality of first projections provided separately in the direction of the rotational axis of the photosensitive member or in a rotational movement direction of the first unit side gear portion, the first projections being provided so as to be contactable with one of the teeth of the first main assembly side helical gear portion at respective positions away from each other in the direction of the rotational axis.

[Structure B15]

A photosensitive member unit according to any one of Structures B1 - B14, wherein at least one tooth of the teeth of the second unit side gear has a corner portion which is provided so as to contact one tooth of the second main assembly side helical gear portion, only at one position in the direction of the rotational axis.

[Structure B16]

A photosensitive member unit according to any one of Structures B1 - B14, wherein the second unit side gear portion is a helical gear portion having a twisting direction which is the same as a twisting direction of the tooth of the first unit side gear portion.

[Structure B17]

A photosensitive member unit according to Structure B16, wherein the second unit side gear portion includes a plurality of such teeth, at least one of which is constituted by a plurality of second projections provided separately in the direction of the rotational axis of the photosensitive member or in a rotational movement direction of the second unit side gear portion, the second projections being provided so as to be contactable with one of the teeth of the second main assembly side helical gear portion at respective positions away from each other in the direction of the rotational axis.

[Structure B18]

A photosensitive member unit according to any one of Structures B1 - B17, wherein the first unit side gear portion includes a number of such teeth, and the second unit side gear portion includes the same number of such teeth.

[Structure B19]

A photosensitive member unit according to any one of Structures B1 - B17, wherein first unit side gear portion includes a tooth missing part.

[Structure B20]

A photosensitive member unit according to any one of Structures B1 - B17, wherein second unit side gear portion includes a tooth missing part.

[Structure B21]

A photosensitive member unit according to any one of Structures B1 - B20, wherein a projecting direction of the first unit side gear portion and a projecting direction of the second unit side gear portion include respective components parallel with the rotational axis of the photosensitive drum.

[Structure B22]

A photosensitive member unit according to any one of Structures B1 - B21, further comprising an elastic member covering the first unit side gear portion and/or the second unit side gear portion.

[Structure B23]

A photosensitive member unit according to any one of Structures B1 - B22, wherein while the first unit side helical gear portion and the second unit side helical gear portion are rotated in a predetermined direction by rotation of the first main assembly side helical gear portion and the second main assembly side helical gear portion, the first unit side gear portion and the second unit side gear portion are in a state that the tooth of first unit side gear portion is in contact with such a tooth of first main assembly side helical gear portion as is at a position on an upstream side in the predetermined direction, a tooth of the second unit side gear portion is in contact with such a tooth of the second main assembly side helical gear portion as is at a position and an upstream side in the predetermined direction, and the tooth of the second unit side gear portion is fixed so as not to be rotated in a direction opposite to the predetermined direction relative to the first unit side gear portion.

[Structure B24]

A photosensitive member unit according to any one of Structures B1 - B23, wherein the first unit side gear portion is capable of transmitting a driving force to the second unit side gear portion.

[Structure B25]

A photosensitive member unit according to any one of Structures B1 - B24, wherein the first unit side gear portion and the second unit side gear portion are rotatable coaxially with each other.

[Structure B26]

A photosensitive member unit according to Structure B25, wherein a rotational axis of the first unit side gear portion and a rotational axis of the second unit side gear portion are coaxial with the rotational axis of the photosensitive member.

[Structure B27]

A photosensitive member unit according to Structure B25 or B26, wherein the first unit side gear portion and the second unit side gear portion are integrally molded.

[Structure B28]

A photosensitive member unit according to Structure B27, wherein the first unit side gear portion when the second unit side gear portion integrally resin-molded.

[Structure B29]

A photosensitive member unit according to any one of Structures B25 - B28, wherein a diameter of an addendum circle of the second unit side gear portion is larger than a diameter of a dedendum circle of the first unit side gear portion or 0.8 times a diameter of an addendum circle of the first unit side gear portion, and smaller than 1.1 times the diameter of the addendum circle of the first unit side gear portion.

[Structure B30]

A photosensitive member unit according to any one of Structures B1 - B24, wherein the rotational axis of the first unit side gear portion and the rotational axis of the second unit side gear portion are not coaxial with each other.

[Structure B31]

A photosensitive member unit according to Structure B30, wherein the rotational axis of the first unit side gear portion or the rotational axis of the second unit side gear portion are coaxial with the rotational axis of the photosensitive member.

[Structure B32]

A photosensitive member unit according to Structure B30 or B31, wherein the rotational axis of the first unit side gear portion and the rotational axis of the second unit side gear portion are parallel with each other.

[Structure B33]

A photosensitive member unit according to any one of Structures B1 - B24, wherein the first unit side gear portion and/or the second unit side gear portion is provided on a belt-like member.

[Structure B34]

A photosensitive member unit according to any one of Structures B1 - B23, wherein the first unit side gear portion is connected with the second unit side gear portion so as to be capable of transmitting the driving force.

[Structure B35]

A photosensitive member unit according to Structure B34, wherein the first unit side gear portion is connected with the second unit side gear portion with a play therebetween in the rotational direction.

[Structure B36]

A photosensitive member unit according to Structure B34 or B35, wherein the first unit side gear portion is capable of being in a connected state of being connected with the second unit side gear portion to transit the driving force thereto and in a disconnected state of being incapable of transmitting the driving force to the second unit side gear portion.

[Structure B37]

A photosensitive member unit according to any one of Structures B1 - B24, wherein a rotational force received by the first unit side gear portion is transmitted to the photosensitive member.

[Structure B38]

A photosensitive member unit according to any one of Structures B1 - B24, further comprising a flange mounted to an end of the photosensitive member in the direction of the rotational axis of the photosensitive member, and the first unit side gear portion and the second unit side gear portion are provided on the flange.

[Structure B39]

A photosensitive member unit according to any one of Structures B1 - B36, further comprising a driving force receiving portion capable of meshing engagement with the first main assembly side helical gear portion or the second main assembly side helical gear portion to receive a driving force for rotating the photosensitive member.

[Structure B40]

A photosensitive member unit according to any one of Structures B1 - B36, further comprising a driving force receiving portion capable of engagement with a drive force applying portion provided in the main assembly of the image forming apparatus to receive a driving force for rotating the photosensitive member.

[Structure B41]

A photosensitive member unit according to Structure B11, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \leqq (4/5) \cdot Wc1.$$

[Structure B42]

A photosensitive member unit according to Structure B11, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \leqq (3/4) \cdot Wc1.$$

[Structure B43]

A photosensitive member unit according to Structure B11, 41 or B42, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \geqq (1/10) \cdot Wc1.$$

[Structure B44]

A photosensitive member unit according to any one of Structures B1 - B43, wherein the first main assembly side helical gear portion and the second main assembly side helical gear portion are integrally rotatable.

[Structure B45]

A photosensitive member unit according to any one of Structures B1 - B44, wherein the photosensitive member unit is mountable to and dismountable from the main assembly of the image forming apparatus by movement thereof in a direction perpendicular to a rotational axis of the first main assembly side helical gear portion.

[Structure B46]

A cartridge comprising the photosensitive member unit according to any one of Structures B1 - B45, and a frame rotatably supporting the photosensitive member unit.

<<Structure BX1>>

[Structure BX1]

A cartridge detachably mountable to a main assembly of an image forming apparatus, the main assembly including a first main assembly side helical gear portion and a second main assembly side helical gear portion which are rotatable coaxially with each other, wherein a twisting direction of a tooth of the second main assembly side helical gear portion is the same as a twisting direction of a tooth of the first main assembly side helical gear portion, and a helix angle of the tooth of the second main assembly side helical gear portion is larger than a helix angle of the tooth of the first main assembly side helical gear portion, the cartridge comprising:

a rotatable member rotatable about a rotational axis thereof;
a frame rotatably supporting the rotatable member;
a first unit side gear portion as a helical gear portion capable of meshing engagement with the first main assembly side helical gear portion; and
a second unit side gear portion including a plurality of teeth capable of engagement with the second main assembly side helical gear portion;
wherein the first unit side gear portion and the second unit side gear portion a rotatable in a state in which the first unit side gear portion is meshing engagement with the first main assembly side helical gear portion and the second unit side gear portion is in meshing engagement with the second main assembly side helical gear portion.

<Structures incorporatable in Structure BX1 (dependent structure)>

The elements of the above-described Structures B1 - B45 are incorporatable in Structure BX1.

<<Structure BY1>>

[Structure BY1]

An image forming apparatus comprising,

a main assembly including a first main assembly side helical gear portion and a second main assembly side helical gear portion which are coaxially rotatable; and
a cartridge detachably mounted in the main assembly,
the cartridge including (i) a rotatable member rotatable about a rotational axis thereof, (ii) a frame rotatably supporting the rotatable member, (iii) a first unit side helical gear portion, as a helical gear, for meshing engagement with the first main assembly side helical gear portion, and (iv) a second unit side helical gear portion, having a plurality of teeth, for engagement with the second main assembly side helical gear portion,
wherein a twisting direction of a tooth of the second unit side helical gear portion is the same as the twisting direction of a tooth of first unit side helical gear portion,

wherein a helix angle of the tooth of the second unit side helical gear portion is larger than a helix angle of the tooth of the first unit side helical gear portion, and

wherein in a state that the cartridge is mounted in the main assembly, the first unit side gear portion and the second unit side gear portion are rotatable in a state that the first unit side gear portion is in meshing engagement with the first main assembly side helical gear portion, and the second unit side gear portion is in meshing engagement with the second main assembly side helical gear portion.

<Structures incorporatable in Structure BY1 (dependent structure)>

The elements of the above-described Structures B1 - B45 are incorporatable in Structure BY1.

<<Structure C>>

[Structure C1]

A photosensitive member unit detachably mountable to a main assembly of an image forming apparatus, the image forming apparatus including a first main assembly side helical gear portion and a second main assembly side helical gear portion which are coaxially rotatable, the photosensitive member unit comprising:

a photosensitive member rotatable about a rotational axis thereof;
a first unit side gear portion as a helical gear portion capable of meshing engagement with the first main assembly side helical gear portion; and
a second unit side gear portion including a plurality of teeth capable of engagement with the second main assembly side helical gear portion,
wherein while the first unit side gear portion and the second unit side gear portion are rotated in a predetermined direction by rotation of the first main assembly side helical gear portion and the second main assembly side helical gear portion, the tooth of first unit side gear portion is in contact with such a tooth of first main assembly side helical gear portion as is at a position on an upstream side in the predetermined direction, the tooth of the second unit side gear portion is in contact with such a tooth of the second main assembly side helical gear portion as is at a position on an upstream side in the predetermined direction.

[Structure C2]

A photosensitive member unit according to Structure C1, wherein with respect to the rotational axis of the photosensitive member, the second unit side gear portion is disposed between the photosensitive member and the first unit side gear portion.

[Structure C3]

A photosensitive member unit according to Structure C1 or C2, wherein with respect to the rotational axis of the photosensitive member, a gap provided between the first unit side gear portion and the second unit side gear portion.

[Structure C4]

A photosensitive member unit according to Structure C3, wherein the main assembly of the image forming apparatus includes a projected portion between the first main assembly side helical gear portion and the second main assembly side helical gear portion, wherein the projected portion is inserted into the gap in a state in which the first unit side gear portion is in meshing engagement with the first main assembly side helical gear portion and the second unit side gear portion is in meshing engagement with the second main assembly side helical gear portion.

[Structure C5]

A photosensitive member unit according to Structure C3 or C4, further comprising an intermediary member between the first unit side gear portion and the second unit side gear portion, the intermediary member is capable of filling the gap.

[Structure C6]

A photosensitive member unit according to Structure C5, wherein the intermediary member is movable between a position for providing the gap and a position for filling the gap, by rotation thereof.

[Structure C7]

A photosensitive member unit according to Structure C5, wherein the intermediary member is movable between the position for providing the gap and the position for filling the gap, by movement thereof in a direction perpendicular to the rotational axis of the photosensitive member.

[Structure C8]

A photosensitive member unit according to Structure C5, wherein the intermediary member is made of an elastic member and is capable of taking a position for providing the gap and a position for filling the gap, by elastic deformation thereof.

[Structure C9]

A photosensitive member unit according to any one of Structures C3 - C8, wherein with respect to the rotational axis of the photosensitive member, a tooth width Wc of the first unit side gear portion and a width We of the gap satisfy,

$$Wc > We \geqq Wc/5.$$

[Structure C10]

A photosensitive member unit according to Structure C9, wherein with respect to the rotational axis of the photosensitive member, a width We of the gap and a tooth width Wd of the second unit side gear portion satisfy,

$$Wd > We.$$

[Structure C11]

A photosensitive member unit according to any one of Structures C1 - C10, wherein the first helical gear portion and the second helical gear portion each have at least one tooth having a width satisfying,

$$Wc > Wd,$$

where Wc is a tooth width of the first helical gear portion, and Wd is a tooth width of the second helical gear portion, measured in the direction of the rotational axis of the photosensitive member.

[Structure C12]

A photosensitive member unit according to any one of Structures C1 - C11, wherein a helix angle of the tooth of the first unit side gear portion is not less than 15° and not more than 40°.

[Structure C13]

A photosensitive member unit according to any one of Structures C1 - C11, wherein a helix angle of the tooth of the first unit side gear portion is not less than 15° and not more than 35°.

[Structure C14]

A photosensitive member unit according to any one of Structures C1 - C13, wherein the first unit side gear portion includes a plurality of such teeth, at least one of which is constituted by a plurality of first projections provided separately in the direction of the rotational axis of the photosensitive member or in a rotational movement direction of the first unit side gear portion, the first projections being provided so as to be contactable with one of the teeth of the first main assembly side helical gear portion at respective positions away from each other in the direction of the rotational axis.

[Structure C15]

A photosensitive member unit according to any one of Structures C1 - C14, wherein at least one tooth of the teeth of the second unit side gear has a corner portion provided so as to contact one tooth of the second main assembly side helical gear portion, only at one position in the direction of the rotational axis.

[Structure C16]

A photosensitive member unit according to any one of Structures C1 - C14, wherein the second unit side gear portion is a helical gear portion having a twisting direction which is the same as a twisting direction of the tooth of the first unit side gear portion.

[Structure C17]

A photosensitive member unit according to Structure C16, wherein the second unit side gear portion includes a plurality of such teeth, at least one of which is constituted by a plurality of second projections provided separately in the direction of the rotational axis of the photosensitive member or in a rotational movement direction of the second unit side gear portion, the second projections being provided so as to be contactable with one of the teeth of the second main assembly side helical gear portion at respective positions away from each other in the direction of the rotational axis.

[Structure C18]

A photosensitive member unit according to any one of Structures C1 - C17, wherein the first unit side gear portion includes a number of such teeth, and the second unit side gear portion includes the same number of such teeth.

[Structure C19]

A photosensitive member unit according to any one of Structures C1 - C17, wherein first unit side gear portion includes a tooth missing part.

[Structure C20]

A photosensitive member unit according to any one of Structures C1 - C17, wherein second unit side gear portion includes a tooth missing part.

[Structure C21]

A photosensitive member unit according to any one of Structures C1 - C20, wherein a projecting direction of the first unit side gear portion and a projecting direction of the second unit side gear portion include respective components parallel with the rotational axis of the photosensitive drum.

Structure C22]

A photosensitive member unit according to any one of Structures C1 - C21, further comprising an elastic member covering the first unit side gear portion and/or the second unit side gear portion.

[Structure C23]

A photosensitive member unit according to any one of Structures C1 - C22, wherein while the first unit side gear portion and the second unit side gear portion are rotated in a predetermined direction by rotation of the first main assembly side helical gear portion and the second main assembly side helical gear portion, the first unit side gear portion and the second unit side gear portion are in a state that the tooth of the second unit side gear portion is fixed so as not to be rotated in a direction opposite to the predetermined direction relative to the first unit side gear portion.

Structure C24]

A photosensitive member unit according to any one of Structures C1 - C23, wherein the first unit side gear portion is capable of transmitting a driving force to the second unit side gear portion.

[Structure C25]

A photosensitive member unit according to any one of Structures C1 - C24, wherein the first unit side gear portion and the second unit side gear portion are rotatable coaxially with each other.

[Structure C26]

A photosensitive member unit according to Structure C25, wherein a rotational axis of the first unit side gear portion and a rotational axis of the second unit side gear portion are coaxial with the rotational axis of the photosensitive member.

[Structure C27]

A photosensitive member unit according to Structure C25 or 26, wherein the first unit side gear portion and the second unit side gear portion are integrally molded.

[Structure C28]

A photosensitive member unit according to Structure C27, wherein the first unit side gear portion when the second unit side gear portion integrally resin-molded.

[Structure C29]

A photosensitive member unit according to any one of Structures C25 - C28, wherein a diameter of an addendum circle of the second unit side gear portion is larger than a diameter of a dedendum circle of the first unit side gear portion or 0.8 times a diameter of an addendum circle of the first unit side gear portion, and smaller than 1.1 times the diameter of the addendum circle of the first unit side gear portion.

[Structure C30]

A photosensitive member unit according to any one of Structures C1 - C24, wherein the rotational axis of the first unit side gear portion and the rotational axis of the second unit side gear portion are not coaxial with each other.

[Structure C31]

A photosensitive member unit according to Structure C30, wherein the rotational axis of the first unit side gear portion or the rotational axis of the second unit side gear portion are coaxial with the rotational axis of the photosensitive member.

[Structure C32]

A photosensitive member unit according to Structure C30 or 31, wherein the rotational axis of the first unit side gear portion and the rotational axis of the second unit side gear portion are parallel with each other.

[Structure C33]

A photosensitive member unit according to any one of Structures C1 - C24, wherein the first unit side gear portion and/or the second unit side gear portion is provided on a belt-like member.

[Structure C34]

A photosensitive member unit according to any one of Structures C1 - C23, wherein the first unit side gear portion is connected with the second unit side gear portion so as to be capable of transmitting the driving force.

[Structure C35]

A photosensitive member unit according to Structure C34, wherein the first unit side gear portion is connected with the second unit side gear portion with a play therebetween in the rotational direction.

[Structure C36]

A photosensitive member unit according to Structure C34 or C35, wherein the first unit side gear portion is capable of being in a connected state of being connected with the second unit side gear portion to transit the driving force thereto and in a disconnected state of being incapable of transmitting the driving force to the second unit side gear portion.

[Structure C37]

A photosensitive member unit according to any one of Structures C1 - C24, wherein a rotational force received by the first unit side gear portion is transmitted to the photosensitive member.

[Structure C38]

A photosensitive member unit according to any one of Structures C1 - C24, further comprising a flange mounted to an end of the photosensitive member in the direction of the rotational axis of the photosensitive member, wherein the first unit side gear portion and the second unit side gear portion are provided on the flange.

[Structure C39]

A photosensitive member unit according to any one of Structures C1 - C36, further comprising a driving force receiving portion capable of meshing engagement with the first main assembly side helical gear portion or the second main assembly side helical gear portion to receive a driving force for rotating the photosensitive member.

[Structure C40]

A photosensitive member unit according to any one of Structures C1 - C36, further comprising a driving force receiving portion capable of engagement with a drive force applying portion provided in the main assembly of the image forming apparatus to receive a driving force for rotating the photosensitive member.

[Structure C41]

A photosensitive member unit according to Structure C11, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \leqq (4/5) \cdot Wc1.$$

[Structure C42]

A photosensitive member unit according to Structure C11, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \leqq (3/4) \cdot Wc1.$$

[Structure C43]

A photosensitive member unit according to Structure C11, 41 or 42, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \geqq (1/10) \cdot Wc1.$$

[Structure C44]

A photosensitive member unit according to any one of Structures C1 - C43, wherein the first main assembly side helical gear portion and the second main assembly side helical gear portion are integrally rotatable.

[Structure C45]

A photosensitive member unit according to any one of Structures C1 - C44, wherein the photosensitive member unit is mountable to and dismountable from the main assembly of the image forming apparatus by movement thereof in a direction perpendicular to a rotational axis of the first main assembly side helical gear portion.

[Structure C46]

A cartridge comprising the photosensitive member unit according to any one of Structures C1 - C45, and a frame rotatably supporting the photosensitive member unit.

<<Structure CX1>>

[Structure CX1]

A cartridge detachably mountable to a main assembly of an image forming apparatus, the image forming apparatus including a first main assembly side helical gear portion and a second main assembly side helical gear portion which are coaxially rotatable, the cartridge comprising:

a rotatable member rotatable about a rotational axis thereof;
a frame rotatably supporting the rotatable member;
a first unit side gear portion as a helical gear portion capable of meshing engagement with the first main assembly side helical gear portion; and
a second unit side gear portion including a plurality of teeth capable of engagement with the second main assembly side helical gear portion;
wherein while the first unit side gear portion and the second unit side gear portion are rotated in a predetermined direction by rotation of the first main assembly side helical gear portion and the second main assembly side helical gear portion, the tooth of first unit side gear portion is in contact with such a tooth of first main assembly side helical gear portion as is at a position on an upstream side in the predetermined direction, and a tooth of the second unit side gear portion is in contact with such a tooth of the second main assembly side helical gear portion as is at a position and an upstream side in the predetermined direction.

<Structures incorporatable in Structure CX1 (dependent structure)>

The elements of the above-described Structures C1 - C45 are incorporatable in Structure CX1.

<<Structure CY1>>

[Structure CY1]

An image forming apparatus comprising,

a main assembly including a first main assembly side helical gear portion and a second main assembly side helical gear portion which are coaxially rotatable; and
a cartridge detachably mounted in the main assembly,
the cartridge including (i) a rotatable member rotatable about a rotational axis thereof, (ii) a frame rotatably supporting the rotatable member, (iii) a first unit side helical gear portion, as a helical gear, for meshing engagement with the first main assembly side helical gear portion, and (iv) a second unit side helical gear portion, having a plurality of teeth, for engagement with the second main assembly side helical gear portion,
wherein in a state that the cartridge is mounted in the main assembly, while the first unit side gear portion and the second unit side gear portion are rotated in a predetermined direction by rotation of the first main assembly side helical gear portion and the second main assembly side helical gear portion, the tooth of first unit side gear portion is in contact with such a tooth of first main assembly side helical gear portion as is at a position on an upstream side in the predetermined direction, and a tooth of the second unit side gear portion is in contact with such a tooth of the second main assembly side helical gear portion as is at a position and an upstream side in the predetermined direction.

<Structures incorporatable in Structure CY1 (dependent structure)>

The elements of the above-described Structures C1 - C45 are incorporatable in Structure CY1.

<<Structure NA>>

[Structure NA1]

A photosensitive member unit detachably mountable to a main assembly of an image forming apparatus, the photosensitive member unit comprising:

a photosensitive member rotatable about a rotational axis thereof;
a rotatable first helical gear portion;
a second helical gear portion integrally rotatable with the first helical gear portion; and
a twisting direction of a tooth of the second helical gear portion is the same as a twisting direction of a tooth of the first helical gear portion, and a helix angle of the tooth of the second helical gear portion is larger than a helix angle of the tooth of the first helical gear portion.

[Structure NA2]

A photosensitive member unit according to Structure NA1, wherein with respect to the rotational axis of the photosensitive member, the second helical gear portion is provided between the photosensitive member and the first helical gear portion.

[Structure NA3]

A photosensitive member unit according to Structure NA1 or NA2, wherein with respect to the rotational axis of the photosensitive member, a gap is formed between the first helical gear portion and the second helical gear portion.

[Structure NA4]

A photosensitive member unit according to Structure NA3, further comprising an intermediary member provided between the first helical gear portion and the second helical gear portion with respect to the rotational axis of the photosensitive member, the intermediary member being capable of filling the gap.

[Structure NA5]

A photosensitive member unit according to Structure NA4, wherein the intermediary member is movable between a position for providing the gap and a position for filling the gap, by rotation thereof.

[Structure NA6]

A photosensitive member unit according to Structure NA4, wherein the intermediary member is movable between the position for providing the gap and the position for filling the gap, by movement thereof in a direction perpendicular to the rotational axis of the photosensitive member.

[Structure NA7]

A photosensitive member unit according to Structure NA4, wherein the intermediary member is made of an elastic member and is capable of taking a position for providing the gap and a position for filling the gap, by elastic deformation thereof.

[Structure NA8]

A photosensitive member unit according to any one of Structures C3 - NA7, wherein with respect to the rotational axis of the photosensitive member, a tooth width Wc of the first helical gear portion and a width We a gap satisfy,

$$\mathrm{Wc} > \mathrm{We} \geqq \mathrm{Wc}/5.$$

[Structure NA9]

A photosensitive member unit according to Structure NA8, wherein with respect to the rotational axis of the photosensitive member, a width We of the gap and a tooth width Wd of the second helical gear portion satisfy,

$$\mathrm{Wd} > \mathrm{We}.$$

[Structure NA10]

A photosensitive member unit according to any one of Structures NA1 - NA9, wherein the first helical gear portion and the second helical gear portion each have at least one tooth having a width satisfying,

$$\mathrm{Wc} > \mathrm{Wd},$$

where Wc is a tooth width of the first helical gear portion, and Wd is a tooth width of the second helical gear portion, measured in the direction of the rotational axis of the photosensitive member.

[Structure NA11]

A photosensitive member unit according to Structure NA10, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$\mathrm{Wd1} \leqq (4/5) \cdot \mathrm{Wc1}.$$

[Structure NA12]

A photosensitive member unit according to Structure NA10, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$\mathrm{Wd1} \leqq (3/4) \cdot \mathrm{Wc1}.$$

[Structure NA13]

A photosensitive member unit according to any one of Structures NA10 - NA12, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$\mathrm{Wd1} \geqq (1/10) \cdot \mathrm{Wc1}.$$

[Structure NA14]

A photosensitive member unit according to any one of Structures NA1 - NA10, wherein a helix angle of the tooth of the first helical gear portion is not less than 15° and not more than 40°.

[Structure NA15]

A photosensitive member unit according to Structure NA14, wherein the helix angle of the tooth of the first helical gear portion is not less than 20° and not more than 35°.

[Structure NA16]

A photosensitive member unit according to any one of Structures NA1 - NA12, wherein a helix angle of the tooth of the second helical gear portion is not less than 20° and not more than 40°.

[Structure NA17]

A photosensitive member unit according to any one of Structures NA1 - NA12, wherein a helix angle of the tooth of the second helical gear portion is not less than 25° and not more than 35°.

[Structure NA18]

A photosensitive member unit according to any one of Structures NA1 - NA15, wherein the first helical gear portion includes a plurality of such teeth, at least one of which is constituted by a plurality of first projections provided separately in the direction of the rotational axis of the photosensitive member or in a rotational movement direction of the first helical gear portion.

[Structure NA19]

A photosensitive member unit according to any one of Structures NA1 - NA18, wherein the second helical gear portion includes a plurality of such teeth, at least one of which is constituted by a plurality of second projections provided separately in the direction of the rotational axis of the photosensitive member or in a rotational movement direction of the second helical gear portion.

[Structure NA20]

A photosensitive member unit according to any one of Structures NA1 - NA19, wherein the first helical gear portion includes a number of such teeth, and the second helical gear portion includes the same number of such teeth.

[Structure NA21]

A photosensitive member unit according to any one of Structures NA1 - NA19, wherein the first helical gear portion includes a tooth missing part.

[Structure NA22]

A photosensitive member unit according to any one of Structures NA1 - NA19, wherein the second helical gear portion includes a tooth missing part.

[Structure NA23]

A photosensitive member unit according to any one of Structures NA1 - NA22, wherein a projecting direction of the first a helical gear portion and a projecting direction of the second a helical gear portion include respective components parallel with the rotational axis of the photosensitive drum.

[Structure NA24]

A photosensitive member unit according to any one of Structures NA1 - NA23, further comprising an elastic member covering the first helical gear portion and/or the second helical gear portion.

[Structure NA25]

A photosensitive member unit according to any one of Structures NA1 - NA24, wherein while the first helical gear portion and the second helical gear portion are rotated in a predetermined direction, the first a helical gear portion and the second a helical gear portion are in a state that the tooth of the second helical gear portion is fixed so as not to be rotated in a direction opposite to the predetermined direction relative to the first helical gear portion.

[Structure NA26]

A photosensitive member unit according to any one of Structures NA1 - NA23, wherein the first helical gear portion is capable of transmitting a driving force to the second helical gear portion.

[Structure NA27]

A photosensitive member unit according to any one of Structures NA1 - NA26, wherein the first helical gear portion and the second helical gear portion a rotatable coaxially with each other.

[Structure NA28]

A photosensitive member unit according to Structure NA27, wherein a rotational axis of the first helical gear portion and a rotational axis of the second helical gear portion is coaxial with the rotational axis of the photosensitive member.

[Structure NA29]

A photosensitive member unit according to Structure NA27 or 28, wherein the first helical gear portion and the second helical gear portion are integrally molded.

[Structure NA30]

A photosensitive member unit according to Structure NA29, wherein the first helical gear portion and the second helical gear portion are integrally resin-molded.

[Structure NA31]

A photosensitive member unit according to any one of Structures NA27 - NA30, wherein a diameter of an addendum circle of the second helical gear portion is larger than a diameter of a dedendum circle of the first a helical gear portion or 0.8 times a diameter of an addendum circle of the first a helical gear portion, and smaller than 1.1 times the diameter of the addendum circle of the first helical gear portion.

[Structure NA32]

A photosensitive member unit according to Structure NA31, wherein the diameter of the addendum circle of the second helical gear portion is larger than 0.9 times the diameter of the addendum circle of the first helical gear portion.

[Structure NA33]

A photosensitive member unit according to any one of Structures NA1 - NA26, wherein a rotational axis of the first helical gear portion and a rotational axis of the second helical gear portion are is not coaxial with each other.

[Structure NA34]

A photosensitive member unit according to Structure NA33, wherein the rotational axis of the first helical gear portion or the rotational axis of the second helical gear portion are coaxial with the rotational axis of the photosensitive member.

[Structure NA35]

A photosensitive member unit according to Structure NA33 or NA34, wherein the rotational axis of the first helical gear portion and the rotational axis of the second helical gear portion are parallel with each other.

[Structure NA36]

A photosensitive member unit according to any one of Structures NA1 - NA26, wherein the first helical gear portion and/or the second helical gear portion are provided on a belt-like member.

[Structure NA37]

A photosensitive member unit according to any one of Structures NA1 - NA25, wherein the first helical gear portion connected with the second helical gear portion so as to be capable of transmitting a driving force.

[Structure NA38]

A photosensitive member unit according to Structure NA37, wherein the first helical gear portion is connected with the second helical gear portion with a play in the rotational movement direction.

[Structure NA39]

A photosensitive member unit according to Structure NA37 or 38, wherein the first a helical gear portion is capable of being in a connected state of being connected with the second helical gear portion to transit the driving force thereto and in a disconnected state of being incapable of transmitting the driving force to the second helical gear portion.

[Structure NA40]

A photosensitive member unit according to any one of Structures NA1 - NA26, wherein the first helical gear portion is connected with the photosensitive member so as to be capable of transmitting a rotational force.

[Structure NA41]

A photosensitive member unit according to any one of Structures NA1 - NA26, further comprising a flange mounted to an end of the photosensitive member in the direction of the rotational axis of the photosensitive member, wherein the first helical gear portion and the second helical gear portion are provided on the flange.

[Structure NA42]

A photosensitive member unit according to any one of Structures NA1 - NA39, further comprising a third gear portion connected so as to be capable of transmitting the driving force to the photosensitive member.

<<Structure-NAX>>

[Structure-NAX1]

A cartridge detachably mountable to a main assembly of an image forming apparatus, the cartridge comprising:

a rotatable member rotatable about a rotational axis thereof;
a frame rotatably supporting the rotatable member;

a rotatable first helical gear portion; and
a second helical gear portion integrally rotatable with the first helical gear portion,
wherein a twisting direction of the tooth of the second helical gear portion is the same as a twisting direction of the tooth of the first helical gear portion, and a helix angle of the tooth of the second helical gear portion is larger than a helix angle of the tooth of the first helical gear portion.

<Structures incorporatable in Structure NAX1 (dependent structure)>

The elements of the above-described Structures NA1 - NA42 are incorporatable in Structure NAX1.

<<Structure-NB>>

[Structure-NB1]

A photosensitive member unit detachably mountable to a main assembly of an image forming apparatus, the photosensitive member unit comprising:

a photosensitive member rotatable about a rotational axis thereof;
a first gear portion as a helical gear portion; and
a second gear portion including a plurality of teeth, wherein with respect to the rotational axis of the photosensitive member, the second gear portion is disposed between the first gear portion and the photosensitive member,
wherein with respect to the rotational axis of the photosensitive member, a gap provided between the first gear portion and the second gear portion, and
wherein the first gear portion and the second gear portion each have at least one tooth satisfying,

$$Wc > Wd,$$

where Wc is a tooth width of the first gear portion, and Wd is a tooth width of the second gear portion, measured in the rotational axis direction of the photosensitive member.

[Structure-NB2]

A photosensitive member unit according to Structure-NB 1, further comprising an intermediary member capable of filling the gap, between the first gear portion and the second gear portion with respect to the rotational axis of the photosensitive member.

[Structure-NB3]

A photosensitive member unit according to Structure-NB2, wherein the intermediary member is movable between a position for providing the gap and a position for filling the gap, by rotation thereof.

[Structure-NB4]

A photosensitive member unit according to Structure-NB2, wherein the intermediary member is movable between a position for providing the gap and a position for filling the gap, by the movement thereof in a direction perpendicular to the rotational axis of the photosensitive member.

[Structure-B5]

A photosensitive member unit according to Structure-NB2, wherein the intermediary member is an elastic member and is capable of taking a state of providing the gap and a state of filling the gap.

[Structure-NB6]

A photosensitive member unit according to any one of Structures-NB 1 - NB5, wherein with respect to the rotational axis of the photosensitive member, a tooth width Wc of the first gear portion and a width We of the gap satisfy,

$$Wc > We \geqq Wc/5.$$

[Structure-NB7]

A photosensitive member unit according to Structure-NB6, wherein with respect to the rotational axis of the photosensitive member, a width We of the gap and a tooth width Wd the second gear portion satisfy,

$$Wd > We.$$

[Structure-NB8]

A photosensitive member unit according to any one of Structures-NB 1 - NB7, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \leqq (4/5) \cdot Wc1.$$

A photosensitive member unit according to any one of Structures-NB 1 - NB7, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \leqq (3/4) \cdot Wc1.$$

[Structure-NB10]

A photosensitive member unit according to any one of Structures-NB 1 - NB9, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \geqq (1/10) \cdot Wc1.$$

[Structure-NB11]

A photosensitive member unit according to any one of Structures-NB 1 - NB10, wherein a helix angle of the tooth of the first gear portion is not less than 15° and not more than 40°.

[Structure-NB12]

A photosensitive member unit according to any one of Structures-NB 1 - NB10, wherein a helix angle of the tooth of the first gear portion is not less than 20° and not more than 35°.

[Structure-NB13]

A photosensitive member unit according to any one of Structures-NB 1 - NB 12, wherein the first gear portion includes a plurality of such teeth, at least one of which is constituted by a plurality of first projections provided separately in the direction of the rotational axis of the photosensitive member or in a rotational movement direction of the first gear portion.

[Structure-NB14]

A photosensitive member unit according to any one of Structures-NB 1 - NB 13, wherein the second gear portion includes a plurality of such teeth, at least one of which is a tooth having a projecting shape projecting in a radial direction with respect to the rotational axis of the second gear portion.

[Structure-NB15]

A photosensitive member unit according to Structure-NB 14, wherein the projecting shape of the second gear portion is a cylindrical projection projecting in the radial direction with respect to the rotational axis of the second gear portion.

[Structure-NB16]

A photosensitive member unit according to Structure-NB 14, wherein the projecting shape of the second gear portion is a projection having a polygonal cross-section and projecting in the radial direction with respect to the rotational axis of the second gear portion.
A photosensitive member unit according to any one of Structures-NB 1 - NB 14, wherein the second gear portion includes a helical gear tooth, and a twisting direction of the tooth of the a helical gear is the same as a twisting direction of the tooth of the first gear portion.

[Structure-NB18]

A photosensitive member unit according to Structure-NB 17, wherein a helix angle of the tooth of the of the second gear portion is not less than 20° and not more than 40°.

[Structure-NB19]

A photosensitive member unit according to Structure-NB 17, wherein a helix angle of the tooth of the of the second gear portion is not less than 25° and not more than 35°.

[Structure-NB20]

A photosensitive member unit according to any one of Structures-NB17 - NB 19, wherein the tooth of the helical gear of the second gear portion is constituted by a plurality of second projections provided separately in the direction of the rotational axis of the photosensitive member or in the rotational moving direction of the second gear portion.

[Structure-NB21]

A photosensitive member unit according to any one of Structures-NB 1 - NB20, wherein the first gear portion includes a number of such teeth, and the second gear portion includes the same number of such teeth.

[Structure-NB22]

A photosensitive member unit according to any one of Structures-NB 1 - NB21, further comprising an elastic member covering the first gear portion and/or the second gear portion.

[Structure-NB23]

A photosensitive member unit according to any one of Structures-NB 1 - NB22, wherein while the first gear portion and the second gear portion are rotating in predetermined directions, the tooth of the second gear portion Is fixed so as not to rotate relative to the tooth of the first gear portion in a direction opposite to the predetermined direction.

[Structure-NB24]

A photosensitive member unit according to any one of Structures-NB 1 - NB23, wherein the first gear portion is capable of transmitting a driving force to the second gear portion.

A photosensitive member unit according to any one of Structures-NB 1 - NB24, wherein the first gear portion and the second gear portion are rotatable coaxially.

[Structure-NB26]

A photosensitive member unit according to Structure-NB25, wherein the rotational axis of the first gear portion and the rotational axis of the second gear portion are coaxial with rotational axis of the photosensitive member.

[Structure-NB27]

A photosensitive member unit according to Structure-NB25 or NB26, wherein the first gear portion and the second gear portion are integrally molded.

[Structure-NB28]

A photosensitive member unit according to Structure-NB27, wherein the first gear portion and the second gear portion are integrally resin-molded.

[Structure-NB29]

A photosensitive member unit according to any one of Structures-NB25 - NB28, wherein a diameter of an addendum circle of the second gear portion is larger than 0.8 times a diameter of a dedendum circle or a diameter of the addendum circle of the first gear portion, and is smaller than 1.1 times a diameter of an addendum circle of the first gear portion.

[Structure-NB30]

A photosensitive member unit according to Structure-NB29, wherein a diameter of an addendum circle of the second helical gear portion is larger than 0.9 times the diameter of the addendum circle.

[Structure-NB31]

A photosensitive member unit according to any one of Structures-NB1 - NB23, wherein the first gear portion is connected with the second gear portion so as to be capable of transmitting a driving force.

[Structure-NB32]

A photosensitive member unit according to Structure-NB3 1, wherein the first gear portion is connected with the second gear portion with a play in the rotational direction.

[Structure-NB33]

A photosensitive member unit according to any one of Structures-NB1 - NB24, wherein the first gear portion is connected with the photosensitive member so as to be capable of transmitting a rotational driving force thereto.

[Structure-NB34]

A photosensitive member unit according to any one of Structures-NB1 - NB24, further comprising a flange Mounted to an end portion of the photosensitive member in the direction of the rotational axis of the photosensitive member, and the first gear portion and the second gear portion are provided on the flange.

[Structure-NB35]

A photosensitive member unit according to any one of Structures-NB 1 - NB34, further comprising a third gear portion connected with the photosensitive member so as to be capable of transmitting a driving force thereto.

<<Structure NBX>>

[Structure NB1]

A cartridge detachably mountable to a main assembly of an image forming apparatus, the cartridge comprising:

> a rotatable member rotatable about a rotational axis thereof;
> a frame rotatably supporting the rotatable member;
> a first gear portion as a helical gear portion; and
> a second gear portion including a plurality of teeth, wherein with respect to the rotational direction of the rotatable member, the second gear portion disposed between the first gear portion and the rotatable member,
> wherein a gap provided between the first gear portion and the second gear portion, with respect to the direction of the rotational axis of the rotatable member,
wherein the first gear portion and the second gear portion each have at least one tooth satisfying,

$$Wc > Wd,$$

where Wc is a tooth width of the first gear portion, and Wd is a tooth width of the second gear portion, measured in the direction of the rotational axis of the rotatable member.

<Structures incorporatable in Structure NB X1 (dependent structure) >

The elements of the above-described Structures NB1 - NB35 are incorporatable in Structure NBX1.

<<Structure NC>>

[Structure NC1]

A photosensitive member unit detachably mountable to a main assembly of an image forming apparatus, the photosensitive member unit comprising:

a photosensitive member rotatable about a rotational axis thereof;
a first gear portion as a helical gear portion; and
a second gear portion including a plurality of teeth, wherein with respect to the rotational axis of the photosensitive member, the second gear portion is disposed between the first gear portion and the photosensitive member,
wherein with respect to the rotational axis of the photosensitive member, a gap provided between the first gear portion and the second gear portion, and
wherein with respect to the rotational axis of the photosensitive member, a tooth width Wc of the first gear portion and a width We of the gap satisfy,

$$Wc > We \geqq Wc/5.$$

[Structure NC2]

A photosensitive member unit according to Structure NC1, further comprising an intermediary member capable of filling the gap, between the first gear portion and the second gear portion with respect to the rotational axis of the photosensitive member.

[Structure NC3]

A photosensitive member unit according to Structure NC2, wherein the intermediary member is movable between a position for providing the gap and a position for filling the gap, by rotation thereof.

[Structure NC4]

A photosensitive member unit according to Structure NC2, wherein the intermediary member is movable between a position for providing the gap and a position for filling the gap, by the movement thereof in a direction perpendicular to the rotational axis of the photosensitive member.

[Structure NC5]

A photosensitive member unit according to Structure NC2, wherein the intermediary member is an elastic member and is capable of taking a state of providing the gap and a state of filling the gap.

[Structure NC6]

A photosensitive member unit according to any one of Structures NC1 - NC5, wherein with respect to the rotational axis of the photosensitive member, a width We of the gap and a tooth width Wd the second gear portion satisfy,

$$Wd > We.$$

[Structure NC7]

A photosensitive member unit according to any one of Structures NC1 - NC6, wherein the first helical gear portion and the second helical gear portion each have at least one tooth satisfying,
Wc > Wd, where Wc is a tooth width of the first helical gear portion, and Wd is a tooth width of the second helical gear portion, measured in the rotational axis direction of the photosensitive member.

[Structure NC8]

A photosensitive member unit according to any one of Structures NC1 - NC7, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \leqq (4/5) \cdot Wc1.$$

[Structure NC9]

A photosensitive member unit according to any one of Structures NC1 - NC7, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \leqq (3/4) \cdot Wc1.$$

[Structure NC10]

A photosensitive member unit according to any one of Structures NC1 - NC9, wherein a tooth width Wc1 of the tooth of the first helical gear portion that has a largest tooth width measured in the direction of the rotational axis of the photosensitive member and a tooth width Wd1 of the tooth of the second helical gear portion that has a largest tooth width measured in the direction of the rotational axis of the photosensitive member satisfy,

$$Wd1 \geqq (1/10) \cdot Wc1.$$

[Structure NC11]

A photosensitive member unit according to any one of Structures NC1 - NC10, wherein a helix angle of the tooth of the first gear portion is not less than 15° and not more than 40°.

[Structure NC12]

A photosensitive member unit according to any one of Structures NC1 - NC10, wherein a helix angle of the tooth of the first gear portion is not less than 20° and not more than 35°.

[Structure NC13]

A photosensitive member unit according to any one of Structures NC1 - NC12, wherein the first gear portion includes a plurality of such teeth, at least one of which includes a plurality of first projections provided separately in the rotational axis direction of the photosensitive member or a rotational moving direction of the first gear portion.

[Structure NC14]

A photosensitive member unit according to any one of Structures NC1 - NC13, wherein the second gear portion includes a plurality of such teeth, at least one of which is a tooth having a projecting shape projecting in a radial direction with respect to the rotational axis of the second gear portion.

[Structure NC15]

A photosensitive member unit according to Structure NC14, wherein the projecting shape of the second gear portion is a cylindrical projection projecting in the radial direction with respect to the rotational axis of the second gear portion.

[Structure NC16]

A photosensitive member unit according to Structure NC14, wherein the projecting shape of the second gear portion is a projection having a polygonal cross-section and projecting in the radial direction with respect to the rotational axis of the second gear portion.

[Structure NC17]

A photosensitive member unit according to any one of Structures NC1 - NC14, wherein the second gear portion includes a helical gear tooth, and a twisting direction of the tooth of the a helical gear is the same as a twisting direction of the tooth of the first gear portion.

[Structure NC18]

A photosensitive member unit according to Structure NC17, wherein a helix angle of the tooth of the of the second gear portion is not less than 20° and not more than 40°.

[Structure NC19]

A photosensitive member unit according to Structure NC17, wherein a helix angle of the tooth of the of the second gear portion is not less than 25° and not more than 35°.

[Structure NC20]

A photosensitive member unit according to Structure NC17, wherein the tooth of the helical gear of the second gear portion is constituted by a plurality of second projections provided separately in the direction of the rotational axis of the photosensitive member or a rotational moving direction of the second gear portion.

[Structure NC21]

A photosensitive member unit according to any one of Structures NC1 - NC20, wherein the first gear portion includes a number of such teeth, and the second gear portion includes the same number of such teeth.

[Structure NC22]

A photosensitive member unit according to any one of Structures NC1 - NC21, further comprising an elastic member covering the first gear portion and/or the second gear portion.

[Structure NC23]

A photosensitive member unit according to any one of Structures NC1 - NC22, wherein while the first gear portion and the second gear portion are rotating in predetermined directions, the tooth of the second gear portion Is fixed so as not to rotate relative to the tooth of the first gear portion in a direction opposite to the predetermined direction.

[Structure NC24]

A photosensitive member unit according to any one of Structures NC1 - NC23, wherein the first gear portion is capable of transmitting a driving force to the second gear portion.

[Structure NC25]

A photosensitive member unit according to any one of Structures NC1 - NC24, wherein the first gear portion and the second gear portion are rotatable coaxially.

[Structure NC26]

A photosensitive member unit according to Structure NC25, wherein the rotational axis of the first gear portion and the rotational axis of the second gear portion are coaxial with rotational axis of the photosensitive member.

[Structure NC27]

A photosensitive member unit according to Structure NC25 or NC26, wherein the first gear portion and the second gear portion are integrally molded.
A photosensitive member unit according to Structure NC27, wherein the first gear portion and the second gear portion are integrally resin-molded.

[Structure NC29]

A photosensitive member unit according to any one of Structures NC25 - NC28, wherein a diameter of an addendum circle of the second gear portion is larger than 0.8 times a diameter of a dedendum circle or a diameter of the addendum circle of the first gear portion, and is smaller than 1.1 times a diameter of an addendum circle of the first gear portion.

[Structure NC30]

A photosensitive member unit according to Structure NC29, wherein a diameter of an addendum circle of the second helical gear portion is larger than 0.9 times the diameter of the addendum circle.

[Structure NC31]

A photosensitive member unit according to any one of Structures NC1 - NC23, wherein the first gear portion is connected with the second gear portion so as to be capable of transmitting a driving force.

[Structure NC32]

A photosensitive member unit according to Structure NC31, wherein the first gear portion is connected with the second gear portion with a play in the rotational direction.

[Structure NC33]

A photosensitive member unit according to any one of Structures NC1 - NC24, wherein the first gear portion is connected with the photosensitive member so as to be capable of transmitting a rotational driving force thereto.

[Structure NC34]

A photosensitive member unit according to any one of Structures NC1 - NC24, further comprising a flange Mounted to an end portion of the photosensitive member in the direction of the rotational axis of the photosensitive member, and the first gear portion and the second gear portion are provided on the flange.

[Structure NC35]

A photosensitive member unit according to any one of Structures NC1 - NC34, further comprising a third gear portion connected with the photosensitive member so as to be capable of transmitting a driving force thereto.

<<Structure NCX>>

[Structure NCX1]

A photosensitive member unit detachably mountable to a main assembly of an image forming apparatus, the cartridge comprising:

> a rotatable member rotatable about a rotational axis thereof;
> a frame rotatably supporting the rotatable member;
> a first gear portion as a helical gear portion; and
> a second gear portion including a plurality of teeth, wherein with respect to the rotational direction of the rotatable member, the second gear portion disposed between the first gear portion and the rotatable member,

wherein a gap provided between the first gear portion and the second gear portion, with respect to the direction of the rotational axis of the rotatable member,

wherein with respect to the direction of the rotational axis of the rotatable member, a tooth width Wc of the first gear portion and a width We of the gap satisfy,

$$Wc > We \geqq Wc/5.$$

<Structures incorporatable in Structure NCX1 (dependent structure)>

The elements of the above-described Structures NC1 - NC35 are incorporatable in Structure NCX1.

<<Structure ND>>

[Structure ND1]

A cartridge detachably mountable to a main assembly of an image forming apparatus, the cartridge comprising:

a photosensitive member rotatable about a rotational axis thereof;
a frame rotatably supporting the photosensitive member;
a first gear portion as a helical gear portion;
a second gear portion including a plurality of teeth,
a memory substrate supported by the frame; and
an electrode portion electrically connected with the memory substrate,
wherein with respect to the rotational axis of the photosensitive member, the second gear portion disposed between the first gear portion and the photosensitive member, and a gap is provided between the first gear portion and the second gear portion, and
wherein with respect to the rotational axis of the photosensitive member, the first gear portion and the second gear portion are provided at a first end portion of the frame, and the electrode portion is provided at a second end portion of the frame which is opposite from the first end portion of the frame.

[Structure ND2]

A cartridge according to Structure ND1, further comprising a developing roller for carrying a developer to be deposited on the photosensitive member, wherein the electrode portion is disposed downstream of the rotational axis in a direction which is perpendicular to the rotational axis and which is from a rotational center of the developing roller toward the rotational axis of the photosensitive member.

[Structure ND3]

A cartridge according to Structure ND2, wherein the electrode portion is disposed downstream of the photosensitive member in a direction which is perpendicular to the rotational axis and which is from a rotational center of the developing roller toward the rotational axis of the photosensitive member.

[Structure ND4]

A cartridge according to any one of Structures ND1 - ND3, wherein the frame is provided with a first bearing member provided at the first end portion of the frame, and a second bearing member provided at the second end portion of the frame, and is provided with a projected portion projecting downstream beyond the first bearing member in a direction which is perpendicular to the rotational axis and which is from the rotation axis of the developing roller toward the rotational axis of the photosensitive member, and wherein the electrode portion is provided on the projected portion.

[Structure ND5]

A cartridge according to any one of Structures ND1 - ND3, wherein the frame is provided with a first bearing member provided at the first end portion of the frame, and a second bearing member provided at the second end portion of the frame, and is provided with a projected portion projecting downstream beyond the photosensitive member in a direction which is perpendicular to the rotational axis and which is from the rotation axis of the developing roller toward the rotational axis of the photosensitive member, and wherein the electrode portion is provided on the projected portion.

[Structure ND6]

A cartridge according to any one of Structures ND1 - ND5, wherein the photosensitive member has a first end portion closer to the frame first end portion than to the frame second end portion and a second end portion opposite from the first end portion in the direction of the rotational axis of the photosensitive member, and a region in which the electrode portion is provided includes a position of the second end portion of the photosensitive member with respect to the direction of the rotational axis.

[Structure ND7]

A cartridge according to any one of Structures ND1 - ND5, wherein the photosensitive member has a first end portion closer to the frame first end portion than to the frame second end portion and a second end portion opposite from the first end portion in the direction of the rotational axis of the photosensitive member, and a region in which the electrode portion is provided at a position closer to an outside of the frame than a position of the second end portion of the photosensitive member.

[Structure ND8]

A cartridge according to Structure ND6 or ND7, further comprising a flange member mounted to the second end portion of the photosensitive member, wherein a region in which the electrode portion is provided and a region in which the flange member is provided overlap at least partly, with respect to the direction of the rotational axis.

[Structure ND9]

A cartridge according to Structure ND7, wherein a flange member mounted to the second end portion of the photosensitive member, a region in which the electrode portion is provided at a position closer to an outside of the frame than a region in which the flange member is provided.

<Structures incorporatable in Structure NAX1 (dependent structure)>

The elements of the above-described Structures NC1 - NC35 are incorporatable in Structure ND.

[Structure NE1]

A cartridge detachably mountable to a main assembly of an image forming apparatus, the cartridge comprising:

a photosensitive member unit including a photosensitive member rotatable about a rotational axis thereof, a first gear portion having a plurality of teeth, and a second gear portion having a plurality of teeth; a frame having a frame first end portion and a frame second end portion opposite from the frame first end portion, with respect to the rotational axis of the photosensitive member; a developing roller for carrying a developer to be deposited on the photosensitive member; and a memory substrate including an electrode portion, wherein with respect to the rotational axis of the photosensitive member, the first gear portion is disposed at a position closer to the first end portion of the frame than to the second end portion of the frame, the second gear portion is disposed between the first gear portion and the photosensitive member, and a gap is provided between the first gear portion and the second gear portion, wherein the frame is provided with a first bearing member provided at the first end portion of the frame, and a second bearing member provided at the second end portion of the frame, wherein the first bearing member is provided with a projection which projects in a direction of the rotational axis of the photosensitive member and which is provided with a hole portion inside thereof, and the first bearing member rotatably supports the rotatably by an inner peripheral surface of the hole portion, and wherein the second bearing member rotatably supports the photosensitive member unit, and supports the memory substrate.

<Structures incorporatable in Structure NF (dependent structure)>

The elements of the above-described Structures NC1-9 are incorporatable in Structure ND.

[Structure NF1]

A cartridge detachably mountable to a main assembly of an image forming apparatus, the cartridge comprising:

a photosensitive member unit including a photosensitive member rotatable about a rotational axis thereof, a first gear portion having a plurality of teeth, and a second gear portion having a plurality of teeth; a frame having a first end portion of the frame and a second end portion of the frame opposite from the first end portion, with respect to the rotational axis of the photosensitive member; and a developing roller for carrying a developer to be deposited on the photosensitive member, wherein with respect to the rotational axis of the photosensitive member, the first gear portion is disposed at a position closer to the frame first end portion than to the frame second end portion, the second gear portion is disposed between the first gear portion and the photosensitive member, and a gap is provided between the first gear portion and the second gear portion, wherein the frame is provided with a first bearing member at the frame first end portion, wherein the first bearing member is provided with a projection projecting in a direction of the rotational axis of the photosensitive member, and a supporting portion provided on an inner peripheral surface of a hole portion formed the inside of the projection and rotatably supporting the photosensitive member unit, and wherein the projection is elongated along a direction perpendicular to the rotational axis and parallel with a line connecting a rotation axis of the developing roller and the rotational axis of the photosensitive member.

<Structures incorporatable in Structure NF (dependent structure) >

The elements of the above-described Structures NC1 - NC35 or Structures ND1 - 9 is incorporatable in Structure NF.

[INDUSTRIAL APPLICABILITY]

The present invention provides a photosensitive member unit and a cartridge which can be mounted to and dismounted from an image forming apparatus including a main assembly side gear portion and which includes a unit side gear portion, and provides an electrophotographic image forming apparatus.

The present invention is not limited to the above embodiments, and various modifications can be made without departing from the scope of the present invention as defined by the following claims.

**Claims**

1. A photosensitive member unit (969; 1769; 69; 1869; 1969; 2069; 2169; 2269; 2369; 2469; 2569; 2669) detachably mountable to a main assembly (A) of an image forming apparatus (100), the image forming apparatus (100) including a first main assembly side helical gear portion (981c; 1781c; 81c) and a second main assembly side helical gear portion (981d; 1781d; 81d) which are coaxially rotatable, the photosensitive member unit (969; 1769; 69; 1869; 1969; 2069; 2169; 2269; 2369; 2469; 2569; 2669) comprising:

   a photosensitive member (62; 1762; 1862; 1962; 2062; 2162; 2262; 2362; 2462; 2562; 2662) rotatable about a rotational axis (L1) thereof;
   a first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) for meshing engagement with the first main assembly side helical gear portion (981c; 1781c; 81c); and
   a second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) for meshing engagement with the second main assembly side helical gear portion (981d; 1781d; 81d),
   wherein a twisting direction of a tooth of the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) is the same as the twisting direction of a tooth of first unit side helical gear portion (963c; 1763c; 363c; 763c; 1063c; 1563c; 1663c; 1863c; 1902b; 1903b; 1904c; 2002b; 2163c; 2263c; 2363c; 2401a;

2502a; 2601c),
   wherein a helix angle (a2) of the tooth of the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) is larger than a helix angle (a1) of the tooth of the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c), and
   wherein the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) and the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) are rotatable in a state in which the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) is in meshing engagement with the first main assembly side helical gear portion (981c; 1781c; 81c), and the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) is in meshing engagement with the second main assembly side helical gear portion (981d; 1781d; 81d),
   wherein the second unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) is disposed between the photosensitive member (62; 1762; 1862; 1962; 2062; 2162; 2262; 2362; 2462; 2562; 2662) and the first unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) in a direction of the rotational axis (L1) of the photosensitive member (62; 1762; 1862; 1962; 2062; 2162; 2262; 2362; 2462; 2562; 2662).

2. A photosensitive member unit (969; 1769; 69; 1869; 1969; 2069; 2169; 2269; 2369; 2469; 2569; 2669) according to Claim 1, wherein with respect to the rotational axis (L1) of the photosensitive member (62; 1762; 1862; 1962; 2062; 2162; 2262; 2362; 2462; 2562; 2662), a gap (g) is provided between the first unit side helical gear portion (963c; 1763c; 363c; 763c; 1063c; 1563c; 1663c; 1863c; 1902b;

1903b; 1904c; 2002b; 2163c; 2263c; 2363c; 2401a; 2502a; 2601c) and the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d).

3. A photosensitive member unit (969; 1769; 69; 1869; 1969; 2069; 2169; 2269; 2369; 2469; 2569; 2669) according to Claim 2, wherein the main assembly (A) of the image forming apparatus (100) includes a projected portion between the first main assembly side helical gear portion (981c; 1781c; 81c) and the second main assembly side helical gear portion (981d; 1781d; 81d), and in a state in which the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) is in meshing engagement with the first main assembly side helical gear portion (981c; 1781c; 81c), and second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) is in meshing engagement with the second main assembly side helical gear portion (981d; 1781d; 81d), and the projected portion is inserted in the gap (g).

4. A photosensitive member unit (2269; 2369;) according to Claim 2 or 3, wherein the unit (2269; 2369) comprises an intermediary member (2201; 2202; 2301) between the first unit side helical gear portion (2263c; 2363c) and the second unit side helical gear portion (2263d; 2363d) with respect to the rotational axis (L1) of the photosensitive member (2262; 2362), the intermediary member (2201; 2202; 2301) being capable of filling the gap (g).

5. A photosensitive member unit (2269; 2369) according to Claim 4, wherein the intermediary member (2201; 2202; 2301) is movable between a position for providing the gap (g) and a position for filling the gap (g), by rotation thereof.

6. A photosensitive member unit (2269) according to Claim 4, wherein the intermediary member (2202) is movable between a position for providing the gap (g) and a position for filling the gap (g), by movement thereof in a direction perpendicular to the rotational axis (L1) of the photosensitive member (2262).

7. A photosensitive member unit (2369) according to Claim 4, wherein the intermediary member (2301) is made of an elastic member (2301) and is capable of taking a position for providing the gap (g) and a position for filling the gap (g), by elastic deformation thereof.

8. A photosensitive member unit (969; 1769; 69; 1869; 1969; 2069; 2169; 2269; 2369; 2469; 2569; 2669) according to any one of Claims 2 - 7, wherein with respect to the rotational axis (L1) of the photosensitive member (62; 1762; 1862; 1962; 2062; 2162; 2262; 2362; 2462; 2562; 2662), a tooth width Wc of the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) and a width We of the gap (g) satisfy,

$$Wc > We \geqq Wc/5.$$

9. A photosensitive member unit (969; 1769; 69; 1869; 1969; 2069; 2169; 2269; 2369; 2469; 2569; 2669) according to Claim 8, wherein with respect to the rotational axis (L1) of the photosensitive member (62; 1762; 1862; 1962; 2062; 2162; 2262; 2362; 2462; 2562; 2662), the width We of the gap (g) and a tooth width Wd of the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) satisfy,

$$Wd > We.$$

10. A photosensitive member unit (969; 1769; 69; 1869; 1969; 2069; 2169; 2269; 2369; 2469; 2569; 2669) according to any one of Claims 1 - 9, wherein the first helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) and the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) each have at least one tooth having a width satisfying,

$$Wc > Wd,$$

where Wc is a tooth width of the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) and Wd is a tooth width of the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d), measured in the rotational axis (L1) of the photosensitive member (62; 1762; 1862; 1962; 2062; 2162; 2262; 2362; 2462; 2562; 2662).

11. A photosensitive member unit (969; 1769; 69; 1869; 1969; 2069; 2169; 2269; 2369; 2469; 2569; 2669) according to any one of Claims 1 - 10, wherein the helix angle (a1) of the tooth of the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) is not less than 15° and not more than 40°.

12. A photosensitive member unit (969; 1769; 69; 1869; 1969; 2069; 2169; 2269; 2369; 2469; 2569; 2669) according to any one of Claims 1 - 10, wherein the helix angle (a2) of the tooth of the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) is not less than 20° and not more than 35°.

13. A photosensitive member unit (969; 1769; 69; 1869; 1969; 2069; 2169; 2269; 2369; 2469; 2569; 2669) according to any one of Claims 1 - 12, wherein the helix angle (a1) of the tooth of the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) is not less than 20° and not more than 40°.

14. A photosensitive member unit (969; 1769; 69; 1869; 1969; 2069; 2169; 2269; 2369; 2469; 2569; 2669) according to any one of Claims 1 - 12, wherein a helix angle of the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) is not less than 25° and not more than 35°.

15. A photosensitive member unit (69) according to any one of Claims 1 - 14, wherein the first unit side helical gear portion (363c; 1663c) includes a plurality of such teeth, at least one of which is constituted by a plurality of first projections (363ct; 1663ct) provided separately in the direction of the rotational axis (L1) of the photosensitive member (62) or in a rotational movement direction of the first unit side helical gear portion (363c; 1663c), the first projections (363ct; 1663ct) being provided so as to be contactable with one of the teeth of the first main assembly side helical gear portion (81c) at respective positions away from each other in the direction of the rotational axis (L1).

16. A photosensitive member unit (69) according to any one of Claims 1 - 15, wherein the second unit side helical gear portion (363d; 1663d) includes a plurality of such teeth, at least one of which is constituted by a plurality of second projections (363dt; 1663dt) provided separately in the direction of the rotational axis (L1) of the photosensitive member (62) or in a rotational movement direction of the second unit side helical gear portion(363d; 1663d), the second projections (363dt; 1663dt) being provided so as to be contactable with one of the teeth of the second main assembly side helical gear portion (81d) at respective positions away from each other in the direction of the rotational axis (L1).

17. A photosensitive member unit (969; 1769; 69; 1869; 1969; 2069; 2169; 2269; 2369; 2469; 2569; 2669) according to any one of Claims 1 - 16, wherein the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) includes a number of such teeth, and the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) includes the same number of such teeth.

18. A photosensitive member unit (969; 1769; 69; 1869; 1969; 2069; 2169; 2269; 2369; 2469; 2569; 2669) according to any one of Claims 1 - 16, wherein the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) includes a tooth missing part (463L; 563L).

19. A photosensitive member unit (969; 1769; 69; 1869; 1969; 2069; 2169; 2269; 2369; 2469; 2569; 2669) according to any one of Claims 1 - 18, wherein the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) includes a tooth missing part.

20. A photosensitive member unit (2169) according to any one of Claims 1 - 19, wherein a projecting direction of the first unit side helical gear portion (2163c) and/or a projecting direction of the second unit side helical gear portion (2163d) include respective components parallel with the rotational axis (L1) of the photosensitive member (2162).

21. A photosensitive member unit (1869) according to any one of Claims 1 - 20, further comprising an elastic member (1801) covering the first unit side helical gear portion (1863c) and/or the second unit side helical gear portion (18963d).

22. A photosensitive member unit (969; 1769; 69; 1869; 1969; 2069; 2169; 2269; 2369; 2469; 2569; 2669) according to any one of Claims 1 - 21, wherein while the first unit side helical gear portion (963c; 1763c; 363c; 763c; 1063c; 1563c; 1663c; 1863c; 1902b; 1903b; 1904c; 2002b; 2163c; 2263c; 2363c;

2401a; 2502a; 2601c) and the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) are rotated in a predetermined direction by rotation of the first main assembly side helical gear portion (981c; 1781c; 81c) and the second main assembly side helical gear portion (981d; 1781d; 81d), the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) and the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) are in a state that the tooth of first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) is in contact with such a tooth of first main assembly side helical gear portion (981c; 1781c; 81c) as is at a position on an upstream side in the predetermined direction, the tooth of the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) is in contact with such a tooth of the second main assembly side helical gear portion (981d; 1781d; 81d) as is at a position on an upstream side in the predetermined direction, and the tooth of the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) is fixed so as not to be rotated in a direction opposite to the predetermined direction relative to the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c).

23. A photosensitive member unit (969; 1769; 69; 1869; 1969; 2069; 2169; 2269; 2369; 2469; 2569; 2669) according to any one of Claims 1 - 22, wherein the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) is capable of transmitting a driving force to the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d).

24. A photosensitive member unit (969; 1769; 69; 1869; 2169; 2269; 2369; 2469; 2569; 2669) according to any one of Claims 1 - 23, wherein the first unit side helical gear portion (963c; 1763c; 363c; 763c; 1063c; 1563c; 1663c; 1863c; 2163c; 2263c; 2363c; 2401a; 2502a; 2601c) and the second unit side helical gear portion (963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d) are rotatable coaxially with each other.

25. A photosensitive member unit (969; 1769; 69; 1869; 2169; 2269; 2369; 2469; 2569; 2669) according to Claim 24, wherein a rotational axis of the first unit side helical gear portion (963c; 1763c; 363c; 763c; 1063c; 1563c; 1663c; 1863c; 2163c; 2263c; 2363c; 2401a; 2502a; 2601c) and a rotational axis of the second unit side helical gear portion (963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d) are coaxial with the rotational axis (L1) of the photosensitive member (62; 1762; 1862; 2162; 2262; 2362; 2462; 2562; 2662).

26. A photosensitive member unit (969; 1769; 69; 1869; 2169; 2269; 2369; 2569; 2669) according to Claim 24 or 25, wherein the first unit side helical gear portion (963c; 1763c; 363c; 763c; 1063c; 1563c; 1663c; 1863c; 2163c; 2263c; 2363c; 2502a; 2601c) and the second unit side helical gear portion (963c; 1763c; 363c; 763c; 1063c; 1563c; 1663c; 18963d; 1763d; 363d; 763d; 1063d; 1563d; 1663d; 1863d; 2163d; 2263d; 2363d; 2502b; 2601d) are integrally molded.

27. A photosensitive member unit (969; 1769; 69; 1869; 2169; 2269; 2369; 2569; 2669) according to Claim 26, wherein the first unit side helical gear portion (963c; 1763c; 363c; 763c; 1063c; 1563c; 1663c; 1863c; 2163c; 2263c; 2363c; 2502a; 2601c) and the second unit side helical gear portion (963c; 1763c; 363c; 763c; 1063c; 1563c; 1663c; 18963d; 1763d; 363d; 763d; 1063d; 1563d; 1663d; 1863d; 2163d; 2263d; 2363d; 2502b; 2601d) are integrally resin-molded.

28. A photosensitive member unit (969; 1769; 69; 1869; 2169; 2269; 2369; 2469; 2569; 2669) according to any one of Claims 24 - 27, wherein a diameter (Dt963c; 1763c; 363c; 763c; 1063c; 1563c; 1663c; 1863c; 2163c; 2263c; 2363c; 2401a; 2502a; 2601c) of an addendum circle of the first unit side helical gear portion (963c; 1763c; 363c; 763c; 1063c; 1563c; 1663c; 1863c; 2163c; 2263c; 2363c; 2401a; 2502a; 2601c) is larger than a diameter (Db963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b;

2601d) of a dedendum circle of the second unit side helical gear portion (963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d) or is larger than 0.8 times a diameter (Dt963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d) of an addendum circle of the second unit side helical gear portion (963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d), and smaller than 1.1 times the diameter (Dt963c; 1763c; 363c; 763c; 1063c; 1563c; 1663c; 1863c; 2163c; 2263c; 2363c; 2401a; 2502a; 2601c) of the addendum circle of the second unit side helical gear portion (963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d).

29. A photosensitive member unit (1969) according to any one of Claims 1 - 23, wherein the rotational axis of the first unit side helical gear portion (1902b; 1903b; 1904c) and the rotational axis of the second unit side helical gear portion (1963d) are not coaxial with each other.

30. A photosensitive member unit (969; 1769; 69; 1869; 1969; 2069; 2169; 2269; 2369; 2469; 2569; 2669) according to Claim 29, wherein the rotational axis of the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) or the rotational axis of the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) is coaxial with the rotational axis of the photosensitive member (62; 1762; 1862; 1962; 2062; 2162; 2262; 2362; 2462; 2562; 2662).

31. A photosensitive member unit (969; 1769; 69; 1869; 2169; 2269; 2369; 2469; 2569; 2669) according to Claim 29 or 30, wherein the rotational axis of the first unit side helical gear portion (963c; 1763c; 363c; 763c; 1063c; 1563c; 1663c; 1863c; 2163c; 2263c; 2363c; 2401a; 2502a; 2601c) and the rotational axis of the second unit side helical gear portion (963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d) are parallel with each other.

32. A photosensitive member unit (2069) according to any one of Claims 1 - 23, wherein the first unit side helical gear portion (2002b) and/or the second unit side helical gear portion (2063d) is provided on a belt-like member (2002).

33. A photosensitive member unit (969; 1769; 69; 1869; 1969; 2069; 2169; 2269; 2369; 2469; 2569; 2669) according to any one of Claims 1 - 22, wherein the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) is connected with the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) so as to be capable of transmitting the driving force.

34. A photosensitive member unit (2469) according to Claim 33, wherein the first unit side helical gear portion(2401a) is connected with the second unit side helical gear portion(2402a) with a play therebetween in their rotational direction.

35. A photosensitive member (2469) unit according to Claim 33 or 34, wherein the first unit side helical gear portion(2401a) is capable of being in a connected state of being connected with the second unit side helical gear portion(2402a) to transmit the driving force thereto and in a disconnected state of being incapable of transmitting the driving force to the second unit side helical gear portion (2402a).

36. A photosensitive member unit (969; 1769; 69; 1869; 1969; 2069; 2169; 2269; 2369; 2469) according to any one of Claims 1 - 23, wherein a rotational force received by the first unit side helical gear portion (963c; 1763c; 363c; 763c; 1063c; 1563c; 1663c; 1863c; 1902b; 1903b; 1904c; 2002b; 2163c; 2263c; 2363c; 2401a) is transmitted to the photosensitive member (62; 1762; 1862; 1962; 2062; 2162; 2262; 2362; 2462).

37. A photosensitive member unit (969; 1769; 69; 1869; 1969; 2069; 2169; 2269; 2369; 2469) according to any one of Claims 1 - 23, further comprising a flange (63) mounted to an end of the photosensitive member (62; 1762; 1862; 1962; 2062; 2162; 2262; 2362; 2462) in the direction of the rotational axis of the photosensitive member (62; 1762; 1862; 1962; 2062; 2162; 2262; 2362; 2462), wherein the first unit side helical gear portion (963c; 1763c; 363c; 763c; 1063c; 1663c; 1863c; 1902b; 1903b; 1904c; 2002b; 2163c; 2263c; 2363c; 2401a) and the second unit side helical gear portion (963c; 1763c; 363c; 763c; 1063c; 1663c; 18963d; 1763d; 363d; 763d; 1063d; 1563d; 1663d; 1863d; 1963d; 2063d; 2163d; 2263d; 2363d; 2402a) are provided on the flange.

38. A photosensitive member unit (2569) according to any one of Claims 1 - 35, further comprising a driving force receiving portion (2501) capable of meshing engagement with the first main assembly side helical gear portion (1781c) or the second main assembly side helical gear portion (1781d) to receive a driving force for rotating the photosensitive member (2562).

39. A photosensitive member (2669) unit according to any one of Claims 1 - 35, further comprising a driving force receiving portion (2689) capable of engagement with a drive force applying portion (1789) provided in the main assembly (A) of the image forming apparatus (17100) to receive a driving force for rotating the photosensitive member (2662).

40. A photosensitive member unit (969; 1769; 69; 1869; 1969; 2069; 2169; 2269; 2369; 2469; 2569; 2669) according to Claim 10, wherein a tooth width Wc1 of the tooth of the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) that has a largest tooth width measured in the direction of the rotational axis of the photosensitive member (62; 1762; 1862; 1962; 2062; 2162; 2262; 2362; 2462; 2562; 2662) and a tooth width Wd1 of the tooth of the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) that has a largest tooth width measured in the direction of the rotational axis (L1) of the photosensitive member (62; 1762; 1862; 1962; 2062; 2162; 2262; 2362; 2462; 2562; 2662) satisfy,

$$Wd1 \leqq (4/5) \cdot Wc1.$$

41. A photosensitive member unit (969; 1769; 69; 1869; 1969; 2069; 2169; 2269; 2369; 2469; 2569; 2669) according to Claim 10, wherein a tooth width Wc1 of the tooth of the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) that has a largest tooth width measured in the direction of the rotational axis of the photosensitive member (62; 1762; 1862; 1962; 2062; 2162; 2262; 2362; 2462; 2562; 2662) and a tooth width Wd1 of the tooth of the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) that has a largest tooth width measured in the direction of the rotational axis (L1) of the photosensitive member (62; 1762; 1862; 1962; 2062; 2162; 2262; 2362; 2462; 2562; 2662) satisfy,

$$Wd1 \leqq (3/4) \cdot Wc1.$$

42. A photosensitive member unit (969; 1769; 69; 1869; 1969; 2069; 2169; 2269; 2369; 2469; 2569; 2669) according to any one of Claims 10, 40 or 41, wherein a tooth width Wc1 of the tooth of the first unit side helical gear portion (963c; 1763c; 363c; 763c; 1063c; 1563c; 1663c; 1863c; 1902b; 1903b; 1904c; 2002b; 2163c; 2263c; 2363c; 2401a; 2502a; 2601c) that has a largest tooth width measured in the direction of the rotational axis (L1) of the photosensitive member (62; 1762; 1862; 1962; 2062; 2162; 2262; 2362; 2462; 2562; 2662) and a tooth width Wd1 of the tooth of the second unit side helical gear portion (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) that has a largest tooth width measured in the direction of the rotational axis (L1) of the photosensitive member (62; 1762; 1862; 1962; 2062; 2162; 2262; 2362; 2462; 2562; 2662) satisfy,

$$Wd1 \geqq (1/10) \cdot Wc1.$$

43. A photosensitive member unit (969; 1769; 69; 1869; 1969; 2069; 2169; 2269; 2369; 2469; 2569; 2669) according to any one of Claims 1 - 42, wherein a twisting direction of the tooth of the second main assembly side helical gear portion (981d; 1781d; 81d) is the same as a twisting direction of the tooth of the first main assembly side helical gear portion (981c; 1781c; 81c), wherein a helix angle of the tooth of the second main assembly side helical gear portion (981d; 1781d; 81d) is larger than a helix angle of the tooth of the first main assembly side helical gear portion (981c; 1781c; 81c), and wherein the first main assembly side helical gear portion (981c; 1781c; 81c) and the second main assembly side helical gear portion (981d; 1781d; 81d) are integrally rotatable.

44. A photosensitive member unit (969; 1769; 69; 1869; 1969; 2069; 2169; 2269; 2369; 2469; 2569; 2669) according to any one of Claims 1 - 43, wherein the photosensitive member unit (969; 1769; 69; 1869; 1969; 2069; 2169; 2269; 2369; 2469; 2569; 2669) is mountable to and dismountable from the main assembly (A) of the image forming apparatus (100) by movement thereof in a direction perpendicular to a rotational axis (L2) of the first main assembly side helical gear portion (981c; 1781c; 81c).

45. A cartridge (B) comprising the photosensitive member unit (969; 1769; 69; 1869; 1969; 2069; 2169; 2269; 2369; 2469; 2569; 2669) according to any one of Claims 1 - 44, and a frame (60a; 1771; 1773) rotatably supporting the photosensitive member unit (969; 1769; 69; 1869; 1969; 2069; 2169; 2269; 2369; 2469; 2569; 2669).

**Patentansprüche**

1. Lichtempfindliche Bauteileinheit (969; 1769; 69; 1869; 1969; 2069; 2169; 2269; 2369; 2469; 2569; 2669), die abnehmbar an einer Hauptbaugruppe (A) eines Bilderzeugungsgeräts (100) montierbar ist, wobei das Bilderzeugungsgerät (100) einen ersten hauptbaugruppenseitigen Schrägzahnradabschnitt (981c; 1781c; 81c) und einen zweiten hauptbaugruppenseitigen Schrägzahnradabschnitt (981d; 1781d; 81d) aufweist, die koaxial drehbar sind, wobei die lichtempfindliche Bauteileinheit (969; 1769; 69; 1869; 1969; 2069; 2169; 2269; 2369; 2469; 2569; 2669) Folgendes aufweist:

   ein lichtempfindliches Bauteil (62; 1762; 1862; 1962; 2062; 2162; 2262; 2362; 2462; 2562; 2662), das um eine Drehachse (L1) davon drehbar ist;
   einen ersten einheitsseitigen Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) zum Kämmeingriff mit dem ersten hauptbaugruppenseitigen Schrägzahnradabschnitt (981c; 1781c; 81c); und
   einen zweiten einheitsseitigen Schrägzahnradabschnitt (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) zum Kämmeingriff mit dem zweiten hauptbaugruppenseitigen Schrägzahnradabschnitt (981d; 1781d; 81d),
   wobei eine Verwindungsrichtung eines Zahnes des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) dieselbe ist wie die Verwindungsrichtung eines Zahnes des ersten einheitsseitigen Schrägzahnradabschnitts (963c; 1763c; 363c; 763c; 1063c; 1563c; 1663c; 1863c; 1902b; 1903b; 1904c; 2002b; 2163c; 2263c; 2363c; 2401a; 2502a; 2601c),
   wobei ein Schrägungswinkel ($\alpha$2) des Zahnes des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) größer ist als ein Schrägungswinkel ($\alpha$1) des Zahnes des ersten einheitsseitigen Schrägzahnradabschnitts (963c; 1763c; 363c; 763c; 1063c; 1563c; 1663c; 1863c; 1902b; 1903b; 1904c; 2002b; 2163c; 2263c; 2363c; 2401a; 2502a; 2601c), und
wobei der erste einheitsseitige Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) und der zweite einheitsseitige Schrägzahnradabschnitt (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) in einem Zustand drehbar sind, in dem der erste einheitsseitige Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) mit dem ersten hauptbaugruppenseitigen Schrägzahnradabschnitt (981c; 1781c; 81c) in Kämmeingriff ist und der zweite einheitsseitige Schrägzahnradabschnitt (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) mit dem zweiten hauptbaugruppenseitigen Schrägzahnradabschnitt (981d; 1781d; 81d) in Kämmeingriff ist,
wobei der zweite einheitsseitige Schrägzahnradabschnitt (963c; 1763c; 363c; 763c; 1563c; 1663c; 1863c; 1902b; 1903b; 1904c; 2002b; 2163c; 2263c; 2363c; 2401a; 2502a; 2601c) zwischen dem lichtempfindlichen Bauteil (62; 1762; 1862; 1962; 2062; 2162; 2262; 2362; 2462; 2562; 2662) und dem ersten einheitsseitigen Schrägzahnradabschnitt (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) in einer Richtung der Drehachse (L1) des lichtempfindlichen Bauteils (62; 1762; 1862; 1962; 2062; 2162; 2262; 2362; 2462; 2562; 2662) angeordnet ist.

2. Lichtempfindliche Bauteileinheit (969; 1769; 69; 1869; 1969; 2069; 2169; 2269; 2369; 2469; 2569; 2669) nach Anspruch 1, wobei in Bezug auf die Drehachse (L1) des lichtempfindlichen Bauteils (62; 1762; 1862; 1962; 2062; 2162; 2262; 2362; 2462; 2562; 2662) ein Zwischenraum (g) zwischen dem ersten einheitsseitigen Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) und dem zweiten einheitsseitigen Schrägzahnradabschnitt (963c; 1763c; 363c; 763c; 1063c; 1563c;

1663c; 18963d; 1763d; 363d; 763d; 1063d; 1563d; 1663d; 1863d; 1963d; 2063d; 2163d; 2263d; 2363d; 2402a; 2502b; 2601d) vorgesehen ist.

3. Lichtempfindliche Bauteileinheit (969; 1769; 69; 1869; 1969; 2069; 2169; 2269; 2369; 2469; 2569; 2669) nach Anspruch 2, wobei die Hauptbaugruppe (A) des Bilderzeugungsgeräts (100) einen vorstehenden Abschnitt zwischen dem ersten hauptbaugruppenseitigen Schrägzahnradabschnitt (981c; 1781c; 81c) und dem zweiten hauptbaugruppenseitigen Schrägzahnradabschnitt (981d; 1781d; 81d) aufweist, und in einem Zustand, in dem der erste einheitsseitige Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) mit dem ersten hauptbaugruppenseitigen Schrägzahnradabschnitt (981c; 1781c; 81c) in Kämmeingriff ist und der zweite einheitsseitige Schrägzahnradabschnitt (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) mit dem zweiten hauptbaugruppenseitigen Schrägzahnradabschnitt (981d; 1781d; 81d) in Kämmeingriff ist, der vorstehende Abschnitt in dem Zwischenraum (g) eingesetzt ist.

4. Lichtempfindliche Bauteileinheit (2269; 2369) nach Anspruch 2 oder 3, wobei die Einheit (2269; 2369) ein Zwischenbauteil (2201; 2202; 2301) zwischen dem ersten einheitsseitigen Schrägzahnradabschnitt (2263c; 2363c) und dem zweiten einheitsseitigen Schrägzahnradabschnitt (2263d; 2363d) in Bezug auf die Drehachse (L1) des lichtempfindlichen Bauteils (2262; 2362) aufweist, wobei das Zwischenbauteil (2201; 2202; 2301) in der Lage ist, den Zwischenraum (g) auszufüllen.

5. Lichtempfindliche Bauteileinheit (2269; 2369) nach Anspruch 4, wobei das Zwischenbauteil (2201; 2202; 2301) zwischen einer Position zum Vorsehen des Zwischenraums (g) und einer Position zum Ausfüllen des Zwischenraums (g) durch eine Drehung davon beweglich ist.

6. Lichtempfindliche Bauteileinheit (2269) nach Anspruch 4, wobei das Zwischenbauteil (2202) zwischen einer Position zum Vorsehen des Zwischenraums (g) und einer Position zum Ausfüllen des Zwischenraums (g) durch eine Bewegung davon in einer Richtung senkrecht zu der Drehachse (L1) des lichtempfindlichen Bauteils (2262) beweglich ist.

7. Lichtempfindliche Bauteileinheit (2369) nach Anspruch 4, wobei das Zwischenbauteil (2301) aus einem elastischen Bauteil (2301) hergestellt ist und in der Lage ist, eine Position zum Vorsehen des Zwischenraums (g) und eine Position zum Ausfüllen des Zwischenraums (g) durch eine elastische Verformung davon einzunehmen.

8. Lichtempfindliche Bauteileinheit (969; 1769; 69; 1869; 1969; 2069; 2169; 2269; 2369; 2469; 2569; 2669) nach einem der Ansprüche 2 bis 7, wobei in Bezug auf die Drehachse (L1) des lichtempfindlichen Bauteils (62; 1762; 1862; 1962; 2062; 2162; 2262; 2362; 2462; 2562; 2662) eine Zahnbreite Wc des ersten einheitsseitigen Schrägzahnradabschnitts (963c; 1763c; 363c; 763c; 1063c; 1563c; 1663c; 1863c; 1902b; 1903b; 1904c; 2002b; 2163c; 2263c; 2363c; 2401a; 2502a; 2601c) und eine Breite We des Zwischenraums (g) folgendes Verhältnis erfüllen:

$$Wc > We \geq Wc/5.$$

9. Lichtempfindliche Bauteileinheit (969; 1769; 69; 1869; 1969; 2069; 2169; 2269; 2369; 2469; 2569; 2669) nach Anspruch 8, wobei in Bezug auf die Drehachse (L1) des lichtempfindlichen Bauteils (62; 1762; 1862; 1962; 2062; 2162; 2262; 2362; 2462; 2562; 2662) die Breite We des Zwischenraums (g) und eine Zahnbreite Wd des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) folgendes Verhältnis erfüllen:

$$Wd > We.$$

10. Lichtempfindliche Bauteileinheit (969; 1769; 69; 1869; 1969; 2069; 2169; 2269; 2369; 2469; 2569; 2669) nach einem der Ansprüche 1 bis 9, wobei der erste Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) und der zweite einheitsseitige Schrägzahnradabschnitt (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) jeweils zumindest einen Zahn mit einer Breite haben, der folgendes Verhältnis erfüllt:

$$Wc > Wd,$$

wobei Wc eine Zahnbreite des ersten einheitsseitigen Schrägzahnradabschnitts (963c; 1763c; 363c; 763c; 1063c; 1563c; 1663c; 1863c; 1902b; 1903b; 1904c; 2002b; 2163c; 2263c; 2363c; 2401a; 2502a; 2601c) ist und Wd eine Zahnbreite des zweiten einheitsseitigen Schrägzahnradabschnitts (963c;

1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) ist, gemessen in der Drehachse (L1) des lichtempfindlichen Bauteils (62; 1762; 1862; 1962; 2062; 2162; 2262; 2362; 2462; 2562; 2662).

11. Lichtempfindliche Bauteileinheit (969; 1769; 69; 1869; 1969; 2069; 2169; 2269; 2369; 2469; 2569; 2669) nach einem der Ansprüche 1 bis 10, wobei der Schrägungswinkel ($\alpha$1) des Zahnes des ersten einheitsseitigen Schrägzahnradabschnitts (963c; 1763c; 363c; 763c; 1063c; 1563c; 1663c; 1863c; 1902b; 1903b; 1904c; 2002b; 2163c; 2263c; 2363c; 2401a; 2502a; 2601c) nicht kleiner ist als 15° und nicht größer ist als 40°.

12. Lichtempfindliche Bauteileinheit (969; 1769; 69; 1869; 1969; 2069; 2169; 2269; 2369; 2469; 2569; 2669) nach einem der Ansprüche 1 bis 10, wobei der Schrägungswinkel ($\alpha$2) des Zahnes des ersten einheitsseitigen Schrägzahnradabschnitts (963c; 1763c; 363c; 763c; 1063c; 1563c; 1663c; 1863c; 1902b; 1903b; 1904c; 2002b; 2163c; 2263c; 2363c; 2401a; 2502a; 2601c) nicht kleiner ist als 20° und nicht größer ist als 35°.

13. Lichtempfindliche Bauteileinheit (969; 1769; 69; 1869; 1969; 2069; 2169; 2269; 2369; 2469; 2569; 2669) nach einem der Ansprüche 1 bis 12, wobei der Schrägungswinkel ($\alpha$1) des Zahnes des ersten einheitsseitigen Schrägzahnradabschnitts (963c; 1763c; 363c; 763c; 1063c; 1563c; 1663c; 1863c; 1902b; 1903b; 1904c; 2002b; 2163c; 2263c; 2363c; 2401a; 2502a; 2601c) nicht kleiner ist als 20° und nicht größer ist als 40°.

14. Lichtempfindliche Bauteileinheit (969; 1769; 69; 1869; 1969; 2069; 2169; 2269; 2369; 2469; 2569; 2669) nach einem der Ansprüche 1 bis 12, wobei ein Schrägungswinkel des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) nicht kleiner ist als 25° und nicht größer ist als 35°.

15. Lichtempfindliche Bauteileinheit (69) nach einem der Ansprüche 1 bis 14, wobei der erste einheitsseitige Schrägzahnradabschnitt (363c; 1663c) eine Vielzahl von derartigen Zähnen aufweist, wobei zumindest einer davon durch eine Vielzahl von ersten Vorsprüngen (363ct; 1663ct), die in der Richtung der Drehachse (L1) des lichtempfindlichen Bauteils (62) oder in einer Drehbewegungsrichtung des ersten einheitsseitigen Schrägzahnradabschnitts (363c; 1663c) separat vorgesehen sind, gebildet ist, wobei die ersten Vorsprünge (363ct; 1663ct) vorgesehen sind, um mit einem der Zähne des ersten hauptbaugruppenseitigen Schrägzahnradabschnitts (81c) an jeweiligen Positionen entfernt voneinander in der Richtung der Drehachse (L1) in Kontakt zu kommen.

16. Lichtempfindliche Bauteileinheit (69) nach einem der Ansprüche 1 bis 15, wobei der zweite einheitsseitige Schrägzahnradabschnitt (363d; 1663d) eine Vielzahl von derartigen Zähnen aufweist, wobei zumindest einer davon durch eine Vielzahl von zweiten Vorsprüngen (363dt; 1663dt), die in der Richtung der Drehachse (L1) des lichtempfindlichen Bauteils (62) oder in einer Drehbewegungsrichtung des zweiten einheitsseitigen Schrägzahnradabschnitts (363d; 1663d) separat vorgesehen sind, gebildet ist, wobei die zweiten Vorsprünge (363dt; 1663dt) vorgesehen sind, um mit einem der Zähne des zweiten hauptbaugruppenseitigen Schrägzahnradabschnitts (81d) an jeweiligen Positionen entfernt voneinander in der Richtung der Drehachse (L1) in Kontakt zu kommen.

17. Lichtempfindliche Bauteileinheit (969; 1769; 69; 1869; 1969; 2069; 2169; 2269; 2369; 2469; 2569; 2669) nach einem der Ansprüche 1 bis 16, wobei der erste einheitsseitige Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) eine Anzahl von derartigen Zähnen aufweist, und der zweite einheitsseitige Schrägzahnradabschnitt (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) dieselbe Anzahl von derartigen Zähnen aufweist.

18. Lichtempfindliche Bauteileinheit (969; 1769; 69; 1869; 1969; 2069; 2169; 2269; 2369; 2469; 2569; 2669) nach einem der Ansprüche 1 bis 16, wobei der erste einheitsseitige Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) einen Zahnfehlteil (463L; 563L) aufweist.

19. Lichtempfindliche Bauteileinheit (969; 1769; 69; 1869; 1969; 2069; 2169; 2269; 2369; 2469; 2569; 2669) nach einem der Ansprüche 1 bis 18, wobei der zweite einheitsseitige Schrägzahnradabschnitt (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) einen Zahnfehlteil aufweist.

20. Lichtempfindliche Bauteileinheit (2169) nach einem der Ansprüche 1 bis 19, wobei eine Vorsprungsrichtung des ersten einheitsseitigen Schrägzahnradabschnitts (2163c) und/oder eine Vorsprungsrichtung des zweiten einheitsseitigen Schrägzahnradabschnitts (2163d) jeweilige Komponenten parallel zu der Drehachse (L1) des lichtempfindlichen Bauteils (2162) umfassen/umfasst.

21. Lichtempfindliche Bauteileinheit (1869) nach einem der Ansprüche 1 bis 20, die des Weiteren ein elastisches Bauteil (1801) aufweist, das den ersten einheitsseitigen Schrägzahnradabschnitt (1863c) und/oder den zweiten einheitsseitigen Schrägzahnradabschnitt (18963d) abdeckt.

22. Lichtempfindliche Bauteileinheit (969; 1769; 69; 1869; 1969; 2069; 2169; 2269; 2369; 2469; 2569; 2669) nach einem der Ansprüche 1 bis 21, wobei, während der erste einheitsseitige Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) und der zweite einheitsseitige Schrägzahnradabschnitt (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) in eine vorbestimmte Richtung durch eine Drehung des ersten hauptbaugruppenseitigen Schrägzahnradabschnitts (981c; 1781c; 81c) und des zweiten hauptbaugruppenseitigen Schrägzahnradabschnitts (981d; 1781d; 81d) gedreht werden, der erste einheitsseitige Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) und der zweite einheitsseitige Schrägzahnradabschnitt (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) in einem Zustand sind, in dem der Zahn des ersten einheitsseitigen Schrägzahnradabschnitts (963c; 1763c; 363c; 763c; 1063c; 1563c; 1663c; 1863c; 1902b; 1903b; 1904c; 2002b; 2163c; 2263c; 2363c; 2401a; 2502a; 2601c) mit einem derartigen Zahn des ersten hauptbaugruppenseitigen Schrägzahnradabschnitts (981c; 1781c; 81c) in Kontakt ist, der an einer Position auf einer stromaufwärtigen Seite in der vorbestimmten Richtung liegt, der Zahn des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) mit einem derartigen Zahn des zweiten hauptbaugruppenseitigen Schrägzahnradabschnitts (981d; 1781d; 81d) in Kontakt ist, der an einer Position auf einer stromaufwärtigen Seite in der vorbestimmten Richtung liegt, und der Zahn des zweiten einheitsseitigen Schrägzahnradabschnitts (963c; 1763c; 363c; 763c; 1063c; 1563c; 1663c; 18963d; 1763d; 363d;

763d; 1063d; 1563d; 1663d; 1863d; 1963d; 2063d; 2163d; 2263d; 2363d; 2402a; 2502b; 2601d) fixiert ist, um sich nicht in einer Richtung entgegengesetzt zu der vorbestimmten Richtung relativ zu dem ersten einheitsseitigen Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) zu drehen.

23. Lichtempfindliche Bauteileinheit (969; 1769; 69; 1869; 1969; 2069; 2169; 2269; 2369; 2469; 2569; 2669) nach einem der Ansprüche 1 bis 22, wobei der erste einheitsseitige Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) in der Lage ist, eine Antriebskraft zu dem zweiten einheitsseitigen Schrägzahnradabschnitt (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) zu übertragen.

24. Lichtempfindliche Bauteileinheit (969; 1769; 69; 1869; 2169; 2269; 2369; 2469; 2569; 2669) nach einem der Ansprüche 1 bis 23, wobei der erste einheitsseitige Schrägzahnradabschnitt (963c; 1763c; 363c; 763c; 1063c; 1563c; 1663c; 1863c; 2163c; 2263c; 2363c; 2401a; 2502a; 2601c) und der zweite einheitsseitige Schrägzahnradabschnitt (963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d) koaxial zueinander drehbar sind.

25. Lichtempfindliche Bauteileinheit (969; 1769; 69; 1869; 2169; 2269; 2369; 2469; 2569; 2669) nach Anspruch 24, wobei eine Drehachse des ersten einheitsseitigen Schrägzahnradabschnitts (963c; 1763c; 363c; 763c; 1063c; 1563c; 1663c; 1863c; 2163c; 2263c; 2363c; 2401a; 2502a; 2601c) und eine Drehachse des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d) koaxial zu der Drehachse (L1) des lichtempfindlichen Bauteils (62; 1762; 1862; 2162; 2262; 2362; 2462; 2562; 2662) sind.

26. Lichtempfindliche Bauteileinheit (969; 1769; 69; 1869; 2169; 2269; 2369; 2569; 2669) nach Anspruch 24 oder 25, wobei der erste einheitsseitige Schrägzahnradabschnitt (963c; 1763c; 363c; 763c; 1063c; 1563c; 1663c; 1863c; 2163c; 2263c; 2363c; 2502a; 2601c) und der zweite einheitsseitige Schrägzahnradabschnitt (963c; 1763c; 363c; 763c; 1063c; 1563c; 1663c; 18963d; 1763d; 363d; 763d; 1063d;

1563d; 1663d; 1863d; 2163d; 2263d; 2363d; 2502b; 2601d) einstückig geformt sind.

27. Lichtempfindliche Bauteileinheit (969; 1769; 69; 1869; 2169; 2269; 2369; 2569; 2669) nach Anspruch 26, wobei der erste einheitsseitige Schrägzahnradabschnitt (963c; 1763c; 363c; 763c; 1063c; 1563c; 1663c; 1863c; 2163c; 2263c; 2363c; 2502a; 2601c) und der zweite einheitsseitige Schrägzahnradabschnitt (963c; 1763c; 363c; 763c; 1063c; 1563c; 1663c; 18963d; 1763d; 363d; 763d; 1063d; 1563d; 1663d; 1863d; 2163d; 2263d; 2363d; 2502b; 2601d) einstückig aus Harz geformt sind.

28. Lichtempfindliche Bauteileinheit (969; 1769; 69; 1869; 2169; 2269; 2369; 2469; 2569; 2669) nach einem der Ansprüche 24 bis 27, wobei ein Durchmesser (Dt963c; 1763c; 363c; 763c; 1063c; 1563c; 1663c; 1863c; 2163c; 2263c; 2363c; 2401a; 2502a; 2601c) eines Kopfkreises des ersten einheitsseitigen Schrägzahnradabschnitts (963c; 1763c; 363c; 763c; 1063c; 1563c; 1663c; 1863c; 2163c; 2263c; 2363c; 2401a; 2502a; 2601c) größer ist als ein Durchmesser (Db963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d) eines Fußkreises des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d) oder größer ist als 0,8-mal eines Durchmessers (Dt963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d) eines Kopfkreises des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d) und kleiner ist als 1,1-mal des Durchmessers (Dt963c; 1763c; 363c; 763c; 1063c; 1563c; 1663c; 1863c; 2163c; 2263c; 2363c; 2401a; 2502a; 2601c) des Kopfkreises des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d).

29. Lichtempfindliche Bauteileinheit (1969) nach einem der Ansprüche 1 bis 23, wobei die Drehachse des ersten einheitsseitigen Schrägzahnradabschnitts (1902b; 1903b; 1904c) und die Drehachse des zweiten einheitsseitigen Schrägzahnradabschnitts (1963d) nicht koaxial zueinander sind.

30. Lichtempfindliche Bauteileinheit (969; 1769; 69; 1869; 1969; 2069; 2169; 2269; 2369; 2469; 2569; 2669) nach Anspruch 29, wobei die Drehachse des ersten einheitsseitigen Schrägzahnradabschnitts (963c; 1763c; 363c; 763c; 1063c; 1563c; 1663c; 1863c; 1902b; 1903b; 1904c; 2002b; 2163c; 2263c; 2363c; 2401a; 2502a; 2601c) oder die Drehachse des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) koaxial zu der Drehachse des lichtempfindlichen Bauteils (62; 1762; 1862; 1962; 2062; 2162; 2262; 2362; 2462; 2562; 2662) ist.

31. Lichtempfindliche Bauteileinheit (969; 1769; 69; 1869; 2169; 2269; 2369; 2469; 2569; 2669) nach Anspruch 29 oder 30, wobei die Drehachse des ersten einheitsseitigen Schrägzahnradabschnitts (963c; 1763c; 363c; 763c; 1063c; 1563c; 1663c; 1863c; 2163c; 2263c; 2363c; 2401a; 2502a; 2601c) und die Drehachse des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 2163d; 2263d; 2363d; 2402a; 2502b; 2601d) parallel zueinander sind.

32. Lichtempfindliche Bauteileinheit (2069) nach einem der Ansprüche 1 bis 23, wobei der erste einheitsseitige Schrägzahnradabschnitt (2002b) und/oder der zweite einheitsseitige Schrägzahnradabschnitt (2063d) auf einem bandartigen Bauteil (2002) vorgesehen sind/ist.

33. Lichtempfindliche Bauteileinheit (969; 1769; 69; 1869; 1969; 2069; 2169; 2269; 2369; 2469; 2569; 2669) nach einem der Ansprüche 1 bis 22, wobei der erste einheitsseitige Schrägzahnradabschnitt (963c; 1763c; 363c; 763c; 1063c; 1563c; 1663c; 1863c; 1902b; 1903b; 1904c; 2002b; 2163c; 2263c; 2363c; 2401a; 2502a; 2601c) mit dem zweiten einheitsseitigen Schrägzahnradabschnitt (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d) verbunden ist, um in der Lage zu sein, die Antriebskraft zu übertragen.

34. Lichtempfindliche Bauteileinheit (2469) nach Anspruch 33, wobei der erste einheitsseitige Schrägzahnradabschnitt (2401a) mit dem zweiten einheitsseitigen Schrägzahnradabschnitt (2402a) mit einem Spiel zwischen ihnen in deren Drehrichtung verbunden ist.

35. Lichtempfindliche Bauteileinheit (2469) nach Anspruch 33 oder 34, wobei der erste einheitsseitige Schrägzahnradabschnitt (2401a) in der Lage ist, in einem verbundenen Zustand zu sein, in dem er mit dem zweiten einheitsseitigen Schrägzahnradabschnitt (2402a) verbunden ist, um die Antriebskraft darauf zu übertragen, und in einem getrennten Zustand zu sein, in dem die Antriebskraft zu dem zweiten einheitsseitigen Schrägzahnradabschnitt (2402a) nicht übertragen werden kann.

36. Lichtempfindliche Bauteileinheit (969; 1769; 69; 1869; 1969; 2069; 2169; 2269; 2369; 2469) nach einem der Ansprüche 1 bis 23, wobei eine Drehkraft, die durch den ersten einheitsseitigen Schrägzahnradabschnitt (963c; 1763c; 363c; 763c; 1063c; 1563c; 1663c; 1863c; 1902b; 1903b; 1904c; 2002b; 2163c; 2263c; 2363c; 2401a) erhalten wird, zu dem lichtempfindlichen Bauteil (62; 1762; 1862; 1962; 2062; 2162; 2262; 2362; 2462) übertragen wird.

37. Lichtempfindliche Bauteileinheit (969; 1769; 69; 1869; 1969; 2069; 2169; 2269; 2369; 2469) nach einem der Ansprüche 1 bis 23, die des Wei-teren einen Flansch (63) aufweist, der an einem Ende des lichtempfindlichen Bauteils (62; 1762; 1862; 1962; 2062; 2162; 2262; 2362; 2462) in der Richtung der Drehachse des lichtempfindlichen Bauteils (62; 1762; 1862; 1962; 2062; 2162; 2262; 2362; 2462) montiert ist, wobei der erste einheitsseitige Schrägzahnradabschnitt (963c; 1763c; 363c; 763c; 1063c; 1663c; 1863c; 1902b; 1903b; 1904c; 2002b; 2163c; 2263c; 2363c; 2401a) und der zweite einheitsseitige Schrägzahnradabschnitt (963c; 1763c; 363c; 763c; 1063c; 1663c; 18963d; 1763d; 363d; 763d; 1063d; 1563d; 1663d; 1863d; 1963d; 2063d; 2163d; 2263d; 2363d; 2402a) an dem Flansch vorgesehen sind.

38. Lichtempfindliche Bauteileinheit (2569) nach einem der Ansprüche 1 bis 35, die des Weiteren einen Antriebskrafterhaltungsabschnitt (2501) aufweist, der in der Lage ist, mit dem ersten hauptbaugruppenseitigen Schrägzahnradabschnitt (1781c) oder dem zweiten hauptbaugruppenseitigen Schrägzahnradabschnitt (1781d) in Kämmeingriff zu sein, um eine Antriebskraft zum Drehen des lichtempfindlichen Bauteils (2562) zu erhalten.

39. Lichtempfindliche Bauteileinheit (2669) nach einem der Ansprüche 1 bis 35, die des Weiteren einen Antriebskrafterhaltungsabschnitt (2689) aufweist, der in der Lage ist, mit einem Antriebskraftaufbringungsabschnitt (1789), der in der Hauptbaugruppe (A) des Bilderzeugungsgeräts (17100) vorgesehen ist, einzugreifen, um eine Antriebskraft zum Drehen des lichtempfindlichen Bauteils (2662) zu erhalten.

40. Lichtempfindliche Bauteileinheit (969; 1769; 69; 1869; 1969; 2069; 2169; 2269; 2369; 2469; 2569; 2669) nach Anspruch 10, wobei eine Zahnbreite Wc1 des Zahnes des ersten einheitsseitigen Schrägzahnradabschnitts (963c; 1763c; 363c; 763c; 1063c; 1563c; 1663c; 1863c; 1902b; 1903b; 1904c; 2002b; 2163c; 2263c; 2363c; 2401a; 2502a; 2601c), der eine größte Zahnbreite gemessen in der Richtung der Drehachse des lichtempfindlichen Bauteils (62; 1762; 1862; 1962; 2062; 2162; 2262; 2362; 2462; 2562; 2662) hat, und eine Zahnbreite Wd1 des Zahnes des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d), der eine größte Zahnbreite gemessen in der Richtung der Drehachse (L1) des lichtempfindlichen Bauteils (62; 1762; 1862; 1962; 2062; 2162; 2262; 2362; 2462; 2562; 2662) hat, folgendes Verhältnis erfüllen:

$$Wd1 \leq (4/5) \cdot Wc1.$$

41. Lichtempfindliche Bauteileinheit (969; 1769; 69; 1869; 1969; 2069; 2169; 2269; 2369; 2469; 2569; 2669) nach Anspruch 10, wobei eine Zahnbreite Wc1 des Zahnes des ersten einheitsseitigen Schrägzahnradabschnitts (963c; 1763c; 363c; 763c; 1063c; 1563c; 1663c; 1863c; 1902b; 1903b; 1904c; 2002b; 2163c; 2263c; 2363c; 2401a; 2502a; 2601c), der eine größte Zahnbreite gemessen in der Richtung der Drehachse des lichtempfindlichen Bauteils (62; 1762; 1862; 1962; 2062; 2162; 2262; 2362; 2462; 2562; 2662) hat, und eine Zahnbreite Wd1 des Zahnes des zweiten einheitsseitigen Schrägzahnradabschnitts (963c; 1763c; 363c; 763c; 1063c; 1563c; 1663c; 18963d; 1763d; 363d; 763d; 1063d; 1563d; 1663d; 1863d; 1963d; 2063d; 2163d; 2263d; 2363d; 2402a; 2502b; 2601d), der eine größte Zahnbreite gemessen in der Richtung der Drehachse (L1) des lichtempfindlichen Bauteils (62; 1762; 1862; 1962; 2062; 2162; 2262; 2362; 2462; 2562; 2662) hat, folgendes Verhältnis erfüllen:

$$Wd1 \leq (3/4) \cdot Wc1.$$

42. Lichtempfindliche Bauteileinheit (969; 1769; 69; 1869; 1969; 2069; 2169; 2269; 2369; 2469; 2569; 2669) nach Anspruch 10, 40 oder 41, wobei eine Zahnbreite Wc1 des Zahnes des ersten einheitsseitigen Schrägzahnradabschnitts (963c; 1763c; 363c; 763c; 1063c; 1563c; 1663c; 1863c; 1902b; 1903b; 1904c; 2002b; 2163c; 2263c; 2363c; 2401a; 2502a; 2601c), der eine größte Zahnbreite gemessen in der Richtung der Drehachse (L1) des lichtempfindlichen Bauteils (62; 1762; 1862; 1962; 2062; 2162; 2262; 2362; 2462; 2562; 2662) hat, und eine Zahnbreite Wd1 des Zahnes des zweiten einheitsseitigen Schrägzahnradabschnitts (963c; 1763c; 363c; 763c; 1063c; 1563c; 1663c; 18963d;

1763d; 363d; 763d; 1063d; 1563d; 1663d; 1863d; 1963d; 2063d; 2163d; 2263d; 2363d; 2402a; 2502b; 2601d), der eine größte Zahnbreite gemessen in der Richtung der Drehachse (L1) des lichtempfindlichen Bauteils (62; 1762; 1862; 1962; 2062; 2162; 2262; 2362; 2462; 2562; 2662) hat, folgendes Verhältnis erfüllen:

$$Wd1 \geq (1/10) \cdot Wc1.$$

43. Lichtempfindliche Bauteileinheit (969; 1769; 69; 1869; 1969; 2069; 2169; 2269; 2369; 2469; 2569; 2669) nach einem der Ansprüche 1 bis 42, wobei eine Verwindungsrichtung des Zahnes des zweiten hauptbaugruppenseitigen Schrägzahnradabschnitts (981d; 1781d; 81d) dieselbe ist wie eine Verwindungsrichtung des Zahnes des ersten hauptbaugruppenseitigen Schrägzahnradabschnitts (981c; 1781c; 81c), wobei ein Schrägungswinkel des Zahnes des zweiten hauptbaugruppenseitigen Schrägzahnradabschnitts (981d; 1781d; 81d) größer ist als ein Schrägungswinkel des Zahnes des ersten hauptbaugruppenseitigen Schrägzahnradabschnitts (981c; 1781c; 81c), und wobei der erste hauptbaugruppenseitige Schrägzahnradabschnitt (981c; 1781c; 81c) und der zweite hauptbaugruppenseitige Schrägzahnradabschnitt (981d; 1781d; 81d) einstückig drehbar sind.

44. Lichtempfindliche Bauteileinheit (969; 1769; 69; 1869; 1969; 2069; 2169; 2269; 2369; 2469; 2569; 2669) nach einem der Ansprüche 1 bis 43, wobei die lichtempfindliche Bauteileinheit (969; 1769; 69; 1869; 1969; 2069; 2169; 2269; 2369; 2469; 2569; 2669) an der Hauptbaugruppe (A) des Bilderzeugungsgeräts (100) durch eine Bewegung davon in einer Richtung senkrecht zu einer Drehachse (L2) des ersten hauptbaugruppenseitigen Schrägzahnradabschnitts (981c; 1781c; 81c) montierbar und von dieser demontierbar ist.

45. Kartusche (B), die die lichtempfindliche Bauteileinheit (969; 1769; 69; 1869; 1969; 2069; 2169; 2269; 2369; 2469; 2569; 2669) nach einem der Ansprüche 1 bis 44 und einen Rahmen (60a; 1771; 1773) aufweist, der die lichtempfindliche Bauteileinheit (969; 1769; 69; 1869; 1969; 2069; 2169; 2269; 2369; 2469; 2569; 2669) drehbar stützt.

**Revendications**

1. Unité d'organe photosensible (969 ; 1769 ; 69 ; 1869 ; 1969 ; 2069 ; 2169 ; 2269 ; 2369 ; 2469 ; 2569 ; 2669) pouvant être montée de manière amovible sur un ensemble principal (A) d'un appareil de formation d'images (100), l'appareil de formation d'images (100) incluant une première partie d'engrenage hélicoïdal côté ensemble principal (981c ; 1781c ; 81c) et une seconde partie d'engrenage hélicoïdal côté ensemble principal (981d ; 1781d ; 81d) qui sont rotatives coaxialement, l'unité d'organe photosensible (969 ; 1769 ; 69 ; 1869 ; 1969 ; 2069 ; 2169 ; 2269 ; 2369 ; 2469 ; 2569 ; 2669) comprenant :

un organe photosensible (62 ; 1762 ; 1862 ; 1962 ; 2062 ; 2162 ; 2262 ; 2362 ; 2462 ; 2562 ; 2662) rotatif autour d'un axe de rotation (L1) de celui-ci ;
une première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) destinée à s'engrener avec la première partie d'engrenage hélicoïdal côté ensemble principal (981c ; 1781c ; 81c) ; et
une seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) destinée à s'engrener avec la seconde partie d'engrenage hélicoïdal côté ensemble principal (981d ; 1781d ; 81d),
dans laquelle une direction de torsion d'une dent de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) est la même que la direction de torsion d'une dent de la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c),
dans laquelle un angle d'hélice (a2) de la dent de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) est supérieur à un angle d'hélice (a1) de la dent de la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c), et
dans laquelle la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) et la seconde partie d'engrenage hélicoïdal côté unité (963c ; 1763c ; 363c ; 763c ; 1063c ; 1563c ; 1663c ;

18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) sont rotatives dans un état dans lequel la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) est en prise d'engrènement avec la première partie d'engrenage hélicoïdal côté ensemble principal (981c ; 1781c ; 81c), et la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) est en prise d'engrènement avec la seconde partie d'engrenage hélicoïdal côté ensemble principal (981d ; 1781d ; 81d),

dans laquelle la seconde partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) est disposée entre l'organe photosensible (62 ; 1762 ; 1862 ; 1962 ; 2062 ; 2162 ; 2262 ; 2362 ; 2462 ; 2562 ; 2662) et la première partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) dans une direction de l'axe de rotation (L1) de l'organe photosensible (62 ; 1762 ; 1862 ; 1962 ; 2062 ; 2162 ; 2262 ; 2362 ; 2462 ; 2562 ; 2662).

2. Unité d'organe photosensible (969 ; 1769 ; 69 ; 1869 ; 1969 ; 2069 ; 2169 ; 2269 ; 2369 ; 2469 ; 2569 ; 2669) selon la revendication 1, dans laquelle, par rapport à l'axe de rotation (L1) de l'organe photosensible (62 ; 1762 ; 1862 ; 1962 ; 2062 ; 2162 ; 2262 ; 2362 ; 2462 ; 2562 ; 2662), un espace (g) est fourni entre la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) et la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d).

3. Unité d'organe photosensible (969 ; 1769 ; 69 ; 1869 ; 1969 ; 2069 ; 2169 ; 2269 ; 2369 ; 2469 ; 2569 ; 2669) selon la revendication 2, dans laquelle l'ensemble principal (A) de l'appareil de formation d'images (100) inclut une partie projetée entre la première partie d'engrenage hélicoïdal côté ensemble principal (981c ; 1781c ; 81c) et la seconde partie d'engrenage hélicoïdal côté ensemble principal (981d ; 1781d ; 81d), et dans un état dans lequel la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) est en prise d'engrènement avec la première partie d'engrenage hélicoïdal côté ensemble principal (981c ; 1781c ; 81c), et la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) est en prise d'engrènement avec la seconde partie d'engrenage hélicoïdal côté ensemble principal (981d ; 1781d ; 81d), et la partie en saillie est insérée dans l'espace (g).

4. Unité d'organe photosensible (2269 ; 2369) selon la revendication 2 ou 3, dans laquelle l'unité (2269 ; 2369) comprend un organe intermédiaire (2201 ; 2202 ; 2301) entre la première partie d'engrenage hélicoïdal côté unité (2263c ; 2363c) et la seconde partie d'engrenage hélicoïdal côté unité (2263d ; 2363d) par rapport à l'axe de rotation (L1) de l'organe photosensible (2262 ; 2362), l'organe intermédiaire (2201 ; 2202 ; 2301) étant capable de remplir l'espace (g).

5. Unité d'organe photosensible (2269 ; 2369) selon la revendication 4, dans laquelle l'organe intermédiaire (2201 ; 2202 ; 2301) est mobile entre une position de fourniture de l'espace (g) et une position de remplissage de l'espace (g), par rotation de celui-ci.

6. Unité d'organe photosensible (2269) selon la revendication 4, dans laquelle l'organe intermédiaire (2202) est mobile entre une position de fourniture de l'espace (g) et une position de remplissage de l'espace (g), par déplacement de celui-ci dans une direction perpendiculaire à l'axe de rotation (L1) de l'organe photosensible (2262).

7. Unité d'organe photosensible (2369) selon la revendication 4, dans laquelle l'organe intermédiaire (2301) est composé d'un organe élastique (2301) et est capable d'adopter une position pour la fourniture de l'espace (g) et une position pour le remplissage de l'espace (g), par déformation élastique de celui-ci.

8. Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 2 à 7, dans laquelle, par rapport à l'axe de rotation (L1) de l'organe photosensible (62 ; 1762 ; 1862 ; 1962 ; 2062 ; 2162 ; 2262 ; 2362 ; 2462 ; 2562 ; 2662), une largeur de dent Wc de la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) et une largeur We de l'espace (g) satisfont

$$Wc > We \geqq Wc/5.$$

9. Unité d'organe photosensible (969 ; 1769 ; 69 ; 1869 ; 1969 ; 2069 ; 2169 ; 2269 ; 2369 ; 2469 ; 2569 ; 2669) selon la revendication 8, dans laquelle, par rapport à l'axe de rotation (L1) de l'organe photosensible (62 ; 1762 ; 1862 ; 1962 ; 2062 ; 2162 ; 2262 ; 2362 ; 2462 ; 2562 ; 2662), la largeur We de l'espace (g) et une largeur de dent Wd de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) satisfont

$$Wd > We.$$

10. Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 9, dans laquelle la première partie d'engrenage hélicoïdal (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) et la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) présentent chacune au moins une dent présentant une largeur satisfaisant

$$Wc > Wd,$$

où Wc est une largeur de dent de la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) et Wd est une largeur de dent de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d), mesurée dans l'axe de rotation (L1) de l'organe photosensible (62 ; 1762 ; 1862 ; 1962 ; 2062 ; 2162 ; 2262 ; 2362 ; 2462 ; 2562 ; 2662).

11. Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 10, dans laquelle l'angle d'hélice (a1) de la dent de la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) n'est pas inférieur à 15° et pas supérieur à 40°.

12. Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 10, dans laquelle l'angle d'hélice (a2) de la dent de la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) n'est pas inférieur à 20° et pas supérieur à 35°.

13. Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 12, dans laquelle l'angle d'hélice (a1) de la dent de la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) n'est pas inférieur à 20° et pas supérieur à 40°.

14. Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 12, dans laquelle un angle d'hélice de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) n'est pas inférieur à 25° et pas supérieur à 35°.

15. Unité d'organe photosensible (69) selon l'une quelconque des revendications 1 à 14, dans laquelle la première partie d'engrenage hélicoïdal côté unité (363c ; 1663c) inclut une pluralité de telles dents, dont au moins l'une est constituée par une pluralité de premières saillies (363ct ; 1663ct) fournies séparément dans la direction de l'axe de rotation (L1) de l'organe photosensible (62) ou dans une direction de mouvement de rotation de la première partie d'engrenage hélicoïdal côté unité (363c ; 1663c), les premières saillies (363ct ; 1663ct) étant fournies de manière à pouvoir être mises en contact avec l'une des dents de la première partie d'engrenage hélicoïdal côté ensemble principal (81c) au niveau de positions respectives éloignées l'une de l'autre dans la direction de l'axe de rotation (L1).

16. Unité d'organe photosensible (69) selon l'une quelconque des revendications 1 à 15, dans laquelle la seconde partie d'engrenage hélicoïdal côté unité (363d ; 1663d) inclut une pluralité de telles dents, dont au moins l'une est constituée par une pluralité de secondes saillies (363dt ; 1663dt) fournies séparément dans la direction de l'axe de rotation (L1) de l'organe photosensible (62) ou dans une direction de mouvement de rotation de la seconde partie d'engrenage hélicoïdal côté unité (363d ; 1663d), les secondes saillies (363dt ; 1663dt) étant fournies de manière à pouvoir être mises en contact avec l'une des dents de la seconde partie d'engrenage hélicoïdal côté ensemble principal (81d) au niveau de positions respectives éloignées l'une de l'autre dans la direction de l'axe de rotation (L1).

17. Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 16, dans laquelle la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) inclut un certain nombre de telles dents, et la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) inclut le même nombre de telles dents.

18. Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 16, dans laquelle la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) inclut une partie de dent manquante (463L ; 563L).

19. Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 18, dans laquelle la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) inclut une partie de dent manquante.

20. Unité d'organe photosensible (2169) selon l'une quelconque des revendications 1 à 19, dans laquelle une direction de saillie de la première partie d'engrenage hélicoïdal côté unité (2163c) et/ou une direction de saillie de la seconde partie d'engrenage hélicoïdal côté unité (2163d) incluent des composants respectifs parallèles à l'axe de rotation (L1) de l'organe photosensible (2162).

21. Unité d'organe photosensible (1869) selon l'une quelconque des revendications 1 à 20, comprenant en outre un organe élastique (1801) recouvrant la première partie d'engrenage hélicoïdal côté unité (1863c) et/ou la seconde partie d'engrenage hélicoïdal côté unité (18963d).

22. Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 21, dans laquelle, tandis que la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) et la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) sont tournées dans une direction prédéterminée par rotation de la première partie d'engrenage hélicoïdal côté ensemble principal (981c ; 1781c ; 81c) et de la seconde partie d'engrenage hélicoïdal côté ensemble principal (981d ; 1781d ; 81d), la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) et la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) sont dans un état où la dent de la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) est en contact avec une telle dent de la première partie d'engrenage hélicoïdal côté ensemble principal (981c ; 1781c ; 81c) au niveau d'une position sur un côté amont dans la direction prédéterminée, la dent de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) est en contact avec une telle dent de la seconde partie d'engrenage hélicoïdal côté ensemble principal (981d ; 1781d ; 81d) au niveau d'une position sur un côté amont dans la direction prédéterminée, et la dent de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) est fixée de manière à ne pas être tournée dans une direction opposée à la direction prédéterminée par rapport à la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c).

23. Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 22, dans laquelle la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) est capable de transmettre une force d'entraînement à la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d).

24. Unité d'organe photosensible (969 ; 1769 ; 69 ; 1869 ; 2169 ; 2269 ; 2369 ; 2469 ; 2569 ; 2669) selon l'une quelconque des revendications 1 à 23, dans laquelle la première partie d'engrenage hélicoïdal côté unité (963c ; 1763c ; 363c ; 763c ; 1063c ; 1563c ; 1663c ; 1863c ; 2163c ; 2263c ; 2363c ; 2401a ; 2502a ; 2601c) et la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 2163d ; 2263d ; 2363d ; 2402a ; 2502b ; 2601d) sont coaxialement rotatives l'une par rapport à l'autre.

25. Unité d'organe photosensible (969 ; 1769 ; 69 ; 1869 ; 2169 ; 2269 ; 2369 ; 2469 ; 2569 ; 2669) selon la revendication 24, dans laquelle un axe de rotation de la première partie d'engrenage hélicoïdal côté unité (963c ; 1763c ; 363c ; 763c ; 1063c ; 1563c ; 1663c ; 1863c ; 2163c ; 2263c ; 2363c ; 2401a ; 2502a ; 2601c) et un axe de rotation de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 2163d ; 2263d ; 2363d ; 2402a ; 2502b ; 2601d) sont coaxiaux avec l'axe de rotation (L1) de l'organe photosensible (62 ; 1762 ; 1862 ; 2162 ; 2262 ; 2362 ; 2462 ; 2562 ; 2662).

26. Unité d'organe photosensible (969 ; 1769 ; 69 ; 1869 ; 2169 ; 2269 ; 2369 ; 2569 ; 2669) selon la revendication 24 ou 25, dans laquelle la première partie d'engrenage hélicoïdal côté unité (963c ; 1763c ; 363c ; 763c ; 1063c ; 1563c ; 1663c ; 1863c ; 2163c ; 2263c ; 2363c ; 2502a ; 2601c) et la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 2163d ; 2263d ; 2363d ; 2502b ; 2601d) sont moulées d'une seule pièce.

27. Unité d'organe photosensible (969 ; 1769 ; 69 ; 1869 ; 2169 ; 2269 ; 2369 ; 2569 ; 2669) selon la revendication 26, dans laquelle la première partie d'engrenage hélicoïdal côté unité (963c ; 1763c ; 363c ; 763c ; 1063c ; 1563c ; 1663c ; 1863c ; 2163c ; 2263c ; 2363c ; 2502a ; 2601c) et la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 2163d ; 2263d ; 2363d ; 2502b ; 2601d) sont moulées d'une seule pièce en résine.

28. Unité d'organe photosensible (969 ; 1769 ; 69 ; 1869 ; 2169 ; 2269 ; 2369 ; 2469 ; 2569 ; 2669) selon l'une quelconque des revendications 24 à 27, dans laquelle un diamètre (Dt963c ; 1763c ; 363c ; 763c ; 1063c ; 1563c ; 1663c ; 1863c ; 2163c ; 2263c ; 2363c ; 2401a ; 2502a ; 2601c) d'un cercle d'addendum de la première partie d'engrenage hélicoïdal côté unité (963c ; 1763c ; 363c ; 763c ; 1063c ; 1563c ; 1663c ; 1863c ; 2163c ; 2263c ; 2363c ; 2401a ; 2502a ; 2601c) est supérieur à un diamètre (Db963c ; 1763c ; 363c ; 763c ; 1063c ; 1563c ; 1663c ; 18963d ; 1763d ; 363d ; 763d ; 1063d ; 1563d ; 1663d ; 1863d ; 2163d ; 2263d ; 2363d ; 2402a ; 2502b ; 2601d) d'un cercle de dedendum de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 2163d ; 2263d ; 2363d ; 2402a ; 2502b ; 2601d) ou est supérieur à 0,8 fois un diamètre (Dt963c ; 1763c ; 363c ; 763c ; 1063c ; 1563c ; 1663c ; 18963d ; 1763d ; 363d ; 763d ; 1063d ; 1563d ; 1663d ; 1863d ; 2163d ; 2263d ; 2363d ; 2402a ; 2502b ; 2601d) d'un cercle d'addendum de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 2163d ; 2263d ; 2363d ; 2402a ; 2502b ; 2601d) et inférieur à 1,1 fois le diamètre (Dt963c ; 1763c ; 363c ; 763c ; 1063c ; 1563c ; 1663c ; 1863c ; 2163c ; 2263c ; 2363c ; 2401a ; 2502a ; 2601c) du cercle d'addendum de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 2163d ; 2263d ; 2363d ; 2402a ; 2502b ; 2601d).

29. Unité d'organe photosensible (1969) selon l'une quelconque des revendications 1 à 23, dans laquelle l'axe de rotation de la première partie d'engrenage hélicoïdal côté unité (1902b ; 1903b ; 1904c) et l'axe de rotation de la seconde partie d'engrenage hélicoïdal côté unité (1963d) ne sont pas coaxiaux l'un avec l'autre.

30. Unité d'organe photosensible (969 ; 1769 ; 69 ; 1869 ;

1969 ; 2069 ; 2169 ; 2269 ; 2369 ; 2469 ; 2569 ; 2669) selon la revendication 29, dans laquelle l'axe de rotation de la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) ou l'axe de rotation de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) est coaxial avec l'axe de rotation de l'organe photosensible (62 ; 1762 ; 1862 ; 1962 ; 2062 ; 2162 ; 2262 ; 2362 ; 2462 ; 2562 ; 2662).

31. Unité d'organe photosensible (969 ; 1769 ; 69 ; 1869 ; 2169 ; 2269 ; 2369 ; 2469 ; 2569 ; 2669) selon la revendication 29 ou 30, dans laquelle l'axe de rotation de la première partie d'engrenage hélicoïdal côté unité (963c ; 1763c ; 363c ; 763c ; 1063c ; 1563c ; 1663c ; 1863c ; 2163c ; 2263c ; 2363c ; 2401a ; 2502a ; 2601c) et l'axe de rotation de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 2163d ; 2263d ; 2363d ; 2402a ; 2502b ; 2601d) sont parallèles l'un à l'autre.

32. Unité d'organe photosensible (2069) selon l'une quelconque des revendications 1 à 23, dans laquelle la première partie d'engrenage hélicoïdal côté unité (2002b) et/ou la seconde partie d'engrenage hélicoïdal côté unité (2063d) sont fournies sur un organe de type courroie (2002).

33. Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 22, dans laquelle la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) est reliée à la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) de manière à pouvoir transmettre la force d'entraînement.

34. Unité d'organe photosensible (2469) selon la revendication 33, dans laquelle la première partie d'engrenage hélicoïdal côté unité (2401a) est reliée à la seconde partie d'engrenage hélicoïdal côté unité (2402a) avec un jeu entre elles dans leur direction de rotation.

35. Unité d'organe photosensible (2469) selon la revendication 33 ou 34, dans laquelle la première partie d'engrenage hélicoïdal côté unité (2401a) est capable d'être dans un état connecté où elle est connectée à la seconde partie d'engrenage hélicoïdal côté unité (2402a) pour transiter la force d'entraînement vers cette dernière et dans un état déconnecté où elle est incapable de transmettre la force d'entraînement à la seconde partie d'engrenage hélicoïdal côté unité (2402a).

36. Unité d'organe photosensible (969 ; 1769 ; 69 ; 1869 ; 1969 ; 2069 ; 2169 ; 2269 ; 2369 ; 2469) selon l'une quelconque des revendications 1 à 23, dans laquelle une force de rotation reçue par la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a) est transmise à l'organe photosensible (62 ; 1762 ; 1862 ; 1962 ; 2062 ; 2162 ; 2262 ; 2362 ; 2462).

37. Unité d'organe photosensible (969 ; 1769 ; 69 ; 1869 ; 1969 ; 2069 ; 2169 ; 2269 ; 2369 ; 2469) selon l'une quelconque des revendications 1 à 23, comprenant en outre une bride (63) montée sur une extrémité de l'organe photosensible (62 ; 1762 ; 1862 ; 1962 ; 2062 ; 2162 ; 2262 ; 2362 ; 2462) dans la direction de l'axe de rotation de l'organe photosensible (62 ; 1762 ; 1862 ; 1962 ; 2062 ; 2162 ; 2262 ; 2362 ; 2462), dans laquelle la première partie d'engrenage hélicoïdal côté unité (963c ; 1763c ; 363c ; 763c ; 1063c ; 1663c ; 1863c ; 1902b ; 1903b ; 1904c ; 2002b ; 2163c ; 2263c ; 2363c ; 2401a) et la seconde partie d'engrenage hélicoïdal côté unité (963c ; 1763c ; 363c ; 763c ; 1063c ; 1663c ; 18963d ; 1763d ; 363d ; 763d ; 1063d ; 1563d ; 1663d ; 1863d ; 1963d ; 2063d ; 2163d ; 2263d ; 2363d ; 2402a) sont fournies sur la bride.

38. Unité d'organe photosensible (2569) selon l'une quelconque des revendications 1 à 35, comprenant en outre une partie de réception de force d'entraînement (2501) capable de venir en prise par engrènement avec la première partie d'engrenage hélicoïdal côté ensemble principal (1781c) ou la seconde partie d'engrenage hélicoïdal côté ensemble principal (1781d) pour recevoir une force d'entraînement pour faire tourner l'organe photosensible (2562).

39. Unité d'organe photosensible (2669) selon l'une quelconque des revendications 1 à 35, comprenant en outre une partie de réception de force d'entraînement (2689) capable de venir en prise avec une partie d'application de force d'entraînement (1789) fournie dans l'ensemble principal (A) de l'appareil de formation d'images (17100) pour recevoir une force d'entraînement pour faire tourner l'organe photosensible (2662).

**40.** Unité d'organe photosensible (969 ; 1769 ; 69 ; 1869 ; 1969 ; 2069 ; 2169 ; 2269 ; 2369 ; 2469 ; 2569 ; 2669) selon la revendication 10, dans laquelle une largeur de dent Wc1 de la dent de la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) qui présente une largeur de dent la plus grande mesurée dans la direction de l'axe de rotation de l'organe photosensible (62 ; 1762 ; 1862 ; 1962 ; 2062 ; 2162 ; 2262 ; 2362 ; 2462 ; 2562 ; 2662) et une largeur de dent Wd1 de la dent de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) qui présente une largeur de dent la plus grande mesurée dans la direction de l'axe de rotation (L1) de l'organe photosensible (62 ; 1762 ; 1862 ; 1962 ; 2062 ; 2162 ; 2262 ; 2362 ; 2462 ; 2562 ; 2662) satisfont

$$Wd1 \leqq (4/5) \quad Wc1.$$

**41.** Unité d'organe photosensible (969 ; 1769 ; 69 ; 1869 ; 1969 ; 2069 ; 2169 ; 2269 ; 2369 ; 2469 ; 2569 ; 2669) selon la revendication 10, dans laquelle une largeur de dent Wc1 de la dent de la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) qui présente une largeur de dent la plus grande mesurée dans la direction de l'axe de rotation de l'organe photosensible (62 ; 1762 ; 1862 ; 1962 ; 2062 ; 2162 ; 2262 ; 2362 ; 2462 ; 2562 ; 2662) et une largeur de dent Wd1 de la dent de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) qui présente une largeur de dent la plus grande mesurée dans la direction de l'axe de rotation (L1) de l'organe photosensible (62 ; 1762 ; 1862 ; 1962 ; 2062 ; 2162 ; 2262 ; 2362 ; 2462 ; 2562 ; 2662) satisfont

$$Wd1 \leqq (3/4) \quad Wc1.$$

**42.** Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 10, 40 ou 41, dans laquelle une largeur de dent Wc1 de la dent de la première partie d'engrenage hélicoïdal côté unité (963c ; 1763c ; 363c ; 763c ; 1063c ; 1563c ; 1663c ; 1863c ; 1902b ; 1903b ; 1904c ; 2002b ; 2163c ; 2263c ; 2363c ; 2401a ; 2502a ; 2601c) qui présente une largeur de dent la plus grande mesurée dans la direction de l'axe de rotation (L1) de l'organe photosensible (62 ; 1762 ; 1862 ; 1962 ; 2062 ; 2162 ; 2262 ; 2362 ; 2462 ; 2562 ; 2662) et une largeur de dent Wd1 de la dent de la seconde partie d'engrenage hélicoïdal côté unité (963c ; 1763c ; 363c ; 763c ; 1063c ; 1563c ; 1663c ; 18963d ; 1763d ; 363d ; 763d ; 1063d ; 1563d ; 1663d ; 1863d ; 1963d ; 2063d ; 2163d ; 2263d ; 2363d ; 2402a ; 2502b ; 2601d) qui présente une largeur de dent la plus grande mesurée dans la direction de l'axe de rotation (L1) de l'organe photosensible (62 ; 1762 ; 1862 ; 1962 ; 2062 ; 2162 ; 2262 ; 2362 ; 2462 ; 2562 ; 2662) satisfont

$$Wd1 \geqq (1/10) \quad Wc1.$$

**43.** Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 42, dans laquelle une direction de torsion de la dent de la seconde partie d'engrenage hélicoïdal côté ensemble principal (981d ; 1781d ; 81d) est la même qu'une direction de torsion de la dent de la première partie d'engrenage hélicoïdal côté ensemble principal (981c ; 1781c ; 81c), dans laquelle un angle d'hélice de la dent de la seconde partie d'engrenage hélicoïdal côté ensemble principal (981d ; 1781d ; 81d) est supérieur à un angle d'hélice de la dent de la première partie d'engrenage hélicoïdal côté ensemble principal (981c ; 1781c ; 81c), et dans laquelle la première partie d'engrenage hélicoïdal côté ensemble principal (981c ; 1781c ; 81c) et la seconde partie d'engrenage hélicoïdal côté ensemble principal (981d ; 1781d ; 81d) sont rotatives d'une seule pièce.

**44.** Unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 43, dans laquelle l'unité d'organe photosensible (969 ; 1769 ; 69 ; 1869 ; 1969 ; 2069 ; 2169 ; 2269 ; 2369 ; 2469 ; 2569 ; 2669) peut être montée sur et démontée de l'ensemble principal (A) de l'appareil de formation d'images (100) par déplacement de celui-ci dans une direction perpendiculaire à un axe de rotation (L2) de la première partie d'engrenage hélicoïdal côté ensemble principal (981c ; 1781c ; 81c).

**45.** Cartouche (B) comprenant l'unité d'organe photosensible (969 ; 1769 ; 69 ; 1869 ; 1969 ; 2069 ; 2169 ; 2269 ; 2369 ; 2469 ; 2569 ; 2669) selon l'une quelconque des revendications 1 à 44, et un cadre (60a ; 1771 ; 1773) supportant en rotation l'unité d'organe photosensible (969 ; 1769 ; 69 ; 1869 ; 1969 ; 2069 ; 2169 ; 2269 ; 2369 ; 2469 ; 2569 ; 2669).

Fig. 1

Fig. 2

Fig. 3

Fig. 4

Fig. 5

(a)

(b)

Fig. 6

Fig. 7

(a)

Fig. 8

Fig. 9

Fig. 10

Fig. 11

EP 4 206 824 B1

81d

81c

H

81

Fig. 12

(a)

α1

α2

L2

84a  81c  81ct  81  81dt  81d

81e

H ◄――► J

(b)

W63c  W63d

α1

α2

L1

63ct

63dt

62  63c  63  63e  63d

H ◄――► J

Fig. 13

Fig. 14

H ← → J

62

63

63c    63d

L1

32

31    30

Fig. 15

Fig. 16

Fig. 17

Fig. 18

Fig. 19

Fig. 20

Fig. 21

81d 81c

81

AD                                                    AD

63

63d          63c

(a)

51

FA

I

β

53

(b)

63c          FB        81  81d          63d

I

β  FC          63

81c

(c)

51

LP          (d)

81c

LQ

(e)

Fig. 22

Fig. 23

Fig. 24

Fig. 25

(a)

271

263a

62

263  263b 273  281a

281

(b)

63

81

Fig. 26

Fig. 27

(a)

(b)

(c)

(d)

Fig. 28

Fig. 29

Fig. 30

Fig. 31

Fig. 32

(a)

463L

81

463

(b)

NO. OF ENGAGING
TEETH

NON-MISSING
PORTION

3

2

1

MISSING
PORTION

TIME

Fig. 33

(a)

LI=LH×3
LJ=LH×2

563L

LI

LJ

LH

81

563

(b)

NO. OF ENGAGING
TEETH

NON−MISSING
PORTION

3

2

1

MISSING
PORTION

TIME

Fig. 34

Fig. 35

Fig. 36

Fig. 37

Fig. 38

Fig. 39

Fig. 40

Fig. 41

(a)

1363

1363c

1363d

S

1363Bd

L1

(b)

84

1363c 81c 1363

81 81d 1363d

FB

1363dt

CP2

81d2

L1

1363dt

I,K

FD

F1309

F1310

H ◄──────► J

Fig. 42

Fig. 43

Fig. 44

(a)

(b)

Fig. 45

Fig. 46

Fig. 47

160

EP 4 206 824 B1

(a)

(b)

Fig. 48

Fig. 49

Fig. 50

(a)

1760 1771 1773d

1771p

1771m 1773

L1

1763g

1763c

1763c1 1763

1762 1763d

J

H

(b)

1760

1773g

1763f

L1

1763g

1773

1762 1763d 1763 1763c

H

J

Fig. 51

(a)

1773

1773d

1773h 1773f 1773i

1773e

(b)

1773h          1773e

1773g

1763                        1773i

1763g                        1773

1773d

1773f

(c)

1715

1773

1715a

1773g

L1

1773d

1763g

1762          1763

Fig. 52

(a)

(b)

Fig. 53

Fig. 54

Fig. 55

(a)

(b)

(c)

Fig. 56

Fig. 57

1773

1773e

FH

1773f

FG

1763

1781

Fig. 58

Fig. 59

Fig. 60

Fig. 61

1863

1863dt

1863d

1863ds

1863ds

K

I

1801

1781dt

1781d

## Fig. 62

1962　　　1963

1969

1963h　1963d　1963e　1963f　1963g

L1

K

H ← → J

Fig. 63

Fig. 64

Fig. 65

Fig. 66

Fig. 67

Fig. 68

Fig. 69

Fig. 70

Fig. 71

Fig. 72

(a)

(b)

Fig. 73

Fig. 74

Fig. 75

2062

2063

2069

2063h

2063d

2063e

2063f

2063g

K

L1

H

J

Fig. 76

2069

2062    2063    2002

2002a

2002b

2073

L1    H

2071    2060    20710a

20730a

2001a   2001   2001b

2001d   2001c

Fig. 77

Fig. 78

Fig. 79

Fig. 80

Fig. 81

2162

2163dt

2163d

2169

2163h

2163e

K    L1

Fig. 82

Fig. 83

Fig. 84

Fig. 85

Fig. 86

Fig. 87

Fig. 88

Fig. 89

Fig. 90

Fig. 91

Fig. 92

(a)

2460

2463

2408

2402 2403 2401

2473

2401b2

L1
K
H J

2402a
2402c 2402d
2402b 2401d
2401a
2401b 2401b1 2404

(b)

2463

2408

2402 2403 2401

2473

2404

L1
K
H J

2401d 2401f 2401e
2401a
2405 2406

Fig. 93

(a)

(b)

Fig. 94

Fig. 95

(a) <u>2408</u>

<u>2460</u>

2473

2404

240F

L1

2473k  2404d  2404a  240A

(b) <u>2408</u>

<u>2460</u>

2473

2404

240F

L1

2473k  2404a  240A

Fig. 96

(a)

2463

2408

2460

2402 2403 2401

2473

2405

240A

H J

L1

2404f

2404c

2404b

2404

2404a

240F

2402c 2401b2

2401e

(b)

2463

2408

2460

2402 2403 2401

2473

2405

2404f

H J

240A

L1

2404b

2404

2404a

240F

2402c 2401b2

2401e

Fig. 97

Fig. 98

Fig. 99

Fig. 100

Fig. 101

Fig. 102

Fig. 103

Fig. 104

Fig. 105

Fig. 106

Fig. 107

Fig. 108

EP 4 206 824 B1

Fig. 109

(a)

(b)

(c)

Fig. 110

(a)

(b)

Fig. 111

Fig. 112

(a)

(b)

Fig. 113

Fig. 114

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63004252 A
- JP H08328449 A
- US 6282389 A1